# EUROPÄISCHE PATENTANMELDUNG

(11) **EP 4 019 197 A1**
(43) Veröffentlichungstag der Anmeldung: **29.06.2022**
(21) Anmeldenummer: 21217068.2
(22) Anmeldetag: 22.12.2021
(51) Int. Cl.: B25J 5/00, B25J 11/00, B25J 9/16, B25J 13/08, B25J 19/06

(54) **SERVICEROBOTER**

(30) Priorität: 24.12.2020 DE 102020134934; 24.12.2020 DE 102020134935
(71) Anmelder: Robotise AG, 81669 München (DE)
(72) Erfinder: FARHAT, Mehdi, 80337 München (DE); DURAND, Christopher, 80933 München (DE); RIPHAUS, Tobias, 81739 München (DE); BECKMANN, Clemens, 85521 Ottobrunn (DE); KISHORE, Naval, 81677 München (DE); HERN, Layton, 80939 München (DE); SIEE, Maik, 81549 München (DE); WILSDORF, Gerd, 82256 Fürstenfeldbruck (DE); RUHWANDL, Roland, 81667 München (DE); CAN SARI, Ömer, 81825 München (DE); LIKHOMANOV, Igor, 85521 Ottobrunn (DE)
(74) Vertreter: K&P Patentanwaltsgesellschaft mbH

(57) **Zusammenfassung**

Die Erfindung betrifft einen Serviceroboter (1000) zum Erbringen von Dienstleistungen in örtlicher Nähe von Menschen, wobei der Serviceroboter (1000) eine autonom fahrende Basisplattform (100) und eine auf der autonom fahrenden Basisplattform (100) anbringbare oder angebrachte Serviceeinheit (200) aufweist, wobei die autonom fahrende Basisplattform (100) folgendes aufweist: einen Antrieb zum Antreiben der autonom fahrenden Basisplattform (100) und damit des Serviceroboters (1000); und ein Fahrwerk mit einer Vielzahl von Rädern zum auf den Rädern fahrenden Bewegen der autonom fahrenden Basisplattform (100) und damit des Serviceroboters (1000), wobei wenigstens eines der Vielzahl von Rädern ein vom Antrieb antreibbares Antriebsrad ist, wobei der Serviceroboter (1000) ein Steuermodul zum Steuern der autonom fahrenden Basisplattform (100) aufweist, wobei das Steuermodul zum Übermitteln von Steuerbefehlen an den Antrieb mit dem Antrieb verbunden oder verbindbar ist und der Antrieb durch die vom Steuermodul übermittelten Steuerbefehle steuerbar ist, und wobei der Serviceroboter (1000) wenigstens eine Energiequelle zur Versorgung des Antriebs und des Steuermoduls mit Energie aufweist. Weiter betrifft die Erfindung ein Verfahren zum Betreiben eines erfindungsgemässen Serviceroboters (1000) sowie ein Verfahren zum Erbringen von Dienstleistungen in örtlicher Nähe von Menschen mit einem erfindungsgemässen Serviceroboter (1000).

## Beschreibung

### Technisches Gebiet

Die Erfindung betrifft einen Serviceroboter zum Erbringen von Dienstleistungen in örtlicher Nähe von Menschen. Weiter betrifft die Erfindung ein Verfahren zum Betreiben eines erfindungsgemässen Serviceroboters sowie ein Verfahren zum Erbringen von Dienstleistungen in örtlicher Nähe von Menschen mit einem erfindungsgemässen Serviceroboter.

### Stand der Technik

Serviceroboter zum Erbringen von Dienstleistungen in örtlicher Nähe von Menschen sind bekannt. Einige dieser Serviceroboter sind autonom fahrende Serviceroboter und ermöglichen damit das Erbringen von Dienstleistungen in örtlicher Nähe von Menschen. Dabei bedeutet die Formulierung "autonom fahrend", dass sich diese Serviceroboter fahrend fortbewegen können und sich dabei mit Hilfe von Sensoren und Software zur Lokalisation, Navigation und Pfadplanung ihre Wege, entlang welchen sie sich bewegen, selber suchen. Einige, aber nicht alle dieser autonom fahrenden Serviceroboter bewegen sich dabei innerhalb eines fest vorgegebenen Gebiets.

Als Beispiel sind autonom fahrende Serviceroboter bekannt, welche Pakete selbstständig an Kunden ausliefern können. Solche Serviceroboter werden beispielsweise von Paketlieferdiensten eingesetzt. Im Betrieb fahren sie selbstständig zu den Kunden, um Pakete, welche vom jeweiligen Serviceroboter auszuliefern sind, zu den Kunden zu transportieren und dem Kunden zu überbringen. Dabei suchen sich die Serviceroboter ihren Weg selbstständig. Mit dem Überbringen der Pakete erbringen sie dabei eine Dienstleistung an den Kunden, was eine Dienstleistung in örtlicher Nähe von Menschen ist.

Die bekannten Serviceroboter haben den Nachteil, dass sie im Betrieb wenig sicher sind und nur sehr eingeschränkt Dienstleistungen in der Nähe von Menschen erbringen können.

### Darstellung der Erfindung

Aufgabe der Erfindung ist es, einen dem eingangs genannten technischen Gebiet zugehörenden Serviceroboter um Erbringen von Dienstleistungen in örtlicher Nähe von Menschen zu schaffen, welcher sicherer im Betrieb ist und eine breite Palette an Dienstleistungen in der Nähe von Menschen erbringen kann. Weiter ist die Aufgabe der Erfindung, ein Verfahren zum Betreiben eines erfindungsgemässen Serviceroboters sowie ein Verfahren zum Erbringen von Dienstleistungen in örtlicher Nähe von Menschen mit einem erfindungsgemässen Serviceroboter bereit zu stellen.

Die Lösung der Aufgabe ist durch die Merkmale des Anspruchs 1 definiert. Gemäss der Erfindung weist der Serviceroboter eine autonom fahrende Basisplattform und eine auf der autonom fahrenden Basisplattform anbringbare oder angebrachte Serviceeinheit auf, wobei die autonom fahrende Basisplattform Folgendes aufweist:
a) einen Antrieb zum Antreiben der autonom fahrenden Basisplattform und damit des Serviceroboters; und
b) ein Fahrwerk mit einer Vielzahl von Rädern zum auf den Rädern fahrenden Bewegen der autonom fahrenden Basisplattform und damit des Serviceroboters, wobei wenigstens eines der Vielzahl von Rädern ein vom Antrieb antreibbares Antriebsrad ist.

Dabei weist der Serviceroboter ein Steuermodul zum Steuern der autonom fahrenden Basisplattform auf, wobei das Steuermodul zum Übermitteln von Steuerbefehlen an den Antrieb mit dem Antrieb verbunden oder verbindbar ist und der Antrieb durch die vom Steuermodul übermittelten Steuerbefehle steuerbar ist. Zudem weist der Serviceroboter wenigstens eine Energiequelle, insbesondere Batterie, zur Versorgung des Antriebs und des Steuermoduls mit Energie auf.

Erfindungsgemäss weist der Serviceroboter somit eine autonom fahrende Basisplattform auf. Da diese Basisplattform autonom fahrend ist, kann sie sich vorzugsweise fahrend fortbewegen und sich dabei mit Hilfe von Sensoren und Software zur Lokalisation, Navigation und Pfadplanung ihre Wege, entlang welchen sie sich bewegt, selber suchen.

Dabei kann die autonom fahrende Basisplattform die Sensoren und die Software zur Lokalisation, Navigation und Pfadplanung aufweisen. Genauso können die Sensoren und die Software zur Lokalisation, Navigation und Pfadplanung aber auch anderswo angeordnet sein. Beispielsweise können sie in der Serviceeinheit des Serviceroboters angeordnet sein.

Da der erfindungsgemässe Serviceroboter zudem eine Serviceeinheit aufweist, können mit der Serviceeinheit Dienstleistungen erbracht werden. Dabei kann die Serviceeinheit Einrichtungen aufweisen, um die Dienstleistungen zu erbringen. Da die Serviceeinheit auf der autonom fahrende Basisplattform anbringbar oder angebracht ist, kann die Serviceeinheit, wenn sie auf der autonom fahrenden Basisplattform angebracht ist, von der autonom fahrenden Basisplattform zu Menschen hin gefahren werden, um in der örtlichen Nähe dieser Menschen die Dienstleistungen zu erbringen. Damit ist der Serviceroboter letztlich ein autonom fahrender Serviceroboter.

Vorteilhafterweise sind mit dem Steuermodul Steuerbefehle ausgebbar, wobei das Steuermodul wie bereits erwähnt zum Übermitteln der Steuerbefehle an den Antrieb mit dem Antrieb verbunden ist und der Antrieb durch die vom Steuermodul übermittelten Steuerbefehle steuerbar ist.

Weiter wird zur Lösung der Aufgabe der Erfindung vorteilhafterweise der erfindungsgemässe Serviceroboter in einem Verfahren betrieben. Dabei handelt es sich vorzugsweise um ein Verfahren zum Betreiben des erfindungsgemässen Serviceroboters. In einer vorteilhaften Variante handelt es sich um ein Verfahren zum Betreiben einer Anordnung, welche den erfindungsgemässen Serviceroboter sowie ein Betriebsmodul zum Betreiben des Serviceroboters aufweist. In einer weiteren vorteilhaften Variante, in welcher die wenigstens eine Energiequelle des Serviceroboters wenigstens eine Batterie ist, handelt es sich um ein Verfahren zum Betreiben einer Kombination aus dem erfindungsgemässen Serviceroboter und einer Ladestation zum Aufladen von wenigstens einer Batterie des Serviceroboters, wobei die Ladestation zwei Ladestationsladekontakte zum Kontaktiert werden durch zwei Serviceroboterladekontakte des Serviceroboters aufweist.

Zudem werden zur Lösung der Aufgabe der Erfindung vorteilhafterweise in einem Verfahren Dienstleistungen in örtlicher Nähe von Menschen mit einem erfindungsgemässen Serviceroboter erbracht. Dabei handelt es sich vorzugsweise um ein Verfahren zum Erbringen von Dienstleistungen in örtlicher Nähe von Menschen mit einem erfindungsgemässen Serviceroboter.

Ein weiterer Aspekt der Erfindung betrifft eine autonom fahrende Basisplattform für einen erfindungsgemässen Serviceroboter zum Erbringen von der Dienstleistungen in örtlicher Nähe von Menschen. Eine solche autonom fahrende Basisplattform kann alle im vorliegenden Text als zur autonom fahrenden Basisplattform des Serviceroboters gehörend beschriebenen Merkmale aufweisen. Sie kann aber separat vom restlichen Serviceroboter vertrieben werden. Allerdings ist sie vorzugsweise Bestandteil des erfindungsgemässen Serviceroboters.

Die Serviceeinheit ist bevorzugt austauschbar an der autonom fahrenden Basisplattform anbringbar, insbesondere austauschbar mit der autonom fahrenden Basisplattform koppelbar, ausgebildet. Zudem ist die autonom fahrende Basisplattform bevorzugt mit der an der autonom fahrenden Basisplattform anbringbaren Serviceeinheit, wenn die an der autonom fahrenden Basisplattform anbringbare Serviceeinheit an der autonom fahrenden Basisplattform angebracht, insbesondere mit der autonom fahrenden Basisplattform gekoppelt, ist, koppelbar, insbesondere verbindbar, ausgebildet. Zudem ist die autonom fahrende Basisplattform bevorzugt mit unterschiedlichen Arten von mit der autonom fahrenden Basisplattform anbringbaren, insbesondere koppelbaren, Serviceeinheiten, wenn die jeweilige an der autonom fahrenden Basisplattform anbringbare Serviceeinheit an der autonom fahrenden Basisplattform angebracht, insbesondere mit der autonom fahrenden Basisplattform gekoppelt, ist, koppelbar, insbesondere verbindbar, ausgebildet. Dabei bedeutet im Zusammenhang der Kopplung der Serviceeinheit bzw. einer der Serviceeinheiten mit der autonom fahrenden Basisplattform anbringbar vorzugweise mechanisch koppelbar, während verbindbar vorzugsweise elektrisch koppelbar heisst.

Ein weiterer Aspekt der Erfindung betrifft eine Serviceeinheit für einen erfindungsgemässen Serviceroboter zum Erbringen von der Dienstleistungen in örtlicher Nähe von Menschen. Eine solche Serviceeinheit kann alle im vorliegenden Text als zur Serviceeinheit des Serviceroboters gehörend beschriebenen Merkmale aufweisen. Sie kann aber separat vom restlichen Serviceroboter vertrieben werden. Allerdings ist sie vorzugsweise Bestandteil des erfindungsgemässen Serviceroboters.

Der erfindungsgemäße Serviceroboter hat den Vorteil, dass er sicherer im Betrieb ist und eine breite Palette an Dienstleistungen in der Nähe von Menschen erbringen kann.

Die autonom fahrende Basisplattform weist vorzugsweise eine Vorderseite sowie eine Rückseite auf, wobei die Vorderseite der autonom fahrenden Basisplattform in Fahrtrichtung ausgerichtet ist und die Rückseite der autonom fahrenden Basisplattform entgegen der Fahrtrichtung ausgerichtet ist, wenn die autonom fahrende Basisplattform bzw. der Serviceroboter fahrend vorwärts bewegt wird, und wobei die Rückseite der autonom fahrenden Basisplattform in Fahrtrichtung ausgerichtet ist und die Vorderseite der autonom fahrenden Basisplattform entgegen der Fahrtrichtung ausgerichtet ist, wenn die autonom fahrende Basisplattform bzw. der Serviceroboter fahrend rückwärts bewegt wird.

Auch der Serviceroboter weist vorzugsweise eine Vorderseite und eine Rückseite auf, wobei im Betrieb des Serviceroboters die Vorderseite des Serviceroboters der Vorderseite der autonom fahrenden Basisplattform entspricht, während die Rückseite des Serviceroboters der Rückseite der autonom fahrenden Basisplattform entspricht. Somit weist auch die Serviceeinheit eine Vorderseite und eine Rückseite auf, wobei im Betrieb des Serviceroboters die Vorderseite der Serviceeinheit der Vorderseite des Serviceroboters entspricht, während im Betrieb des Serviceroboters die Rückseite der Serviceeinheit der Rückseite des Serviceroboters entspricht.

Das Steuern der autonom fahrenden Basisplattform umfasst vorzugsweise das Steuern eines fahrenden Bewegens und Stoppens der autonom fahrenden Basisplattform und damit des Serviceroboters. Dabei umfasst das Steuern der autonom fahrenden Basisplattform vorteilhafterweise zumindest das Steuern einer Fahrgeschwindigkeit der autonom fahrenden Basisplattform und damit des Serviceroboters in Fahrtrichtung durch das Übermitteln von Steuerbefehlen vom Steuermodul an den Antrieb, um mit dem Antrieb das Antriebsrad anzutreiben und die autonom fahrende Basisplattform mit der entsprechenden Fahrgeschwindigkeit fahrend zu bewegen. Dabei kann die Fahrtrichtung bezüglich der autonom fahrenden Basisplattform bzw. des Serviceroboters sowohl vorwärts als auch rückwärts sein. Das Steuern der autonom fahrenden Basisplattform beinhaltet somit zumindest das Kontrollieren der Fahrgeschwindigkeit in Fahrtrichtung der autonom fahrenden Basisplattform und somit des Serviceroboters. Um die Fahrgeschwindigkeit in Fahrtrichtung der autonom fahrenden Basisplattform und somit des Serviceroboters zu reduzieren, können vom Steuermodul entsprechende Steuerbefehle an den Antrieb übermittelbar sein. Zusätzlich oder anstelle davon kann der Serviceroboter, insbesondere die autonom fahrende Basisplattform, auch eine Bremsvorrichtung zum Bremsen und Stoppen des fahrenden Bewegens der autonom fahrenden Basisplattform aufweisen, welche durch das Steuermodul steuerbar ist, indem das Steuermodul zum Übermitteln von Bremsbefehlen zum Bremsen und Stoppen des fahrenden Bewegens der autonomen Basisplattform an die Bremsvorrichtung mit der Bremsvorrichtung verbunden ist, wobei das Steuermodul dazu ausgebildet ist, Bremsbefehle an die Bremsvorrichtung zu übermitteln. Das Steuern der autonom fahrenden Basisplattform kann weiter ein Vorgeben einer Richtung, in welche sich die autonom fahrende Basisplattform und damit der Serviceroboter bewegen soll, umfassen. Diese Richtung kann beispielsweise durch wenigstens ein durch das Steuermodul steuerbares Rad der Vielzahl von Rädern des Fahrwerks erreicht werden. Wenn das Fahrwerk zwei nebeneinander angeordnete Antriebsräder aufweist, so kann die Richtung, in welche sich die autonom fahrende Basisplattform und damit der Serviceroboter bewegen soll, aber auch durch ein unterschiedlich starkes Antreiben der zwei nebeneinander angeordneten Antriebsräder erreicht werden.

Wie das Steuern der autonom fahrenden Basisplattform durch das Steuermodul erreicht werden kann, ist generell von autonom fahrenden Servicerobotern bekannt.

Das Steuermodul kann eine Software sein, welche auf einer Rechnereinheit läuft, oder kann durch eine Rechnereinheit gebildet sein. Wenn das Steuermodul durch eine Rechnereinheit gebildet ist, so kann die Funktionalität zum Steuern der autonom fahrenden Basisplattform durch eine entsprechende Verschaltung in der Rechnereinheit oder durch eine Software oder eine Firmware der Rechnereinheit erreicht werden.

Bevorzugt dient das Steuermodul zum Steuern des Serviceroboters und dabei auch zum Steuern der autonom fahrenden Basisplattform. In einer Variante davon dient das Steuermodul hingegen nur zum Steuern der autonom fahrenden Basisplattform.

Vorteilhafterweise umfasst die autonom fahrende Basisplattform das Steuermodul. Alternativ dazu besteht aber auch die Möglichkeit, dass nicht die autonom fahrende Basisplattform, sondern beispielsweise die Serviceeinheit das Steuermodul umfasst.

Vorzugsweise weist der Serviceroboter, besonders bevorzugt die autonom fahrende Basisplattform, zum Erfassen von Hindernissen innerhalb eines Arbeitsbereichs des Serviceroboters wenigstens einen Arbeitsbereichserfassungssensor zum Erfassen des Arbeitsbereichs des Serviceroboters und zum Ausgeben von Arbeitsbereichserfassungssensordaten mit Informationen zum erfassten Arbeitsbereich auf. Dies hat den Vorteil, dass mit dem Serviceroboter der Arbeitsbereich des Serviceroboters optimal erfasst werden kann.

Alternativ dazu besteht aber auch die Möglichkeit, dass der Serviceroboter keinen derartigen Arbeitsbereichserfassungssensor umfasst, in diesem Fall können beispielsweise separat vom Serviceroboter angeordnete Arbeitsbereichserfassungssensor zum Erfassen des Arbeitsbereichs des Serviceroboters und zum Ausgeben von Arbeitsbereichserfassungssensordaten mit Informationen zum erfassten Arbeitsbereich eingesetzt werden.

Bevorzugt ist das Steuermodul mit wenigstens einem des wenigstens einen Arbeitsbereichserfassungssensors zum Empfangen von vom jeweiligen Arbeitsbereichserfassungssensor ausgegebenen Arbeitsbereichserfassungssensordaten verbunden, womit der jeweilige Arbeitsbereichserfassungssensor ein Steuerungssensor ist und der Serviceroboter entsprechend wenigstens einen Steuerungssensor aufweist, wobei das Steuermodul dazu ausgebildet ist, basierend auf den vom wenigstens einen Steuerungssensor empfangenen Arbeitsbereichserfassungssensordaten die autonom fahrende Basisplattform zu steuern und zum Steuern der autonom fahrenden Basisplattform Steuerbefehle an den Antrieb zu übermitteln. Dies hat den Vorteil, dass eine zuverlässige Steuerung der autonom fahrenden Basisplattform erreicht werden kann.

Alternativ dazu besteht aber auch die Möglichkeit, dass das Steuermodul mit keinem des wenigstens einen Arbeitsbereichserfassungssensors verbunden ist, um Arbeitsbereichserfassungssensordaten zu empfangen.

Vorzugsweise weist der Serviceroboter ein Sicherheitsmodul zur Verhütung von Unfällen mit dem Serviceroboter durch Zusammentreffen des Serviceroboters mit Hindernissen auf, wobei das Sicherheitsmodul mit wenigstens einem des wenigstens einen Arbeitsbereichserfassungssensors zum Empfangen von vom jeweiligen Arbeitsbereichserfassungssensor ausgegebenen Arbeitsbereichserfassungssensordaten verbunden ist, womit der jeweilige Arbeitsbereichserfassungssensor ein Sicherheitssensor ist und der Serviceroboter entsprechend wenigstens einen Sicherheitssensor aufweist, wobei das Sicherheitsmodul dazu ausgebildet ist, zur Verhütung von Unfällen mit dem Serviceroboter durch Zusammentreffen des Serviceroboters mit den Hindernissen basierend auf den vom wenigstens einen Sicherheitssensor empfangenen Arbeitsbereichserfassungssensordaten Positionen der Hindernisse im Arbeitsbereich des Serviceroboters relativ zum Serviceroboter zu ermitteln. Dies hat den Vorteil, dass mit dem Sicherheitsmodul unabhängig vom Steuermodul die Positionen von Hindernissen im Arbeitsbereich des Serviceroboters ermittelt werden können. Entsprechend wird damit eine erhöhte Sicherheit bei der Erkennung von Hindernissen im Arbeitsbereich des Serviceroboters erreicht. Dabei ist unerheblich, ob einer oder mehrere des wenigstens einen Sicherheitssensors in seinen Arbeitsbereichserfassungssensordaten bereits unmittelbar Informationen zu den Positionen der Hindernisse im Arbeitsbereich des Serviceroboters ausgibt oder nicht. In beiden Fällen ermittelt das Sicherheitsmodul basierend auf den vom wenigstens einen Sicherheitssensor empfangenen Arbeitsbereichserfassungssensordaten die Positionen der Hindernisse im Arbeitsbereich des Serviceroboters relativ zum Serviceroboter. Falls die Arbeitsbereichserfassungssensordaten bereits unmittelbar Informationen zu den Positionen der Hindernisse im Arbeitsbereich des Serviceroboters enthalten, so ermittelt das Sicherheitsmodul durch Empfang und Verarbeitung der entsprechenden Arbeitsbereichserfassungssensordaten die Positionen der Hindernisse im Arbeitsbereich des Serviceroboters relativ zum Serviceroboter. Andernfalls kann das Sicherheitsmodul auch für eine komplexere Auswertung der Arbeitsbereichserfassungssensordaten ausgebildet sein, um die Positionen der Hindernisse im Arbeitsbereich des Serviceroboters relativ zum Serviceroboter basierend auf den empfangenen Arbeitsbereichserfassungssensordaten zu ermitteln.

Hindernisse können dabei beispielsweise Wände, im Weg stehende Objekte, Menschen, Tiere, sowie nach oben oder nach unten führende Stufen oder Rampen sein. Hindernisse können aber auch Unebenheiten des Bodens sein, wenn die Unebenheiten ein Kippen des Serviceroboters verursachen könnten, wenn sich die autonom fahrende Basisplattform fahrend über diese Unebenheiten bewegt.

Das Sicherheitsmodul kann eine Software sein, welche auf einer Rechnereinheit läuft, oder kann durch eine Rechnereinheit gebildet sein. Wenn das Sicherheitsmodul durch eine Rechnereinheit gebildet ist, so kann die Funktionalität zum Steuern der autonom fahrenden Basisplattform durch eine entsprechende Verschaltung in der Rechnereinheit oder durch eine Software oder eine Firmware der Rechnereinheit erreicht werden.

Vorteilhafterweise ist jeder Sicherheitssensor nach einer Sicherheitsnorm zertifiziert. In einem Beispiel ist die Sicherheitsnorm die ISO 13849-1. Die Sicherheitsnorm kann aber auch eine andere Sicherheitsnorm sein. Alternativ dazu besteht aber auch die Möglichkeit, dass nur einer oder nur einige der Sicherheitssensoren nach einer Sicherheitsnorm zertifiziert sind, oder dass keiner der Sicherheitssensoren nach einer Sicherheitsnorm zertifiziert ist.

In einer bevorzugten Variante ist das Sicherheitsmodul separat vom Steuermodul ausgebildet. Besonders bevorzugt läuft dabei das Sicherheitsmodul auf einer anderen Rechnereinheit oder ist durch eine andere Rechnereinheit gebildet als die Rechnereinheit, auf welcher das Steuermodul läuft bzw. durch welche das Steuermodul gebildet ist.

Wenn das Sicherheitsmodul separat vom Steuermodul ausgebildet ist, wird der Vorteil erreicht, dass das Sicherheitsmodul unabhängig vom Steuermodul funktionieren kann, selbst wenn das Sicherheitsmodul und das Steuermodul von einem gleichen Arbeitsbereichserfassungssensor Arbeitsbereichserfassungssensordaten erhalten. Somit kann durch das Sicherheitsmodul eine Art Sicherheitsüberprüfung des Steuermoduls erzielt werden, da das Sicherheitsmodul unabhängig vom Steuermodul aufgrund der Arbeitsbereichserfassungssensordaten die Positionen von Hindernissen im Arbeitsbereich des Serviceroboters ermitteln kann.

Vorteilhafterweise dient wenigstens eine der wenigstens einen Energiequellen, insbesondere Batterie, zur Versorgung des Sicherheitsmoduls mit Energie.

Vorteilhafterweise weist die autonom fahrende Basisplattform das Sicherheitsmodul auf. In einer vorteilhaften Variante davon ist jeder des wenigstens einen Sicherheitssensors an der autonom fahrenden Basisplattform angeordnet bzw. weist die autonom fahrende Basisplattform jeden des wenigstens einen Sicherheitssensors auf. Es besteht aber auch die Möglichkeit, dass einer, mehrere oder alle des wenigstens einen Sicherheitssensors nicht an der autonom fahrenden Basisplattform, sondern beispielsweise an der Serviceeinheit angeordnet ist bzw. sind. Als Alternative besteht aber auch die Möglichkeit, dass nicht die autonom fahrende Basisplattform, sondern beispielsweise die Serviceeinheit das Sicherheitsmodul aufweist.

Alternativ zu diesen Varianten besteht auch die Möglichkeit, dass der Serviceroboter kein derartiges Sicherheitsmodul aufweist.

Wenn der Serviceroboter das vorgehend beschriebene Sicherheitsmodul aufweist, so ist das Sicherheitsmodul vorteilhafterweise zum Übermitteln von Sicherheitssteuerbefehlen an den Antrieb mit dem Antrieb verbunden oder verbindbar und der Antrieb ist vorteilhafterweise durch vom Sicherheitsmodul übermittelte Sicherheitssteuerbefehle steuerbar. Entsprechend sind vom Sicherheitsmodul vorzugsweise Sicherheitsteuerbefehle ausgebbar. Dies hat den Vorteil, dass das Sicherheitsmodul durch Sicherheitssteuerbefehle den Antrieb steuern kann, womit das Sicherheitsmodul im Bedarfsfall in die Funktionalität des Steuermoduls eingreifen kann. Damit kann die Sicherheit im Betrieb des Serviceroboters erhöht werden.

Alternativ dazu besteht aber auch die Möglichkeit, dass Sicherheitsmodul nicht zum Übermitteln von Sicherheitssteuerbefehlen an den Antrieb mit dem Antrieb verbunden verbindbar ist und der Antrieb durch vom Sicherheitsmodul übermittelte Sicherheitssteuerbefehle steuerbar ist.

Bevorzugt ist das Steuermodul durch das Sicherheitsmodul übersteuerbar, besonders bevorzugt indem der Antrieb durch die vom Sicherheitsmodul übermittelten Sicherheitssteuerbefehlen steuerbar ist, auch wenn vom Steuermodul anderslautende Steuerbefehle an den Antrieb ausgegeben werden. D.h. Vorzugsweise werden beim Übersteuern vom Antrieb die Sicherheitssteuerbefehle ausgeführt, nicht aber die Steuerbefehle.

Hierzu kann beispielsweise ein Übermitteln der vom Steuermodul an den Antrieb ausgegebenen Steuerbefehle an den Antrieb verhindert werden, wenn vom Sicherheitsmodul Sicherheitssteuerbefehle an den Antrieb ausgegeben werden. Es besteht aber auch die Möglichkeit, dass im Antrieb, beispielsweise in einem Kontroller des Antriebs, eine Priorisierung der Sicherheitssteuerbefehle vor den Steuerbefehlen erfolgt. Hierzu umfasst der Antrieb vorteilhafterweise einen Kontroller, welcher dazu ausgebildet ist, die vom Sicherheitsmodul an den Antrieb übermittelten Sicherheitssteuerbefehle vor den vom Steuermodul an den Antrieb übermittelten Steuerbefehlen zu priorisieren.

Dass das Steuermodul durch das Sicherheitsmodul übersteuerbar ist, hat den Vorteil, dass mit dem Sicherheitsmodul verhindert werden kann, dass vom Steuermodul ausgegebene Steuerbefehle, welche bei einer Ausführung zu einem Unfall des Serviceroboters führen würden, ausgeführt werden. Dies bedeutet eine zusätzliche Sicherheitsebene im Betrieb des Serviceroboters.

Alternativ dazu besteht aber auch die Möglichkeit, dass das Steuermodul nicht durch das Sicherheitsmodul übersteuerbar ist.

Bevorzugt weist der Serviceroboter, besonders bevorzugt die autonom fahrende Basisplattform eine Bremsvorrichtung zum Bremsen und Stoppen des fahrenden Bewegens der autonom fahrenden Basisplattform auf, wobei das Sicherheitsmodul zum Übermitteln von Bremsbefehlen zum Bremsen und Stoppen des fahrenden Bewegens der autonom fahrenden Basisplattform an die Bremsvorrichtung mit der Bremsvorrichtung verbunden oder verbindbar ist und die Bremsvorrichtung durch die vom Sicherheitsmodul übermittelte Bremsbefehle steuerbar ist, um das fahrende Bewegen der autonom fahrenden Basisplattform und damit des Serviceroboters aufgrund von übermittelten Bremsbefehlen zu bremsen und zu stoppen und/oder um die Fahrgeschwindigkeit der autonom fahrenden Basisplattform aufgrund von übermittelten Bremsbefehlen zu verringern.

Die Bremsvorrichtung kann beispielsweise eine elektromagnetische Bremse umfassen. Die Bremsvorrichtung kann aber beispielsweise auch eine mechanische Bremse wie beispielsweise eine Scheibenbremse oder eine Trommelbremse umfassen.

Dass die Bremsvorrichtung durch die vom Sicherheitsmodul übermittelten Bremsbefehle steuerbar ist, bedeutet vorteilhafterweise, dass die Bremsvorrichtung dazu ausgebildet ist, das fahrende Bewegen der autonomen fahrenden Basisplattform aufgrund von den vom Sicherheitsmodul übermittelten Bremsbefehlen abzubremsen und/oder zu stoppen, wobei das Abbremsen der fahrenden Bewegung der autonom fahrenden Basisplattform vorteilhafterweise ein reduzieren der Fahrgeschwindigkeit in Fahrtrichtung der autonom fahrenden Basisplattform und somit des Serviceroboters bedeutet.

In einer Variante ist zudem das Steuermodul zum Übermitteln von Steuerungsbremsbefehlen zum Bremsen und gegebenenfalls Stoppen des fahrenden Bewegens der autonom fahrenden Basisplattform an die Bremsvorrichtung mit der Bremsvorrichtung verbunden oder verbindbar. Somit ist die Bremsvorrichtung vorteilhafterweise auch durch die vom Steuermodul übermittelte Steuerungsbremsbefehle steuerbar. In dieser Variante ist jedoch vorteilhafterweise das Steuermodul durch das Sicherheitsmodul übersteuerbar, indem die Bremsvorrichtung durch die vom Sicherheitsmodul übermittelten Bremsbefehle steuerbar ist, auch wenn vom Steuermodul anderslautende Steuerungsbremsbefehle an die Bremsvorrichtung ausgegeben werden. Hierzu kann beispielsweise ein Übermitteln der vom Steuermodul an die Bremsvorrichtung ausgegebenen Steuerungsbremsbefehle an die Bremsvorrichtung verhindert werden, wenn vom Sicherheitsmodul Bremsbefehle an die Bremsvorrichtung ausgegeben werden. Es besteht aber auch die Möglichkeit, dass in der Bremsvorrichtung, beispielsweise in einem Kontroller der Bremsvorrichtung, eine Priorisierung der Bremsbefehle vor den Steuerungsbremsbefehlen erfolgt. Hierzu umfasst die Bremsvorrichtung vorteilhafterweise einen Kontroller, welcher dazu ausgebildet ist, die vom Sicherheitsmodul an die Bremsvorrichtung übermittelten Bremsbefehle vor den vom Steuermodul an die Bremsvorrichtung übermittelten Steuerungsbremsbefehle zu priorisieren.

Alternativ zu dieser Variante besteht aber auch die Möglichkeit, dass das Steuermodul nicht zum Übermitteln von Steuerungsbremsbefehlen zum Bremsen und Stoppen des fahrenden Bewegens der autonom fahrenden Basisplattform an die Bremsvorrichtung mit der Bremsvorrichtung verbunden und die Bremsvorrichtung daher nicht durch die vom Steuermodul übermittelte Steuerungsbremsbefehle steuerbar ist.

Weiter besteht auch die Möglichkeit, dass der Serviceroboter keine derartige Bremsvorrichtung aufweist.

Vorteilhafterweise ist das Sicherheitsmodul dazu ausgebildet, einen Stoppbefehl zum Stoppen der autonom fahrenden Basisplattform auszugeben. Dies hat den Vorteil, dass durch das Sicherheitsmodul die autonom fahrende Basisplattform und damit der Serviceroboter gestoppt werden kann.

In einer vorteilhaften Variante ist das Sicherheitsmodul dazu ausgebildet, den Stoppbefehl als Bremsbefehl an die Bremsvorrichtung zu übermitteln, um das fahrende Bewegen der autonom fahrenden Basisplattform zu stoppen. Im Betrieb des Serviceroboters und beim Erbringen von Dienstleistungen in der Nähe von Menschen mit dem Serviceroboter wird somit vorzugsweise vom Sicherheitsmodul der Stoppbefehl als Bremsbefehl an die Bremsvorrichtung zu übermittelt, um das fahrende Bewegen der autonom fahrenden Basisplattform zu stoppen. Dies hat den Vorteil, dass das fahrende Bewegen der autonom fahrenden Basisplattform sehr effektiv und rasch gestoppt werden kann.

In einer vorteilhaften Variante ist das Sicherheitsmodul dazu ausgebildet, den Stoppbefehl als Sicherheitssteuerbefehl an den Antrieb zu übermitteln, um das fahrende Bewegen der autonom fahrenden Basisplattform zu stoppen. Im Betrieb des Serviceroboters und beim Erbringen von Dienstleistungen in der Nähe von Menschen mit dem Serviceroboter wird somit vorzugsweise vom Sicherheitsmodul der Stoppbefehl als Sicherheitssteuerbefehl an den Antrieb zu übermittelt, um das fahrende Bewegen der autonom fahrenden Basisplattform zu stoppen. Dies hat den Vorteil, dass das fahrende Bewegen der autonom fahrenden Basisplattform auf einfache Art und Weise gestoppt werden kann.

In einer vorteilhaften Variante ist das Sicherheitsmodul dazu ausgebildet, den Stoppbefehl sowohl als Bremsbefehl an die Bremsvorrichtung als auch als Sicherheitssteuerbefehl an den Antrieb zu übermitteln, um das fahrende Bewegen der autonom fahrenden Basisplattform zu stoppen. Dies hat den Vorteil, dass das fahrende Bewegen der autonom fahrenden Basisplattform besonders effektiv und rasch gestoppt werden kann.

Alternativ zu diesen Varianten besteht aber auch die Möglichkeit, dass das Sicherheitsmodul nicht dazu ausgebildet ist, einen Stoppbefehl auszugeben.

Bevorzugt ist das Sicherheitsmodul dazu ausgebildet, zu überprüfen, ob eine der Positionen relativ zum Serviceroboter der Hindernisse im Arbeitsbereich des Serviceroboters innerhalb einer um den Serviceroboter definierten ersten Sicherheitszone liegt und, wenn eine der Positionen relativ zum Serviceroboter der Hindernisse im Arbeitsbereich des Serviceroboters innerhalb der um den Serviceroboter definierten ersten Sicherheitszone liegt, den Stoppbefehl zum Stoppen der autonom fahrenden Basisplattform auszugeben. Dies hat den Vorteil, dass auf einfache und sehr effiziente Art und Weise sichergestellt werden kann, dass der Serviceroboter nicht mit einem in der ersten Sicherheitszone erfassten Hindernis zusammenstossen kann. Entsprechend können im Betrieb des Serviceroboters Unfälle mit dem Serviceroboter durch Zusammentreffen des Serviceroboters mit Hindernissen sehr effizient verhindert werden.

Im Betrieb des Serviceroboters und beim Erbringen von Dienstleistungen in der Nähe von Menschen mit dem Serviceroboter wird somit vorzugsweise mit wenigstens einem Sicherheitssensor der Arbeitsbereich des Serviceroboters erfasst und werden vorzugsweise mit dem Sicherheitsmodul vom wenigstens einen Sicherheitssensor ausgegebene Arbeitsbereichserfassungssensordaten empfangen, auf deren Basis vom Sicherheitsmodul Positionen der Hindernisse im Arbeitsbereich des Serviceroboters relativ zum Serviceroboter ermittelt werden, wobei mit dem Sicherheitsmodul überprüft wird, ob eine der Positionen relativ zum Serviceroboter der Hindernisse im Arbeitsbereich des Serviceroboters innerhalb der um den Serviceroboter definierten ersten Sicherheitszone liegt und, wenn eine der Positionen relativ zum Serviceroboter der Hindernisse im Arbeitsbereich des Serviceroboters innerhalb der um den Serviceroboter definierten ersten Sicherheitszone liegt, vom Sicherheitsmodul ein Stoppbefehl zum Stoppen der autonom fahrenden Basisplattform ausgegeben wird, um Unfälle mit dem Serviceroboters durch Zusammentreffen des Serviceroboters mit den Hindernissen zu verhüten.

In einer ersten vorteilhaften Variante ist die erste Sicherheitszone in zwei oder mehr erste Sicherheitsunterzonen unterteilt und das Sicherheitsmodul dazu ausgebildet, zu überprüfen, ob eine der Positionen relativ zum Serviceroboter der Hindernisse im Arbeitsbereich des Serviceroboters innerhalb einer der ersten Sicherheitsunterzonen liegt sowie gegebenenfalls innerhalb welcher der ersten Sicherheitsunterzonen diese Position liegt, wobei das Sicherheitsmodul zudem dazu ausgebildet ist, gegebenenfalls einen derjenigen der ersten Sicherheitsunterzonen, innerhalb welcher gemäss der Überprüfung durch das Sicherheitsmodul die eine der Positionen der Hindernisse im Arbeitsbereich des Serviceroboters relativ zum Serviceroboter liegt, entsprechenden Stoppbefehl zum Stoppen der autonom fahrenden Basisplattform mit einer der jeweiligen ersten Sicherheitsunterzone zugeordnete Stärke des Abbremsens beim Stoppen auszugeben. Falls dabei gemäss der Überprüfung durch das Sicherheitsmodul Positionen von Hindernissen in verschiedenen der ersten Sicherheitsunterzonen liegen, so ist das Sicherheitsmodul vorzugsweise dazu ausgebildet, denjenigen der diesen verschiedenen der ersten Sicherheitsunterzonen entsprechenden Stoppbefehle auszugeben, welcher die grösste Stärke des Abbremsens beim Stoppen bedeutet. Dies hat den Vorteil, dass die Sicherheit im Betrieb des Serviceroboters zusätzlich erhöht wird.

In einer zweiten vorteilhaften Variante ist die erste Sicherheitszone in ebenfalls zwei oder mehr erste Sicherheitsunterzonen unterteilt und das Sicherheitsmodul dazu ausgebildet, zu überprüfen, ob eine der Positionen relativ zum Serviceroboter der Hindernisse im Arbeitsbereich des Serviceroboters innerhalb einer der ersten Sicherheitsunterzonen liegt. Allerdings ist in dieser Variante das Sicherheitsmodul dazu ausgebildet, bei einer Geschwindigkeit des Serviceroboters beim fahrenden Bewegen der autonom fahrenden Basisplattform unterhalb eines vorgegebenen ersten Geschwindigkeitsgrenzwerts zu überwachen, ob sich eine der Positionen der Hindernisse im Arbeitsbereich des Serviceroboters innerhalb einer ersten der ersten Sicherheitsunterzonen befindet, und gegebenenfalls einen Stoppbefehl zum Stoppen der autonom fahrenden Basisplattform auszugeben und bei einer Geschwindigkeit beim fahrenden Bewegen der autonom fahrenden Basisplattform oberhalb des vorgegebenen ersten Geschwindigkeitsgrenzwerts zu überwachen, ob sich eine der Positionen der Hindernisse im Arbeitsbereich des Serviceroboters innerhalb einer vom Serviceroboter her gesehen ausserhalb der ersten der ersten Sicherheitsunterzonen liegenden zweiten der ersten Sicherheitsunterzonen befindet, und gegebenenfalls einen Stoppbefehl zum Stoppen der autonom fahrenden Basisplattform auszugeben. Dabei ist irrelevant, ob der Stoppbefehl jeweils eine der jeweiligen ersten Sicherheitsunterzone zugeordnete Stärke des Abbremsens beim Stoppen beinhaltet oder nicht. So kann können die Stoppbefehle für die jeweiligen Sicherheitsunterzonen beispielsweise keine Information über Stärke des Abbremsens beim Stoppen beinhalten und die autonom fahrende Basisplattform bei allen Stoppbefehlen für die verschiedenen Sicherheitsunterzonen mit einer gleichen Stärke abbremsbar sein.

Wenn in dieser zweiten vorteilhaften Variante die erste Sicherheitszone in mehr als zwei erste Sicherheitsunterzonen unterteilt ist, so ist vorzugsweise jeder der ersten Sicherheitsunterzonen ein Geschwindigkeitsbereich zugeordnet, wobei das Sicherheitsmodul dazu ausgebildet ist, zu überprüfen in welchem Geschwindigkeitsbereich die Geschwindigkeit des Serviceroboters beim fahrenden Bewegen der autonom fahrenden Basisplattform liegt und zu überwachen, ob sich eine der Positionen der Hindernisse im Arbeitsbereich des Serviceroboters innerhalb derjenigen der ersten Sicherheitsunterzonen befindet, welcher dieser Geschwindigkeitsbereich zugeordnet ist, und gegebenenfalls einen Stoppbefehl zum Stoppen der autonom fahrenden Basisplattform auszugeben. In diesem Fall bildet der vorgehend erwähnte erste Geschwindigkeitsgrenzwert die Grenze zwischen zwei der Geschwindigkeitsbereiche. Diese Variation mit mehr als zwei ersten Sicherheitsunterzonen hat den Vorteil, dass mit dem Sicherheitsmodul jeweils nur eine der ersten Sicherheitsunterzonen zu darin vorhandenen Hindernissen überwacht werden muss, da es ausreicht, je nach Geschwindigkeit des Serviceroboters diejenige Sicherheitsunterzone überwacht werden kann, welche vom Serviceroboter her gesehen ausreichend weit aussen liegt, sodass der Serviceroboter bei einem in der jeweiligen Sicherheitszone erfassten Hindernis noch gestoppt werden kann, ohne mit dem Hindernis zusammenzustossen. Entsprechend kann dadurch die Sicherheit im Betrieb des Serviceroboters bei einer reduzierten benötigten Rechenleistung gewährleistet werden.

Bei der vorgenannten zweiten vorteilhaften Variante und ihren Variationen ist das Sicherheitsmodul bevorzugt zum Empfangen von von der nachfolgend beschriebenen Geschwindigkeitsbestimmvorrichtung ausgegebenen Geschwindigkeitsdaten mit der nachfolgend beschriebenen Geschwindigkeitsbestimmvorrichtung verbunden oder verbindbar. Dadurch erhält Sicherheitsmodul zuverlässige Daten zur Geschwindigkeit des Serviceroboters beim fahrenden Bewegen der autonom fahrenden Basisplattform, um wie für die vorgenannte zweite vorteilhafte Variante und ihren Variationen beschrieben die für diese Geschwindigkeit erforderliche der ersten Sicherheitsunterzonen auf darin allenfalls vorhandenen Hindernissen zu überwachen. Allerdings besteht auch die Möglichkeit, dass das Sicherheitsmodul die notwendigen Informationen zur Geschwindigkeit des Serviceroboters beim fahrenden Bewegen der autonom fahrenden Basisplattform nicht von der Geschwindigkeitsbestimmvorrichtung sondern woanders her erhält. So kann das Sicherheitsmodul beispielsweise Informationen zum zur Geschwindigkeit des Serviceroboters beim fahrenden Bewegen der autonom fahrenden Basisplattform vom Steuermodul erhalten.

In einer vorteilhaften Variante dazu besteht aber auch die Möglichkeit, dass die erste Sicherheitszone nicht in zwei oder mehr erste Sicherheitsunterzonen unterteilt ist. Dies hat den Vorteil, dass das Sicherheitsmodul einfacher und damit auch zuverlässiger ausgebildet werden kann.

Alternativ zu diesen Varianten besteht auch die Möglichkeit, dass das Sicherheitsmodul nicht dazu ausgebildet ist, zu überprüfen, ob eine der Positionen der Hindernisse im Arbeitsbereich des Serviceroboters relativ zum Serviceroboter innerhalb einer um den Serviceroboter definierten ersten Sicherheitszone liegt und gegebenenfalls einen Stoppbefehl zum Stoppen der autonom fahrenden Basisplattform auszugeben.

Vorteilhafterweise ist das Sicherheitsmodul dazu ausgebildet, zu überprüfen, ob eine der Positionen relativ zum Serviceroboter der Hindernisse im Arbeitsbereich des Serviceroboters innerhalb einer um den Serviceroboter definierten innersten Sicherheitszone liegt und, wenn eine der Positionen relativ zum Serviceroboter der Hindernisse im Arbeitsbereich des Serviceroboters innerhalb der um den Serviceroboter definierten innersten Sicherheitszone liegt, keine Vorwärtsbewegung zuzulassen, insbesondere durch übersteuern des Steuermoduls keine Vorwärtsbewegung zuzulassen, sondern nur noch eine Drehbewegung des Serviceroboters, insbesondere der autonom fahrenden Basisplattform, um sich selber zuzulassen, um sich vom in der innersten Sicherheitszone liegenden Hindernis wegzudrehen. Vorzugsweise ist dabei die erste Sicherheitszone vom Serviceroboter her gesehen ausserhalb der innersten Sicherheitszone angeordnet oder teilweise zum Serviceroboter hin mit der innersten Sicherheitszone überlappen angeordnet. Dabei kann die innerste Sicherheitszone beispielsweise mit der vorgehend beschriebenen ersten der ersten Sicherheitsunterzonen übereinstimmen. Die innerste Sicherheitszone kann aber beispielsweise auch mit der ersten Sicherheitszone übereinstimmen.

Als Alternative besteht aber auch die Möglichkeit, dass Sicherheitsmodul nicht dazu ausgebildet ist, zu überprüfen, ob eine der Positionen relativ zum Serviceroboter der Hindernisse im Arbeitsbereich des Serviceroboters innerhalb einer um den Serviceroboter definierten innersten Sicherheitszone liegt und, wenn eine der Positionen relativ zum Serviceroboter der Hindernisse im Arbeitsbereich des Serviceroboters innerhalb der um den Serviceroboter definierten innersten Sicherheitszone liegt, keine Vorwärtsbewegung zuzulassen, insbesondere durch übersteuern des Steuermoduls keine Vorwärtsbewegung zuzulassen, sondern nur noch eine Drehbewegung des Serviceroboters, insbesondere der autonom fahrenden Basisplattform, um sich selber zuzulassen, um sich vom in der innersten Sicherheitszone liegenden Hindernis wegzudrehen.

Bevorzugt weist der Serviceroboter, besonders bevorzugt die autonom fahrende Basisplattform, eine Geschwindigkeitsbestimmvorrichtung zum Erfassen einer aktuellen Fahrgeschwindigkeit der autonom fahrenden Basisplattform und zum Ausgeben von Geschwindigkeitsdaten mit Informationen zur erfassten Fahrgeschwindigkeit auf, wobei das Sicherheitsmodul zum Empfangen von von der Geschwindigkeitsbestimmvorrichtung ausgegebenen Geschwindigkeitsdaten mit der Geschwindigkeitsbestimmvorrichtung verbunden oder verbindbar ist.

Die Geschwindigkeitsbestimmvorrichtung kann beispielsweise ein optischer Geschwindigkeitsmesssensor sein. Die Geschwindigkeitsbestimmvorrichtung kann aber auch eine an einem der Vielzahl von Rädern angeordnete Drehgeschwindigkeitsmesseinheit zum Messen einer Drehgeschwindigkeit des entsprechenden Rads der Vielzahl von Rädern sein. Genauso kann die Geschwindigkeitsbestimmvorrichtung aber auch ein am Antrieb angeordneter Encoder sein, welcher aufgrund der Drehgeschwindigkeit des Antriebs Geschwindigkeitsdaten zur erfassten Fahrgeschwindigkeit ausgibt.

Alternativ dazu besteht aber auch die Möglichkeit, dass der Serviceroboter keine derartige Geschwindigkeitsbestimmvorrichtung aufweist.

Vorzugsweise ist das Sicherheitsmodul dazu ausgebildet, zu überprüfen, ob eine der Positionen der Hindernisse im Arbeitsbereich des Serviceroboters relativ zum Serviceroboter innerhalb einer zweiten Sicherheitszone um den Serviceroboter liegt und basierend auf den empfangenen Geschwindigkeitsdaten zu überprüfen, ob die erfasste Fahrgeschwindigkeit eine der zweiten Sicherheitszone zugeordnete Maximalgeschwindigkeit ist oder überschreitet, und, wenn sowohl eine der Positionen der Hindernisse im Arbeitsbereich des Serviceroboters relativ zum Serviceroboter innerhalb der zweiten Sicherheitszone um den Serviceroboter liegt als auch die erfasste Fahrgeschwindigkeit die der zweiten Sicherheitszone zugeordnete Maximalgeschwindigkeit ist bzw. überschreitet, einen Geschwindigkeitsreduktionsbefehl zum Verringern der Fahrgeschwindigkeit der autonom fahrenden Basisplattform auszugeben.

Unabhängig davon, ob dabei der Geschwindigkeitsreduktionsbefehl zum Verringern der Fahrgeschwindigkeit der autonom fahrenden Basisplattform eine Geschwindigkeit der Fahrgeschwindigkeit der autonom fahrenden Basisplattform vorgibt oder aber eine Reduktion der bisherigen Fahrgeschwindigkeit vorgibt, wird der Vorteil erreicht, dass die Fahrgeschwindigkeit der autonom fahrenden Basisplattform und damit des Serviceroboters vorsorglich reduziert werden kann, wenn der Serviceroboter sich einem Hindernis nähert. Insbesondere wenn das Sicherheitsmodul zudem dazu ausgebildet ist, zu überprüfen, ob eine der Positionen relativ zum Serviceroboter der Hindernisse im Arbeitsbereich des Serviceroboters innerhalb einer um den Serviceroboter definierten ersten Sicherheitszone liegt und, wenn eine der Positionen relativ zum Serviceroboter der Hindernisse im Arbeitsbereich des Serviceroboters innerhalb der um den Serviceroboter definierten ersten Sicherheitszone liegt, den Stoppbefehl zum Stoppen der autonom fahrenden Basisplattform auszugeben, kann mit der zweiten Sicherheitszone erreicht werden, dass das Stoppen der autonom fahrenden Basisplattform weniger abrupt erfolgt, wenn die vorgenannte Maximalgeschwindigkeit bereits eher tief gewählt wird.

Im Betrieb des Serviceroboters und beim Erbringen von Dienstleistungen in der Nähe von Menschen mit dem Serviceroboter wird somit vorzugsweise mit wenigstens einem Sicherheitssensor der Arbeitsbereich des Serviceroboters erfasst und werden vorzugsweise mit dem Sicherheitsmodul vom wenigstens einen Sicherheitssensor ausgegebene Arbeitsbereichserfassungssensordaten empfangen, auf deren Basis vom Sicherheitsmodul Positionen der Hindernisse im Arbeitsbereich des Serviceroboters relativ zum Serviceroboter ermittelt werden, wobei zudem mit der Geschwindigkeitsbestimmvorrichtung die aktuelle Fahrgeschwindigkeit der autonom fahrenden Basisplattform erfasst wird und von der Geschwindigkeitsbestimmvorrichtung Geschwindigkeitsdaten mit Informationen zur erfassten Fahrgeschwindigkeit an das Sicherheitsmodul übermittelt werden, wobei mit dem Sicherheitsmodul überprüft wird, ob eine der Positionen der Hindernisse im Arbeitsbereich des Serviceroboters relativ zum Serviceroboter innerhalb der zweiten Sicherheitszone um den Serviceroboter liegt und basierend auf den empfangenen Geschwindigkeitsdaten überprüft wird, ob die erfasste Fahrgeschwindigkeit eine der zweiten Sicherheitszone zugeordnete Maximalgeschwindigkeit ist oder überschreitet, und, wenn sowohl eine der Positionen der Hindernisse im Arbeitsbereich des Serviceroboters relativ zum Serviceroboter innerhalb der zweiten Sicherheitszone um den Serviceroboter liegt als auch die erfasste Fahrgeschwindigkeit die der zweiten Sicherheitszone zugeordnete Maximalgeschwindigkeit ist bzw. überschreitet, vom Sicherheitsmodul ein Geschwindigkeitsreduktionsbefehl zum Verringern der Fahrgeschwindigkeit der autonom fahrenden Basisplattform ausgegeben wird, um die der Fahrgeschwindigkeit der autonom fahrenden Basisplattform zu reduzieren.

Vorteilhafterweise ist das Sicherheitsmodul dazu ausgebildet, zu überprüfen, ob eine der Positionen der Hindernisse im Arbeitsbereich des Serviceroboters relativ zum Serviceroboter innerhalb einer dritten Sicherheitszone um den Serviceroboter liegt und basierend auf den empfangenen Geschwindigkeitsdaten zu überprüfen, ob die erfasste Fahrgeschwindigkeit eine der dritten Sicherheitszone zugeordnete Maximalgeschwindigkeit überschreitet und, wenn sowohl eine der Positionen der Hindernisse im Arbeitsbereich des Serviceroboters relativ zum Serviceroboter innerhalb der dritten Sicherheitszone um den Serviceroboter liegt als auch die erfasste Fahrgeschwindigkeit die der dritten Sicherheitszone zugeordnete Maximalgeschwindigkeit überschreitet, einen Geschwindigkeitsreduktionsbefehl zum Verringern der Fahrgeschwindigkeit der autonom fahrenden Basisplattform auszugeben. Dabei ist unerheblich, ob der Geschwindigkeitsreduktionsbefehl zum Verringern der Fahrgeschwindigkeit der autonom fahrenden Basisplattform eine Geschwindigkeit der Fahrgeschwindigkeit der autonom fahrenden Basisplattform vorgibt oder aber eine Reduktion der bisherigen Fahrgeschwindigkeit vorgibt. Vorteilhafterweise ist die der dritten Sicherheitszone zugeordnete Maximalgeschwindigkeit grösser als die der zweiten Sicherheitszone zugeordnete Maximalgeschwindigkeit.

Vorteilhafterweise ist das Sicherheitsmodul dazu ausgebildet, zu überprüfen, ob eine der Positionen der Hindernisse im Arbeitsbereich des Serviceroboters relativ zum Serviceroboter innerhalb einer vierten Sicherheitszone um den Serviceroboter liegt und basierend auf den empfangenen Geschwindigkeitsdaten zu überprüfen, ob die erfasste Fahrgeschwindigkeit eine der vierten Sicherheitszone zugeordnete Maximalgeschwindigkeit überschreitet und, wenn sowohl eine der Positionen der Hindernisse im Arbeitsbereich des Serviceroboters relativ zum Serviceroboter innerhalb der vierten Sicherheitszone um den Serviceroboter liegt als auch die erfasste Fahrgeschwindigkeit die der vierten Sicherheitszone zugeordnete Maximalgeschwindigkeit überschreitet, einen Geschwindigkeitsreduktionsbefehl zum Verringern der Fahrgeschwindigkeit der autonom fahrenden Basisplattform auszugeben. Dabei ist unerheblich, ob der Geschwindigkeitsreduktionsbefehl zum Verringern der Fahrgeschwindigkeit der autonom fahrenden Basisplattform eine Geschwindigkeit der Fahrgeschwindigkeit der autonom fahrenden Basisplattform vorgibt oder aber eine Reduktion der bisherigen Fahrgeschwindigkeit vorgibt. Vorteilhafterweise ist die der vierten Sicherheitszone zugeordnete Maximalgeschwindigkeit grösser als die der dritten Sicherheitszone zugeordnete Maximalgeschwindigkeit.

Vorteilhafterweise ist das Sicherheitsmodul dazu ausgebildet, zu überprüfen, ob eine der Positionen der Hindernisse im Arbeitsbereich des Serviceroboters relativ zum Serviceroboter innerhalb einer fünften Sicherheitszone um den Serviceroboter liegt und basierend auf den empfangenen Geschwindigkeitsdaten zu überprüfen, ob die erfasste Fahrgeschwindigkeit eine der fünften Sicherheitszone zugeordnete Maximalgeschwindigkeit überschreitet und, wenn sowohl eine der Positionen der Hindernisse im Arbeitsbereich des Serviceroboters relativ zum Serviceroboter innerhalb der fünften Sicherheitszone um den Serviceroboter liegt als auch die erfasste Fahrgeschwindigkeit die der fünften Sicherheitszone zugeordnete Maximalgeschwindigkeit überschreitet, einen Geschwindigkeitsreduktionsbefehl zum Verringern der Fahrgeschwindigkeit der autonom fahrenden Basisplattform auszugeben. Dabei ist unerheblich, ob der Geschwindigkeitsreduktionsbefehl zum Verringern der Fahrgeschwindigkeit der autonom fahrenden Basisplattform eine Geschwindigkeit der Fahrgeschwindigkeit der autonom fahrenden Basisplattform vorgibt oder aber eine Reduktion der bisherigen Fahrgeschwindigkeit vorgibt. Vorteilhafterweise ist die der fünften Sicherheitszone zugeordnete Maximalgeschwindigkeit grösser als die der vierten Sicherheitszone zugeordnete Maximalgeschwindigkeit.

In diesen vorgenannten Varianten kann das Sicherheitsmodul dazu ausgebildet sein, immer sowohl zu überprüfen, ob eine der Positionen der Hindernisse im Arbeitsbereich des Serviceroboters relativ zum Serviceroboter innerhalb der zweiten, dritten, vierten, bzw. fünften Sicherheitszone um den Serviceroboter liegt als auch basierend auf den empfangenen Geschwindigkeitsdaten zu überprüfen, ob die erfasste Fahrgeschwindigkeit die der zweiten, dritten, vierten, bzw. fünften Sicherheitszone zugeordnete Maximalgeschwindigkeit überschreitet. Genauso kann das Sicherheitsmodul aber auch dazu ausgebildet sein, zu überprüfen, ob eine der Positionen der Hindernisse im Arbeitsbereich des Serviceroboters relativ zum Serviceroboter innerhalb der zweiten, dritten, vierten, bzw. fünften Sicherheitszone um den Serviceroboter liegt und nur gegebenenfalls als weitere Überprüfung basierend auf den empfangenen Geschwindigkeitsdaten zu überprüfen, ob die erfasste Fahrgeschwindigkeit die der zweiten, dritten, vierten, bzw. fünften Sicherheitszone zugeordnete Maximalgeschwindigkeit überschreitet. Genauso kann das Sicherheitsmodul aber auch dazu ausgebildet sein, basierend auf den empfangenen Geschwindigkeitsdaten zu überprüfen, ob die erfasste Fahrgeschwindigkeit die der zweiten, dritten, vierten, bzw. fünften Sicherheitszone zugeordnete Maximalgeschwindigkeit überschreitet und nur gegebenenfalls als weitere Überprüfung zu überprüfen, ob eine der Positionen der Hindernisse im Arbeitsbereich des Serviceroboters relativ zum Serviceroboter innerhalb der zweiten, dritten, vierten, bzw. fünften Sicherheitszone um den Serviceroboter liegt.

In einer bevorzugten Variante ist das Sicherheitsmodul dazu ausgebildet, den Geschwindigkeitsreduktionsbefehl als Sicherheitssteuerbefehl an den Antrieb zu übermitteln, um die Fahrgeschwindigkeit der autonom fahrenden Basisplattform zu verringern. Im Betrieb des Serviceroboters und beim Erbringen von Dienstleistungen in der Nähe von Menschen mit dem Serviceroboter wird somit vorzugsweise vom Sicherheitsmodul der Geschwindigkeitsreduktionsbefehl als Sicherheitssteuerbefehl an den Antrieb übermittelt, um die Fahrgeschwindigkeit der autonom fahrenden Basisplattform zu verringern. Dies hat den Vorteil, dass die Fahrgeschwindigkeit der autonom fahrenden Basisplattform sehr effizient verringert werden kann.

In einer bevorzugten Variante ist das Sicherheitsmodul dazu ausgebildet, den Geschwindigkeitsreduktionsbefehl als Bremsbefehl an die Bremsvorrichtung zu übermitteln, um die Fahrgeschwindigkeit der autonom fahrenden Basisplattform zu verringern. Im Betrieb des Serviceroboters und beim Erbringen von Dienstleistungen in der Nähe von Menschen mit dem Serviceroboter wird somit vorzugsweise vom Sicherheitsmodul der Geschwindigkeitsreduktionsbefehl als Bremsbefehl an die Bremsvorrichtung übermittelt, um die Fahrgeschwindigkeit der autonom fahrenden Basisplattform zu verringern.

Vorteilhafterweise liegt die zweite Sicherheitszone vom Serviceroboter her gesehen ausserhalb der ersten Sicherheitszone. Dies hat den Vorteil, dass bei weiter entfernten Hindernissen in der zweiten Sicherheitszone zuerst die Fahrgeschwindigkeit der autonom fahrenden Basisplattform bzw. des Serviceroboters reduziert wird, bevor bei näherliegenden Hindernissen in der ersten Sicherheitszone die autonom fahrende Basisplattform bzw. der Serviceroboter gestoppt wird. Entsprechend können im Betrieb des Serviceroboters Unfälle mit dem Serviceroboter durch Zusammentreffen des Serviceroboters mit Hindernissen noch effizienter und zuverlässiger verhindert werden.

Falls eine dritte Sicherheitszone vorhanden ist, so liegt die dritte Sicherheitszone vom Serviceroboter her gesehen vorteilhafterweise ausserhalb der zweiten Sicherheitszone. Falls eine vierte Sicherheitszone vorhanden ist, so liegt die vierte Sicherheitszone vom Serviceroboter her gesehen vorteilhafterweise ausserhalb der dritten Sicherheitszone. Falls eine fünfte Sicherheitszone vorhanden ist, so liegt die fünfte Sicherheitszone vom Serviceroboter her gesehen vorteilhafterweise ausserhalb der vierten Sicherheitszone.

In den vorgenannten Varianten, in welchen zumindest die erste Sicherheitszone sowie die zweite Sicherheitszone vorhanden sind, wobei je nach Variante zudem auch die dritte Sicherheitszone, die dritte Sicherheitszone sowie die vierte Sicherheitszone, oder die dritte Sicherheitszone, die vierte Sicherheitszone sowie die fünfte Sicherheitszone vorhanden sind, ist die der jeweiligen der zweiten Sicherheitszone, dritten Sicherheitszone, vierten Sicherheitszone bzw. fünften Sicherheitszone zugeordnete Maximalgeschwindigkeit vorzugsweise derart gewählt, dass das fahrende Bewegen der autonom fahrenden Basisplattform und damit des Serviceroboters durch einen vom Sicherheitsmodul zum Stoppen der autonom fahrenden Basisplattform ausgegebenen und als Sicherheitssteuerbefehl an den Antrieb und/oder als Bremsbefehl an die Bremsvorrichtung übermittelten Stoppbefehl, um das fahrende Bewegen der autonom fahrenden Basisplattform zu stoppen, gestoppt werden kann, bevor der Serviceroboter ein zum Zeitpunkt des Ausgebens des Stoppbefehls in der jeweiligen Sicherheitszone positioniertes, stationäres Hindernis unabhängig von seinem während des Stoppens durch das fahrende Bewegen zurückgelegten Wegs erreichen kann. Somit ist die der zweiten Sicherheitszone, dritten Sicherheitszone, vierten Sicherheitszone bzw. fünften Sicherheitszone zugeordnete Maximalgeschwindigkeit vorzugsweise in Abhängigkeit von der Geometrie und Anordnung der jeweiligen Sicherheitszone um den Serviceroboter, vom Fahrwerk der autonom fahrenden Basisplattform, sowie gegebenenfalls vom Antrieb und gegebenenfalls von der Bremsvorrichtung gewählt. Selbstverständlich können aber auch die Geometrie und Anordnung der jeweiligen Sicherheitszone um den Serviceroboter, Fahrwerk der autonom fahrenden Basisplattform sowie gegebenenfalls der Anrieb gegebenenfalls die Bremsvorrichtung an die den Sicherheitszonen zugeordneten Maximalgeschwindigkeiten angepasst werden.

Die vorgehend erläuterte bevorzugte Bedingung für die Wahl der Maximalgeschwindigkeit(en) hat den Vorteil, dass auf einfache Art und Weise sichergestellt werden kann, dass die autonom fahrende Basisplattform bzw. der Serviceroboter immer rechtzeitig gestoppt werden kann, bevor der Serviceroboter mit einem Hindernis zusammentreffen kann. Somit ermöglicht dies ein effizientes Verhindern von durch ein Zusammentreffen des Serviceroboters mit Hindernissen verursachten Unfällen. Indem dabei nicht nur die erste und die zweite Sicherheitszone, sondern auch die dritte Sicherheitszone, die dritte und die vierte Sicherheitszone, bzw. die dritte, die vierte und die fünfte Sicherheitszone vorhanden sind, kann ein sich weniger ruckartiges Ändern der Geschwindigkeit des Serviceroboters im Betrieb des Serviceroboters erreicht werden. Je mehr dieser Sicherheitszonen vorhanden sind, desto fliessender können die durch das Sicherheitsmodul bewirkten Geschwindigkeitsänderungen des Serviceroboters erzielt werden, was für die Nutzer des Serviceroboters die Bewegungen des Serviceroboters natürlicher erscheinen lassen, was als angenehmer empfunden wird.

Bevorzugt ist wenigstens einer des wenigstens einen Steuerungssensors zugleich einer des wenigstens einen Sicherheitssensors. Dies hat den Vorteil, dass der Serviceroboter mit weniger Sensoren konstruiert werden kann. Entsprechend kann der Serviceroboter dadurch kostengünstiger hergestellt werden. Dieser Vorteil wird vergrössert, je mehr Steuerungssensoren zugleich Sicherheitssensoren sind. Als Variante dazu besteht aber auch die Möglichkeit, dass keiner des wenigstens einen Steuerungssensors zugleich einer des wenigstens einen Sicherheitssensors ist. Eine solche Variante hat den Vorteil, dass das Sicherheitsmodul unabhängig vom Steuermodul von Arbeitsbereichserfassungssensoren bzw. den dem Sicherheitsmodul zugeordneten Sicherheitssensoren mit Arbeitsbereichserfassungssensordaten versorgt wird, womit eine zusätzliche Sicherheit im Betrieb des Serviceroboters erreicht werden kann.

Alternativ zu diesen Varianten mit dem Sicherheitsmodul besteht aber auch die Möglichkeit, dass der Serviceroboter kein derartiges Sicherheitsmodul umfasst. Bevorzugt ist aber zumindest einer der Sensoren eben kein Steuerungssensor.

Unabhängig davon, ob der Serviceroboter das vorgehend beschriebene Sicherheitsmodul aufweist oder nicht, ist bevorzugt ein erster des wenigstens einen Arbeitsbereichserfassungssensors ein erster Laserscanner, besonders bevorzugt ein erster Lidar (d.h. ein "light detection and ranging"-Sensor), zum Erfassen von Hindernissen innerhalb eines ersten Abtastbereichs im Arbeitsbereich des Serviceroboters, wobei der erste Laserscanner bzw. Lidar derart am Serviceroboter, insbesondere an der autonom fahrenden Basisplattform, angeordnet ist, dass der erste Abtastbereich vor der Vorderseite der autonom fahrenden Basisplattform liegt, wobei die vom ersten Laserscanner bzw. ersten Lidar ausgebbaren Arbeitsbereichserfassungssensordaten Informationen zu den vom ersten Laserscanner bzw. ersten Lidar erfassten Hindernissen enthalten. Dies hat den Vorteil, dass Hindernisse innerhalb des ersten Abtastbereichs besonders effektiv erfasst und ihre Position relativ zum Serviceroboter bzw. zur autonom fahrenden Basisplattform präzise erfasst werden können.

Vorzugsweise ist der erste Laserscanner bzw. erste Lidar derart am Serviceroboter, insbesondere an der autonom fahrenden Basisplattform, angeordnet und ausgerichtet, dass der erste Abtastbereich im Betrieb des Serviceroboters in einer horizontal ausgerichteten, ersten Abtastbereichsebene liegt. Diese Anordnung und Ausrichtung des ersten Laserscanners bzw. ersten Lidars hat den Vorteil, dass mit dem ersten Laserscanner bzw. ersten Lidar Hindernisse in der Umgebung des Serviceroboters besonders effizient erfasst werden können.

In einer bevorzugten Variante deckt der erste Abtastbereich ausgehend vom ersten Laserscanner bzw. vom ersten Lidar einen Winkelbereich von mindestens 200°, besonders bevorzugt mindestens 250° in der ersten Abtastbereichsebene ab. Dies hat den Vorteil, dass der erste Laserscanner bzw. erste Lidar einen besonders grossen Bereich des Arbeitsbereichs um den Serviceroboter erfassen kann, womit der erste Laserscanner bzw. erste Lidar insbesondere auch für die Navigation des Serviceroboters hilfreich ist. Alternativ dazu kann der erste Abtastbereich aber auch ausgehend vom ersten Laserscanner bzw. vom ersten Lidar einen kleineren Winkelbereich als 200° abdecken.

Alternativ dazu besteht aber auch die Möglichkeit, dass der erste Laserscanner bzw. erste Lidar anders am Serviceroboter bzw. der autonom fahrenden Basisplattform angeordnet ist, sodass im Betrieb des Serviceroboters die erste Abtastbereichsebene anders ausgerichtet ist.

Vorteilhafterweise ist der Laser des ersten Laserscanners bzw. ersten Lidars ein Infrarotlaser, d.h. weist eine Wellenlänge im Bereich von 780 nm bis 1'400 nm auf. Alternativ dazu besteht aber auch die Möglichkeit, dass der Laser des ersten Laserscanners bzw. ersten Lidars kein Infrarotlaser ist. So besteht die Möglichkeit das die Wellenlänge des Lasers kürzer als 780 nm oder länger als 1'400 nm ist.

Bevorzugt ist der erste Laserscanner bzw. erste Lidar auf einer Vorderseite des Serviceroboters, besonders bevorzugt auf der Vorderseite der autonom fahrenden Basisplattform, angeordnet.

Bevorzugt ist der erste Laserscanner bzw. der erste Lidar im Betrieb des Serviceroboters in einer Höhe im Bereich von 50 mm bis 200 mm, besonders bevorzugt von 100 mm bis 180 mm über dem Boden angeordnet. Dies hat den Vorteil, dass der erste Laserscanner bzw. erste Lidar ausreichend weit vom Boden entfernt angeordnet ist, sodass er über kleinere Hindernisse und Bodenstufen hinweg den Arbeitsbereich des Serviceroboters erfassen kann. Alternativ dazu besteht aber auch die Möglichkeit, dass der erste Laserscanner bzw. der erste Lidar im Betrieb des Serviceroboters in einer Höhe weniger als 50 mm oder mehr als 200 mm über dem Boden angeordnet ist.

Vorteilhafterweise ist der erste Abtastbereich ein Teilbereich des Arbeitsbereichs. Es besteht aber auch die Möglichkeit, dass der erste Abtastbereich den gesamten Arbeitsbereich abdeckt.

Vorzugsweise ist der erste Laserscanner bzw. erste Lidar ein Sicherheitssensor. Es besteht aber auch die Möglichkeit, dass der erste Laserscanner bzw. erste Lidar kein Sicherheitssensor ist. Vorzugsweise ist der erste Laserscanner bzw. erste Lidar ein Steuerungssensor. Es besteht aber auch die Möglichkeit, dass der erste Laserscanner bzw. erste Lidar kein Steuerungssensor ist.

Bevorzugt weist der Serviceroboter, besonders bevorzugt die autonom fahrende Basisplattform, zum Erfassen von Hindernissen innerhalb des Arbeitsbereichs des Serviceroboters wenigstens zwei Arbeitsbereichserfassungssensoren zum Erfassen des Arbeitsbereichs des Serviceroboters und zum Ausgeben von Arbeitsbereichserfassungssensordaten mit Informationen zum erfassten Arbeitsbereich auf, wobei ein zweiter der wenigstens zwei Arbeitsbereichserfassungssensoren ein zweiter Laserscanner bzw. zweiter Lidar zum Erfassen von Hindernissen innerhalb eines zweiten Abtastbereichs im Arbeitsbereich des Serviceroboters ist, wobei der zweite Laserscanner bzw. zweite Lidar derart am Serviceroboter bzw. an der autonom fahrenden Basisplattform angeordnet ist, dass der zweite Abtastbereich vor der Vorderseite der autonom fahrenden Basisplattform liegt, wobei die vom zweiten Laserscanner bzw. zweiten Lidar ausgebbaren Arbeitsbereichserfassungssensordaten Informationen zu den vom zweiten Laserscanner bzw. zweiten Lidar erfassten Hindernissen enthalten. Dies hat den Vorteil, dass Hindernisse innerhalb des zweiten Abtastbereichs besonders effektiv erfasst und ihre Position relativ zum Serviceroboter bzw. zur autonom fahrenden Basisplattform präzise erfasst werden können.

Vorteilhafterweise ist der zweite Laserscanner bzw. zweite Lidar derart am Serviceroboter bzw. an der autonom fahrenden Basisplattform, angeordnet und ausgerichtet, dass der zweite Abtastbereich im Betrieb des Serviceroboters in einer horizontal ausgerichteten, zweiten Abtastbereichsebene liegt. Diese Anordnung und Ausrichtung des zweiten Laserscanners bzw. zweiten Lidars hat den Vorteil, dass mit dem zweiten Laserscanner bzw. zweiten Lidar Hindernisse in der Umgebung des Serviceroboters besonders effizient erfasst werden können.

In einer bevorzugten Variante deckt der zweite Abtastbereich ausgehend vom zweiten Laserscanner bzw. vom zweiten Lidar einen Winkelbereich von mindestens 100°, besonders bevorzugt mindestens 140° in der zweiten Abtastbereichsebene ab. Alternativ dazu kann der zweite Abtastbereich aber auch ausgehend vom zweiten Laserscanner bzw. vom zweiten Lidar einen kleineren Winkelbereich als 100° abdecken. In einer bevorzugten Variante deckt der zweite Abtastbereich ausgehend vom zweiten Laserscanner bzw. vom zweiten Lidar einen Winkelbereich von weniger als 200° ab. Alternativ dazu kann der zweite Abtastbereich aber auch ausgehend vom zweiten Laserscanner bzw. vom zweiten Lidar einen grösseren Winkelbereich als 200° abdecken.

Alternativ dazu besteht aber auch die Möglichkeit, dass der zweite Laserscanner bzw. zweite Lidar anders am Serviceroboter bzw. der autonom fahrenden Basisplattform angeordnet ist, sodass im Betrieb des Serviceroboters die zweite Abtastbereichsebene anders ausgerichtet ist.

Vorteilhafterweise ist der Laser des zweiten Laserscanners bzw. zweiten Lidars ein Infrarotlaser, d.h. weist eine Wellenlänge im Bereich von 780 nm bis 1'400 nm auf. Alternativ dazu besteht aber auch die Möglichkeit, dass der Laser des zweiten Laserscanners bzw. zweiten Lidars kein Infrarotlaser ist. So besteht die Möglichkeit das die Wellenlänge des Lasers kürzer als 780 nm oder länger als 1'400 nm ist.

Bevorzugt ist der zweite Laserscanner bzw. zweite Lidar auf einer Vorderseite des Serviceroboters, besonders bevorzugt auf der Vorderseite der autonom fahrenden Basisplattform, angeordnet.

Bevorzugt ist der zweite Laserscanner bzw. der zweite Lidar im Betrieb des Serviceroboters in einer Höhe im Bereich mindestens 40 mm, besonders bevorzugt mindestens 45 mm, ganz besonders bevorzugt mindestens 50 mm über dem Boden angeordnet. Dies hat den Vorteil, dass der zweite Laserscanner bzw. der zweite Lidar möglichst tief und damit in Bodennähe angeordnet werden kann, um beispielsweise auch Hände und Füsse von auf dem Boden spielenden Kindern als Hindernisse im Arbeitsbereich des Serviceroboters erfassen kann, und gleichzeitig ausreichend weit vom Boden entfernt angeordnet werden kann, damit der Serviceroboter nicht mit dem zweiten Laserscanner bzw. zweiten Lidar gegen Bodenstufen stösst und damit den zweiten Laserscanner bzw. zweiten Lidar im Betrieb beschädigt. Alternativ dazu besteht aber auch die Möglichkeit, dass der zweite Laserscanner bzw. der zweite Lidar im Betrieb des Serviceroboters in einer Höhe weniger als 40 mm über dem Boden angeordnet ist.

Vorteilhafterweise ist der zweite Abtastbereich ein Teilbereich des Arbeitsbereichs. Es besteht aber auch die Möglichkeit, dass der zweite Abtastbereich den gesamten Arbeitsbereich abdeckt.

Vorteilhafterweise ist der zweite Laserscanner bzw. der zweite Lidar im Betrieb des Serviceroboters in einer geringeren Höhe über dem Boden als der erste Laserscanner bzw. erste Lidar am Serviceroboter bzw. der autonom fahrenden Basisplattform angeordnet. Dies hat den Vorteil, dass der Arbeitsbereich um den Serviceroboter in zwei übereinander liegenden Ebenen auf Hindernisse abgesucht werden kann. Dieser Vorteil ist besonders stark, wenn wie vorgehend erwähnt der erste Abtastbereich im Betrieb des Serviceroboters in der horizontal ausgerichteten, ersten Abtastbereichsebene liegt und der zweite Abtastbereich im Betrieb des Serviceroboters in der horizontal ausgerichteten, zweiten Abtastbereichsebene liegt, weil damit auch etliche Hindernisse, welche sich über dem Boden befinden, aber nicht vertikal nach unten zum Boden hin verlaufen, sondern über den Boden überhängende Bereiche aufweisen, erfasst werden können. Insbesondere wenn zudem der erste Abtastbereich ausgehend vom ersten Laserscanner bzw. vom ersten Lidar einen Winkelbereich von mindestens 200°, besonders bevorzugt mindestens 250° in der ersten Abtastbereichsebene abdeckt, wird der Vorteil erreicht, dass mit dem ersten Laserscanner bzw. ersten Lidar ein besonders grosser Bereich des Arbeitsbereichs um den Serviceroboter erfasst werden kann, womit der erste Laserscanner bzw. ersten Lidar zum Erlangen eines Überblicks über einen grossen Teil des Arbeitsbereichs nützlich ist und insbesondere auch für die Navigation des Serviceroboters hilfreich ist. Gleichzeitig ist nicht erforderlich, dass der zweite Laserscanner bzw. zweite Lidar ebenfalls einen derart grossen Winkelbereich abdeckt, da es ausreicht, mit dem zweiten Laserscanner bzw. zweiten Lidar Hindernisse in Bodennähe zu erfassen, welche sich unmittelbar vor den Rädern des Serviceroboters befinden.

Es besteht aber auch die Möglichkeit, dass der zweite Laserscanner bzw. der zweite Lidar im Betrieb des Serviceroboters in einer gleichen Höhe über dem Boden wie der erste Laserscanner bzw. erste Lidar angeordnet ist, oder dass der zweite Laserscanner bzw. der zweite Lidar im Betrieb des Serviceroboters in einer grösseren Höhe über dem Boden als der erste Laserscanner bzw. erste Lidar angeordnet ist.

Vorzugsweise ist der zweite Laserscanner bzw. zweite Lidar ein Sicherheitssensor. Es besteht aber auch die Möglichkeit, dass der zweite Laserscanner bzw. zweite Lidar kein Sicherheitssensor ist. Vorzugsweise ist der zweite Laserscanner bzw. zweite Lidar ein Steuerungssensor. Es besteht aber auch die Möglichkeit, dass der zweite Laserscanner bzw. zweite Lidar kein Steuerungssensor ist.

Alternativ zu diesen Varianten besteht aber auch die Möglichkeit, dass keiner des wenigstens einen Arbeitsbereichserfassungssensors bzw. keiner der wenigstens zwei Arbeitsbereichserfassungssensoren ein solcher erster Laserscanner bzw. erster Lidar ist. Alternativ zu diesen Varianten besteht zudem auch die Möglichkeit, dass keiner der wenigstens zwei Arbeitsbereichserfassungssensoren ein solcher zweiter Laserscanner bzw. zweiter Lidar ist.

Alternativ dazu besteht aber auch die Möglichkeit, dass der Serviceroboter keinen solchen ersten Laserscanner umfasst. Auch besteht die Möglichkeit, dass der Serviceroboter keinen solchen zweiten Laserscanner umfasst.

Bevorzugt ist einer des wenigstens einen Arbeitsbereichserfassungssensors bzw. der wenigstens zwei Arbeitsbereichserfassungssensoren ein Kontaktsensor zum Erfassen von Kontakten eines Kontaktelements des Serviceroboters mit einem Hindernis, wobei sich das Kontaktelement zumindest im Wesentlichen über eine gesamte Breite der Rückseite der autonom fahrenden Basisplattform, besonders bevorzugt eine gesamte Breite der Rückseite des Serviceroboters, erstreckt, wobei die vom Kontaktsensor ausgebbaren Arbeitsbereichserfassungssensordaten Informationen zu den vom Kontaktsensor erfassten Kontakte des Kontaktelements mit einem Hindernis enthalten. Dies hat den Vorteil, dass beim Rückwärtsfahren mit der autonom fahrenden Basisplattform und dem Serviceroboter Hindernisse in unmittelbarer Nähe der autonom fahrenden Basisplattform bzw. des Serviceroboters erfasst werden können.

Dabei ist das Kontaktelement vorzugsweise eine Kontaktleiste. Vorteilhafterweise ist die Kontaktleiste im Betrieb des Serviceroboters horizontal ausgerichtet. Vorteilhafterweise ist die Kontaktleiste entlang einem Aussenumfang des Serviceroboters verlaufend angeordnet. Dabei kann sich die Kontaktleiste über einen Bereich des Aussenumfangs oder über den gesamten Aussenumfang des Serviceroboters erstrecken.

Bevorzugt erstreckt sich das Kontaktelement von der Rückseite der autonom fahrenden Basisplattform bzw. der Rückseite des Serviceroboters auf zwischen der Vorderseite und der Rückseite der autonom fahrenden Basisplattform angeordneten Seiten der autonom fahrenden Basisplattform bzw. des Serviceroboters nach vorne zumindest bis zu einem Mittelbereich der Seiten. Dies hat den Vorteil, dass mit der Kontaktleiste Kontakte des Kontaktelements des Serviceroboters mit einem Hindernis sowohl hinten am Serviceroboter als auch in einem hinteren Bereich des Serviceroboters seitlich am Serviceroboter auf einfache Art und Weise erfasst werden können.

Vorzugsweise ist der Kontaktsensor ein Sicherheitssensor. Es besteht aber auch die Möglichkeit, dass der Kontaktsensor kein Sicherheitssensor ist. Vorzugsweise ist der Kontaktsensor ein Steuerungssensor. Es besteht aber auch die Möglichkeit, dass der Kontaktsensor kein Steuerungssensor ist.

Alternativ zu diesen Varianten besteht aber auch die Möglichkeit, dass keiner des wenigstens einen Arbeitsbereichserfassungssensors bzw. keiner der wenigstens zwei Arbeitsbereichserfassungssensoren ein solcher Kontaktsensor ist.

Vorteilhafterweise ist einer des wenigstens einen Arbeitsbereichserfassungssensors bzw. der wenigstens zwei Arbeitsbereichserfassungssensoren ein Bodenstufendetektionssensor zum Erfassen einer in eine Distanzmessrichtung gemessenen Distanz von Gegenständen oder Boden vom Bodenstufendetektionssensor, wobei der Bodenstufendetektionssensor im Betrieb des Serviceroboters in einem Neigungswinkel zur Horizontalen nach unten geneigt ist, sodass die Distanzmessrichtung mit dem Neigungswinkel nach unten geneigt ist, wobei die vom Bodenstufendetektionssensor ausgebbaren Arbeitsbereichserfassungssensordaten Informationen zu der vom Bodenstufendetektionssensor erfassten Distanz sind. Dies hat den Vorteil, dass auf zuverlässige Weise Unebenheiten im Boden detektiert werden können, welche für den Serviceroboter Hindernisse darstellen können oder sonst für den Roboter eine Unfallgefahr darstellen können, wenn sich der Serviceroboter fahrend in, auf oder über diese Unebenheiten bzw. Hindernisse bewegen würde.

Vorteilhafterweise ist das Sicherheitsmodul dazu ausgebildet, zu überprüfen, ob die vom Bodenstufendetektionssensor erfasste Distanz um einen Distanzgrenzwert grösser ist als eine Distanz, welche im Betrieb des Serviceroboters, wenn der Serviceroboter auf einem flachen, ebenen Untergrund steht, vom auf den flachen, ebenen Untergrund gerichteten Bodenstufendetektionssensor erfasst wird, und, wenn die vom Bodenstufendetektionssensor erfasste Distanz um den Distanzgrenzwert grösser ist als die Distanz, welche im Betrieb des Serviceroboters, wenn der Serviceroboter auf einem flachen, ebenen Untergrund steht, vom auf den flachen, ebenen Untergrund gerichteten Bodenstufendetektionssensor erfasst wird, den Stoppbefehl zum Stoppen der autonom fahrenden Basisplattform auszugeben. Dies hat den Vorteil, dass mit dem Bodenstufendetektionssensor nach unten führende Stufen im Boden auf zuverlässige Art und Weise erfasst werden können.

Vorteilhafterweise ist dabei der Distanzgrenzwert höchstens gleich gross wie ein Stufenhöhengrenzwert geteilt durch den Sinus des Neigungswinkels des Bodenstufendetektionssensors, wobei der Stufenhöhengrenzwert eine maximale vom Serviceroboter sicher und gefahrlos passierbare Stufenhöhe ist. D.h. der Stufenhöhengrenzwert ist die maximale Stufenhöhe, welche vom Serviceroboter überfahren werden kann, ohne dass die Gefahr besteht, dass der Serviceroboter beim Überfahren der Stufe kippt.

Vorteilhafterweise ist der Bodenstufendetektionssensor derart ausgerichtet, dass im Betrieb des Serviceroboters, wenn der Serviceroboter auf einem flachen, ebenen Untergrund steht, die Distanzmessrichtung ausgehend vom Bodenstufendetektionssensor in einer Distanz vom Serviceroboter auf den flachen, ebenen Untergrund trifft, welche grösser ist als eine Distanz, innerhalb von welcher das fahrende Bewegen der autonom fahrenden Basisplattform und damit des Serviceroboters bei einer maximalen Fahrgeschwindigkeit des Serviceroboters in eine zumindest im Wesentlichen der Distanzmessrichtung entsprechende Fahrrichtung durch einen vom Sicherheitsmodul zum Stoppen der autonom fahrenden Basisplattform ausgegebenen und als Sicherheitssteuerbefehl an den Antrieb und/oder als Bremsbefehl an die Bremsvorrichtung übermittelten Stoppbefehl, um das fahrende Bewegen der autonom fahrenden Basisplattform zu stoppen, gestoppt werden kann. Dies hat den Vorteil, dass sichergestellt werden kann, dass das fahrende Bewegen der autonom fahrenden Basisplattform bzw. des Serviceroboters rechtzeitig gestoppt werden kann, bevor die autonom fahrende Basisplattform bzw. der Serviceroboter eine vom Bodenstufendetektionssensor erfasste Stufe im Boden erreichen kann. Entsprechend kann damit die Gefahr eines Unfalls des Serviceroboters deutlich reduziert werden.

Wenn dabei die Distanzmessrichtung in Bezug auf den Serviceroboter zumindest im Wesentlichen vorwärts gerichtet ist, dann ist die maximale Fahrgeschwindigkeit vorzugsweise die maximal mögliche Vorwärtsfahrgeschwindigkeit des Serviceroboters. Wenn hingegen die Distanzmessrichtung in Bezug auf den Serviceroboter zumindest im Wesentlichen rückwärts gerichtet ist, dann ist die maximale Fahrgeschwindigkeit vorzugsweise die maximal mögliche Rückwärtsfahrgeschwindigkeit des Serviceroboters ist.

Dies hat den Vorteil, dass, wenn der Serviceroboter eine andere maximal mögliche Vorwärtsfahrgeschwindigkeit als eine maximal mögliche Rückwärtsfahrgeschwindigkeit aufweist, die Anordnung und Ausrichtungen entsprechender Bodenstufendetektionssensoren an diese maximalen Fahrgeschwindigkeiten angepasst werden kann, um die Unfallgefahr der autonom fahrenden Basisplattform bzw. des Serviceroboters zu reduzieren, ohne dabei die Mobilität der autonom fahrenden Basisplattform bzw. des Serviceroboters unnötig einzuschränken.

Vorzugsweise ist der Bodenstufendetektionssensor ein Sicherheitssensor. Es besteht aber auch die Möglichkeit, dass der Bodenstufendetektionssensor kein Sicherheitssensor ist. Vorzugsweise ist der Bodenstufendetektionssensor ein Steuerungssensor. Es besteht aber auch die Möglichkeit, dass der Bodenstufendetektionssensor kein Steuerungssensor ist.

In einer Variante ist der Bodenstufendetektionssensor ein Laserscanner. In einer Variation davon ist der Bodenstufendetektionssensor ein Lidar. Wenn der Bodenstufendetektionssensor ein Laserscanner bzw. Lidar ist, so ist die Distanzmessebene, in welcher die vom Bodenstufendetektionssensor erfassbaren Distanzen liegen, vorzugsweise entlang der Distanzmessrichtung ausgerichtet, wobei im Betrieb des Serviceroboters eine in der Distanzmessebene liegende Gerade, welche senkrecht zur Distanzmessrichtung ausgerichtet ist, im Wesentlichen horizontal ausgerichtet ist.

In einer weiteren Variante ist der Bodenstufendetektionssensor ein Distanzsensor zum Erfassen der Distanz entlang einer einzigen Distanzmessrichtung. In diesem letzteren Fall ist der Distanzsensor in einem Beispiel ein Laser-Distanzsensor. Der Bodenstufendetektionssensor kann aber auch ein andersartig ausgebildeter Sensor sein.

Vorteilhafterweise weist der Serviceroboter mindestens einen in Bezug auf den Serviceroboter zumindest im Wesentlichen vorwärts gerichteten Bodenstufendetektionssensor auf. Dies hat den Vorteil, dass auf einfache Art und Weise sichergestellt werden kann, dass der Serviceroboter bzw. die autonom fahrende Basisplattform im Betrieb rechtzeitig gestoppt werden kann, bevor der Serviceroboter bzw. die autonom fahrende Basisplattform vorwärts fahrend eine für den Serviceroboter zu weit nach unten führende Stufe im Boden erreichen kann.

Bevorzugt ist der im Wesentlichen vorwärts gerichtete Bodenstufendetektionssensor auf der Vorderseite des Serviceroboters, besonders bevorzugt auf der Vorderseite der autonom fahrenden Basisplattform, angeordnet.

Vorzugsweise ist der im Wesentlichen vorwärts gerichtete Bodenstufendetektionssensor ein Sicherheitssensor. Es besteht aber auch die Möglichkeit, dass der im Wesentlichen vorwärts gerichtete Bodenstufendetektionssensor kein Sicherheitssensor ist. Vorzugsweise ist der im Wesentlichen vorwärts gerichtete Bodenstufendetektionssensor ein Steuerungssensor. Es besteht aber auch die Möglichkeit, dass der im Wesentlichen vorwärts gerichtete Bodenstufendetektionssensor kein Steuerungssensor ist.

Vorteilhafterweise ist der im Wesentlichen vorwärts gerichtete Bodenstufendetektionssensor ein laserbasierter Sensor, dessen Laser bevorzugt ein Infrarotlaser ist, d.h. eine Wellenlänge im Bereich von 780 nm bis 1'400 nm aufweist. Alternativ dazu besteht aber auch die Möglichkeit, dass der Laser des Bodenstufendetektionssensor kein Infrarotlaser ist. So besteht die Möglichkeit das die Wellenlänge des Lasers kürzer als 780 nm oder länger als 1'400 nm ist. Beispielsweise kann die Wellenlänge des Lasers bei etwa 650 nm liegen.

Wenn der im Wesentlichen vorwärts gerichtete Bodenstufendetektionssensor ein Distanzsensor zum Erfassen der Distanz entlang einer einzigen Distanzmessrichtung ist, so weist der der Serviceroboter vorteilhafterweise zwei in Bezug auf den Serviceroboter im Wesentlichen vorwärts gerichtete Bodenstufendetektionssensoren auf, deren Distanzmessrichtungen nach vorne auseinander zeigen. Dies hat den Vorteil, dass auch nach unten führende Stufen im Boden mit den zwei Bodenstufendetektionssensoren rechtzeitig erfasst werden können, welche durch eine Kurvenfahrt des Serviceroboters bzw. der autonom fahrenden Basisplattform erreicht werden könnten.

In einer Variante dazu besteht aber auch die Möglichkeit, dass der Serviceroboter keinen in Bezug auf den Serviceroboter im Wesentlichen vorwärts gerichteten Bodenstufendetektionssensor aufweist.

Vorteilhafterweise weist der Serviceroboter mindestens einen in Bezug auf den Serviceroboter zumindest im Wesentlichen rückwärts gerichteten Bodenstufendetektionssensor auf. Dies hat den Vorteil, dass auf einfache Art und Weise sichergestellt werden kann, dass der Serviceroboter bzw. die autonom fahrende Basisplattform im Betrieb rechtzeitig gestoppt werden kann, bevor der Serviceroboter bzw. die autonom fahrende Basisplattform rückwärts fahrend eine für den Serviceroboter zu weit nach unten führende Stufe im Boden erreichen kann.

Bevorzugt ist der im Wesentlichen rückwärts gerichtete Bodenstufendetektionssensor im Bereich der Rückseite des Serviceroboters, besonders bevorzugt im Bereich der Rückseite der autonom fahrenden Basisplattform, angeordnet.

Vorzugsweise ist der im Wesentlichen rückwärts gerichtete Bodenstufendetektionssensor ein Sicherheitssensor. Es besteht aber auch die Möglichkeit, dass der im Wesentlichen rückwärts gerichtete Bodenstufendetektionssensor kein Sicherheitssensor ist. Vorzugsweise ist der im Wesentlichen rückwärts gerichtete Bodenstufendetektionssensor ein Steuerungssensor. Es besteht aber auch die Möglichkeit, dass der im Wesentlichen rückwärts gerichtete Bodenstufendetektionssensor kein Steuerungssensor ist.

Vorteilhafterweise ist der im Wesentlichen rückwärts gerichtete Bodenstufendetektionssensor ein laserbasierter Sensor, dessen Laser eine Wellenlänge von etwa 650 nm aufweist. Es besteht aber auch die Möglichkeit, dass der Laser des Bodenstufendetektionssensors ein Infrarotlaser ist, d.h. eine Wellenlänge im Bereich von 780 nm bis 1'400 nm aufweist. Alternativ dazu besteht aber auch die Möglichkeit, dass der Laser des Bodenstufendetektionssensor kein Infrarotlaser ist. So besteht die Möglichkeit das die Wellenlänge des Lasers kürzer als 780 nm oder länger als 1'400 nm ist und auch nicht im Bereich von etwa 650 nm liegt.

Wenn der im Wesentlichen rückwärts gerichtete Bodenstufendetektionssensor ein Distanzsensor zum Erfassen der Distanz entlang einer einzigen Distanzmessrichtung ist, so weist der der Serviceroboter vorteilhafterweise zwei in Bezug auf den Serviceroboter im Wesentlichen rückwärts gerichtete Bodenstufendetektionssensoren auf, deren Distanzmessrichtungen vom Serviceroboter her gesehen nach hinten auseinander zeigen.

In einer Variante dazu besteht aber auch die Möglichkeit, dass der Serviceroboter keinen in Bezug auf den Serviceroboter im Wesentlichen rückwärts gerichteten Bodenstufendetektionssensor aufweist.

Alternativ zu diesen Varianten besteht aber auch die Möglichkeit, dass keiner des wenigstens einen Arbeitsbereichserfassungssensors bzw. keiner der wenigstens zwei Arbeitsbereichserfassungssensoren ein solcher Bodenstufendetektionssensor ist.

Vorteilhafterweise ist einer des wenigstens einen Arbeitsbereichserfassungssensors bzw. der wenigstens zwei Arbeitsbereichserfassungssensoren ein Magnetsensor zum Erfassen von Magnetmarkierungen am oder im Boden, wobei die vom Magnetsensor ausgebbaren Arbeitsbereichserfassungssensordaten Informationen zu einem vom Magnetsensor erfassten Magnetfeld und damit von den Magnetmarkierungen erzeugten Magnetfeldern enthalten. Dies hat den Vorteil, dass mittels am oder im Boden verlegten Magnetmarkierungen ein Gebiet eingegrenzt werden kann, innerhalb von welchem sich die autonom fahrende Basisplattform bzw. der Serviceroboter autonom bewegen soll, bzw. welches Gebiet von der autonom fahrenden Basisplattform bzw. vom Serviceroboter nicht verlassen werden soll. Somit wird letztlich der Vorteil erreicht, dass das Arbeitsgebiet des Serviceroboters auf einfache Art und Weise zuverlässig eingegrenzt werden kann.

Vorteilhafterweise ist der Magnetsensor auf einer Unterseite der autonom fahrenden Basisplattform in einem Bereich der Vorderseite der autonom fahrenden Basisplattform angeordnet. Dies hat den Vorteil, dass am oder im Boden verlegte Magnetmarkierungen vom Serviceroboter insbesondere in vorwärts gerichteter Fahrtrichtung so frühzeitig wie möglich erkannt werden können.

Dabei kann der Magnetsensor ein Sicherheitssensor sein, sodass die autonom fahrende Basisplattform bzw. der Serviceroboter durch das Sicherheitsmodul basierend auf am oder im Boden verlegten Magnetmarkierungen gestoppt werden kann. Genauso kann der Magnetsensor aber auch ein Steuersensor sein.

Alternativ zu diesen Varianten besteht aber auch die Möglichkeit, dass keiner des wenigstens einen Arbeitsbereichserfassungssensors bzw. keiner der wenigstens zwei Arbeitsbereichserfassungssensoren ein solcher Magnetsensor ist.

Bevorzugt weist der Serviceroboter, besonders bevorzugt die autonom fahrende Basisplattform wenigstens einen Nothalteknopf zum Stoppen des Serviceroboters auf. In einer bevorzugten Variante ist der wenigstens eine Nothalteknopf mit dem Sicherheitsmodul verbunden oder verbindbar, um, wenn der wenigstens eine Nothalteknopf betätigt wird, ein Nothalteknopfsignal an das Sicherheitsmodul zu übermitteln, wobei das Sicherheitsmodul vorzugsweise dazu ausgebildet ist, das Nothalteknopfsignal zu empfangen und, wenn ein Nothalteknopfsignal vom Sicherheitsmodul empfangen wird, einen Stoppbefehl zum Stoppen der autonom fahrenden Basisplattform auszugeben. Dabei kann das Sicherheitsmodul wie vorgehend erläutert dazu ausgebildet sein, den Stoppbefehl als Bremsbefehl an die Bremsvorrichtung zu übermitteln und/oder als Sicherheitssteuerbefehl an den Antrieb zu übermitteln, um das fahrende Bewegen der autonom fahrenden Basisplattform zu stoppen.

Der wenigstens eine Nothalteknopf kann aber beispielsweise so konfiguriert sein, dass bei einer Betätigung des Nothalteknopfs eine Energieversorgung des Antriebs zu unterbinden, um die autonom fahrende Basisplattform bzw. den Serviceroboter zu stoppen.

Beispielsweise kann der Serviceroboter mehr als einen Nothalteknopf aufweisen. So kann beispielsweise ein Nothalteknopf seitlich, hinten und/oder vorne an der autonom fahrenden Basisplattform angeordnet sein, und ein Nothalteknopf kann oben auf der Serviceeinheit angeordnet sein.

Alternativ zu diesen Varianten besteht auch die Möglichkeit, dass der Serviceroboter keinen solchen Nothalteknopf aufweist.

Vorteilhafterweise ist einer des wenigstens einen Arbeitsbereichserfassungssensors bzw. der wenigstens zwei Arbeitsbereichserfassungssensoren eine Stereokamera zum bildlichen Erfassen von Bilddaten, wobei die von der Stereokamera ausgebbaren Arbeitsbereichserfassungssensordaten Bildinformationen enthalten. Dies hat den Vorteil, dass Hindernisse im Arbeitsbereich des Serviceroboters auch bildlich erfasst werden können, wobei eine Distanz der jeweiligen Hindernisse vom Serviceroboter aus den Bilddaten ermittelt werden kann.

In einer bevorzugten Variante davon ist eine solche Stereokamera an der autonom fahrenden Basisplattform angeordnet. Vorteilhafterweise ist die Stereokamera dabei an der Vorderseite der autonom fahrenden Basisplattform angeordnet.

In einer bevorzugen Variante davon ist eine solche Stereokamera an der Serviceeinheit angeordnet. Dies hat den Vorteil, dass diese Stereokamera derart an der Serviceeinheit angeordnet werden kann, dass sie im Betrieb des Serviceroboters möglichst weit oben angeordnet ist, um mit der entsprechenden Stereokamera einen guten Überblick über den Arbeitsbereich des Serviceroboters zu erhalten.

Vorzugsweise ist die Stereokamera ein Steuerungssensor. Es besteht aber auch die Möglichkeit, dass die Stereokamera kein Steuerungssensor ist. Vorzugsweise ist die Stereokamera ein Sicherheitssensor. Es besteht aber auch die Möglichkeit, dass die Stereokamera kein Sicherheitssensor ist.

Alternativ zu diesen Varianten besteht aber auch die Möglichkeit, dass keiner des wenigstens einen Arbeitsbereichserfassungssensors bzw. keiner der wenigstens zwei Arbeitsbereichserfassungssensoren eine solche Stereokamera ist.

Vorteilhafterweise ist einer des wenigstens einen Arbeitsbereichserfassungssensors bzw. der wenigstens zwei Arbeitsbereichserfassungssensoren ein Deckenbildsensor zum bildlichen Erfassen von Bilddaten, wobei die vom Deckenbildsensor ausgebbaren Arbeitsbereichserfassungssensordaten Bildinformationen enthalten, wobei der Deckenbildsensor bevorzugt derart nach oben gerichtet am Serviceroboter, besonders bevorzugt an der Serviceeinheit, angeordnet, dass im Betrieb des Serviceroboters mit dem Deckenbildsensor Bilddaten eines Bereichs über dem Serviceroboter aufnehmbar sind. Dies hat den Vorteil, dass in Innenräumen mit dem Deckenbildsensor Bilddaten der Decke des jeweiligen Innenraums, in welchem sich der Serviceroboter befindet, erfasst werden können. Dies ermöglicht insbesondere in grossen Hallen wie beispielsweise Fabrikhallen, Bahnhofshallen oder Flughafenhallen eine zusätzliche Orientierungshilfe für den Serviceroboter bzw. ein gegebenenfalls vorhandenes Navigationsmodul, welches zur Navigation des Serviceroboters dient.

Vorzugsweise ist der Deckenbildsensor ein Steuerungssensor. Es besteht aber auch die Möglichkeit, dass der Deckenbildsensor kein Steuerungssensor ist. Vorzugsweise ist der Deckenbildsensor ein Sicherheitssensor. Es besteht aber auch die Möglichkeit, dass der Deckenbildsensor kein Sicherheitssensor ist.

Alternativ zu diesen Varianten besteht aber auch die Möglichkeit, dass keiner des wenigstens einen Arbeitsbereichserfassungssensors bzw. keiner der wenigstens zwei Arbeitsbereichserfassungssensoren eine solcher Deckenbildsensor ist.

Vorteilhafterweise sind alle des wenigstens einen Arbeitsbereichserfassungssensors bzw. der wenigstens zwei Arbeitsbereichserfassungssensoren an der autonom fahrenden Basisplattform angeordnet. Dies hat den Vorteil, dass die autonom fahrende Basisplattform unabhängig von der Serviceeinheit den Arbeitsbereich des Serviceroboters erfassen kann und somit optimal unabhängig von der Serviceeinheit betrieben werden kann.

Es besteht aber auch die Möglichkeit, dass einige oder alle des wenigstens einen Arbeitsbereichserfassungssensors bzw. der wenigstens zwei Arbeitsbereichserfassungssensoren nicht an der autonom fahrenden Basisplattform, sondern beispielsweise an der Serviceeinheit angeordnet sind. Dies hat den Vorteil, dass aufgrund der weiteren räumlichen Ausdehnung der Serviceeinheit im Vergleich zur autonom fahrenden Basisplattform die Arbeitsbereichserfassungssensoren derart am Serviceroboter angeordnet werden können, dass der Arbeitsbereich des Serviceroboters optimal erfasst werden kann.

Bevorzugt ist die wenigstens eine Energiequelle wenigstens eine Batterie. Dies hat den Vorteil, dass der Serviceroboter auf einfache Art und Weise zuverlässig mit Energie versorgt werden kann, um zuverlässig betrieben zu werden. Zudem hat eine Batterie den Vorteil, dass sie sehr kompakt konstruiert werden kann, womit die Energiequelle im Serviceroboter nur wenig Platz einnimmt.

Es besteht aber auch die Möglichkeit, dass die wenigstens eine Energiequelle nicht wenigstens eine Batterie ist. So kann die wenigstens eine Energiequelle beispielsweise eine Wasserstoffzelle sein.

Bevorzugt ist eine der wenigstens einen Energiequelle bzw. Batterie eine Energiequelle bzw. Batterie zur Versorgung des Antriebs mit Energie. Bevorzugt ist diese Energiequelle bzw. Batterie zur Versorgung des Antriebs mit Energie in der autonom fahrenden Basisplattform angeordnet. Alternativ dazu besteht aber auch die Möglichkeit, dass diese Energiequelle bzw. Batterie zur Versorgung des Antriebs mit Energie in der Serviceeinheit angeordnet ist.

Bevorzugt ist eine der wenigstens einen Energiequelle bzw. Batterie eine Energiequelle bzw. Batterie zur Versorgung des Sicherheitsmoduls mit Energie. In einer ersten Variante davon ist diese Energiequelle bzw. Batterie zur Versorgung des Sicherheitsmoduls mit Energie zugleich die Energiequelle bzw. Batterie zur Versorgung des Antriebs mit Energie. Dabei ist Energiequelle bzw. Batterie zur Versorgung des Antriebs und des Sicherheitsmoduls mit Energie vorteilhafterweise in der autonom fahrenden Basisplattform angeordnet. Alternativ dazu besteht aber auch die Möglichkeit, dass die Energiequelle bzw. Batterie zur Versorgung des Antriebssystems Sicherheitsmoduls mit Energie in der Serviceeinheit angeordnet ist.

In einer zweiten Variante davon ist die Energiequelle bzw. Batterie zur Versorgung des Sicherheitsmoduls mit Energie eine andere Energiequelle bzw. Batterie als die Energiequelle bzw. Batterie zur Versorgung des Antriebs mit Energie. Dabei ist Energiequelle bzw. Batterie zur Versorgung des Sicherheitsmoduls mit Energie vorteilhafterweise in der autonom fahrenden Basisplattform angeordnet. Dabei kann die Energiequelle bzw. Batterie zur Versorgung des Antriebs mit Energie ebenfalls in der autonom fahrenden Basisplattform oder in der Serviceeinheit angeordnet sein. Alternativ dazu besteht aber auch die Möglichkeit, dass die Energiequelle bzw. Batterie zur Versorgung des Sicherheitsmoduls mit Energie in der Serviceeinheit angeordnet ist. Dabei kann die Energiequelle bzw. Batterie zur Versorgung des Antriebs mit Energie in der autonom fahrenden Basisplattform oder ebenfalls in der Serviceeinheit angeordnet sein.

Wenn die wenigstens eine Energiequelle des Serviceroboters wie vorgehend beschrieben eine wenigstens eine Batterie ist, dann weist bevorzugt der Serviceroboter, besonders bevorzugt die autonom fahrende Basisplattform, zwei Serviceroboterladekontakte zum Kontaktieren von zwei Ladestationsladekontakten einer Ladestation zum Aufladen der wenigstens einen Batterie aufweist. Dies hat den Vorteil, dass ermöglicht wird, die Batterie auf einfache Art und Weise aufzuladen.

Vorteilhafterweise ist zum Aufladen der wenigstens einen Batterie jeder der zwei Serviceroboterladekontakte mit einem verschiedenen der zwei Pole der wenigstens einen Batterie verbindbar oder verbunden, wobei einer der zwei Serviceroboterladekontakte bei zu grossem Stromfluss von oder zu dem mit ihm verbundenen Pol mittels einer zum Serviceroboter gehörenden Überstromsicherung trennbar ist. Dies hat den Vorteil, dass der Serviceroboter im Betrieb zuverlässig gegen Überstromschäden abgesichert ist.

Alternativ dazu besteht aber auch die Möglichkeit, dass der Serviceroboter keine solche Überstromsicherung aufweist.

Bevorzugt sind die zwei Serviceroboterladekontakte entlang eines Verstellwegs bewegbar am Serviceroboter, besonders bevorzugt an der autonom fahrenden Basisplattform, gelagert, wobei der Verstellweg zumindest im Wesentlichen horizontal ausgerichtet ist und sich zumindest im Wesentlichen in Richtung einer Mitte der autonom fahrenden Basisplattform und in Richtung von der Mitte der autonom fahrenden Basisplattform weg erstreckt. Dies hat den Vorteil, dass erreicht werden kann, dass der Serviceroboter bzw. die autonom fahrende Basisplattform sich zum Aufladen der wenigstens einen Batterie fahrend zur Ladestation bewegen kann, wobei der Verstellweg im Wesentlichen in die Fahrtrichtung des Serviceroboters bzw. der autonom fahrenden Basisplattform ausgerichtet ist, sodass die Serviceroboterladekontakte beim Kontaktieren der Ladestationsladekontakte eine Bewegung des Serviceroboters bzw. der autonom fahrenden Basisplattform relativ zur Basisstation ausgleichen können, um die Ladestationsladekontakte der Ladestation optimal zu kontaktieren.

Vorteilhafterweise sind die zwei Serviceroboterladekontakte durch wenigstens ein elastisches Mittel gefedert gelagert und durch das wenigstens eine elastische Mittel entlang des Verstellwegs von der Mitte der autonom fahrenden Basisplattform weg in eine Ruhestellung vorgespannt und von ihrer Ruhestellung weg entlang des Verstellwegs zum Serviceroboter hin gegen eine Vorspannung des wenigstens einen elastischen Mittels bewegbar gelagert. Die Serviceroboterladekontakte befinden sich somit vorzugsweise an einem Ende des Verstellwegs, wenn sie sich in ihrer Ruhestellung befinden. Dies hat den Vorteil, dass aufgrund der Vorspannung die Serviceroboterladekontakte beim Kontaktieren der Ladestationsladekontakte eine Bewegung des Serviceroboters bzw. der autonom fahrenden Basisplattform relativ zur Basisstation automatisch ausgleichen können, um die Ladestationsladekontakte der Ladestation optimal zu kontaktieren. In einer Variante dazu können aber auch die Ladestationsladekontakte entlang eines Verstellwegs relativ zur Ladestation bewegbar an der Ladestation gelagert und durch ein vorgespanntes elastisches Element Vorgespannt sind, um beim Kontaktieren der Ladestationsladekontakte eine Bewegung des Serviceroboters bzw. der autonom fahrenden Basisplattform relativ zur Basisstation automatisch ausgleichen können, um die Serviceroboterladekontakte der Ladestation optimal zu kontaktieren.

In einer vorteilhaften Variante sind die zwei Serviceroboterladekontakte in einer im Betrieb der autonom fahrenden Basisplattform horizontal ausgerichteten Ebene schwenkbar gelagert und durch ein elastisches Mittel in eine mittige Position innerhalb ihres möglichen Schwenkbereichs vorgespannt. Dies hat den Vorteil, dass die Serviceroboterladekontakte seitlich verkippt werden können, wenn der Serviceroboter bzw. die autonom fahrende Basisplattform nicht perfekt frontal zur Basisstation bewegt wird, um die Ladestationsladekontakte zu kontaktieren, um dennoch die Ladestationsladekontakte optimal zu kontaktieren.

In einer Variante dazu, insbesondere wenn die Serviceroboterladekontakte nicht derart verkippbar ausgebildet sind, sind die zwei Ladestationsladekontakte in einer im Betrieb der Ladestation horizontal ausgerichteten Ebene schwenkbar gelagert und durch ein elastisches Mittel in eine mittige Position innerhalb ihres möglichen Schwenkbereichs vorgespannt. Dies hat den Vorteil, dass die Ladestationsladekontakte seitlich verkippt werden können, wenn der Serviceroboter bzw. die autonom fahrende Basisplattform nicht perfekt frontal zur Basisstation bewegt wird, um mit seinen Serviceroboterladekontakten die Ladestationsladekontakte zu kontaktieren, damit mit den Serviceroboterladekontakte die Ladestationsladekontakte dennoch optimal kontaktiert werden können.

Es besteht aber auch die Möglichkeit, dass weder die Serviceroboterladekontakte noch die Ladestationsladekontakte derart verkippbar ausgebildet sind.

Alternativ zu den vorgenannten Varianten besteht aber auch die Möglichkeit, dass weder die Serviceroboterladekontakte relativ zum Serviceroboter bewegbar noch die Ladestationsladekontakte relativ zur Ladestation bewegbar gelagert sind.

Bevorzugt weist der Serviceroboter, besonders bevorzugt die autonom fahrende Basisplattform, eine Ladesteuerungseinrichtung zum Steuern des Aufladens der wenigstens einen Batterie auf. Dies hat den Vorteil, dass die Steuerung des Aufladens der wenigstens einen Batterie im Serviceroboter erfolgt. Damit kann auf einfache Art und Weise festgestellt werden, dass das Aufladen der wenigstens einen Batterie des Serviceroboters optimal auf die Batterie des Serviceroboters abgestimmt werden kann. Damit wird der Betrieb des Serviceroboters zuverlässiger und sicherer, da in der Ladestation ein kommerzielles Ladegerät eingesetzt werden kann, ohne dass die Ladestation noch spezifisch mittels einer Steuerung für das Aufladen der wenigstens einen Batterie an die Anforderungen der Batterie des Serviceroboters eingerichtet werden müsste. Wenn der Serviceroboter die vorgehend beschriebene Überstromsicherung aufweist, so weist in einer bevorzugten Variante die Ladesteuerungseinrichtung die vorgehend beschriebene Überstromsicherung auf. Die Überstromsicherung kann aber auch separat von der Ladesteuerungseinrichtung ausgebildet sein.

Vorteilhafterweise weist die Ladesteuerungseinrichtung eine Kurzschlussprüfeinheit auf, mit welcher eine DC-Spannung über die beiden Serviceroboterladekontakte anlegbar ist, wobei mit der Kurzschlussprüfeinrichtung ein Abfall der DC-Spannung feststellbar ist. Vorzugsweise ist die DC-Spannung dabei kleiner als 5 Volt. Die DC-Spannung kann aber auch grösser sein. Unabhängig von der Höhe der DC-Spannung hat die Kurzschlussprüfeinrichtung den Vorteil, dass, wenn zwischen den zwei Serviceroboterladekontakten ein Kurzschluss besteht, da sie beispielsweise einen metallischen Gegenstand wie ein metallisches Tischbein berühren, davon ausgegangen werden kann, dass der Serviceroboter nicht an die Ladestation angeschlossen ist oder dass zumindest die zwei Serviceroboterladekontakten die zwei Ladestationsladekontakten der Ladestation nicht korrekt kontaktieren. Entsprechend ermöglicht dies ein Überprüfen, ob der Serviceroboter korrekt an die Ladestation angeschlossen ist oder nicht.

Vorzugsweise ist die Ladesteuerungseinrichtung dazu ausgebildet, bei einem durch die Kurzschlussprüfeinrichtung festgestellten Abfall der DC-Spannung eine Verbindung zwischen einem der Serviceroboterladekontakten und dem entsprechenden Pol der wenigstens einen Batterie zu trennen. Dies hat den Vorteil, dass, Unfälle und Sachschäden mit dem Serviceroboter und dessen wenigstens einen Batterie auf einfache Art und Weise effektiv verhindert werden können.

In einem Verfahren zum Betrieb des Serviceroboters wird beim Laden wenigstens einen der Batterie vorzugsweise mit der Kurzschlussprüfeinrichtung über die beiden Serviceroboterladekontakte eine DC-Spannung angelegt und überwacht, ob mit der Kurzschlussprüfeinrichtung ein Abfall der DC-Spannung eine Verbindung zwischen einem der Serviceroboterladekontakten festgestellt wird. Wenn ein Abfall der DC-Spannung festgestellt wird, wird vorzugsweise eine Verbindung zwischen einem der Serviceroboterladekontakten und dem entsprechenden Pol der wenigstens einen Batterie getrennt, um das Laden der wenigstens einen Batterie zu stoppen und um einen Kurzschluss der wenigstens einen Batterie zu verhindern.

Vorteilhafterweise weist die Ladesteuerungseinrichtung eine Kapazitätsmesseinheit auf, mit welcher eine AC-Spannung über die beiden Serviceroboterladekontakte anlegbar ist, wobei mit der Kapazitätsmesseinheit eine Kapazität über die beiden Serviceroboterladekontakte ermittelbar ist. Vorzugsweise liegt eine Frequenz der AC-Spannung in einem Bereich von 20 kHz bis 50 kHz, besonders bevorzugt in einem Bereich von 30 kHz bis 50 kHz. Die Frequenz der AC-Spannung kann aber auch ausserhalb von diesem Bereich liegen. Vorteilhafterweise weist die AC-Spannung eine Amplitude von Peak-zu-Peak von höchstens als 2 Volt auf. Diese Amplitude kann aber auch grösser als 2 Volt sein. Unabhängig von der Frequenz und der Amplitude der AC-Spannung hat die Kapazitätsmesseinheit den Vorteil, dass durch eine Bestimmung der Kapazität über die beiden Serviceroboterladekontakte ermittelt werden kann, ob die zwei Serviceroboterladekontakte die zwei Ladestationsladekontakte der Ladestation korrekt kontaktieren oder nicht, da die Ladestation über die zwei Ladestationsladekontakte eine für die Ladestation charakteristische Kapazität besitzt. Entsprechend ermöglicht dies ein Überprüfen, ob der Serviceroboter korrekt an die Ladestation angeschlossen ist oder nicht.

Vorzugsweise ist die Ladesteuerungseinrichtung dazu ausgebildet, zu überprüfen, ob die mit der Kapazitätsmesseinheit ermittelte Kapazität innerhalb eines bestimmten Kapazitätsbereichs liegt und falls die mit der Kapazitätsmesseinheit ermittelte Kapazität ausserhalb des bestimmten Kapazitätsbereichs liegt, eine Verbindung zwischen einem der Serviceroboterladekontakten und dem entsprechenden Pol der wenigstens einen Batterie zu trennen. Dies hat den Vorteil, dass, Unfälle und Sachschäden mit dem Serviceroboter und dessen wenigstens einen Batterie auf einfache Art und Weise effektiv verhindert werden können.

In einem Verfahren zum Betrieb des Serviceroboters wird beim Laden wenigstens einen der Batterie vorzugsweise mit der Kapazitätsmesseinheit eine AC-Spannung über die beiden Serviceroboterladekontakte angelegt, und überwacht, ob die mit der Kapazitätsmesseinheit ermittelte Kapazität ausserhalb des bestimmten Kapazitätsbereichs liegt, welcher der für die Ladestation charakteristischen Kapazität entspricht.

Wenn die ermittelte Kapazität außerhalb des bestimmten Kapazitätsbereichs liegt, wird vorzugsweise eine Verbindung zwischen einem der Serviceroboterladekontakten und dem entsprechenden Pol der wenigstens einen Batterie getrennt, um das Laden der wenigstens einen Batterie zu stoppen und um einen Kurzschluss der wenigstens einen Batterie zu verhindern.

Vorteilhafterweise weist die Ladesteuerungseinrichtung eine Spannungspulsmesseinheit auf, mit welcher einzelne Spannungspulse an einem der beiden Serviceroboterladekontakte feststellbar sind. Da einige Ladestationen in regelmässigen Abständen einzelne Spannungspulse abgeben, um stark entladene Batterien, die aufgeladen werden sollten, aufzuwecken, kann durch das Feststellen von solchen einzelnen Spannungspulse auf einfache Art und Weise überprüft werden, ob die zwei Serviceroboterladekontakte die zwei Ladestationsladekontakte der Ladestation korrekt kontaktieren oder nicht. Entsprechend ermöglicht dies ein einfaches Überprüfen, ob der Serviceroboter korrekt an die Ladestation angeschlossen ist oder nicht.

Vorzugsweise ist die Ladesteuerungseinrichtung dazu ausgebildet, wenn innerhalb eines bestimmten Zeitfensters von der Spannungspulsmesseinheit kein einzelner Spannungspuls festgestellt wird, eine Verbindung zwischen einem der Serviceroboterladekontakte und dem entsprechenden Pol der wenigstens einen Batterie zu trennen. Dies hat den Vorteil, dass, Unfälle und Sachschäden auf einfache Art und Weise effektiv verhindert werden können.

In einer ersten vorteilhaften Variante weist die Ladesteuerungseinrichtung sowohl die Kurzschlussprüfeinheit als auch die Kapazitätsmesseinheit auf. Dabei ist die Ladesteuerungseinrichtung vorzugsweise dazu ausgebildet, sowohl bei einem durch die Kurzschlussprüfeinrichtung festgestellten Abfall der DC-Spannung eine Verbindung zwischen einem der Serviceroboterladekontakten und dem entsprechenden Pol der wenigstens einen Batterie zu verhindern, als auch zu überprüfen, ob die mit der Kapazitätsmesseinheit bestimmte Kapazität innerhalb eines bestimmten Kapazitätsbereichs liegt und falls die mit der Kapazitätsmesseinheit bestimmte Kapazität ausserhalb des bestimmten Kapazitätsbereichs liegt, eine Verbindung zwischen einem der Serviceroboterladekontakten und dem entsprechenden Pol der wenigstens einen Batterie zu verhindern.

In einer zweiten vorteilhaften Variante weist die Ladesteuerungseinrichtung sowohl die Kurzschlussprüfeinheit als auch die Spannungspulsmesseinheit auf. Dabei ist die Ladesteuerungseinrichtung vorzugsweise dazu ausgebildet, sowohl bei einem durch die Kurzschlussprüfeinrichtung festgestellten Abfall der DC-Spannung eine Verbindung zwischen einem der Serviceroboterladekontakten und dem entsprechenden Pol der wenigstens einen Batterie zu verhindern, als auch, wenn innerhalb eines bestimmten Zeitfensters von der Spannungspulsmesseinheit kein einzelner Spannungspuls festgestellt wird, eine Verbindung zwischen einem der Serviceroboterladekontakten und dem entsprechenden Pol der wenigstens einen Batterie zu verhindern.

In einer dritten vorteilhaften Variante weist die Ladesteuerungseinrichtung die Kurzschlussprüfeinheit, die Kapazitätsmesseinheit und die Spannungspulsmesseinheit auf. Dabei ist die Ladesteuerungseinrichtung vorzugsweise dazu ausgebildet, sowohl bei einem durch die Kurzschlussprüfeinrichtung festgestellten Abfall der DC-Spannung eine Verbindung zwischen einem der Serviceroboterladekontakten und dem entsprechenden Pol der wenigstens einen Batterie zu verhindern, als auch zu überprüfen, ob die mit der Kapazitätsmesseinheit bestimmte Kapazität innerhalb eines bestimmten Kapazitätsbereichs liegt und falls die mit der Kapazitätsmesseinheit bestimmte Kapazität ausserhalb des bestimmten Kapazitätsbereichs liegt, eine Verbindung zwischen einem der Serviceroboterladekontakten und dem entsprechenden Pol der wenigstens einen Batterie zu verhindern, als auch, wenn innerhalb eines bestimmten Zeitfensters von der Spannungspulsmesseinheit kein einzelner Spannungspuls festgestellt wird, eine Verbindung zwischen einem der Serviceroboterladekontakten und dem entsprechenden Pol der wenigstens einen Batterie zu verhindern.

In Varianten dazu besteht aber auch die Möglichkeit, dass die Ladesteuerungseinrichtung nur eine der Kurzschlussprüfeinheit, Kapazitätsmesseinheit und Spannungspulsmesseinheit aufweist.

Alternativ zu diesen Varianten besteht auch die Möglichkeit, dass die Ladesteuerungseinrichtung weder die Kurzschlussprüfeinheit, die Kapazitätsmesseinheit noch die Spannungspulsmesseinheit aufweist.

Vorteilhafterweise die Ladesteuerungseinrichtung eine Schnittstelle zur Kommunikation mit dem Steuermodul auf. Wenn der Serviceroboter oder die im vorliegenden Text erwähnte Anordnung mit dem Serviceroboter das Betriebsmodul aufweist, so ist die Schnittstelle der Ladesteuerungseinrichtung in einer bevorzugten Variante eine Schnittstelle mit dem Betriebsmodul. Unabhängig davon, ob die Schnittstelle zur Kommunikation mit dem Steuermodul oder zu Kommunikation mit dem Betriebsmodul dient, hat die Schnittstelle den Vorteil, dass dadurch Steuerbefehle an die Ladesteuerungseinrichtung übermittelt werden können sowie von der Ladesteuerungseinrichtung der Status eines Ladevorgangs an das Steuermodul bzw. das Betriebsmodul übermittelt werden können.

Alternativ dazu besteht aber auch die Möglichkeit, dass die Ladesteuerungseinrichtung keine derartige Schnittstelle aufweist.

Alternativ zu diesen Varianten, wo der Serviceroboter bzw. die autonom fahrende Basisplattform die Ladesteuerungseinrichtung aufweist, besteht aber auch eine Möglichkeit, dass der Serviceroboter keine solche Ladesteuerungseinrichtung zum Steuern des Aufladens der wenigstens einen Batterie aufweist.

Gemäß einer bevorzugten Ausführungsform weist die autonom fahrende Basisplattform einen Gegenkopplungsbereich auf, der elektrische Gegenkoppeleinrichtungen zum elektrischen Koppeln der autonom fahrende Basisplattform mit elektrischen Koppeleinrichtungen der Serviceeinheit und mechanische Gegenkoppeleinrichtungen zum mechanischen Koppeln der autonom fahrenden Basisplattform mit mechanischen Koppeleinrichtungen der Serviceeinheit aufweist. Dies hat den Vorteil, dass eine einfache Kopplung von der autonom fahrenden Basisplattform mit der Serviceeinheit und umgekehrt möglich ist. Der Gegenkopplungsbereich ist vorzugsweise an einer Oberseite, also an einer den Rädern entgegengesetzten Seite, der autonom fahrenden Basisplattform ausgebildet. Bei der elektrischen Koppeleinrichtung sowie der elektrischen Gegenkoppeleinrichtung handelt es sich vorzugsweise um Stecker-Buchsen-Anordnungen. Elektrisches Koppeln umfasst hierbei auch Datenkopplung, also eine Kopplung, bei der Daten übertragen werden.

Der Gegenkopplungsbereich erlaubt ein schnelles Austauschen der Serviceeinheit. Da die Basisplattform autonom fahrend ausgebildet ist, ist diese nicht auf die Serviceeinheit angewiesen, um sich fortzubewegen. Das bedeutet auch, dass die zum autonomen Fahren benötigten Einrichtungen bevorzugt in der autonom fahrenden Basisplattform und nicht in der Serviceeinheit vorgesehen sind.

Insbesondere ist die autonom fahrende Basisplattform bevorzugt mit mehreren unterschiedlichen Serviceeinheiten koppelbar. Die verschiedenen Arten von Serviceeinheiten weisen hierzu vorteilhafterweise einen gleich aufgebauten Kopplungsbereich auf. So sind die Serviceeinheiten einfach austauschbar. Beispielsweise kann es sich bei der Serviceeinheit um die hier genauer beschriebene Serviceeinheit mit Schubladeneinheit handeln. Alternativ hierzu kann es sich bei der Serviceeinheit auch um eine Serviceeinheit mit einer Schrankeinheit oder um eine Serviceeinheit mit einem Sessel oder dergleichen handeln. Weiterhin ferner kann es sich bei der Serviceeinheit beispielsweise um eine Serviceeinheit mit einer UV-Einheit zur Flächendesinfektion handeln. Mit einer solchen UV-Einheit ist eine Flächendesinfektion mittels UV-Licht möglich. In Verbindung mit der autonomen fahrenden Basisplattform können Räume so einfach und gründlich desinfiziert werden.

Vorzugsweise ist die Mehrzahl aller elektrischen Gegenkoppeleinrichtungen gruppiert in wenigen gemeinsamen elektrischen Gegenkopplungsbereichen, insbesondere in einem, zwei oder drei elektrischen Gegenkopplungsbereichen, angeordnet. Dies hat den Vorteil, dass die elektrischen Gegenkoppeleinrichtungen schnell verbunden werden können. Der Einfachheit halber wird im Folgenden von einem einzigen elektrischen Gegenkopplungsbereich ausgegangen. Es wären allerdings auch mehrere wenige elektrische Gegenkopplungsbereiche denkbar. Vorzugsweise sind alle elektrischen Gegenkoppeleinrichtungen gruppiert in dem gemeinsamen elektrischen Gegenkopplungsbereich angeordnet. Der elektrische Gegenkopplungsbereich ist vorzugsweise in seiner Fläche deutlich kleiner als der Gegenkopplungsbereich ausgebildet. Deutlich kleiner bedeutet hierbei, dass dieser maximal ein Zehntel, vorzugsweise maximal ein Zwanzigstel, besonders bevorzugt maximal ein Fünfzigstel der Fläche des Gegenkopplungsbereichs ausmacht. Da die elektrischen Gegenkoppeleinrichtungen gruppiert in diesem gemeinsamen elektrischen Gegenkopplungsbereich, welcher in seiner Fläche deutlich kleiner als der Gegenkopplungsbereich ausgebildet ist, angeordnet sind, können die den elektrischen Gegenkoppeleinrichtungen zugeordneten elektrischen Verbindungen besonders schnell verbunden und getrennt werden. Besonders bevorzugt sind zumindest einige der elektrischen Gegenkoppeleinrichtungen derart in einem gemeinsamen Gegenkopplungskörper angeordnet, dass diese gleichzeitig verbunden oder getrennt werden können.

In einer bevorzugten Ausführungsform ist der gemeinsame elektrische Gegenkopplungsbereich an einem dezentralen Bereich des Gegenkopplungsbereichs angeordnet. Bei zwei elektrischen Gegenkopplungsbereichen sind diese vorzugsweise entsprechend an zwei dezentralen Bereichen des Gegenkopplungsbereichs angeordnet. Beispielsweise können die elektrischen Gegenkopplungsbereiche an zwei gegenüberliegenden Seiten angeordnet sein. Dies hat den Vorteil, dass die elektrischen Gegenkoppeleinrichtungen gut zugängig sind. Als dezentral wird hierbei ein von einem Zentrum des Gegenkopplungsbereichs entfernter Bereich verstanden. Vorzugsweise handelt es sich bei dem dezentralen Bereich um einen Randbereich des Gegenkopplungsbereichs. Wenn der Gegenkopplungsbereich an dem dezentralen Bereich, insbesondere dem Randbereich, angeordnet ist, sind die elektrischen Gegenkoppeleinrichtungen für das Koppeln der autonom fahrenden Basisplattform mit der Serviceeinheit besonders gut zugänglich.

Gemäß einer bevorzugten Ausführungsform weist der gemeinsame elektrische Gegenkopplungsbereich eine Datenschnittstelle, eine Sicherheitsschnittstelle und eine Energieschnittstelle auf. Dies hat den Vorteil, dass unterschiedlichste Daten und Signale übertragen werden können. Dabei dient die Datenschnittstelle zum Übertragen von Daten zwischen der Serviceeinheit und der autonom fahrenden Basisplattform. Die Datenschnittstelle kann zumindest einige, vorzugsweise alle, der folgenden Verbindungen aufweisen: USB 3, USB-C, CAN-Bus, Ethernet (vorzugsweise 2), Audiostecker (vorzugsweise in der Version 3,5mm), HDMI. Ferner dient die Sicherheitsschnittstelle zum Übertragen sicherheitsrelevanter Daten zwischen Benutzer und autonom fahrender Basisplattform oder Serviceeinheit und autonom fahrender Basisplattform. Die Sicherheitsschnittstelle kann zumindest einige, vorzugsweise alle, der folgenden Einrichtungen aufweisen: Programmierschnittstelle, Digital Input/Output (vorzugsweise 10), Notaus-Knopf (vorzugsweise 2). Weiterhin ferner dient die Energieschnittstelle zum Übertragen von Energie von der autonom fahrenden Basisplattform in die Serviceeinheit. Eine Übertragung in umgekehrter Richtung ist aber auch denkbar. Für den Fall, dass der Serviceroboter lediglich eine Energiequelle aufweist, die in der autonom fahrenden Basisplattform ausgebildet ist, dient die Energieschnittstelle zum Versorgen der Serviceeinheit mit Energie aus der Energiequelle. Bei der Energieschnittstelle handelt es sich vorzugsweise um eine Schnittstelle für Gleichspannung mit 24 V.

Vorzugsweise weist der Gegenkopplungsbereich eine Lastauflagefläche auf, die dazu ausgebildet ist, die Last der Serviceeinheit aufzunehmen. Dies hat den Vorteil, dass die Lastauflagefläche einfach mit dem Rest der autonom fahrenden Basisplattform gekoppelt werden kann. Bei der Last der Serviceeinheit kann es sich einerseits um das statische Gewicht bzw. die statische Gewichtskraft und andererseits um kinetische Kräfte handeln, die insbesondere beim Beschleunigen und Abbremsen im Betrieb des Serviceroboters auftreten können. Die Lastauflagefläche kann vorzugsweise ein Bauelement sein, dass der Serviceeinheit zugeordnet oder zuordenbar ist. So kann die Lastauflagefläche der Serviceeinheit einfach mit der autonom fahrenden Basisplattform verbunden werden und hiermit die mechanische Kopplung zwischen der autonom fahrenden Basisplattform und der Serviceeinheit unterstützen.

In einer bevorzugten Ausführungsform weist die Lastauflagefläche eine Länge von 60% bis 90%, vorzugsweise 70% bis 80%, besonders bevorzugt etwa 75% der Gesamtlänge der autonom fahrenden Basisplattform auf, wobei die Lastauflagefläche eine Breite von 40% bis 80%, vorzugsweise 50% bis 70%, besonders bevorzugt etwa 65% der Gesamtbreite der autonom fahrenden Basisplattform aufweist. Dies hat den Vorteil, dass die Lastauflagefläche großflächig ausgebildet ist. Die Länge der Lastauflagefläche ist vorzugsweise in Vorwärtsrichtung des Serviceroboters ausgerichtet. Die Breite der Lastauflagefläche ist entsprechend vorzugsweise in einer Richtung senkrecht zu der Vorwärtsrichtung des Serviceroboters ausgerichtet. Beispielsweise kann die Lastauflagefläche eine Länge von 480 mm bis 670 mm, vorzugsweise 520 mm bis 620 mm, besonders bevorzugt etwa 570 mm aufweisen. Beispielsweise kann die Lastauflagefläche eine Breite von 350 mm und 520 mm, vorzugsweise 400 mm und 480 mm, und besonders bevorzugt 440 mm aufweist.

Gemäß einer bevorzugten Ausführungsform sind die mechanischen Gegenkoppeleinrichtungen an der Lastauflagefläche und/oder innerhalb der Lastauflagefläche angeordnet oder anordenbar. Dies hat den Vorteil, dass die mechanischen Gegenkoppeleinrichtungen dazu verwendet werden können, die autonom fahrenden Basisplattform bzw. den Rest der autonom fahrenden Basisplattform mit der Serviceeinheit mechanisch zu koppeln. Insbesondere sind vorzugsweise alle Gegenkoppeleinrichtungen an und/oder in der Lastauflagefläche angeordnet. Die mechanische Kopplung der autonom fahrenden Basisplattform und der Serviceeinheit erfolgt somit bevorzugt an der Lastauflagefläche, so dass Kopplung und Krafteinleitung in örtlicher Nähe erfolgen und ein kurzer Kraftfluss entsteht. Insbesondere sind die Gegenkoppeleinrichtungen hierbei vorzugsweise dezentral an der Lastauflagefläche angeordnet. Hierdurch sind sie besonders gut zugänglich.

Vorzugsweise ist der gemeinsame elektrische Gegenkopplungsbereich außerhalb der Lastauflagefläche angeordnet. Dies hat den Vorteil, dass hierdurch keine mechanische Kraft auf die elektrischen Verbindungen wirkt, so dass diese zuverlässig und sicher ihre Aufgaben erfüllen können. Die Anordnung ermöglicht zudem eine besonders lange Lebensdauer der elektrischen Verbindungen.

In einer bevorzugten Ausführungsform weist die Lastauflagefläche eine Vielzahl von Aussparungen auf, die dazu ausgebildet sind, der Lastauflagefläche eine ausreichende Steifigkeit zu verleihen und das Gewicht der Lastauflagefläche zu optimieren. Optimieren heißt hierbei verringern. Dies hat den Vorteil, dass die Lastauflagefläche leicht aber stabil ausgebildet ist. Zudem können durch die Laustauflagefläche hindurch Einrichtungen innerhalb der Serviceeinheit zugängig sein.

Gemäß einer bevorzugten Ausführungsform weisen die mechanischen Gegenkoppeleinrichtungen Zentriereinrichtungen zum Zentrieren der Position der autonom fahrenden Basisplattform und der Serviceeinheit und Befestigungseinrichtungen zum Befestigen der autonom fahrenden Basisplattform und der Serviceeinheit miteinander auf. Dies hat den Vorteil, dass mittels der Zentriereinrichtung die Montage vereinfacht wird und sichergestellt wird, dass eine ordnungsgemäße Montage erfolgt.

Vorzugsweise sind die Zentriereinrichtungen als Zentrierstifte und/oder Zentrierbohrungen ausgebildet. Dies hat den Vorteil, dass hierdurch eine kostengünstige und einfach umsetzbare Zentrierung zwischen der autonom fahrenden Basisplattform und der Serviceeinheit möglich ist.

In einer bevorzugten Ausführungsform sind die Befestigungseinrichtungen als Klemmverbinder ausgebildet. Dies hat den Vorteil, dass durch die Klemmverbinder ein vorteilhaftes werkzeugfreies Befestigen und Lösen von der autonom fahrenden Basisplattform und der Serviceeinheit möglich ist. Vorzugsweise ist jedem Klemmverbinder derart ein Zentrierstift zugeordnet, dass diese benachbart zueinander angeordnet sind. Besonders bevorzugt sind 5 Zentrierstifte und 4 Klemmverbinder angeordnet.

Gemäß einer bevorzugten Ausführungsform sind mindestens zwei der Räder vom Antrieb antreibbare Antriebsräder und sind mindestens zwei weitere der Vielzahl von Rädern Stützräder zum Stabilisieren des Serviceroboters. Dies hat den Vorteil, dass der Serviceroboter mit zwei Antriebsrädern grundsätzlich dazu ausgebildet ist, sich auf einer Stelle zu drehen.

Vorzugsweise sind zwei der Räder vom Antrieb antreibbare Antriebsräder und sind vier weitere Räder der Vielzahl von Rädern Stützräder zum Stabilisieren des Serviceroboters, wobei zwei der Stützräder vorne und zwei der Stützräder hinten an der autonom fahrenden Basisplattform ausgebildet sind. Dies hat den Vorteil, dass das Gesamtgewicht des Serviceroboters auf vier Stützräder verteilt werden kann. Die Vorderräder sind vorzugsweise größer als die Hinterräder. Die hat den Vorteil, dass genug Bauraum für eine Batterie zwischen den beiden Hinterrädern bereitgestellt werden kann. Mit den großen Vorderrädern ist zudem ein besseres Überbrücken von Fahrstuhlspalten möglich.

In einer bevorzugten Ausführungsform weist das Fahrwerk eine Vielzahl von federnd ausgebildeten Radaufhängungen auf, die Stützrad-Aufhängungen und Antriebsrad-Aufhängungen umfassen, wobei jedem Stützrad genau eine der Stützrad-Aufhängungen zugeordnet ist und wobei den Antriebsrädern zumindest eine gemeinsame Antriebsrad-Aufhängung zugeordnet ist. Vorzugsweise ist jedem Antriebsrad eine Antriebsrad-Aufhängung zugeordnet. Dies hat den Vorteil, dass eine Vollfederung des Fahrwerks erreicht wird. Dies führt zu besonders geringen Fahrgeräuschen im Betrieb.

Gemäß einer bevorzugten Ausführungsform sind die Stützrad-Aufhängungen als Einzelradaufhängung ausgebildet. Dies hat den Vorteil, dass die Räder unabhängig voneinander federn können. Vorzugsweise sind auch die den Antriebsrädern zugeordneten Radaufhängungen als Einzelradaufhängungen ausgebildet.

Vorzugsweise weist jede Stützrad-Aufhängung Folgendes auf: einen Schaft zum Verbinden eines zugeordneten Stützrads mit einem Fahrgestell des Serviceroboters; und ein elastisches Element, das zwischen dem Fahrgestell und dem Stützrad angeordnet ist. Dies hat den Vorteil, dass eine einfach umzusetzende, platzsparende Federung möglich ist.

In einer bevorzugten Ausführungsform weist jede Stützrad-Aufhängung eine reibungsarme Führung auf, die zum reibungsarmen Führen des Schafts an dem Fahrgestell angeordnet oder anordenbar ist. Dies hat den Vorteil, dass die Anordnung des Schafts an das Fahrgestell vereinfacht wird.

Gemäß einer bevorzugten Ausführungsform ist die reibungsarme Führung als hülsenförmige Kugelkäfigführung ausgebildet. Dies hat den Vorteil, dass die Hülse durch einen Rahmen des Fahrgestells zumindest bereichsweise hindurch geführt werden kann.

Vorzugsweise ist das elastische Element als Feder, vorzugsweise als Spiralfeder, ausgebildet. Vorzugsweise ist die Feder eine Stahlfeder. Dies hat den Vorteil, dass das elastische Element günstig herzustellen ist. Eine Feder ist ferner einfach an das Gewicht der Serviceeinheit anpassbar und kann ferner einfach gewechselt werden.

In einer bevorzugten Ausführungsform ist der Schaft in einer Federwegrichtung des elastischen Elements fest an dem Stützrad angeordnet, wobei der Schaft und damit das Stützrad zwischen einer Ruheposition bei einem sich in Ruhe befindenden Serviceroboter und einer maximalen Federungsposition in der Federwegrichtung entlang eines Stützrad-Federwegs bewegbar an dem Fahrgestell angeordnet oder anordenbar ist. Dies hat den Vorteil, dass eine unidirektionale Federung umgesetzt ist, womit eine hohe Fahrstabilität erreicht werden kann. Die Federrichtung entspricht vorzugsweise auch der Axialrichtung des Schafts.

Vorzugsweise ist der Stützrad-Federweg zumindest im Wesentlichen senkrecht zu einer Haupterstreckungsebene der autonom fahrenden Basisplattform ausgerichtet. Mit anderen Worten verläuft der Federweg von der autonom fahrenden Basisplattform aus senkrecht nach unten. Dies hat den Vorteil, dass die Federung insgesamt platzsparend mit einem kurzen Federweg erfolgen kann. Vergleichbare Roboter verfügen über SchwenkarmSysteme oder Pendelarme. Schwenkarmsysteme benötigen deutlich mehr Bauraum und unabhängige Gegenpunkte und setzten oftmals ein aufwändiges Dämpfungssystem voraus, um ein Aufschwingen der größeren Federwege zu verhindern.

In einer bevorzugten Ausführungsform liegt die Länge des Stützrad-Federwegs in einem Bereich zwischen 5 mm und 15 mm, vorzugsweise in einem Bereich zwischen 8 mm und 12 mm, und beträgt besonders bevorzugt etwa 10 mm. Dies hat den Vorteil, dass mit dem kurzen Federweg eine gute Stabilität beim Bremsen erreicht wird. Vorzugsweise sind Federweg und Federkonstante für alle Stützräder gleich.

Gemäß einer bevorzugten Ausführungsform weist der Schaft einen Kopf auf, der dazu ausgebildet ist, mit dem Fahrgestell zum Festlegen der Ruheposition in Kontakt zu kommen. Dies hat den Vorteil, dass die unidirektionale Federung konstruktiv einfach umgesetzt werden kann.

Vorzugsweise weist jede Stützrad-Aufhängung eine Einstelleinrichtung auf, mittels derer ein Federweg des elastischen Elements einstellbar ist. Dies hat den Vorteil, dass die elastischen Elemente an die Gewichte unterschiedlicher Serviceeinheiten anpassbar sind.

In einer bevorzugten Ausführungsform liegt eine Federkonstante des elastischen Elements in einem Bereich zwischen 20 N/mm und 60 N/mm, vorzugsweise zwischen 30 N/mm und 50 N/mm, und beträgt besonders bevorzugt etwa 45 N/mm. Hierdurch ergibt sich ein optimales Federungsverhalten.

Gemäß einer bevorzugten Ausführungsform weist jede Antriebsrad-Aufhängung einen Halterahmen zum Halten mindestens eines Antriebsrads an dem Fahrgestell auf, wobei der Halterahmen ein oberes Rahmenelement und ein unteres Rahmenelement aufweist, wobei das mindestens eine Antriebsrad zwischen dem oberen Rahmenelement und dem unteren Rahmenelement anordenbar oder angeordnet ist, und wobei jede Antriebsrad-Aufhängung mindestens zwei weitere elastische Elemente aufweist, die zwischen dem oberen Rahmenelement und dem unteren Rahmenelement angeordnet sind. Dies hat den Vorteil, dass eine Federung des Antriebsrads, vorzugsweise inklusive von zumindest Teilen des Antriebs, möglich ist. Bei dem Antrieb kann es sich beispielsweise um einen Differentialantrieb handeln. Beispielsweise kann das obere Rahmenelement an dem Fahrgestell befestigt oder befestigbar sein und das untere Rahmenteil wird mittels der elastischen Elemente in Richtung Boden gedrückt. Die Federelemente sind beispielsweise mittels Stifte geführt. Die Antriebsrad-Aufhängung bzw. die Aufhängung des Antriebsystems dient primär dazu, einen Anpressdruck für Traktion, inkl. Bremsen, der Antriebräder zu erzeugen.

Vorzugsweise ist das mindestens eine Antriebsrad zwischen den zwei weiteren elastischen Elementen angeordnet. Dies hat den Vorteil, dass ein kompakter Aufbau entsteht und eine gute Federung sowohl beim Bremsen als auch beim Beschleunigen und Überfahren von Schwellen möglich ist.

In einer bevorzugten Ausführungsform ist eine gemeinsame Federkonstante der mindestens zwei weiteren elastischen Elemente maximal ein Zehntel, vorzugsweise maximal ein Zwanzigstel, der Federkonstante des elastischen Elements. Die Federkraft zum Federn der Antriebsräder ist also deutlich niedriger als die der Stützräder. Dies hat den Vorteil, dass die Fahr-/Kippstabilität nicht gefährdet wird. Das Gesamtgewicht des Roboters wird also primär von dem Federsystem der vorzugsweise vier Stützräder getragen.

Gemäß einer bevorzugten Ausführungsform liegt eine gemeinsame Federkonstante der weiteren elastischen Elemente in einem Bereich zwischen 0,5 N/mm und 4 N/mm, vorzugsweise zwischen 1 N/mm und 3 N/mm, und beträgt besonders bevorzugt etwa 1,8 N/mm. Dies hat den Vorteil, dass hiermit ein besonders guter Anpressdruck für die Antriebsräder erreicht wird.

Vorzugsweise ist das mindestens eine Antriebsrad in einer Federwegrichtung der zwei weiteren elastischen Elemente fest an dem unteren Rahmenelement angeordnet, wobei das untere Rahmenelement und damit das mindestens eine Antriebsrad zwischen zwei maximalen Federungspositionen entlang eines Antriebs-Federwegs bewegbar an dem oberen Rahmenelement angeordnet ist, wobei eine Ruheposition des Antriebsrads bei einem sich in Ruhe befindenden Serviceroboter zwischen den beiden maximalen Federungspositionen liegt. Mit anderen Worten ist ein Federn nach unten und eine Federn nach oben möglich. Die Federung ist somit vorzugsweise nicht unidirektional. Dies hat den Vorteil, dass ein Anpressdruck auf den Boden bei Mulden gewährleistet werden kann und ein Federn nach oben bei Schwellen möglich ist. Mit anderen Worten kann auch bei unebenem Untergrund bzw. Boden immer Bodenkontakt der Antriebsräder gewährleistet werden. Vorzugsweise beträgt der Federweg nach oben, also von der Ruheposition zu einer oberen maximalen Federungsposition, etwa 10 mm und der Federweg nach unten, also von der Ruheposition zu einer unteren maximalen Federungsposition, etwa 25 mm.

In einer bevorzugten Ausführungsform ist der Antriebsrad-Federweg mindestens 1,5 mal so lang, vorzugsweise doppelt so lang, wie der Stützrad-Federweg ausgebildet. Dies hat den Vorteil, dass der Serviceroboter über eine hohe Fahrstabilität verfügt.

Gemäß einer bevorzugten Ausführungsform liegt die Länge des Antriebsrad-Federwegs in einem Bereich zwischen 15 mm und 50 mm, vorzugsweise in einem Bereich zwischen 20 mm und 40 mm, und beträgt besonders bevorzugt etwa 35 mm. Dies hat den Vorteil, dass der Serviceroboter zuverlässig durch die Antriebsräder angetrieben werden kann.

Vorzugsweise ist der Federweg zumindest im Wesentlichen senkrecht zu der Haupterstreckungsebene der autonom fahrenden Basisplattform ausgerichtet. Dies hat den Vorteil, dass die Bauform sehr kompakt ist. Durch die insgesamt sehr kurzen Federwege kann ein niedriger Schwerpunkt des Gesamtsystems erreicht werden.

Vorzugsweise weist die Serviceeinheit ein Gehäuse mit zumindest einer Rückwand und zwei einander gegenüberliegenden Seitenwänden auf, wobei das Gehäuse ein isolierendes Material enthält, insbesondere aus einem isolierenden Material hergestellt ist. Dies hat den Vorteil dass das Gehäuse den Innenraum temperaturmäßig isoliert. Dadurch können einerseits Gegenstände oder Lebensmittel effizient im Innenraum des Kühlschranks gekühlt werden. Andererseits können beispielweise zu wärmende Gegenstände oder warme Gerichte länger warmgehalten werden. Der Innenraum wird hierbei durch das Gehäuse definiert, wobei hierfür die Seitenwände, die Rückwand, Deckel- und Bodenteil sowie Schubladen oder Türen den Innenraum begrenzen. Beispielsweise eignen sich Schaumdämmstoffe wie Polyurethanschaum oder vergleichbare Wärmedämmsysteme. Zusätzlich ist das Gehäuse von einer Außenschale umgeben, welche leicht zu reinigen ist und ästhetischen oder designspezifischen Aspekten der Serviceeinheit Rechnung trägt.

In einer bevorzugten Ausführungsform ist das Gehäuse als integrale Struktur einstückig hergestellt. Dies hat den Vorteil, dass die Herstellung besonders einfach und effizient möglich ist. Zudem sinkt die Anzahl der Bauteile, wodurch die Montage erleichtert wird. Beispielsweise ist das Gehäuse aus einem Schaumkörper herstellbar. Vorzugsweise ist das Gehäuse aus einem Schaumkörper hergestellt.

Gemäß einer vorteilhaften Weiterbildung umfasst die Serviceeinheit eine Tragstruktur zum Stabilisieren der Serviceeinheit Dies hat den Vorteil, dass das Gehäuse insgesamt versteift werden kann. Die erhöhte Biegesteifigkeit im Betrieb, insbesondere bei Bremsmanövern oder beispielsweise wenn sich ein Nutzer auf der Serviceeinheit abstützt. Die Tragstruktur ist außerhalb des Gehäuses angeordnet, wodurch die Isolation des Gehäuses nur an wenigen Stellen des Gehäuses unterbrochen werden muss. Zusätzlich kann die Tragstruktur zum Befestigen weiterer Komponenten und Bauteil außerhalb des Gehäuses vielseitig genutzt werden.

Vorzugsweise umfasst die Tragstruktur zumindest zwei Seitenstrukturen, wobei jede der zwei Seitenstrukturen einer verschiedenen der zwei Seitenwände zugeordnet ist. Dies hat den Vorteil, dass die Serviceeinheit eine hohe Seitenstabilität aufweist, wobei die zwei Seitenstrukturen beispielsweise mit den Seitenwänden des Gehäuses verklebt sein können. Beispielsweise sind die zwei Seitenstrukturen aus einem Metall wie Aluminium hergestellt. Alternativ eigenen sich auch Kunststoffe oder Faserverbundwerkstoffe für eine Seitenstruktur.

Nach einer besonders bevorzugten Ausführungsform sind die Seitenstrukturen zumindest teilweise innerhalb und/ oder zumindest teilweise ausserhalb des Gehäuses angeordnet. Besonders vorzugsweise sind die Seitenstrukturen zumindest teilweise innerhalb des Gehäuses angeordnet. Dadurch wird beispielsweise der technische Vorteil erreicht, dass Gehäuse für sich stabil ausgebildet werden kann. Beispielsweise können zusätzliche Einbauten wie Schubladeneinheiten oder Regalelemente an den Seitenstrukturen innerhalb des Gehäuses befestigt werden, wodurch sich die Isolation des Gehäuses verbessert. Mit anderen Worten ist es nicht mehr notwendig Öffnungen in das isolierende Material des Gehäuses einzubringen, um Einbauten zu befestigen. Insgesamt wird dadurch die Isolation und damit der Energiehaushalt verbessert.

Gemäss einer weiteren bevorzugten Ausführungsform ist das Gehäuse einschliesslich der Seitenstrukturen, die zumindest teilweise innerhalb des Gehäuses angeordnet sind, vollständig aus der Serviceeinheit entfernbar ausgebildet. Dadurch wird beispielsweise der technische Vorteil erreicht, dass das gesamte Gehäuse einschliesslich der in dem Gehäuse angeordneten Einbauten von der Serviceeinheit trennbar. Somit kann beispielsweise ein Gehäuse mit integriertem Kühlraum oder gekühltem Innenraum entfernt und durch eine andere Funktion ersetzt werden. Somit wird das Einsatzgebiet der Serviceeinheit vielseitiger und der Austausch eines Gehäuses kann besonders einfach und schnell erfolgen.

In einer bevorzugten Ausführungsform weist die Tragstruktur eine Deckelstruktur auf, welche die zumindest zwei Seitenstrukturen miteinander verbindet. Dies hat den Vorteil, dass eine besonders hohe Stabilität erreicht werden kann. Die Tragstruktur samt Deckelstruktur zeichnet sich hierbei durch eine hohe Steifigkeit und eine gute Lastverteilung auf. Zusätzlich kann durch eine geeignete Bodenstruktur, welche die beiden Seitenstrukturen miteinander verbindet, eine Käfigstruktur realisiert werden, welche besonders hohe Steifigkeit bei geringem Gewicht erreichen kann. Beispielsweise kann die Bodenstruktur auch als Lastauflagefläche genutzt werden. Die Leichtbaustruktur kann beispielsweise durch eine zusätzliche Rückstruktur ergänzt werden.

Gemäß einer vorteilhaften Weiterbildung weist die Tragstruktur zumindest eine Schubladenschienen-Einheit zum Führen einer Schubladeneinheit auf. Eine Schubladenschienen-Einheit umfasst jeweils zwei einander gegenüberliegende Schienen innerhalb des Gehäuses auf, um eine Schubladeneinheit aufzunehmen. Dies hat den Vorteil, dass die Last einer Schubladeneinheit samt Inhalt nicht in die Gehäusestruktur sondern direkt in die Tragstruktur übertragen wird. Dadurch kann die Schubladeneinheit samt Inhalt vollständig innerhalb des Gehäuses gekühlt werden.

Nach einer besonders vorteilhaften Weiterbildung ist die Schubladenschienen-Einheit mit den Seitenstrukturen verbunden, welche zumindest teilweise innerhalb des Gehäuses angeordnet sind. Dadurch wird beispielsweise der technische Vorteil erreicht, dass die Schubladeneinheiten direkt an den Seitenstrukturen innerhalb des Gehäuses befestigt werden können. Dadurch verbessert sich die Isolation des Gehäuses es ist nicht mehr notwendig Öffnungen in das isolierende Material des Gehäuses einzubringen, um die Schubladeneinheiten zu befestigen. Insgesamt wird dadurch die Isolation und damit der Energiehaushalt verbessert. Beispielsweise kann das Gehäuse weitere Schubladenschienen-Einheiten zum Führen von Schubladeneinheiten aufweisen.

Vorzugsweise weist die Serviceeinheit wenigstens eine Inventarverstaueinheit auf, wobei die Inventarverstaueinheit einen Konfigurationsänderungsantrieb zum Überführen der Inventarverstaueinheit von einer verschlossenen Konfiguration zu einer geöffneten Konfiguration und zurück aufweist. In der verschlossenen Konfiguration ist ein Zugriff auf in der Inventarstaueinheit verstaute Inventargegenstände nicht möglich, wohingegen in der geöffneten Konfiguration ein solcher Zugriff möglich ist.

In einer bevorzugten Ausführungsform weist die Inventarverstaueinheit einen Konfigurationszustandssensor auf, der dazu ausgebildet ist, als Konfigurationszustand der Inventarverstaueinheit zu erfassen, ob die Inventarverstaueinheit sich aktuell in der verschlossenen Konfiguration oder der geöffneten Konfiguration befindet, und wobei der Konfigurationszustandssensor dazu ausgebildet ist, Konfigurationszustandssensordaten mit Informationen zu dem vom Konfigurationszustandssensor erfassten Konfigurationszustand auszugeben.

Vorzugsweise weist die Serviceeinheit einen Schubladenantrieb zum Überführen einer Schubladeneinheit zwischen einer ersten Position und einer zweiten Position auf, wobei der Schubladenantrieb an der Tragstruktur angeordnet ist. Dies hat den Vorteil, dass auch die Last, welche durch den Einsatz des Antriebs entsteht, direkt in die Tragstruktur eingeleitet wird. Beispielsweise entsprechen die erste Position der geschlossenen Position und die zweite Position der geöffneten Position.

Bei dem Schubladenantrieb kann es sich vorzugsweise um einen Konfigurationsänderungsantrieb handeln, wobei es sich dann bei der ersten Position um die verschlossene Konfiguration und bei der zweiten Position um die geöffnete Konfiguration handelt.

In einer bevorzugten Ausführungsform ist der Schubladenantrieb dazu ausgebildet, eine Schubladeneinheit während einer fahrenden Bewegung des Serviceroboters in der ersten Position zu halten. Dies hat den Vorteil, dass die Haltekraft des Schubladenantriebs als zusätzliche Sicherheitsfunktion eingesetzt werden kann. Somit werden beispielsweise Gegenstände in der Schubladeneinheit während der Bewegung des Serviceroboters gesichert. Dies kann insbesondere im Fall einer Notbremsung vorteilhaft sein.

Nach einer weiteren Ausführungsform ist der Schubladenantrieb innerhalb des Gehäuses angeordnet. Dadurch werden erneut die technischen Vorteile erreicht, welche im Zusammenhang mit den vorausgehenden Ausführungsformen erreicht werden. Insbesondere wird der technische Vorteil erreicht, dass der Schubladenantrieb beispielsweise an den Seitenstrukturen innerhalb des Gehäuses befestigt werden können. Dadurch wird die Isolation des Gehäuses gewahrt und es ist nicht mehr notwendig Öffnungen in das isolierende Material des Gehäuses einzubringen.

Gemäß einer vorteilhaften Weiterbildung weist die Tragstruktur weitere Schubladenschienen-Einheiten zum Führen von Schubladeneinheiten auf. Dies hat den Vorteil, dass mehrere Schubladenschienen-Einheiten innerhalb des Gehäuses angeordnet sind. Beispielsweise sind die Schubladenschienen-Einheiten übereinander angeordnet und können beispielsweise in Höhenrichtung unterschiedliche Abstände für unterschiedliche Schubladenmodule aufweisen.

Vorzugsweise umfasst die Tragstruktur eine Rückstruktur, welche der Rückwand zugeordnet ist. Dies hat den Vorteil dass die Stabilität der Tragstruktur zusätzlich verbessert wird. Lasten können noch besser verteilt werden und die Käfigstruktur wird noch steifer. Beispielsweise ist auch die Rückstruktur außerhalb des Gehäuses angeordnet. Sie kann vorzugsweise den Deckel mit dem Boden der Tragstruktur verbinden. Beispielsweise kann die Tragstruktur vollständig aus Metall wie Aluminium hergestellt werden. Alternativ können zumindest einzelne Bestandteil der Tragstruktur aus einem geeigneten Kunststoff hergestellt werden.

In einer bevorzugten Ausführungsform umfasst die Serviceeinheit eine Kühlungsvorrichtung zum Kühlen eines Innenraums, welcher im Wesentlichen durch das Gehäuse definiert ist. Der Innenraum kann beispielsweise auch als Kühlraum bezeichnet werden. Dies hat den Vorteil, dass Gegenstände oder Lebensmittel innerhalb des Gehäuses gekühlt werden können. Dies ist insbesondere im Zusammenhang mit einem Gehäuse aus einem isolierenden Material vorteilhaft, weil die Kühlung besonders effizient erfolgen kann. Beispielsweise ist die Kühlungsvorrichtung außerhalb des Gehäuses angeordnet. Die Kühlungsvorrichtung umfasst beispielsweise Komponenten wie einen Kompressor mit Steuerung, einen Temperaturregler, zumindest einen Lüfter und einen Wärmetauscher.

Innerhalb des Gehäuses sind eine Verdampferplatte, ein Temperatursensor und zumindest ein zweiter Lüfter zur Umwälzung gekühlter Luft angeordnet.

Gemäß einer vorteilhaften Weiterbildung ist die Kühlungsvorrichtung im Wesentlichen an der Rückstruktur angeordnet. Dies hat den Vorteil, dass eine besonders hohe Stabilität der Serviceeinheit erreicht werden kann. Das Gewicht der Kühlungsvorrichtung wird in die Tragstruktur eingeleitet. Zusätzlich kann eine einfache Zugänglichkeit der Kühlungsvorrichtung von der Rückseite des Serviceroboters aus erreicht werden. Beispielsweise kann die Kühlungsvorrichtung mittels einer Inspektionsklappe versehen werden, welche in die Außenschale der Serviceeinheit angeordnet ist. Besonders vorteilhaft ist es hierbei die Kühlungsvorrichtung möglichst tief anzuordnen, um den Schwerpunkt des Serviceroboters weitestgehend abzusenken.

Vorzugsweise ist die Kühlungsvorrichtung als modulare Einheit auswechselbar ausgebildet. Dies hat den Vorteil, dass die Kühlungsvorrichtung als gesamtes kofferartiges Modul ausgebildet ist und somit sehr leicht und in kurzer Zeit auswechselbar ist.

Nach einer zusätzlichen Ausführungsform umfasst die Kühlungsvorrichtung einen Wasserspeicher zur Aufnahme von Wasser aus dem Innenraum. Dadurch wird beispielsweise der technische Vorteil erreicht, dass Tauwasser aus dem Innenraum oder dem Kühlraum in dem Wasserspeicher gesammelt werden kann. Vorzugsweise befindet sich der Wasserspeicher ausserhalb des Innenraums. Beispielsweise befindet sich der Wasserspeicher unterhalb der Kühlungsvorrichtung.

Gemäss einer weiteren vorteilhaften Ausführungsform ist dem Wasserspeicher ein Lüfter zugeordnet, wobei der Lüfter angrenzend an einen Kompressor angeordnet ist, um Wärme des Kompressors auf den Wasserspeicher zu strömen. Dadurch wird beispielsweise der technische Vorteil erreicht, dass der Verdunstungsprozess durch die warme auf den Wasserspeicher geströmte Luft vereinfacht wird. Somit wird nicht übermässig viel Wasser in dem Wasserspeicher angesammelt und ein unkontrolliertes Überlaufen des Wasserspeichers kann verhindert werden. Stattdessen können auch geringe Mengen an angesammelten Wasser unmittelbar verdunstet und ein unkontrollierter Austritt von Wasser auf den Fussboden kann verhindert werden.

Besonders vorzugsweise ist dem Lüfter eine Lüftersteuereinheit zum Steuern des Lüfters zur Erzeugung eines Luftstroms, insbesondere Verdampfungsluftstroms, auf den Wasserspeicher zugeordnet. Dadurch kann beispielsweise der technische Vorteil erreicht werden, dass der Lüfter mittels gezielten Luftsteuerbefehlen eines Luftsteuermoduls auf die Lüftersteuereinheit betrieben werden kann. Beispielsweise kann der Lüfter dann eingeschaltet werden, wenn Wasser in den Wasserspeicher eintritt.

Eine besonders bevorzugte Ausführungsform umfasst die Kühlungsvorrichtung mit einer Kühlungsvorrichtungsteuereinheit zum Steuern der Temperatur des Innenraums. Dadurch wird beispielsweise der technische Vorteil erreicht, dass die Temperatur innerhalb des Innenraums angehoben werden kann, um eine Abtaukonfiguration zum Abtauen von Vereisungen zu starten. Besonders vorzugsweise wird parallel ein Lüftersteuerbefehl zum Erzeugen eines Verdampfungsluftstroms auf den Wasserspeicher ausgegeben werden.

Vorzugsweise weist die Serviceeinheit einen im Wesentlichen vertikal ausgerichteten Wärmekanal auf, welcher der Kühlungsvorrichtung zugordnet ist. Dies hat den Vorteil, dass Abwärme des Wärmetauschers nach oben abgeführt werden kann. Dies hat den zusätzlichen Vorteil, dass die Effizienz der Kühlungsvorrichtung gesteigert wird.

In einer bevorzugten Ausführungsform weist die Serviceeinheit einen ersten Lüfter auf, welcher unterhalb eines Wärmetauschers der Kühlungsvorrichtung angeordnet ist, um einen Luftstrom durch den Wärmetauscher hindurch in den Wärmekanal zu strömen. Dies hat den Vorteil, dass ein verbesserter Abtransport der Wärme in den Wärmekanal möglich ist. Dies führt zu einer weiteren Verbesserung der Effizienz der Kühlungsvorrichtung. Beispielsweise können zusätzliche Lüftungsschlitze unterhalb oder auf Höhe des ersten Lüfters angeordnet werden, damit kalte Luft von Außen durch die Außenschale der Serviceeinheit nachströmen kann.

Gemäß einer vorteilhaften Weiterbildung weist die Serviceeinheit einen zweiter Lüfter auf, welcher oberhalb des Wärmetauschers angeordnet ist, um einen durch den Wärmetauscher erwärmten Luftstrom in den oberhalb des Wärmetauschers verlaufenden Wärmekanal zu saugen. Dies hat den Vorteil, dass der Abtransport der Wärme vom Wärmetauscher in den Wärmekanal zusätzlich verbessert wird. Dies sorgt für eine zusätzliche Verbesserung der Effizienz der Kühlungsvorrichtung.

Vorzugsweise weist der Wärmekanal eine Austrittsöffnung zum Ausströmen des erwärmten Luftstroms auf, wobei die Austrittsöffnung oberhalb des Wärmetauschers angeordnet ist. Beispielsweise ist die Austrittsöffnung zur Rückseite der Serviceeinheit hin angeordnet. Dies hat den Vorteil, dass der erwärmte Luftstrom nicht in Richtung eines Nutzers vor der Serviceeinheit ausgetragen wird. Beispielsweise ist der Wärmekanal schlauchartig ausgebildet. Vorzugsweise ist der Wärmekanal einfach zu entfernen oder austauschbar ausgebildet. Beispielsweise ist der Wärmekanal an der Rückwand des Gehäuses angeordnet.

In einer bevorzugten Ausführungsform weist die Serviceeinheit zumindest eine Schubladeneinheit auf, wobei die Schubladeneinheit zwischen einer ersten Position und einer zweiten Position überführbar ausgebildet ist. Dies hat den Vorteil, dass Gegenstände in der Schubladeneinheit aufbewahrt und somit mittels der Serviceeinheit transportiert werden können. Beispielsweise können auch mehrere Schubladeneinheiten in die Serviceeinheit integriert sein. Beispielsweise sind diese Schubladeneinheiten übereinander angeordnet. Beispielsweise können die Schubladeneinheiten unterschiedliche Größen ausweisen. Zusätzlich oder alternativ können auch Klappelemente in die Serviceeinheit integriert werden. Dies ist insbesondere für größere Gegenstände oder erwärmte Gerichte vorteilhaft. Vorzugsweise entsprechen die erste Position der geschlossenen Position und die zweite Position einer geöffneten Position.

Gemäß einer vorteilhaften Weiterbildung ist die Schubladeneinheit der Schubladenschienen-Einheit zugeordnet. Dies hat den Vorteil, dass eine Schubladeneinheit leicht in die Serviceeinheit eingesetzt werden und auch ersetzt oder gewechselt werden kann. Die Lastübertragung würde stets von jeder Schubladenschienen-Einheit auf die Tragstruktur erfolgen. Mehrere Schubladeneinheiten sind entsprechend jeweils mehreren Schubladenschienen-Einheiten zugeordnet aber können untereinander gewechselt werden.

Vorzugsweise weist die Schubladeneinheit einen Öffnungszustandssensor auf, der dazu ausgebildet ist, einen Öffnungszustand der Schubladeneinheit zu erfassen und Öffnungszustandsdaten mit Informationen zu dem vom Öffnungszustandssensor erfassten Öffnungszustand auszugeben. Beispielsweise gibt der Öffnungszustandssensor Öffnungszustandsdaten aus, ob eine Schubladeneinheit geschlossen ist. Beispielsweise werden die Öffnungszustandsdaten abgefragt, bevor der Serviceroboter in eine fahrende Bewegung überführt wird. Somit dienen die Öffnungszustandsdaten einer Sicherheitsfunktion des Serviceroboters, weil die Öffnungszustandsdaten ein geschlossenes Schubladenmodul ausgeben müssen, damit sich der Serviceroboter bewegen darf. Bei dem Öffnungszustandssensor kann es sich vorzugsweise um einen Konfigurationszustandssensor handeln.

In einer bevorzugten Ausführungsform ist der Schubladenantrieb dazu ausgebildet, eine Schubladeneinheit in einer Position zu halten. Dies hat den Vorteil, dass die Haltekraft des Schubladenantriebs als zusätzliche Sicherheitsfunktion eingesetzt werden kann. Somit werden beispielsweise Gegenstände in der Schubladeneinheit während der Bewegung des Serviceroboters gesichert. Dies kann insbesondere im Fall einer Notbremsung vorteilhaft sein.

Gemäß einer vorteilhaften Weiterbildung ist der Schubladeneinheit eine Verriegelungseinheit zugeordnet, welche dazu ausgebildet ist, die Schubladeneinheit in der ersten Position zu verriegeln. Dies hat den Vorteil, dass die Verriegelungseinheit eine zusätzliche Sicherheitsfunktion aufweist, wobei das Schubladenmodul während der fahrenden Bewegung des Serviceroboters gesichert bleibt. Beispielsweise kann eine derartige Verriegelungseinheit einen Magnetschalter umfassen. Zusätzlich ist die Ausführungsform energiesparend, weil der Antrieb nicht dauerhaft den geschlossenen Zustand halten muss.

Vorzugsweise ist die Schubladeneinheit dazu ausgebildet ist, eine Einsteckeinheit aufzunehmen. Dies hat den Vorteil, dass unterschiedliche Steckeinheiten in der Schubladeneinheiten angeordnet werden können. Beispielsweise können Steckeinheiten zur Aufbewahrung von Flaschen oder zu Aufbewahrung von Gegenständen verwendet werden. Die Funktion ist jedoch nicht auf diese Beispiele beschränkt.

In einer bevorzugten Ausführungsform weist die Schubladeneinheit einen Anschluss zum Anschliessen eines Datenübertragungsanschlusses der Einsteckeinheit auf, um von einem Inventarsensor der Einsteckeinheit ausgegebene Inventarsensordaten zu empfangen und an ein Inventarermittlungsmodul zu übermitteln. Dies hat den Vorteil, dass eine Überwachung von Inventar, welches in die Schubladeneinheit eingebracht ist, möglich ist. Diese Überwachung ist unabhängig von der konkreten Einsteckeinheit möglich. Das in dieser Ausführungsform beschriebene Inventarermittlungsmodul entspricht dem Inventarermittlungsmodul, welches auch an anderer Stelle dieser Beschreibung beschrieben wird.

Gemäß einer vorteilhaften Weiterbildung weist die Schubladeneinheit eine Kabelkette auf. Dies hat den Vorteil, dass jede Form von Kabel, Leitungen oder sonstige Verbindungsmittel zwischen Serviceeinheit und Schubladeneinheit geschützt innerhalb der Kabelkette geführt werden können. Dadurch kann auch ein Austausch des Schubladenmoduls sehr einfach erfolgen. Insbesondere ist eine einfache Verbindung mit der Steuereinheit des Serviceroboters möglich. Die Kabelkette bewegt sich hierbei beim Öffnen und Schließen des Schubladenmoduls mit.

Vorzugsweise ist die Kabelkette dazu ausgebildet, zumindest ein Datenübertragungskabel aufzunehmen. Dies hat den Vorteil, dass das Datenverbindungskabel gut geschützt in der Kabelkette angeordnet werden kann. Beispielsweise kann neben dem Datenverbindungskabel auch ein Stromversorgungskabel in der Kabelkette angeordnet werden. Zusätzlich können sowohl das Datenverbindungskabel als auch das Stromversorgungskabel mittels eines einfachen Anschlusssteckers mit der Serviceeinheit verbunden werden. Diese Anschlussstecker könne jeweils getrennt oder mittels eines gemeinsamen Anschlusssteckers realisiert werden. Somit ist eine Entnahme oder ein Wechsel einer Schubladeneinheit sehr einfach und ohne großen Montageaufwand realisierbar.

In einer bevorzugten Ausführungsform ist das zumindest eine Datenübertragungskabel dazu ausgebildet, Inventarsensordaten an ein Inventarermittlungsmodul zu übertragen. Dies hat den Vorteil, dass eine Überwachung von Inventar, welches in die Schubladeneinheit eingebracht ist, möglich ist. Diese Überwachung ist unabhängig von der konkreten Einsteckeinheit möglich. Das Datenübertragungskabel ist unabhängig von der konkreten Einsteckeinheit oder von dem konkreten Inventar einsetzbar. Es können alle denkbaren Daten übertragen werden. Das in dieser Ausführungsform beschriebene Inventarermittlungsmodul entspricht dem Inventarermittlungsmodul, welches auch an anderer Stelle dieser Beschreibung beschrieben wird.

Gemäß einer vorteilhaften Weiterbildung weist die Serviceeinheit eine Schubladeneinheit mit einer Schubladenfront mit einem umlaufenden Dichtelement auf. Dies hat den Vorteil, dass die Schubladeneinheit temperaturmäßig bestmöglich isoliert ist. Ein zusätzlicher Vorteil besteht darin, dass die Kanten der Schublade umlaufend geschützt sind. Dieser Sicherheitsaspekt verhindert beispielsweise das Risiko, dass sich ein Kind oder ein anderer Nutzer des Serviceroboters an der Schubladeneinheit verletzen kann. Beispielsweise ist das Dichtelement als bewegliche Gummidichtung ausgebildet. Zusätzlich sind auch mehrere Schubladeneinheiten denkbar die jeweils umlaufende Dichtelemente haben. Dadurch wird die Abdichtung zwischen zwei unmittelbar nebeneinander angeordneten Schubladeneinheiten durch zwei aneinander anliegende Dichtelemente realisiert.

Vorzugsweise umfasst das umlaufende Dichtelement zumindest Abschnittsweise angeordnete Magnetelemente. Dies hat den Vorteil, dass ein Magnetelement beispielsweise mit einem Rahmenelement des Gehäuses oder mit einem korrespondierenden zusätzlichen Magnetelement wechselwirken kann. Dadurch wird ein bestehender Luftspalt vollständig geschlossen und die temperaturmäßige Isolierung besonders effizient. Beispielsweise können die Magnetelemente direkt in das Dichtelement aufgenommen werden. Hierfür können die Dichtelemente mit einem entsprechenden Hohlraum ausgebildet sein. Zusätzlich kann das Abdichten eines Luftspalts zwischen einem ersten Dichtelement und einem korrespondierenden Rahmen der Serviceeinheit oder einem korrespondierenden weiteren Dichtelement zusätzlich gesteigert werden, wenn die Dichtelemente beweglich ausgebildet sind.

In einer bevorzugten Ausführungsform weist die Serviceeinheit eine zweite Schubladeneinheit mit einer zweiten Schubladenfront mit einem umlaufenden Dichtelement auf, wobei die erste und die zweite Schubladenfront in einer geschlossenen Position der ersten Schubladeneinheit und der zweiten Schubladeneinheit unmittelbar aneinander angrenzend angeordnet sind. Dies hat den Vorteil, dass das Dichtelement sowohl den Luftspalt zwischen zwei benachbarten Schubladenfronten als auch den Luftspalt zwischen einer Schubladenfront und einem Rahmenelement der Serviceeinheit verschließen kann. Dadurch ist das Dichtelement für unterschiedliche Stellen einsetzbar.

Gemäß einer vorteilhaften Weiterbildung sind ein Magnetelement der ersten Schubladenfront und ein Magnetelement der zweiten Schubladenfront dazu ausgebildet, in einem geschlossenen Zustand der ersten Schubladeneinheit und der zweiten Schubladeneinheit miteinander in Wechselwirkung zu treten, um einen Luftspalt zwischen der ersten Schubladenfront und der zweiten Schubladenfront zu schliessen. Dies hat den Vorteil, dass das Verschließen eines Luftspalts besonders zuverlässig und weitestgehend automatisch erfolgt. Weiterhin ist im geschlossenen Zustand keine Haltekraft notwendig, da die Magnete eigenständig wirken und am Verschluss des Luftspalts festhalten. Somit kann eine zuverlässige Verbindung zwischen zwei Schubladeneinheiten ohne zusätzlichen feststehenden Rahmen, welcher zwischen den Schubladeneinheiten angeordnet ist, erfolgen. Dies wirkt sich vorteilhaft auf das Gewicht der Serviceeinheit auf.

Vorzugsweise weist die Serviceeinheit eine erste Schubladeneinheit mit einer ersten Tiefe und eine zweite Schubladeneinheit mit einer zweiten Tiefe auf, wobei die erste Tiefe von der zweiten Tiefe verschieden ist. Dies hat den Vorteil, dass die Schubladeneinheiten in Abhängigkeit ihrer Tiefe für unterschiedliche Zwecke eingesetzt werden können. Als Tiefe einer Schubladeneinheit versteht sich hierbei als Abstand von der jeweiligen Schubladenfront zum hinteren Ende der jeweiligen Schubladen. Das hintere Ende versteht sich als diejenige Seite der Schubladeneinheit, welche der Schubladenfront gegenüberliegt und in einem in der Serviceeinheit eingebauten Zustand der Rückwand des Gehäuses zugeordnet ist. Zusätzlich kann die Serviceeinheit eine erste Schubladeneinheit mit einer ersten Höhe und eine zweite Schubladeneinheit mit einer zweiten Höhe aufweisen, wobei die erste Höhe von der zweiten Höhe verschieden ist. Als Höhe versteht sich im Wesentlichen die Höhe der jeweiligen Schubladenfront im Betrieb des Serviceroboters.

Vorzugsweise weist die Serviceeinheit eine Anzeigeeinheit zum Anzeigen von Anzeigeinformationen, eine Bezahleinheit zum Bezahlen von mittels des Serviceroboters erbrachten Dienstleistungen und eine Eingabeeinheit zum Eingeben von Eingabedaten auf. Dies hat den Vorteil, dass die Serviceeinheit einen Kaufvorgang selbstständig durchführen kann. Die Anzeigeeinheit ist beispielsweise ein Bildschirm, vorzugsweise Touchscreen. Die Bezahleinheit ist vorzugsweise eine mit Near Field Communication arbeitende Einheit. Die Eingabeeinheit ist vorzugsweise ein Bedienfeld, beispielsweise ein Touchscreen, Der Touchscreen der Eingabeeinheit kann der Touchscreen der Anzeigeeinheit sein.

In einer bevorzugten Ausführungsform weist die Serviceeinheit einen Kopplungsbereich auf, der elektrische Koppeleinrichtungen zum elektrischen Koppeln der Serviceeinheit mit elektrischen Gegenkoppeleinrichtungen der autonom fahrenden Basisplattform und mechanische Koppeleinrichtungen zum mechanischen Koppeln der Serviceeinheit mit mechanischen Gegenkoppeleinrichtungen der autonom fahrenden Basisplattform aufweist. Dies hat den Vorteil, dass eine einfache Kopplung von der autonom fahrenden Basisplattform mit der Serviceeinheit und umgekehrt möglich ist. Der Kopplungsbereich ist vorzugsweise an einer Unterseite der Serviceeinheit ausgebildet. Bei den elektrischen Koppeleinrichtungen sowie den elektrischen Gegenkoppeleinrichtungen handelt es sich vorzugsweise um Stecker-Buchsen-Anordnungen. Elektrisches Koppeln umfasst hierbei auch Datenkopplung, also eine Kopplung, bei der Daten übertragen werden.

Gemäß einer bevorzugten Ausführungsform ist die Mehrzahl aller elektrischen Koppeleinrichtungen gruppiert in wenigen gemeinsamen elektrischen Kopplungsbereichen, insbesondere in einem, zwei oder drei elektrischen Kopplungsbereichen, angeordnet. Dies hat den Vorteil, dass die elektrischen Koppeleinrichtungen schnell verbunden werden können. Der Einfachheit halber wird im Folgenden von einem einzigen elektrischen Kopplungsbereich ausgegangen. Es wären allerdings auch mehrere elektrische Kopplungsbereiche denkbar. Vorzugsweise sind alle elektrischen Koppeleinrichtungen gruppiert in dem gemeinsamen elektrischen Kopplungsbereich angeordnet. Der gemeinsame elektrische Kopplungsbereich ist vorzugsweise in seiner Fläche deutlich kleiner als der Kopplungsbereich ausgebildet. Deutlich kleiner bedeutet hierbei, dass dieser maximal ein Zehntel, vorzugsweise maximal ein Zwanzigstel, besonders bevorzugt maximal ein Fünfzigstel der Fläche des Kopplungsbereichs ausmacht. Da die elektrischen Koppeleinrichtungen gruppiert in diesem gemeinsamen elektrischen Kopplungsbereich, welcher in seiner Fläche deutlich kleiner als der Kopplungsbereich ausgebildet ist, angeordnet sind, können die den elektrischen Koppeleinrichtungen zugeordneten elektrischen Verbindungen besonders schnell verbunden und getrennt werden. Besonders bevorzugt sind zumindest einige der elektrischen Koppeleinrichtungen derart in einem gemeinsamen Kopplungskörper angeordnet, dass diese gleichzeitig verbunden oder getrennt werden können.

Vorzugsweise ist der gemeinsame elektrische Kopplungsbereich an einem dezentralen Bereich des Kopplungsbereichs angeordnet. Bei zwei elektrischen Kopplungsbereichen sind diese entsprechend vorteilhafterweise an zwei dezentralen Bereichen des Kopplungsbereichs angeordnet. Beispielsweise können die elektrischen Kopplungsbereiche an zwei gegenüberliegenden Seiten angeordnet sein. Dies hat den Vorteil, dass die elektrischen Koppeleinrichtungen gut zugängig sind. Als dezentral wird hierbei ein von einem Zentrum des Kopplungsbereichs entfernter Bereich verstanden. Vorzugsweise handelt es sich bei dem dezentralen Bereich um einen Randbereich des Kopplungsbereichs. Wenn der Kopplungsbereich an dem dezentralen Bereich, insbesondere dem Randbereich, angeordnet ist, sind die elektrischen Koppeleinrichtungen für das Koppeln der autonom fahrenden Basisplattform mit der Serviceeinheit besonders gut zugänglich.

In einer bevorzugten Ausführungsform weist der gemeinsame elektrische Kopplungsbereich eine Datenschnittstelle, eine Sicherheitsschnittstelle und eine Energieschnittstelle auf. Dabei dient die Datenschnittstelle zum Übertragen von Daten zwischen der Serviceeinheit und der autonom fahrenden Basisplattform. Die Datenschnittstelle kann zumindest einige, vorzugsweise alle, der folgenden Verbindungen aufweisen: USB 3, USB-C, CAN-Bus, Ethernet (vorzugsweise 2), Audiostecker (vorzugsweise in der Version 3,5mm), HDMI. Ferner dient die Sicherheitsschnittstelle zum Übertragen sicherheitsrelevanter Daten zwischen einem Benutzer und der autonom fahrenden Basisplattform oder zwischen der Serviceeinheit und der autonom fahrenden Basisplattform. Die Sicherheitsschnittstelle kann zumindest einige, vorzugsweise alle, der folgenden Einrichtungen aufweisen: Programmierschnittstelle, Digital Input/Output (vorzugsweise 10), Notaus-Knopf (vorzugsweise 2). Weiterhin ferner dient die Energieschnittstelle zum Übertragen von Energie von der autonom fahrenden Basisplattform an die Serviceeinheit. Eine Übertragung in umgekehrter Richtung ist aber auch denkbar. Für den Fall, dass der Serviceroboter lediglich eine Energiequelle aufweist, die in der autonom fahrenden Basisplattform ausgebildet ist, dient die Energieschnittstelle zum Versorgen der Serviceeinheit mit Energie aus der Energiequelle. Bei der Energieschnittstelle handelt es sich vorzugsweise um eine Schnittstelle für Gleichspannung mit 24 V.

Vorzugsweise weist der Kopplungsbereich eine Lastauflagefläche bzw. Koppelplatte auf. Dies hat den Vorteil, dass die Lastauflagefläche einfach mit der autonom fahrenden Basisplattform gekoppelt werden kann. So kann die Lastauflagefläche der Serviceeinheit einfach mit der autonom fahrenden Basisplattform verbunden werden und hiermit die mechanische Kopplung zwischen der autonom fahrenden Basisplattform und der Serviceeinheit unterstützen.

In einer bevorzugten Ausführungsform weist die Lastauflagefläche eine Länge von 60% bis 90%, vorzugsweise 70% bis 80%, besonders bevorzugt etwa 75% der Gesamtlänge der autonom fahrenden Basisplattform auf, wobei die Lastauflagefläche eine Breite von 40% bis 80%, vorzugsweise 50% bis 70%, besonders bevorzugt etwa 65% der Gesamtbreite der autonom fahrenden Basisplattform aufweist. Dies hat den Vorteil, dass die Lastauflagefläche großflächig ausgebildet ist. Beispielsweise kann die Lastauflagefläche eine Länge von 480 mm bis 670 mm, vorzugsweise 520 mm bis 620 mm, besonders bevorzugt etwa 570 mm aufweisen. Beispielsweise kann die Lastauflagefläche eine Breite von 350 mm und 520 mm, vorzugsweise 400 mm und 480 mm, und besonders bevorzugt 440 mm aufweisen.

Vorzugsweise sind die mechanischen Koppeleinrichtungen an der Lastauflagefläche und/oder innerhalb der Lastauflagefläche angeordnet oder anordenbar. Dies hat den Vorteil, dass die mechanischen Koppeleinrichtungen dazu verwendet werden können, die autonom fahrende Basisplattform mit der Serviceeinheit mechanisch zu koppeln. Insbesondere sind vorzugsweise alle Koppeleinrichtungen an und/oder in der Lastauflagefläche angeordnet. Die mechanische Kopplung der autonom fahrenden Basisplattform und der Serviceeinheit erfolgt somit bevorzugt an der Lastauflagefläche, so dass Kopplung und Krafteinleitung in örtlicher Nähe erfolgen und ein kurzer Kraftfluss entsteht. Insbesondere sind die Koppeleinrichtungen hierbei vorzugsweise dezentral an der Lastauflagefläche angeordnet. Hierdurch sind sie besonders gut zugänglich.

Vorzugsweise ist der gemeinsame elektrische Kopplungsbereich außerhalb der Lastauflagefläche angeordnet. Dies hat den Vorteil, dass hierdurch keine mechanische Kraft auf die elektrischen Verbindungen wirkt, so dass diese zuverlässig und sicher ihre Aufgaben erfüllen können. Die Anordnung ermöglicht zudem eine besonders lange Lebensdauer der elektrischen Verbindungen.

Gemäß einer bevorzugten Ausführungsform weisen die mechanischen Koppeleinrichtungen Zentriereinrichtungen zum Zentrieren der Position der Serviceeinheit und der autonom fahrenden Basisplattform und Befestigungseinrichtungen zum Befestigen der Serviceeinheit und der Basisplattform miteinander auf. Dies hat den Vorteil, dass mittels der Zentriereinrichtung die Montage vereinfacht wird und sichergestellt wird, dass eine ordnungsgemäße Montage erfolgt.

Vorzugsweise sind die Zentriereinrichtungen als Zentrierstifte und/oder Zentrierbohrungen ausgebildet. Dies hat den Vorteil, dass hierdurch eine kostengünstige und einfach umsetzbare Zentrierung zwischen der autonom fahrenden Basisplattform und der Serviceeinheit möglich ist.

In einer bevorzugten Ausführungsform sind die Befestigungseinrichtungen als Klemmverbinder ausgebildet. Dies hat den Vorteil, dass durch die Klemmverbinder ein vorteilhaftes werkzeugfreies Befestigen und Lösen von der autonom fahrenden Basisplattform und der Serviceeinheit möglich ist. Vorzugsweise ist jedem Klemmverbinder derart ein Zentrierstift zugeordnet, dass diese benachbart zueinander angeordnet sind. Besonders bevorzugt sind 5 Zentrierstifte und 4 Klemmverbinder angeordnet.

Gemäß einer bevorzugten Ausführungsform weist die Serviceeinheit wenigstens einen Inventarsensor zum Erfassen einer Inventarmessgrösse und zum Ausgeben von Inventarsensordaten mit Informationen zur erfassten Inventarmessgrösse auf. Dies hat den Vorteil, dass das Inventar mittels einer Inventarmessgrösse erfasst und Inventarsensordaten ausgegeben werden können.

Bevorzugt weist die Serviceeinheit wenigstens einen Inventarsensor zum Erfassen einer Inventarmessgrösse und zum Ausgeben von Inventarsensordaten mit Informationen zur erfassten Inventarmessgrösse auf. Dies hat den Vorteil, dass mit dem wenigstens einen Inventarsensor das Inventar der Serviceeinheit bestimmt werden kann.

Vorteilhafterweise weist die Serviceeinheit eine Inventargegenstandauflagefläche und wenigstens einen Gewichtserfasssensor zum Erfassen eines Gewichts von mindestens einem auf der Inventargegenstandauflagefläche aufliegenden Inventargegenstand und zum Ausgeben von Gewichtserfasssensordaten mit Informationen zum vom wenigstens einen Gewichtserfasssensor erfassten Gewicht auf, wobei jeder des wenigstens einen Gewichtserfasssensors einer des wenigstens einen Inventarsensors ist, womit das vom wenigstens einen Gewichtserfasssensor erfassbare Gewicht die vom wenigstens einen Gewichtserfasssensor erfassbare Inventarmessgrösse und die Gewichtserfasssensorsdaten die vom wenigstens einen Gewichtserfasssensor ausgebbaren Inventarsensordaten sind.

Derwenigstens eine Gewichtserfasssensor hat den Vorteil, dass zum Ermitteln des Inventars der Serviceeinheit das Gewicht von einzelnen Inventargegenständen und damit Objekten des Inventars der Serviceeinheit, wie beispielsweise Flaschen und Dosen, oder von mehreren solchen Inventargegenständen gemeinsam ermittelt werden kann. Dies ermöglicht eine einfache und zuverlässige Ermittlung des Inventars oder zumindest Teils des Inventars der Serviceeinheit. In beiden Fällen ist unerheblich, ob die Inventargegenstandauflagefläche zum wenigstens einen Gewichtserfasssensor gehört oder nicht. Auch ist in beiden Fällen unerheblich, ob das Gewicht des einen Inventargegenstands bzw. der mehreren Inventargegenstände auf einem einzigen Gewichtserfasssensor oder auf zwei, drei, vier oder mehr verschiedenen Gewichtserfasssensoren aufliegt. Wenn die Serviceeinheit zwei, drei, vier oder mehr Gewichtserfasssensoren aufweist, so besteht beispielsweise die Möglichkeit, dass die Serviceeinheit eine Gewichtserfassauflage als Inventargegenstandauflagefläche aufweist, welche im Betrieb der Serviceeinheit, insbesondere im Betrieb des Serviceroboters, auf den Krafteinwirkpositionen von zumindest einigen, insbesondere drei oder vier, dieser Gewichtserfasssensoren aufliegt, wobei der Inventargegenstand bzw. die Inventargegenstände, dessen bzw. deren Gewicht zu ermitteln ist, auf der Gewichtserfassauflage aufliegen.

Bevorzugt ist jeder des wenigstens einen Gewichtssensors dazu ausgebildet ist, ein Gewicht in einem Bereich von 0 kg bis 2 kg genauer als auf 3 g genau, besonders bevorzugt genauer als auf 2 g genau, ganz besonders bevorzug genauer als auf 1 g genau, zu erfassen. Dies hat den Vorteil, dass das Gewicht des mindestens einen Inventargegenstands mit einer Präzision bestimmt werden kann, welche eine zuverlässige Identifikation des mindestens einen auf der Inventargegenstandauflagefläche aufliegenden Inventargegenstands ermöglicht.

In einer Variante dazu besteht aber auch die Möglichkeit, dass nur einer oder nur einige des wenigstens einen Gewichtssensors dazu ausgebildet sind, ein Gewicht in einem Bereich von 0 kg bis 2 kg genauer als auf 3 g genau, besonders bevorzugt genauer als auf 2 g genau, ganz besonders bevorzug genauer als auf 1 g genau, zu erfassen, während mindestens einer des wenigstens einen Gewichtssensors dazu ausgebildet ist, ein Gewicht in einem Bereich von 0 kg bis 2 kg auf 3 g genau oder weniger genau zu erfassen.

Alternativ zu diesen Varianten besteht aber auch die Möglichkeit, dass alle des wenigstens einen Gewichtssensors dazu ausgebildet sind, ein Gewicht in einem Bereich von 0 kg bis 2 kg auf 3 g genau oder weniger genau zu erfassen.

Bevorzugt weist die Serviceeinheit mindestens eine Gewichtserfassauflage als Inventargegenstandauflagefläche auf, wobei jede der mindestens einen Gewichtserfassauflage mit mindestens einem des wenigstens einen Gewichtserfasssensors gekoppelt ist, um im Betrieb des Serviceroboters das Gewicht des mindestens einen Inventargegenstands zu erfassen, wenn der mindestens eine Inventargegenstand auf der jeweiligen Gewichtserfassauflage aufliegt. Dies hat den Vorteil, dass das Gewicht des mindestens einen auf der jeweiligen Gewichtserfassauflage aufliegenden Inventargegenstands präzise erfasst werden kann. Vorzugsweise weist dabei jeder des wenigstens einen Gewichtserfasssensors eine Krafteinwirkposition zum Erfassen einer an der Krafteinwirkposition auf den jeweiligen Gewichtserfasssensor einwirkenden Kraft auf, um das Gewicht des mindestens einen Inventargegenstands zu erfassen. Dabei gilt vorteilhafterweise für jede der mindestens einen Gewichtserfassauflage, dass die jeweilige Gewichtserfassauflage vorteilhafterweise mit dem mindestens einen des wenigstens einen Gewichtserfasssensors gekoppelt ist, indem die Gewichtserfassauflage jeweils zumindest mit der Krafteinwirkposition des jeweiligen Gewichtserfasssensors bzw. der Krafteinwirkpositionen der jeweiligen Gewichtserfasssensoren gekoppelt ist, damit im Betrieb des Serviceroboters, wenn der mindestens eine Inventargegenstand auf der jeweiligen Gewichtserfassauflage positioniert ist, eine dem Gewicht des jeweiligen mindestens einen Inventargegenstands entsprechende Kraft auf die Krafteinwirkposition des mit der jeweiligen Gewichtserfassauflage gekoppelten Gewichtserfasssensors bzw. auf die Krafteinwirkpositionen der mit der jeweiligen Gewichtserfassauflage gekoppelten Gewichtserfasssensoren wirkt, um im Betrieb des Serviceroboters das Gewicht des mindestens einen Inventargegenstands zu bestimmen. Dies hat den Vorteil, dass das Gewicht des mindestens einen auf der jeweiligen Gewichtserfassauflage aufliegenden Inventargegenstands sehr präzise und zuverlässig erfasst werden kann.

Vorteilhafterweise ist jeder des wenigstens einen Gewichtserfasssensor somit ein Sensor zum Erfassen einer Kraft, welche auf die Gewichtsmessposition des wenigstens einen Gewichtserfasssensors einwirkt. In einer besonders bevorzugten Variante davon ist der wenigstens eine Gewichtserfasssensor derart in der Serviceeinheit ausgerichtet angeordnet, dass im Betrieb der Serviceeinheit, insbesondere im Betrieb des Serviceroboters, die vom wenigstens einen Gewichtserfasssensor bestimmbare Kraft im Wesentlichen vertikal nach unten ausgerichtet ist. Damit wird erreicht, dass im Betrieb der Serviceeinheit bzw. des Serviceroboters ein direkt oder indirekt auf die Krafteinwirkposition des jeweiligen Gewichtserfasssensors aufliegender Inventargegenstand aufgrund der Schwerkraft mit seinem Gewicht mit einer im Wesentlichen vertikal nach unten gerichteten Kraft gegen die Krafteinwirkposition drückt, womit durch den jeweiligen Gewichtserfasssensor das gegen dessen Krafteinwirkposition wirkende Gewicht bestimmbar ist. Dabei ist unerheblich, ob das zu erfassende Gewicht des Inventargegenstands auf einen einzigen Gewichtserfasssensor wirkt oder dass das zu erfassende Gewicht des Inventargegenstands auf zwei oder mehr Gewichtserfasssensoren wirkt. In letzterem Fall sind die von den zwei oder mehr betroffenen Gewichtserfasssensoren erfassten Gewichte einfach aufzuaddieren, um das Gewicht des Inventargegenstands zu bestimmen. Dieses Aufaddieren kann beispielsweise durch ein Inventarermittlungsmodul erfolgen. In Varianten davon kann der wenigstens eine Gewichtserfasssensor aber auch andersartig in der Serviceeinheit ausgerichtet angeordnet sein. In diesem Fall können beispielsweise Umlenkvorrichtungen vorgesehen sein, welche im Betrieb der Serviceeinheit bzw. des Serviceroboters die aufgrund der Schwerkraft durch das Gewicht des Inventargegenstands vertikal nach unten gerichtete Kraft umlenkt, sodass sie gegen die Krafteinwirkposition des jeweiligen mindestens einen Gewichtserfasssensors drückt.

In einer Variante dazu besteht aber auch die Möglichkeit, dass nicht jeder des wenigstens einen Gewichtserfasssensors eine Krafteinwirkposition zum Erfassen einer an der Krafteinwirkposition auf den jeweiligen Gewichtserfasssensor einwirkenden Kraft aufweist, um das Gewicht des mindestens einen Inventargegenstands zu erfassen. So kann der wenigstens eine Gewichtserfasssensor auch andersartig ausgebildet sein. Beispielseise kann der wenigstens eine Gewichtserfasssensor dazu ausgebildet sein, eine Positionsauslenkung eines durch ein elastisches Element wie beispielsweise eine Feder vorgespannten Kraftanzeigeelements zu erfassen, wobei das Kraftanzeigeelement nicht Bestandteil des jeweiligen Gewichterfasssensors ist.

Vorteilhafterweist weist die Serviceeinheit wenigstens drei, wenigstens vier oder wenigstens fünf Gewichtserfasssensoren zum Erfassen eines Gewichts von mindestens einem Inventargegenstand und zum Ausgeben von Gewichtserfasssensordaten mit Informationen zum vom jeweiligen der wenigstens drei, wenigstens vier oder wenigstens fünf Gewichtserfasssensoren erfassten Gewicht auf, wobei jeder der wenigstens drei, wenigstens vier oder wenigstens fünf Gewichtserfasssensoren einer des wenigstens einen Inventarsensors ist und die Serviceeinheit somit wenigstens drei, wenigstens vier bzw. wenigstens fünf Inventarsensoren aufweist, womit das mit jedem der wenigstens drei, wenigstens vier oder wenigstens fünf Gewichtserfasssensoren erfassbare Gewicht die vom jeweiligen Gewichtserfasssensor erfassbare Inventarmessgrösse und die Gewichtserfasssensordaten die vom jeweiligen Gewichtserfasssensor ausgebbaren Inventarsensordaten sind. Dies hat den Vorteil, dass eine differenziertere Erfassung der Gewichte der Inventargegenstände ermöglicht wird, womit das Inventar der Serviceeinheit genauer bestimmt werden kann.

Alternativ dazu besteht aber auch die Möglichkeit, dass die Serviceeinheit nur einen oder nur zwei solche Gewichtserfasssensoren aufweist.

Vorzugsweise weist die Serviceeinheit mindestens zwei Gewichtserfassauflagen als Inventargegenstandauflageflächen auf, wobei eine der mindestens zwei Gewichtserfassauflagen mit genau einem der Gewichtserfasssensoren gekoppelt ist, um im Betrieb des Serviceroboters das Gewicht des mindestens einen Inventargegenstands zu erfassen, wenn der mindestens eine Inventargegenstand auf der mit genau einem der Gewichtserfasssensoren gekoppelten Gewichtserfassauflage positioniert ist.

Dies hat den Vorteil, dass das Erfassen der Gewichte von auf zwei verschiedenen Gewichtserfassauflagen aufliegenden Inventargegenständen ermöglicht wird, womit das Inventar der Serviceeinheit detaillierter bestimmt werden kann.

Vorzugsweise weist die Serviceeinheit mindestens zwei Gewichtserfassauflagen als Inventargegenstandauflageflächen auf, wobei zwei der mindestens zwei Gewichtserfassauflagen je mit genau einem verschiedenen der Gewichtserfasssensoren gekoppelt sind, um im Betrieb des Serviceroboters das Gewicht des mindestens einen Inventargegenstands zu erfassen, wenn der mindestens eine Inventargegenstand auf einer der zwei je mit genau einem verschiedenen der Gewichtserfasssensoren gekoppelten Gewichtserfassauflage positioniert ist.

Dies hat den Vorteil, dass ein sehr präzises Erfassen der Gewichte von auf zwei verschiedenen Gewichtserfassauflagen aufliegenden Inventargegenständen ermöglicht wird, womit das Inventar der Serviceeinheit erheblich genauer bestimmt werden kann.

Bevorzugt ist eine der mindestens einen Gewichtserfassauflage mit mindestens zwei, besonders bevorzugt mindestens drei, der Gewichtserfasssensoren gekoppelt, um im Betrieb des Serviceroboters das Gewicht des mindestens einen Inventargegenstands zu erfassen, wenn der mindestens eine Inventargegenstand auf der mit mindestens zwei bzw. mindestens drei, der Gewichtserfasssensoren gekoppelten Gewichtserfassauflage positioniert ist. Die mit mindestens zwei bzw. mindestens drei, der Gewichtserfasssensoren gekoppelte Gewichtserfassauflage hat den Vorteil, dass sie vergleichsweise gross ausgebildet werden kann und dennoch ein präzises Erfassen des auf dieser Gewichtserfassauflage aufliegenden Gewichts ermöglicht. Dabei ermöglicht eine vergleichsweise gross ausgebildete Gewichtserfassauflage das Auflegen von mehreren des mindestens einen Inventargegenstands oder das Auflegen eines besonders grossen Inventargegenstands.

Alternativ zu diesen Varianten besteht aber auch die Möglichkeit, dass die Serviceeinheit nur eine oder gar keine solche Gewichtserfassauflage als Inventargegenstandauflagefläche aufweist.

In einer bevorzugten Variante davon ist jeder des wenigstens einen Gewichtserfasssensors je auf einer Leiterplatine angeordnet. Dabei können die jeder des wenigstens einen Gewichtserfasssensors auf einer gleichen Leiterplatine oder auf unterschiedlichen Leiterplatinen angeordnet sein. Alternativ dazu besteht aber auch die Möglichkeit, dass der wenigstens eine Gewichtserfasssensor nicht auf einer Leiterplatine angeordnet ist. Wenn die Serviceeinheit mehr als einen Gewichtserfasssensor aufweist, so sind die Gewichtserfasssensoren vorzugsweise auf einer gleichen Leiterplatine angeordnet. Dies ermöglicht eine kompakte und einfach austauschbare Konstruktion der Gewichtserfasssensoren. Unabhängig davon von der Anzahl Leiterplatinen mit dem wenigstens einen Gewichtserfasssensor weist die Serviceeinheit vorzugsweise die Leiterplatine bzw. die unterschiedlichen Leiterplatinen auf.

Vorteilhafterweise weist die vorgehend erwähnte, in der Schubladeneinheit aufnehmbare Einsteckeinheit den wenigstens einen Gewichtserfasssensor bzw. die wenigstens drei, wenigstens vier oder wenigstens fünf Gewichtserfasssensoren sowie gegebenenfalls die mindestens eine Gewichtserfassauflage bzw. mindestens zwei Gewichtserfassauflagen auf.

Dies hat den Vorteil, dass je nach Bedarf die Einsteckeinheit mit dem wenigstens einen Gewichtserfasssensor bzw. den wenigstens drei, wenigstens vier oder wenigstens fünf Gewichtserfasssensoren sowie gegebenenfalls der mindestens einen Gewichtserfassauflage bzw. mindestens zwei Gewichtserfassauflagen auf einfache Art und Weise in eine Schubladeneinheit eingebaut oder auch wieder ausgebaut werden kann. Somit wird eine einfache Anpassung der Serviceeinheit an die mit dem Serviceroboter zu erbringenden Dienstleistungen ermöglicht. Dieser Vorteil wird zusätzlich verstärkt, wenn jeder des wenigstens einen Gewichtserfasssensors je auf einer gleichen Leiterplatine angeordnet ist.

Vorteilhafterweise weist dabei die Einsteckeinheit eine Verbindung des wenigstens einen Gewichtserfasssensors bzw. der wenigstens drei, wenigstens vier oder wenigstens fünf Gewichtserfasssensoren der Einsteckeinheit mit dem Datenübertragungsanschluss der Einsteckeinheit zum Anschliessen an den Anschluss der Schubladeneinheit auf, um die vom wenigstens einen Gewichtserfasssensor bzw. den wenigstens drei, wenigstens vier oder wenigstens fünf Gewichtserfasssensoren der Einsteckeinheit ausgegebenen Inventarsensordaten zu empfangen und an das Inventarermittlungsmodul zu übermitteln. Dies hat den Vorteil, dass auf einfache Art und Weise eine Bestimmung des Inventars in einer der Schubladeneinheiten ermöglicht wird.

In einer ersten Variante weist die Serviceeinheit eine derartige Einsteckeinheit mit dem wenigstens einen Gewichtserfasssensor bzw. den wenigstens drei, wenigstens vier oder wenigstens fünf Gewichtserfasssensoren sowie gegebenenfalls der mindestens einen Gewichtserfassauflage bzw. mindestens zwei Gewichtserfassauflagen auf. In einer zweiten Variante weist die Serviceeinheit zwei oder mehr derartige Einsteckeinheiten mit je dem wenigstens einen Gewichtserfasssensor bzw. den wenigstens drei, wenigstens vier oder wenigstens fünf Gewichtserfasssensoren sowie gegebenenfalls der mindestens einen Gewichtserfassauflage bzw. mindestens zwei Gewichtserfassauflagen auf.

Alternativ zu diesen Varianten besteht aber auch die Möglichkeit, dass die Einsteckeinheit keinen des wenigstens einen Gewichtserfasssensors bzw. der wenigstens drei, wenigstens vier oder wenigstens fünf Gewichtserfasssensoren sowie gegebenenfalls keine der mindestens einen Gewichtserfassauflage bzw. mindestens zwei Gewichtserfassauflagen aufweist.

Vorzugsweise weist die Serviceeinheit eine Produktvorschubeinheit zur Aufnahme von mindestens einem Inventargegenstand auf, wobei die Produktvorschubeinheit einen vorderen Anschlag und einen hinteren Anschlag aufweist, wobei der hintere Anschlag verschiebbar an der Produktvorschubeinheit gelagert ist und vom vorderen Anschlag weg verschiebbar ist, damit ein oder mehrere Inventargegenstände zwischen dem vorderen Anschlag und dem hinteren Anschlag in der Produktvorschubeinheit angeordnet werden können, und wobei der hintere Anschlag zum vorderen Anschlag hin verschiebbar ist, um einen oder mehrere zwischen dem vorderen Anschlag und dem hinteren Anschlag angeordnete Inventargegenstände zum vorderen Anschlag hin zu bewegen. Eine solche Produktvorschubeinheit hat den Vorteil, dass einer oder mehrere Inventargegenstände zwischen dem vorderen Anschlag und dem hinteren Anschlag der Produktvorschubeinheit aufgenommen werden können, wobei der hintere Anschlag relativ zum vorderen Anschlag verschoben werden kann, bis der Inventargegenstand bzw. die Inventargegenstände bündig zueinander und bündig zum vorderen Anschlag sowie bündig zum hinteren Anschlag angeordnet sind. Dadurch kann ein Verrutschen des Inventargegenstands bzw. der Inventargegenstände beim fahrenden Bewegen des Serviceroboters auf einfache Art und Weise verhindert werden.

Vorzugsweise weist die Produktvorschubeinheit einen Anschlagsantrieb zum Verschieben des hinteren Anschlags zum vorderen Anschlag hin und vom vorderen Anschlag weg auf. Dies hat den Vorteil, dass mit dem Anschlagsantrieb der hintere Anschlag in Richtung des vorderen Anschlags bewegt werden kann, bis der Inventargegenstand bzw. die Inventargegenstände bündig zueinander und bündig zum vorderen Anschlag sowie bündig zum hinteren Anschlag angeordnet sind. Dadurch kann ein Verrutschen des Inventargegenstands bzw. der Inventargegenstände beim fahrenden Bewegen des Serviceroboters auf einfache Art und Weise verhindert werden. Zudem kann durch den Anschlagsantrieb mit dem hinteren Anschlag in der Produktvorschubeinheit der Inventargegenstand bzw. können die Inventargegenstände zum vorderen Anschlag hin verschoben werden, wenn der bisher dort angeordnete Inventargegenstand entnommen wurde.

Alternativ dazu besteht aber auch die Möglichkeit, dass die Produktvorschubeinheit keinen Anschlagsantrieb, sondern eine Anschlagsvorspanneinrichtung, insbesondere eine Federeinrichtung aufweist, mit welcher Anschlagsvorspanneinrichtung bzw. Federeinrichtung der hintere Anschlag zum vorderen Anschlag hin vorspannbar oder vorgespannt ist.

Bevorzugt weist die Serviceeinheit einen Anschlagspositionssensor zum Erfassen einer Position des hinteren Anschlags und zum Ausgeben von Anschlagspositionssensordaten auf, wobei der Anschlagspositionssensor einer des wenigstens einen Inventarsensors ist, womit die vom Anschlagspositionssensor bestimmte Position des hinteren Anschlags die vom Anschlagspositionssensor erfassbare Inventarmessgrösse und die Anschlagspositionssensordaten die vom Anschlagspositionssensor ausgebbaren Inventarsensordaten sind.

Der Anschlagspositionssensor hat den Vorteil, dass zum Ermitteln des Inventars der Serviceeinheit die Position des hinteren Anschlags verwendet werden kann.

Vorteilhafterweise weist die Produktvorschubeinheit den Anschlagspositionssensor auf. Dies hat den Vorteil, dass die Produktvorschubeinheit als auf einfache Art und Weise modular in die Serviceeinheit einbaubare und wieder ausbaubare Einheit ausgebildet werden kann.

In einer ersten bevorzugten Variante ist der Anschlagspositionssensor ein Encoder zum Erfassen der Position des hinteren Anschlags in der Produktvorschubeinheit. Dies hat den Vorteil, dass die Position des hinteren Anschlags in der Produktvorschubeinheit sehr zuverlässig erfasst werden kann.

In einer zweiten bevorzugten Variante ist der Anschlagspositionssensor ein Distanzmesser, d.h. ein Distanzmesssensor, besonders bevorzugt ein optischer Distanzmesser, zum Erfassen einer Distanz zwischen dem hinteren Anschlag und einem Referenzpunkt, wobei der Referenzpunkt relativ zum vorderen Anschlag fest angeordnet ist. Dies hat den Vorteil, dass der Anschlagspositionssensor sehr kompakt ausgebildet werden kann, womit die Produktvorschubeinheit sehr kompakt konstruiert werden kann und damit im Vergleich zu ihrer Grösse mehr Inventargegenstände aufnehmen kann.

Wenn der Anschlagspositionssensor ein Distanzmesser ist, so ist der Anschlagspositionssensor bevorzugt an einem relativ zum vorderen Anschlag fest angeordneten Element der Serviceeinheit, besonders bevorzugt an der Produktvorschubeinheit, angeordnet, um eine Distanz zwischen dem relativ zum vorderen Anschlag fest angeordneten Element und dem hinteren Anschlag zu erfassen. Dies hat den Vorteil, dass die Produktvorschubeinheit sehr robust und zuverlässig funktionierend konstruiert werden kann.

Wenn der Anschlagspositionssensor ein Distanzmesser ist, so ist der Anschlagspositionssensor bevorzugt ein optischer Distanzmesser, d.h. ein optischer Distanzmesssensor, welcher am hinteren Anschlag angeordnet ist, um eine Distanz zwischen dem relativ zum vorderen Anschlag fest angeordneten Element der Serviceeinheit und dem hinteren Anschlag zu erfassen. Dies hat den Vorteil, dass im Schadensfall der hintere Anschlag auf einfache Art und Weise austauschbar ausgebildet werden kann, um den Anschlagspositionssensor zu reparieren oder auszutauschen. Dadurch wird die Wartung der Serviceeinheit und des Serviceroboters vereinfacht.

In beiden gerade vorgehend erwähnten Fällen bildet das relativ zum vorderen Anschlag fest angeordnete Element den vorgehend erwähnten Referenzpunkt. In beiden Fällen ist vorteilhafterweise das relativ zum vorderen Anschlag fest angeordnete Element der Serviceeinheit auf einer dem vorderen Anschlag gegenüberliegenden Seite des hinteren Anschlags angeordnet. Dies hat den Vorteil, dass die Distanz des hinteren Anschlags zum vorderen Anschlag zuverlässig auch bei zwischen dem hinteren Anschlag und dem vorderen Anschlag in der Produktvorschubeinheit aufgenommenen Inventargegenständen erfasst werden kann.

Alternativ zu diesen Varianten besteht auch die Möglichkeit, dass die Produktvorschubeinheit keinen solchen Anschlagspositionssensor aufweist.

Vorteilhafterweise ist die Produktvorschubeinheit die vorgehend erwähnte, in der Schubladeneinheit aufnehmbare Einsteckeinheit.

Dies hat den Vorteil, dass je nach Bedarf die Produktvorschubeinheit bzw. Einsteckeinheit auf einfache Art und Weise in eine Schubladeneinheit eingebaut oder auch wieder ausgebaut werden kann. Somit wird eine einfache Anpassung der Serviceeinheit an die mit dem Serviceroboter zu erbringenden Dienstleistungen ermöglicht.

Vorteilhafterweise weist die Produktvorschubeinheit bzw. Einsteckeinheit eine Verbindung des Anschlagspositionssensors der Produktvorschubeinheit bzw. Einsteckeinheit mit dem Datenübertragungsanschluss der Produktvorschubeinheit bzw. der Einsteckeinheit zum Anschliessen an den Anschluss der Schubladeneinheit auf, um die vom wenigstens einen Inventarsensor der Produktvorschubeinheit bzw. Einsteckeinheit ausgegebenen Inventarsensordaten zu empfangen und an das Inventarermittlungsmodul zu übermitteln.

Dies hat den Vorteil, dass auf einfache Art und Weise eine Bestimmung des Inventars in einer der Schubladeneinheiten ermöglicht wird.

In einer ersten Variante weist die Serviceeinheit eine derartige Einsteckeinheit in der Form der vorgehend beschriebenen Produktvorschubeinheit auf. In einer zweiten Variante weist die Serviceeinheit zwei oder mehr derartige Einsteckeinheiten jeweils in der Form der vorgehend beschriebenen Produktvorschubeinheit auf.

Alternativ zu diesen Varianten besteht aber auch die Möglichkeit, dass die Serviceeinheit keine solche Einsteckeinheit in der Form der vorgehend beschriebenen Produktvorschubeinheit aufweist. So kann die Serviceeinheit auch die vorgehend beschriebene Produktvorschubeinheit aufweisen, ohne dass die Produktvorschubeinheit die vorgehend beschriebene Einsteckeinheit ist. Genauso kann die Serviceeinheit aber auch gänzlich ohne die Produktvorschubeinheit auskommen.

Vorteilhafterweise weist die Serviceeinheit eine Inventarüberwachungseinheit zur Aufnahme von mindestens einem Inventargegenstand auf, wobei die Inventarüberwachungseinheit wenigstens einen Inventarbildsensor zum Erfassen eines Bildes von dem in der Inventarüberwachungseinheit aufgenommenen mindestens einen Inventargegenstand und zum Ausgeben von Inventarbildsensordaten mit Informationen zum vom wenigstens einen Inventarbildsensor erfassten Bild aufweist, wobei jeder des wenigstens einen Inventarbildsensors einer des wenigstens einen Inventarsensors ist, womit das vom wenigstens einen Inventarbildsensor erfassbare Bild die vom wenigstens einen Inventarbildsensor erfassbare Inventarmessgrösse und die Inventarbildsensordaten die vom wenigstens einen Inventarbildsensor ausgebbaren Inventarsensordaten sind.

Dies hat den Vorteil, dass auf einfache Art und Weise das Vorhandensein eines bestimmten Inventargegenstands in der Inventarüberwachungseinheit überwacht werden kann, wobei zugleich auch der Zustand des bestimmten Inventargegenstands überwacht werden kann. Dies ist besonders bei fragilen sowie bei besonders wertvollen Inventargegenständen vorteilhaft.

Vorteilhafterweise ist der wenigstens eine Inventarbildsensor zum Erfassen eines Bildes eine Videokamera zum Erfassen eines Filmes und damit zum Erfassen einer Vielzahl von aufeinander folgenden Bildern. Dies hat den Vorteil, dass eine lückenlose Überwachung des bestimmten Inventargegenstands in der Inventarüberwachungseinheit ermöglicht wird.

Alternativ dazu besteht aber auch die Möglichkeit, dass der Inventarbildsensor keine Videokamera zum Erfassen eines Filmes ist.

Vorteilhafterweise weist die Inventarüberwachungseinheit eine Lichtquelle zum Beleuchten des in der Inventarüberwachungseinheit aufgenommenen, mindestens einen Inventargegenstands auf. Dies hat den Vorteil, dass aufgrund des Beleuchtens des mindestens einen Inventargegenstands der mindestens eine Inventargegenstand in dem vom wenigstens einen Inventarbildsensor erfassten Bild bzw. den vom wenigstens einen Inventarbildsensor erfassten Bildern oder Filmen optimal erkennbar ist. Somit wird dadurch eine sichere und zuverlässige Überwachung eines Zustands des in der Inventarüberwachungseinheit aufgenommenen mindestens einen Inventargegenstands ermöglicht.

Vorzugsweise ist die Inventarüberwachungseinheit die vorgehend erwähnte, in der Schubladeneinheit aufnehmbare Einsteckeinheit.

Dies hat den Vorteil, dass je nach Bedarf die Inventarüberwachungseinheit bzw. Einsteckeinheit auf einfache Art und Weise in eine Schubladeneinheit eingebaut oder auch wieder ausgebaut werden kann. Somit wird eine einfache Anpassung der Serviceeinheit an die mit dem Serviceroboter zu erbringenden Dienstleistungen ermöglicht.

Vorteilhafterweise weist die Inventarüberwachungseinheit bzw. Einsteckeinheit eine Verbindung des wenigstens einen Inventarbildsensors der Inventarüberwachungseinheit bzw. Einsteckeinheit mit dem Datenübertragungsanschluss der Inventarüberwachungseinheit bzw. der Einsteckeinheit zum Anschliessen an den Anschluss der Schubladeneinheit auf, um die vom wenigstens einen Inventarsensor der Inventarüberwachungseinheit bzw. Einsteckeinheit ausgegebenen Inventarsensordaten zu empfangen und an das Inventarermittlungsmodul zu übermitteln.

In einer ersten Variante weist die Serviceeinheit eine derartige Einsteckeinheit in der Form der vorgehend beschriebenen Inventarüberwachungseinheit auf. In einer zweiten Variante weist die Serviceeinheit zwei oder mehr derartige Einsteckeinheiten jeweils in der Form der vorgehend beschriebenen Inventarüberwachungseinheit auf.

Alternativ zu diesen Varianten besteht aber auch die Möglichkeit, dass die Serviceeinheit keine solche Einsteckeinheit in der Form der vorgehend beschriebenen Inventarüberwachungseinheit aufweist. So kann die Serviceeinheit auch die vorgehend beschriebene Inventarüberwachungseinheit aufweisen, ohne dass die Inventarüberwachungseinheit die vorgehend beschriebene Einsteckeinheit ist. Genauso kann die Serviceeinheit aber auch gänzlich ohne die Inventarüberwachungseinheit auskommen.

Alternativ zu diesen Varianten besteht auch die Möglichkeit, dass die Serviceeinheit keinen der vorgehend beschriebenen Inventarsensoren aufweist.

Vorzugsweise weist der Serviceroboter eine der hier beschriebenen Serviceeinheiten als Serviceeinheit auf. Hierbei sind die Vorteile der beschriebenen Serviceeinheit auch auf den Serviceroboter übertragbar.

Die Serviceeinheit ist hierbei austauschbar an der Basisplattform befestigbar.

Eine vorteilhafte Ausführung der Erfindung betrifft eine Anordnung zum Erbringen von Dienstleistungen in örtlicher Nähe von Menschen mittels eines der hier beschriebenen Serviceroboter, wobei die Anordnung den hier beschriebenen Serviceroboter, eine hier beschriebene Serviceeinheit und ein Betriebsmodul zum Betreiben des Serviceroboters aufweist. Hierbei sind die Vorteile der Serviceroboter auf die Anordnung übertragbar.

In einer bevorzugten Variante beinhaltet der Serviceroboter das Betriebsmodul. In dieser Variante ist die Anordnung durch den Serviceroboter gebildet. Dies hat den Vorteil, dass der Serviceroboter autonom betrieben werden kann. In einer weiteren bevorzugten Variante hingegen ist das Betriebsmodul ganz oder zu Teilen separat vom Serviceroboter ausgebildet. So können beispielsweise erste Bestandteile des Betriebsmoduls als Software auf einem Personalcomputer bzw. auf einer Cloud laufend ausgebildet sein, während der Serviceroboter andere, von den ersten Bestandteilen verschiedene Bestandteile des Betriebsmoduls aufweist, wobei der Serviceroboter und der Personalcomputer bzw. die Cloud je Kommunikationsmitteln zum Kommunikation des Personalcomputers bzw. der Cloud mit dem Serviceroboter bzw. des Serviceroboters mit dem Personalcomputer bzw. der Cloud aufweisen. Dies hat den Vorteil, dass die Anordnung beispielsweise auch mehr als einem erfindungsgemässen Serviceroboter beinhalten kann und dass dabei die Serviceroboter zumindest zu Teilen gemeinsam betrieben werden können.

Gemäß einer vorteilhaften Weiterbildung weist das Betriebsmodul ein Kühlungsvorrichtungssteuermodul zum Steuern der Kühlungsvorrichtungssteuereinheit auf, wobei das Kühlungsvorrichtungssteuermodul dazu ausgebildet ist, Kühlungsvorrichtungssteuerbefehle mit Informationen zu einer gewünschten Temperatur, die bis auf eine dafür zulässige Abweichung in dem Kühlraum vorliegen soll, und/oder Informationen zum Ansteuern der gewünschten Temperatur auszugeben, wobei die Kühlungsvorrichtungssteuereinheit zum Empfangen der Kühlungsvorrichtungssteuerbefehle mit dem Kühlungsvorrichtungssteuermodul verbunden oder verbindbar ausgebildet ist, und wobei die Kühlungsvorrichtungssteuereinheit dazu ausgebildet ist, die Kühlungsvorrichtung gemäß den von dem Kühlungsvorrichtungssteuermodul empfangenen Kühlungsvorrichtungssteuerbefehlen anzusteuern.

Hierdurch ist es möglich, die Temperatur im Kühlraum zu steuern oder zu regeln. Bei der zulässigen Abweichung kann es sich beispielsweise um +/- 1°C, insbesondere um +/- 0,5°C handeln.

Bei einer vorteilhaften Weiterbildung weist das Betriebsmodul ein Lüftersteuermodul zum Steuern der Lüftersteuereinheit auf, wobei das Lüftersteuermodul dazu ausgebildet ist, Lüftersteuerbefehle mit Informationen zu einem gewünschten durch den Lüfter zu erzeugenden Luftstrom und/oder Informationen zum Ansteuern des gewünschten, durch den Lüfter zu erzeugenden Luftstroms auszugeben, wobei die Lüftersteuereinheit zum Empfangen von Lüftersteuerbefehlen mit dem Lüftersteuermodul verbunden oder verbindbar ausgebildet ist, und wobei die Lüftersteuereinheit dazu ausgebildet ist, den Lüfter gemäß den von dem Lüftersteuermodul empfangenen Lüftersteuerbefehlen anzusteuern.

Hierdurch ist es möglich, den Lüfter bzw. den von dem Lüfter zu erzeugenden Luftstrom zu steuern.

Gemäß einer vorteilhaften Weiterbildung ist das Betriebsmodul dazu ausgebildet, eine Abtaukonfiguration zu starten und zu beenden, wobei das Kühlungsvorrichtungssteuermodul dazu ausgebildet ist, in der Abtaukonfiguration einen Kühlungsvorrichtungssteuerbefehl zum Erreichen einer Abtautemperatur zum Abtauen von Vereisungen innerhalb des Kühlraums auszugeben, und wobei das Lüftersteuermodul dazu ausgebildet ist, in der Abtaukonfiguration einen Lüftersteuerbefehl zum Erreichen eines Verdampfungsluftstroms zum Verdampfen von Wasser aus dem Wasserspeicher auszugeben.

Hierdurch kann der Kühlraum der Kühlungsvorrichtung abgetaut werden, um Vereisungen innerhalb des Kühlraums zu entfernen. Derartige Vereisungen können insbesondere Probleme beim Überführen der Inventarverstaueinheit in die geöffnete Konfiguration verursachen. Die Abtaukonfiguration kann beispielsweise nach dem Ablauf einer vorgebbaren Zeitspanne, beispielsweise einer Stunde, ab dem Start wieder automatisch beendet werden. Die Abtaukonfiguration kann vorzugsweise automatisch zu einer vorgebbaren Zeit und/oder in einem vorgebbaren Rhythmus gestartet werden. Beispielsweise kann die Abtaukonfiguration 1-mal täglich gestartet werden. Besonders vorteilhaft kann die Abtaukonfiguration in der Nacht zu einer vorgebbaren Uhrzeit gestartet werden.

Das abtauende Wasser fließt in den Wasserspeicher. Da der Lüfter in der Abtaukonfiguration einen Verdampfungsluftstrom erzeugt, der zum Verdampfen von Wasser aus dem Wasserspeicher geeignet ist, kann Wasser aus dem Wasserspeicher entfernt werden. Daher ist es nicht nötig, den Wasserspeicher händisch zu leeren.

Gemäß einer bevorzugten Ausführungsform weist das Betriebsmodul ein Auftragsmodul zum Empfangen von Benutzer-Aufträgen und zum Ausgeben von Auftragsdaten mit Informationen zu den empfangenen Benutzer-Aufträgen auf, wobei die Auftragsdaten zumindest Zielortdaten mit Informationen zu wenigstens einem Zielort enthalten, an dem die entsprechenden Benutzer-Aufträge durch den Serviceroboter erfüllt werden sollen. Dies hat den Vorteil, dass dem Serviceroboter bzw. der Anordnung Aufträge zugewiesen werden können. Da die Auftragsdaten Zielortdaten, wie beispielsweise einen Zielort im Arbeitsbereich, enthalten, kann der Serviceroboter zu dem Benutzer, beispielsweise zu dem Kunden oder zu dem Servicemitarbeiter fahren. Mit anderen Worten werden Benutzer-Aufträge mittels des Auftragsmoduls empfangen und Auftragsdaten mit Informationen zu den empfangenen Benutzer-Aufträgen mittels des Auftragsmoduls ausgegeben.

In den Auftragsdaten können vorzugsweise auch weitere Informationen angegeben sein. Beispielsweise können diese weiteren Informationen Informationen zu einer Benutzer-Identifikation, Informationen zu einer Autorisierung oder zu anzuzeigenden Anzeigeinformationen enthalten.

Gemäß einer bevorzugten Ausführungsform ist der Benutzer-Auftrag durch einen Anruf von einem Zimmertelefon auslösbar, wobei das Zimmertelefon einer Zimmernummer eines Hotelzimmers in einem Hotel zugeordnet ist. Beispielsweise ist es möglich, dass der Benutzer-Auftrag durch Wählen einer festlegbaren Taste oder Tastenkombination ausgelöst wird.

Vorzugsweise ist der Zielort ein vorgegebener Punkt vor einer Hotelzimmertür eines Hotelzimmers, insbesondere mit einer dem jeweiligen Hotelzimmer zugeordneten Zimmernummer des jeweiligen Hotelzimmers, in einem Hotel. Vorzugsweise ist der Serviceroboter dazu ausgebildet, sich bei der Ankunft an dem vorgegebenen Punkt zu der Hotelzimmertür hin auszurichten.

In einer bevorzugten Ausführungsform enthalten die Auftragsdaten eine Benutzer-Identifikation zu dem Benutzer, der den Benutzer-Auftrag in Auftrag gegeben hat. Hierdurch ist es möglich, die Aufträge benutzerspezifisch individueller auszuführen.

Gemäß einer bevorzugten Ausführungsform umfasst die Benutzer-Identifikation eine Zimmernummer, die einem Hotelzimmer in einem Hotel zugeordnet ist. So kann die Benutzer-Identifikation bereits den Zielort umfassen.

Vorzugsweise ist das Auftragsmodul zum Prüfen von Benutzer-Aufträgen ausgebildet, wobei das Auftragsmodul beim Prüfen eines Benutzer-Auftrags bestimmt, ob zu der in den Auftragsdaten des jeweiligen Benutzer-Auftrags enthaltenen Benutzer-Identifikation besondere Informationen vorliegen, die einen Einfluss auf den jeweiligen Benutzer-Auftrag haben. Die besonderen Informationen können in der Benutzer-Identifikation enthalten sein oder vom Auftragsmodul aus einer anderen Informationsquelle, wie beispielsweise einem Gästeverzeichnis des Hotels, erhalten werden. Beispielsweise kann es sich bei den besonderen Informationen um Informationen zum Alter des Benutzers handeln, die den Benutzer vom Kauf von bestimmten Inventargegenständen, beispielsweise alkoholhaltigen Lebensmitteln, ausschließen. Ein weiteres Beispiel wäre ein besonderer Status, beispielsweise eine Mitgliedschaft in einem Membership-Rewards-Programm, der dem Benutzer zugewiesen ist. Der Status kann beispielsweise mit einer kostenfreien oder kostengünstigeren Nutzung des Serviceroboters verbunden sein. Weiterhin ist es mittels des Prüfens der Benutzer-Aufträge möglich, einzelnen Benutzern bei festlegbaren Merkmalen die Benutzung des Serviceroboters zu verweigern.

Vorzugsweise weist das Betriebsmodul ein Positionsermittlungsmodul zum Ermitteln einer aktuellen Position des Serviceroboters und zum Ausgeben von Positionsdaten mit Informationen zu der aktuellen Position des Serviceroboters auf. Dabei kann die aktuelle Position nur die aktuelle örtliche Position oder sowohl die aktuelle örtliche Position als auch die aktuelle Ausrichtung des Serviceroboters beinhalten. Unabhängig davon, ob die aktuelle Position nur die aktuelle örtliche Position oder sowohl die aktuelle örtliche Position als auch die aktuelle Ausrichtung des Serviceroboters beinhaltet, at dies den Vorteil, dass das Betriebsmodul auf die aktuelle Position des Serviceroboters zugreifen kann. Mit anderen Worten wird eine aktuelle Position des Serviceroboters ermittelt und es werden Informationen zu der aktuellen Position des Serviceroboters ausgegeben.

Dabei kann die aktuelle Position auch die Ausrichtung des Serviceroboters umfassen. Insbesondere können die Positionsdaten vorzugsweise X-Achsen-Positionsdaten, Y-Achsen-Positionsdaten und Winkel-Positionsdaten enthalten.

In einer bevorzugten Ausführungsform weist das Betriebsmodul ein Navigationsmodul zum Ermitteln eines Fahrweges von der aktuellen Position des Serviceroboters zum mindestens einen Zielort und zum Ausgeben von Navigationsdaten basierend auf dem ermittelten Fahrweg auf, wobei das Navigationsmodul zum Empfangen von von dem Auftragsmodul ausgegebenen Zielortdaten mit dem Auftragsmodul verbunden oder verbindbar ist, und wobei das Navigationsmodul zum Empfangen von von dem Positionsermittlungsmodul ausgegebenen Positionsdaten mit dem Positionsermittlungsmodul verbunden oder verbindbar ist. Dies hat den Vorteil, dass das Betriebsmodul einen Fahrweg für den Serviceroboter ermitteln kann. Mit anderen Worten wird der Fahrweg von der aktuellen Position des Serviceroboters zum mindestens einen Zielort ermittelt und Navigationsdaten basierend auf dem ermittelten Fahrweg ausgegeben.

Gemäß einer bevorzugten Ausführungsform enthalten die Navigationsdaten Informationen zu dem ermittelten Fahrweg und/oder auf dem ermittelten Fahrweg basierende Steuerbefehle, wobei das Navigationsmodul zum Ausgeben der Navigationsdaten an das Steuermodul mit dem Steuermodul verbunden oder verbindbar ist. Dies hat den Vorteil, dass das Steuermodul mit Informationen zum Steuern des Serviceroboters zu dem Zielort beliefert werden kann.

Vorzugsweise ist ein autonomes Fahren des Serviceroboters innerhalb eines Aktionsgebiets vorgesehen, wobei das Navigationsmodul Informationen zum Aktionsgebiet, insbesondere in der Form einer Karte des Aktionsgebiets, enthält oder zum Empfangen der Informationen zum Aktionsgebiet, insbesondere in der Form einer Karte des Aktionsgebiets, von einem separat vom Navigationsmodul angeordneten Speicher zum Speichern der Informationen zum Aktionsgebiet ausgebildet ist. Dies hat den Vorteil, dass die Navigation des Serviceroboters im Aktionsgebiet aufgrund der Informationen zum Aktionengebiet vereinfacht ist.

Autonomes Fahren bedeutet dabei vorzugsweise, dass sich der Serviceroboter fahrend fortbewegen und sich dabei mit Hilfe von Sensoren und Software zur Lokalisation, Navigation und Pfadplanung seine Wege, entlang welchen er sich bewegt, selbst suchen kann. Vorzugsweise kann dabei der Serviceroboter aufgrund der autonom fahrenden Basisplattform autonom fahren. Entsprechend kann die autonom fahrende Basisplattform die Sensoren und die Software zur Lokalisation, Navigation und Pfadplanung aufweisen. Genauso können die Sensoren und die Software zur Lokalisation, Navigation und Pfadplanung aber auch anderswo angeordnet sein. Beispielsweise können sie in der Serviceeinheit des Serviceroboters angeordnet sein.

Vorteilhafterweise ist das Navigationsmodul zum Ermitteln des Fahrweges von der aktuellen Position des Serviceroboters zum mindestens einen Zielort aufgrund der Informationen zum Aktionsgebiet ausgebildet. Dies hat den Vorteil, dass der Fahrweg des Serviceroboters auf einfache und zuverlässige Art und Weise bestimmt werden kann, womit ein autonomes Bewegen des Serviceroboters innerhalb des Aktionsgebiets vereinfacht wird.

Vorzugsweise ist das Navigationsmodul dazu ausgebildet, unter Berücksichtigung von Randbedingungen wie einzuhaltenden Sicherheitsabständen von vordefinierten Stellen im Aktionsgebiet und/oder bevorzugt zu wählenden Teilwegstrecken, insbesondere zu vorgegebenen Tageszeiten bevorzugt zu wählenden Teilwegstrecken, und/oder möglichst zu meidenden Teilwegstrecken, insbesondere zu vorgegebenen Tageszeiten möglichst zu meidenden Teilwegstrecken, den kürzesten Fahrweg von der aktuellen Position des Serviceroboters zum mindestens einen Zielort zu ermitteln.

Bevorzugt weist das Aktionsgebiet wenigstens zwei räumlich voneinander separierte Aktionsteilgebiete auf, wobei sich in jedem der Aktionsteilgebiete mindestens ein Übergangsort befindet, an welchem der Serviceroboter vom jeweiligen Übergangsort im jeweiligen Aktionsteilgebiets zu einem Übergangsort in einem anderen Aktionsteilgebiet und damit in ein anderes der Aktionsteilgebiete gelangen kann, wobei die Informationen zum Aktionsgebiet Informationen zu den Übergangsorten der Aktionsteilgebiete, insbesondere zu einer Position jedes des mindestens einen Übergangsorts im jeweiligen Aktionsteilgebiet und/oder zu einer Art des jeweiligen Übergangsorts, beinhalten. Dies hat den Vorteil, dass ein autonomes Bewegen des Serviceroboters von einem Aktionsteilgebiet in ein anderes Aktionsteilgebiet ermöglicht werden kann.

Die räumlich voneinander separierten Aktionsteilgebiete können beispielsweise auf unterschiedlichen Stockwerken im gleichen Gebäude liegen. In diesem Fall sind die räumlich voneinander separierten Aktionsteilgebiete zumindest in vertikaler Richtung voneinander separiert. Sie können aber beispielsweise auch horizontal voneinander separiert sein. Die räumliche Separierung zwischen den Aktionsteilgebieten kann beispielsweise durch eine Türe oder Schleuse bewerkstelligt sein. Die Aktionsteilgebiete können aber beispielsweise auch räumlich voneinander beabstandet sein.

Vorzugsweise sind für den Serviceroboter aufgrund der Übergangsorte alle der wenigstens zwei räumlich voneinander separierten Aktionsteilgebiete zugänglich. Dabei ist unerheblich, ob der Serviceroboter von einem ersten Aktionsteilgebiet direkt in ein zweites Aktionsteilgebiet oder via einem dritten Aktionsteilgebiet oder sogar mehreren weiteren Aktionsteilgebieten in das zweite Aktionsteilgebiet gelangen kann.

Vorzugsweise ist das Positionsermittlungsmodul zum Ermitteln einer aktuellen Position des Serviceroboters im Aktionsgebiet und zum Ausgeben von Positionsdaten mit Informationen zu der aktuellen Position des Serviceroboters im Aktionsgebiet ausgebildet. Falls das Aktionsgebiet wenigstens zwei räumlich voneinander separierte Aktionsteilgebiete aufweist, so ist das Positionsermittlungsmodul entsprechend zum Ermitteln, in welchem Aktionsteilgebiet sich der Serviceroboter aktuell befindet, und zum Ermitteln der aktuellen Position des Serviceroboters im jeweiligen Aktionsteilgebiet sowie zum Ausgeben von Positionsdaten mit Informationen zum Aktionsteilgebiet, in welchem sich der Serviceroboter aktuell befindet und zur aktuellen Position des Serviceroboters in dem jeweiligen Aktionsteilgebiet ausgebildet.

Vorzugsweise ist das Betriebsmodul dazu ausgebildet, beim fahrenden Bewegen des Serviceroboters, insbesondere der autonom fahrenden Basisplattform, durch das Aktionsgebiet bzw. beim fahrenden Bewegen des Serviceroboters, insbesondere der autonom fahrenden Basisplattform, durch eines oder mehrere Aktionsteilgebiete, aufgrund der Arbeitsbereichserfassungssensordaten, welche vom wenigstens einen Arbeitsbereichserfassungssensor zum Erfassen des Arbeitsbereichs des Serviceroboters ausgegeben werden, zu überprüfen, ob ein Teilbereich des Aktionsgebiets bzw. des jeweiligen Aktionsgebiets, welcher Teilbereich vom zum jeweiligen Zeitpunkt erfassten Arbeitsbereich des Serviceroboters abgedeckt wird, wenigstens ein vordefiniertes Ordnungskriterium erfüllt und, falls der Teilbereich das vordefinierte Ordnungskriterium nicht erfüllt, eine entsprechende Warnmitteilung mit der Information, welches vordefinierte Ordnungskriterium wann wo nicht erfüllt ist, auszugeben. Das wenigstens eine vordefinierte Ordnungskriterium kann beispielsweise sein, dass alle Fenster innerhalb des vom wenigstens einen Arbeitsbereichserfassungssensor erfassten Arbeitsbereich zu bestimmten Tageszeiten, wie beispielsweise zwischen 18:00 Uhr und 08:00 Uhr, geschlossen sein müssen. Das wenigstens eine vordefiniertes Ordnungskriterium kann beispielsweise auch sein, dass alle Raumbeleuchtungslampen innerhalb des vom wenigstens einen Arbeitsbereichserfassungssensor erfassten Arbeitsbereich zu bestimmten Tageszeiten, wie beispielsweise zwischen 19:00 Uhr und 07:00 Uhr, ausgeschaltet sein müssen. Das wenigstens eine vordefinierte Ordnungskriterium kann aber beispielsweise auch sein, dass kein Hindernis in einem Fluchtweg angeordnet sein darf bzw. dass beispielsweise Türen von Fluchtwegen nicht verstellt sein dürfen. Im letzteren Fall umfassen die Informationen zum Aktionsgebiet bzw. zu den Aktionsteilgebieten auch Informationen zu den Fluchtwegen bzw. Türen von Fluchtwegen. Das wenigstens eine vordefinierte Ordnungskriterium kann aber beispielsweise auch sein, dass sich keine Personen im Arbeitsgebiet aufhalten dürfen, dass sich nur bestimmte Personen im Arbeitsgebiet aufhalten dürfen oder dass sich bestimmte Personen nicht im Arbeitsgebiet aufhalten dürfen. Das wenigstens eine vordefinierte Ordnungskriterium kann aber beispielsweise auch sein, dass kein Rauch, kein Sprengstoffspuren in der Luft, am Boden oder an Gegenständen vorhanden sein darf, dass die Raumtemperatur ober- oder unterhalb eines Grenzwerts liegen muss, dass die Luftfeuchtigkeit ober- oder unterhalb eines Grenzwerts liegen muss, dass eine Signalstärke eines WLAN ober- oder unterhalb eines Grenzwerts liegen muss oder das ein CO₂-Gehalt in der Luft unterhalb eines Grenzwerts liegen muss. In diesen Fällen umfassen die Arbeitsbereichserfassungssensoren vorzugsweise einen Sensor, um die entsprechende Überwachungsgrösse wie Rauch, Sprengstoffspuren, Raumtemperatur, Luftfeuchtigkeit, W-LAN-Stärke bzw. CO₂-Gehalt in der Luft zu erfasst. Weiter kann das vordefinierte Ordnungskriterium beispielsweise sein, dass sich niemand etwas am Serviceroboter zu schaffen machen darf. Wenn der Serviceroboter beispielsweise die weiter unten beschriebene Beschleunigungssensoranordnung aufweist, so kann beispielsweise aufgrund von Beschleunigungssensordaten überprüft werden, ob unzulässige Bewegungen oder Erschütterungen festgestellt werden, und gegebenenfalls ein Alarmsignal ausgegeben werden, da die Möglichkeit besteht, dass jemand unbefugtes am Serviceroboter herumhantiert. Es besteht aber auch die Möglichkeit, dass das Betriebsmodul anders ausgebildet ist und keine solche nach vordefinierten Ordnungskriterien erfolgte Kontrolle des vom Serviceroboter bzw. der autonom fahrenden Basisplattform durchfahrenen Aktionsgebiets bzw. Aktionsteilgebiets ermöglicht.

Bevorzugt ist ein Weg von einem Übergangsort in einem der wenigstens zwei Aktionsteilgebiete zu einem Übergangsort in einem anderen der wenigstens zwei Aktionsteilgebiete durch eine Schranke unterbrochen oder unterbrechbar, wobei die Schranke öffenbar ist, um dem Serviceroboter zu ermöglichen, vom jeweiligen Übergangsort im einen der wenigstens zwei Aktionsteilgebiete zum Übergangsort im anderen der wenigstens zwei Aktionsteilgebiete zu gelangen. Die Schranke kann beispielsweise eine Türe, eine Schleuse oder eine Barriere sein. Die Schranke kann aber auch die Aufzugstüre eines Aufzugs sein.

Vorzugsweise weist das Betriebsmodul, insbesondere der Serviceroboter, ein Schrankenkommunikationsmodul zum Kommunizieren mit einer Steuereinrichtung der Schranke auf, um die Schranke zu öffnen und dem Serviceroboter zu ermöglichen, vom jeweiligen Übergangsort im einen der wenigstens zwei Aktionsteilgebiete zum Übergangsort im anderen der wenigstens zwei Aktionsteilgebiete zu gelangen. Dies hat den Vorteil, dass der Serviceroboter auch bei einer vorhandenen Schranke zwischen zwei Aktionsteilgebieten autonom vom einen dieser zwei Aktionsteilgebiete in das andere dieser zwei Aktionsteilgebiete gelangen kann.

Sofern das Betriebsmodul nicht oder zumindest nicht vollständig vom Serviceroboter beinhaltet ist, besteht in einer Variante davon auch die Möglichkeit, dass das Schrankenkommunikationsmodul nicht im Serviceroboter beinhaltet aber dennoch Bestandteil des Betriebsmoduls ist.

Vorzugsweise ist das Schrankenkommunikationsmodul dazu ausgebildet, der Steuereinrichtung der Schranke ein Schrankenöffnungssignal zu übermitteln, um die Schranke zu öffnen und dem Serviceroboter zu ermöglichen, vom jeweiligen Übergangsort im einen der wenigstens zwei Aktionsteilgebiete zum Übergangsort im anderen der wenigstens zwei Aktionsteilgebiete zu gelangen. Dies hat den Vorteil, dass die Schranke auf einfache Art und Weise für den Serviceroboter öffenbar ist, wenn der Serviceroboter die Schranke passieren sollte.

Das Schrankenkommunikationsmodul kann beispielsweise über ein API (application programming interface), bzw. eine Programmierschnittstelle, über das Internet oder eine Cloud mit der Steuereinrichtung der Schranke verbunden oder verbindbar sein, um das Schrankenöffnungssignal an die Steuereinrichtung der Schranke zu übermitteln. Das Schrankenkommunikationsmodul kann aber anstelle eines API auch über eine andere drahtlose Kommunikation wie beispielsweise Bluetooth, ein anderes Funksignal als Bluetooth, ein optisches Signal oder ein Akustisches Signal mit der Steuereinrichtung der Schranke verbunden oder verbindbar sein, um das Schrankenöffnungssignal an die Steuereinrichtung der Schranke zu übermitteln.

Vorteilhafterweise ist das Schrankenkommunikationsmodul dazu ausgebildet, von der Schranke oder der Steuereinrichtung der Schranke ein Schrankegeöffnetsignal zu empfangen, welches angibt, dass die Schranke geöffnet ist, um dem Serviceroboter zu ermöglichen, vom jeweiligen Übergangsort im einen der wenigstens zwei Aktionsteilgebiete zum Übergangsort im anderen der wenigstens zwei Aktionsteilgebiete zu gelangen.

Das Schrankenkommunikationsmodul kann beispielsweise über ein API (application programming interface), bzw. eine Programmierschnittstelle, über das Internet oder eine Cloud mit der Steuereinrichtung der Schranke verbunden oder verbindbar sein, um das Schrankegeöffnetsignal zu empfangen. Das Schrankenkommunikationsmodul kann aber anstelle eines API auch über eine andere drahtlose Kommunikation wie beispielsweise Bluetooth, ein anderes Funksignal als Bluetooth, ein optisches Signal oder ein Akustisches Signal mit der Steuereinrichtung der Schranke verbunden oder verbindbar sein, um das Schrankegeöffnetsignal zu empfangen.

Vorzugsweise weist der erfindungsgemässe Serviceroboter dieses Schrankenkommunikationsmodul unabhängig davon auf, ob er Bestandteil der Anordnung ist oder nicht.

In einer Alternative zu diesen Varianten besteht aber auch die Möglichkeit, dass das Betriebsmodul kein solches Schrankenkommunikationsmodul aufweist.

Vorzugsweise ist das Navigationsmodul dazu ausgebildet, zu ermitteln, ob die Schranke geöffnet ist und der Serviceroboter somit durch die Schranke fahren und die Schranke passieren kann, und, wenn vom Navigationsmodul ermittelt worden ist, dass die Schranke geöffnet ist, Navigationsdaten an das Steuermodul auszugeben, um den Serviceroboter durch die Schranke fahren zu lassen. Dabei kann das Navigationsmodul beispielsweise basierend auf von einem des mindestens einen Arbeitsbereichserfassungssensor ausgegebenen Arbeitsbereichserfassungssensordaten mit Informationen zum erfassten Arbeitsbereich auf ermitteln, ob die Schranke geöffnet ist und der Serviceroboter somit durch die Schranke fahren kann oder nicht. Dies hat den Vorteil, dass der Serviceroboter autonom ermitteln kann, ob die Schranke geöffnet ist oder nicht.

Vorteilhafterweise ist das Navigationsmodul dabei dazu ausgebildet, diese Navigationsdaten dann an das Steuermodul auszugeben, um den Serviceroboter durch die Schranke fahren zu lassen, wenn zugleich das Schrankenkommunikationsmodul ein Schrankegeöffnetsignal empfangen hat. Dies hat den Vorteil, dass die Sicherheit im Betrieb des Serviceroboters erhöht wird.

Bevorzugt ist ein Übergangsort in einem der wenigstens zwei Aktionsteilgebiete und ein Übergangsort in einem anderen der wenigstens zwei Aktionsteilgebiete durch eine Servicerobotertransportiervorrichtung zum Transportieren des Serviceroboters vom jeweiligen Übergangsort im einen der wenigstens zwei Aktionsteilgebiete zum Übergangsort im anderen der wenigstens zwei Aktionsteilgebiete miteinander verbunden sind. Die Servicerobotertransportiervorrichtung hat den Vorteil, dass der Serviceroboter dank der Servicerobotertransportiervorrichtung zum Transportieren des Serviceroboters auch Orte reichen kann, welche der Serviceroboter ansonsten selber durch autonomes fahren nicht erreichen könnte. So können sich beispielsweise zwischen dem Übergangsort im einen der wenigstens zwei Aktionsteilgebiete und dem Übergangsort im anderen der wenigstens zwei Aktionsteilgebiete eine oder mehrere Stufe oder gar ein oder mehrere Stockwerke befinden, welche vom Serviceroboter alleine nicht überwunden werden können, welche der Serviceroboter aber dank der Servicerobotertransportiervorrichtung überwinden kann. Diese Vorteile werden auch dann erreicht, wenn der Weg zwischen den beiden Übergangsorten zugleich durch die vorgehend beschriebene Schranke unterbrochen oder unterbrechbar ist.

Vorzugsweise ist die Servicerobotertransportiervorrichtung zum Transportieren des Serviceroboters vom jeweiligen Übergangsort im einen der wenigstens zwei Aktionsteilgebiete zum Übergangsort im anderen der wenigstens zwei Aktionsteilgebiete ein Aufzug. Dies hat den Vorteil, dass sich der Serviceroboter auf einfache und zuverlässige Art und Weise in einem Gebäude in verschiedenen Stockwerken bewegen und von einem Stockwerk in ein anderes Stockwerk gelangen kann.

Die Servicerobotertransportiervorrichtung kann aber auch ein Rollband, eine Rolltreppe oder ein Treppenlift, insbesondere ein Treppenlift zum Transportieren von einem Rollstuhl über einen oder mehrere Treppenstufen, sein. Diese Varianten haben genauso wie der Aufzug den Vorteil, dass der Serviceroboter gängige Transportiervorrichtungen zum Transport von Menschen mitbenutzen kann.

Vorteilhafterweise weist das Betriebsmodul, insbesondere der Serviceroboter, ein Servicerobotertransportiervorrichtungskommunikationsmodul zum Kommunizieren mit einer Steuereinrichtung der Servicerobotertransportiervorrichtung auf, wobei das Servicerobotertransportier-vorrichtungs¬kommunikationsmodul dazu ausgebildet ist, Servicerobotertransportier-vorrichtungssteuerungsbefehle an die Steuereinrichtung der Servicerobotertransportiervorrichtung zu übermitteln, um die Servicerobotertransportiervorrichtung zum Transportieren des Serviceroboters vom jeweiligen Übergangsort im einen der wenigstens zwei Aktionsteilgebiete zum Übergangsort im anderen der wenigstens zwei Aktionsteilgebiete zu steuern. Dies hat den Vorteil, dass der Serviceroboter dank der Servicerobotertransportiervorrichtung autonom vom einen Aktionsteilgebiet in ein anderes Aktionsteilgebiet gelangen kann, auch wenn der Serviceroboter selber durch autonomes Fahren nicht in das andere Aktionsteilgebiet gelangen könnte.

Die Servicerobotertransportier¬vorrichtungssteuerungsbefehle können beispielsweise einen Befehl beinhalten, die Serviceroboter-itransportiervorrichtung zum Übergangsort im einen der wenigstens zwei Aktionsteilgebiete zu bewegen, wo der Serviceroboter von der Serviceroboter¬transportiervorrichtung zum Transportieren des Serviceroboters zum Übergangsort im anderen der wenigstens zwei Aktionsteilgebiete aufgenommen werden soll. Dabei können die Servicerobotertransportier-vorrichtungssteuerungsbefehle auch einen Befehl beinhalten, welcher besagt, zu welchem Übergangsort der Serviceroboter von der Serviceroboter¬transportiervorrichtung transportiert werden soll. Weiter können die Servicerobotertransportier-vorrichtungssteuerungsbefehle einen Befehl beinhalten, welcher besagt, dass mit der Serviceroboter-itransportiervorrichtung keine Personen zusammen mit dem Serviceroboter transportiert werden dürfen. Zudem können die Servicerobotertransportier¬vorrichtungssteuerungsbefehle einen Befehl beinhalten, welcher besagt, mit welcher Priorität der Serviceroboter mit der Serviceroboter-itransportiervorrichtung transportiert werden soll. Dabei kann die Priorität beinhalten, dass der Serviceroboter im Vergleich zu Personen mit Vorrang zu transportieren ist oder dass Personen mit Vorrang vor dem Serviceroboter zu transportieren sind.

Das Servicerobotertransportiervorrichtungs¬kommunikationsmodul kann beispielsweise über ein API (application programming interface), bzw. eine Programmierschnittstelle, über das Internet oder eine Cloud mit der Steuereinrichtung der Servicerobotertransportier¬vorrichtung verbunden oder verbindbar sein, um die Servicerobotertransportier¬vorrichtungssteuerungsbefehle an Steuereinrichtung der Serviceroboter¬transportier¬vorrichtung zu übermitteln. Das Servicerobotertransportiervorrichtungs¬kommunikationsmodul kann aber anstelle eines API auch über eine andere drahtlose Kommunikation wie beispielsweise Bluetooth, ein anderes Funksignal als Bluetooth, ein optisches Signal oder ein Akustisches Signal mit der Steuereinrichtung der Serviceroboter-transportier¬vorrichtung verbunden oder verbindbar sein, um die Servicerobotertransportier¬vorrichtungssteuerungsbefehle an Steuereinrichtung der Serviceroboter¬transportier¬vorrichtung zu übermitteln.

Wenn das Betriebsmodul zudem das vorgehend beschriebene Schrankenkommunikationsmodul aufweist, so kann das Servicerobotertransportiervorrichtungs¬kommunikationsmodul mit dem Schrankenkommunikationsmodul im gleichen Modul und damit als Übergangskommunikationsmodul ausgebildet sein, welches die Funktionalität des Servicerobotertransportiervorrichtungs¬kommunikationsmoduls und des Schranken-kommunikationsmoduls beinhaltet. Genauso kann das Servicerobotertransportier-vorrichtungs¬kommunikationsmodul aber auch separat vom Schrankenkommunikations-modul ausgebildet sein.

Bevorzugt weist der Serviceroboter eine Beschleunigungssensoranordnung mit wenigstens einem Beschleunigungssensor zum Erfassen einer Beschleunigung entlang wenigstens einer Beschleunigungsmessachse mit fixer Ausrichtung relativ zum Serviceroboter in beide Richtungen der jeweiligen Beschleunigungsmessachse, um zu erfassen, welcher Beschleunigung der Serviceroboter ausgesetzt ist, sowie zum Ausgeben von Beschleunigungssensor¬daten mit Informationen zur erfassten Beschleunigung auf. Dies hat den Vorteil, dass aufgrund der erfassten Beschleunigung bestimmt werden kann, ob und gegebenenfalls um welche Distanz der Serviceroboter bewegt worden ist.

Vorzugsweise weist der erfindungsgemässe Serviceroboter diese Beschleunigungssensor¬anordnung unabhängig davon auf, ob er Bestandteil der Anordnung ist oder nicht.

Vorzugsweise ist die Beschleunigungssensor-ianordnung dazu ausgebildet, im Betrieb des Serviceroboters eine Beschleunigung des Serviceroboters in Vorwärtsrichtung und Rückwärtsrichtung des Serviceroboters zu erfassen und Beschleunigungssensordaten mit Informationen zu dieser erfassten Beschleunigung auszugeben. D.h., in diesem Fall verläuft eine der wenigstens einen Beschleunigungsmess¬achse relativ zum Serviceroboter entlang der Vorwärtsrichtung und der Rückwärtsrichtung des Serviceroboters. Vorzugsweise ist die Beschleunigungssensoranordnung dazu ausgebildet, im Betrieb des Serviceroboters eine Beschleunigung des Serviceroboters in Seitwärtsrichtung des Serviceroboters zu erfassen und Beschleunigungssensordaten mit Informationen zu dieser erfassten Beschleunigung auszugeben. D.h., in diesem Fall ist eine der wenigstens einen Beschleunigungsmessachse relativ zum Serviceroboter in Seitwärtsrichtung des Serviceroboters und damit übers Kreuz zur Vorwärtsrichtung und Rückwärtsrichtung des Serviceroboters ausgerichtet. Besonders bevorzugt ist die Beschleunigungssensoranordnung dazu ausgebildet, im Betrieb des Serviceroboters eine Beschleunigung des Serviceroboters zumindest zweidimensional in einer horizontal ausgerichteten Ebene zu erfassen und Beschleunigungssensordaten mit Informationen zu dieser erfassten Beschleunigung auszugeben. In diesem Fall ist die Beschleunigungssensoranordnung dazu ausgebildet, im Betrieb des Serviceroboters eine Beschleunigung des Serviceroboters entlang wenigstens zwei Beschleunigungsmessachsen, welche sich kreuzend relativ zum Serviceroboter in der horizontal ausgerichteten Ebene angeordnet sind, zu erfassen und Beschleunigungssensordaten mit Informationen zu dieser erfassten Beschleunigung auszugeben. Vorzugsweise ist die Beschleunigungssensor-ianordnung dazu ausgebildet, im Betrieb des Serviceroboters eine Beschleunigung des Serviceroboters nach oben und unten zu erfassen und Beschleunigungssensordaten mit Informationen zu dieser erfassten Beschleunigung auszugeben. D.h., in diesem Fall ist eine der wenigstens einen Beschleunigungsmessachse relativ zum Serviceroboter vertikal zum Serviceroboter ausgerichtet. Besonders bevorzugt ist die Beschleunigungssensoranordnung dazu eingerichtet, im Betrieb des Serviceroboters eine Beschleunigung des Serviceroboters in allen drei Raumdimensionen zu erfassen und Beschleunigungssensordaten mit Informationen zu dieser erfassten Beschleunigung auszugeben. In diesem Fall ist die Beschleunigungssensoranordnung dazu ausgebildet, im Betrieb des Serviceroboters eine Beschleunigung des Serviceroboters entlang drei Beschleunigungsmessachsen, welche drei Beschleunigungsmessachsen je unterschiedlich relativ zum Serviceroboter ausgerichtet sind, zu erfassen und Beschleunigungssensordaten mit Informationen zu dieser erfassten Beschleunigung auszugeben.

Weiter besteht die Möglichkeit, dass die Beschleunigungssensoranordnung ein oder mehrere Gyroskope zum Erfassen einer Drehbewegung des Serviceroboters aufweist und zum Ausgeben von Gyroskop¬daten mit Informationen zur erfassten Drehbewegung ausgebildet ist.

Vorteilhafterweise weist das Betriebsmodul, insbesondere der Serviceroboter, ein Transportstreckenermittlungsmodul zum Ermitteln einer Transportstrecke, über welche der Serviceroboter transportiert worden ist, insbesondere über welche der Serviceroboter durch die Servicerobotertransportiervorrichtung transportiert worden ist, auf, wobei das Transportstreckenermittlungs¬imodul zum Empfangen der Beschleunigungssensordaten mit der Beschleunigungs¬sensoranordnung verbunden oder verbindbar ist und zum Ermitteln der Transportstrecke basierend auf den Beschleunigungssensordaten ausgebildet ist. Dies hat den Vorteil, dass die Transportstrecke, über welche der Serviceroboter transportiert worden ist, zuverlässig bestimmt werden kann. Das Transportstreckenermittlungsmodul kann dabei auch in der Beschleunigungssensoranordnung integriert angeordnet sein.

Dabei kann die Transportstrecke einem Transportweg im eindimensionalen, zweidimensionalen oder dreidimensionalen Raum entsprechen, entlang welchem Transportweg der Serviceroboter transportiert worden ist, insbesondere durch die Servicerobotertransportiervorrichtung transportiert worden ist. Genauso kann die Transportstrecke aber auch eine Distanz sein, über welche der Serviceroboter entlang einer der wenigstens einen Beschleunigungsmessachse transportiert worden ist. Falls die Beschleunigungssensoranordnung zum Erfassen einer Beschleunigung entlang zwei oder drei verschiedenen Beschleunigungsmessachsen mit jeweils einer anderen fixen Ausrichtung relativ zum Serviceroboter in beide Richtungen der jeweiligen Beschleunigungsmessachse, welcher Beschleunigung der Serviceroboter ausgesetzt ist, ausgebildet ist, so kann die Transportstrecke die Distanzen sein, über welche der Serviceroboter entlang der zwei bzw. drei Beschleunigungsmessachsen transportiert worden ist.

Vorzugsweise ist das Transportstreckenermittlungsmodul Bestandteil des Positionsermittlungsmoduls oder das Positionsermittlungsmodul zum Empfangen von Informationen zur Transportstrecke mit dem Transportstreckenermittlungsmodul verbunden oder verbindbar, wobei das Positionsermittlungs¬modul dazu ausgebildet ist, aufgrund der ermittelten Transportstrecke oder aufgrund der vom Transportstreckenermittlungsmodul empfangenen Informationen zur Transportstrecke zu ermitteln, ob der Serviceroboter durch die Servicerobotertransportiervorrichtung vom Übergangsort im einen der wenigstens zwei Aktionsteilgebiete zum Übergangsort im anderen der wenigstens zwei Aktionsteilgebiete transportiert worden ist. Dies hat den Vorteil, dass ohne zusätzliche von der Servicetransportiervorrichtung erhaltene Informationen bestimmt werden kann, ob der Serviceroboter durch die Servicerobotertransportiervorrichtung vom Übergangsort im einen der wenigstens zwei Aktionsteilgebiete zum Übergangsort im anderen der wenigstens zwei Aktionsteilgebiete transportiert worden ist. Wenn die Beschleunigungssensoranordnung zudem ein oder mehrere Gyroskope zum Erfassen einer Drehbewegung des Serviceroboters aufweist und zum Ausgeben von Gyroskop¬daten mit Informationen zur erfassten Drehbewegung ausgebildet ist, so ist das Transportstreckenermittlungs¬imodul bevorzugt zum Empfangen der Gyroskopdaten mit der Beschleunigungs¬sensoranordnung verbunden oder verbindbar und zum Ermitteln der Transportstrecke basierend auf den Gyroskopdaten ausgebildet.

Vorteilhafterweise weist der Serviceroboter, besonders bevorzugt die autonom fahrende Basisplattform, zum Erfassen von Hindernissen innerhalb des Arbeitsbereichs des Serviceroboters wenigstens einen Arbeitsbereichserfassungssensor zum Erfassen des Arbeitsbereichs des Serviceroboters und zum Ausgeben von Arbeitsbereichserfassungssensordaten mit Informationen zum erfassten Arbeitsbereich auf, wobei das Navigationsmodul dazu ausgebildet ist, bei einem Transportieren des Serviceroboters durch die Servicerobotertransportier¬vorrichtung aufgrund der Informationen zum erfassten Arbeitsbereich zu ermitteln, ob die Schranke geöffnet ist und der Serviceroboter somit durch die Schranke fahren und die Schranke passieren kann, und, wenn vom Navigationsmodul ermittelt worden ist, dass die Schranke geöffnet ist, Navigationsdaten an das Steuermodul auszugeben, um den Serviceroboter durch die Schranke fahren zu lassen. Dies ermöglicht einen sichereren Betrieb des Serviceroboters.

Vorteilhafterweise ist das Navigationsmodul dabei dazu ausgebildet, diese Navigationsdaten dann an das Steuermodul auszugeben, um den Serviceroboter durch die Schranke fahren zu lassen, wenn zugleich das Schrankenkommunikationsmodul ein Schrankegeöffnetsignal empfangen hat. Unabhängig davon, ob das Navigationsmodul dabei dazu ausgebildet ist, diese Navigationsdaten dann an das Steuermodul auszugeben, um den Serviceroboter durch die Schranke fahren zu lassen, wenn zugleich das Schrankenkommunikationsmodul ein Schrankegeöffnetsignal empfangen hat, oder nicht, ist das Navigationsmodul dabei vorzugsweise dazu ausgebildet, die Navigationsdaten dann an das Steuermodul auszugeben, um den Serviceroboter durch die Schranke fahren zu lassen, wenn zugleich das Positionsermittlungs¬modul aufgrund der ermittelten Transportstrecke oder aufgrund der vom Transportstreckenermittlungsmodul empfangenen Informationen zur Transportstrecke ermittelt hat, ob der Serviceroboter durch die Servicerobotertransportiervorrichtung vom Übergangsort im einen der wenigstens zwei Aktionsteilgebiete zum Übergangsort im anderen der wenigstens zwei Aktionsteilgebiete transportiert worden ist. Dies ermöglicht eine noch grössere Sicherheit beim Betrieb des Serviceroboters.

Bevorzugt ist das Navigationsmodul zum Ermitteln des Fahrweges von der aktuellen Position des Serviceroboters zum mindestens einen Zielort aufgrund der Informationen zum Aktionsgebiet sowie, wenn sich die aktuelle Position des Serviceroboters in einem anderen der wenigstens zwei Aktionsteilgebiete befindet als der Zielort, unter Berücksichtigung der in den Informationen zum Aktionsgebiet beinhalteten Informationen zu den Übergangsorten der Aktionsteilgebiete, ausgebildet. Dies hat den Vorteil, dass der Serviceroboter zuverlässig autonom den Weg auch über mehrere Aktionsgebiete suchen kann.

Vorteilhafterweise ist das Navigationsmodul dazu ausgebildet, wenn sich der Serviceroboter an einem der Übergangsorte oder zum Transportiert werden mit einer der Servicerobotertransportiervorrichtung auf oder in der entsprechenden Servicerobotertransportiervorrichtung befindet, durch Ausgeben von Navigationsdaten an das Steuermodul den Serviceroboter derart zu steuern, dass er sich so nahe es das Sicherheitsmodul zulässt an Personen in der Umgebung des Serviceroboters heranbewegt, wenn sich Personen auf dem oder in der Nähe des Fahrwegs befinden. Dies hat den Vorteil, dass der Serviceroboter komplikationsfreier zusammen mit Personen Servicerobotertransportiervorrichtung transportiert werden kann. Weiter ist das Navigationsmodul vorzugsweise dazu ausgebildet, insbesondere durch Informationsübergabe an das Betriebsmodul, vom Serviceroboter akustische und/oder optische Warnsignale ausgeben zu lassen, wenn sich Personen auf dem oder in der Nähe des Fahrwegs befinden.

In einer bevorzugten Ausführungsform ist das Navigationsmodul dazu ausgebildet, zu ermitteln, dass der Zielort erreicht worden ist, wenn die aktuelle Position bis auf eine dafür erforderliche Genauigkeit mit dem Zielort übereinstimmt.

Bevorzugt ist die erforderliche Genauigkeit erreicht, wenn die aktuelle Position um höchstens 1 m, bevorzugt höchstens 0.5 m, besonders bevorzugt höchsten um 0,2 m vom Zielort abweicht. Da die Positionsdaten vorzugsweise auch Winkel-Positionsdaten beinhalten können, kann der Zielort vorzugsweise auch eine vorgebbare Ausrichtung des Serviceroboters beinhalten. Dann ist bezüglich der Ausrichtung beispielsweise die erforderliche Genauigkeit erreicht, wenn die aktuelle Position um höchstens 10°, bevorzugt höchstens 5° und besonders bevorzugt höchstens 2° von dem Zielort abweicht.

Insbesondere kann der Zielort vorzugsweise mittels X-Achsen-Positionsdaten, Y-Achsen-Positionsdaten und Ausrichtungs-Positionsdaten angegeben werden.

Gemäß einer bevorzugten Ausführungsform ist das Navigationsmodul dazu ausgebildet, eine Zielerreichungs-Benachrichtigung auszugeben, wenn durch das Navigationsmodul ermittelt worden ist, dass der Zielort erreicht ist.

Vorzugsweise weist das Betriebsmodul ein Benutzerbenachrichtigungsmodul zum Benachrichtigen eines Benutzers auf, wobei das Benutzerbenachrichtigungsmodul zum Empfangen der von dem Navigationsmodul ausgegebenen Zielerreichungs-Benachrichtigung mit dem Navigationsmodul verbunden oder verbindbar ist.

In einer bevorzugten Ausführungsform ist das Benutzerbenachrichtigungsmodul dazu ausgebildet, eine Ankunftsbenachrichtigung an den Benutzer auszugeben, wenn das Benutzerbenachrichtigungsmodul die Zielerreichungs-Benachrichtigung von dem Navigationsmodul empfängt. Somit ist es insgesamt einfach möglich, den Benutzer über die Ankunft des Serviceroboters zu benachrichtigen.

Gemäß einer bevorzugten Ausführungsform ist die Ankunftsbenachrichtigung ein Anruf auf einem Zimmertelefon, welches Zimmertelefon dem Hotelzimmer zugeordnet ist, welchem Hotelzimmer die in der Benutzer-Identifikation enthaltene Zimmernummer zugeordnet ist. Ein solcher Anruf stellt eine besonders einfache und sichere Benachrichtigung des Benutzers dar.

Alternativ oder kumulativ hierzu kann die Ankunftsbenachrichtigung auch als Anzeigeinformation auf der Anzeigeeinheit angezeigt werden. Weiterhin wäre auch ein optisches und/oder akustisches Signal als Ankunftsbenachrichtigung denkbar. Weiterhin kann die Ankunftsbenachrichtigung auch mittels eines anderen Services bzw. Geräts erfolgen. Lediglich beispielhaft wäre hierbei insbesondere ein Hotel-System, eine Benutzer-App, eine E-Mail, eine SMS oder eine andere Benachrichtigung auf ein beliebiges Benutzerendgerät denkbar. Unabhängig hiervon kann das Benutzerbenachrichtigungsmodul beispielsweise über eine API, bzw. eine Programmierschnittstelle, über das Internet oder über eine Cloud insbesondere mit dem Navigationsmodul verbunden oder verbindbar sein. Weiterhin wäre auch eine lokale Funkkommunikation über einen Sender und Empfänger, beispielsweise mittels Bluetooth denkbar.

Vorzugsweise gibt das Benutzerbenachrichtigungsmodul die Ankunftsbenachrichtigung erneut aus, wenn nicht innerhalb einer vorgegebenen Wartezeit eine Reaktion des Benutzers stattgefunden hat. Somit kann der Benutzer erneut benachrichtigt werden, falls dieser die vorherige Benachrichtigung nicht wahrgenommen hat. Bei der Wartezeit kann es sich beispielsweise um wenige Minuten handeln. Eine Reaktion kann beispielsweise durch jegliche Interaktion mit dem Serviceroboter festgestellt werden, beispielsweise mittels einer Eingabe an einer Eingabeeinheit, mittels einer Eingabe in einer Benutzer-App oder in einem anderen System, das insbesondere über die Cloud mit dem Benutzerbenachrichtigungsmodul verbindbar ist, mittels lokaler Funkkommunikation oder mittels Feststellen einer akustischen und/oder optischen Interaktion.

In einer bevorzugten Ausführungsform ist das Benutzerbenachrichtigungsmodul zum Erkennen einer Abwesenheit eines den aktuellen Benutzerauftrag betreffenden Benutzers und zum Ausgeben eines Abwesenheitshinweises ausgebildet, wenn die Abwesenheit des dem aktuellen Benutzerauftrag betreffenden Benutzers erkannt worden ist.

Gemäß einer bevorzugten Ausführungsform ist das Benutzerbenachrichtigungsmodul dazu ausgebildet, die Abwesenheit des den aktuellen Benutzerauftrag betreffenden Benutzers basierend auf dem Überschreiten eines vorgegebenen Zeitraums seit der Ankunftsbenachrichtigung, insbesondere dem Überschreiten der vorgegebenen Wartezeit, oder basierend auf dem Überschreiten einer vorgegebenen Anzahl von ausgegeben Ankunftsbenachrichtigungen zu erkennen.

Vorzugsweise wird der aktuelle Benutzerauftrag abgebrochen wird, wenn durch das Benutzerbenachrichtigungsmodul die Abwesenheit des Benutzers erkannt worden ist. Hierdurch wird der Serviceroboter nicht zu lange blockiert, wenn der Benutzer nicht reagiert.

In einer bevorzugten Ausführungsform weist das Betriebsmodul ein Alarmmodul zum Alarmieren eines Administrators auf, wobei das Alarmmodul mit dem Benutzerbenachrichtigungsmodul zum Empfangen des Abwesenheitshinweises verbunden oder verbindbar ist, und wobei das Alarmmodul zum Ausgeben eines Alarmhinweises zum Alarmieren des Administrators ausgebildet ist, wenn vom Alarmmodul der Abwesenheitshinweis von dem Benutzerbenachrichtigungsmodul empfangen worden ist. Hierdurch wird der Administrator über die Abwesenheit des Benutzers informiert und kann entsprechende Schritte einleiten. Beispielsweise kann der Administrator überprüfen, ob dem Benutzer etwas zugestoßen ist, weshalb dieser nicht reagiert bzw. reagieren kann. Bei dem Administrator kann es sich beispielsweise um einen Hotelmitarbeiter handeln.

Gemäß einer bevorzugten Ausführungsform weist das Betriebsmodul ein Befreiungsmodul zum Befreien eines blockierten Serviceroboters auf, wobei das Befreiungsmodul dazu ausgebildet ist, ein manuelles und/oder ferngesteuertes Versetzen des Serviceroboters um eine begrenzte Maximaldistanz und/oder um einen begrenzten Versetzungswinkel zum Befreien des blockierten Serviceroboters zu ermöglichen. Hierdurch ist es möglich, einen blockierten Serviceroboter wieder zu befreien, so dass der Serviceroboter wieder einsatzfähig ist.

Vorzugsweise beträgt die begrenzte Maximaldistanz wenige Zentimeter, vorzugsweise 1 bis 20 Zentimeter, besonders bevorzugt 1 bis 10 Zentimeter. Weiterhin vorzugsweise beträgt der begrenzte Versetzungswinkel maximal 180°, vorzugsweise maximal 90°, besonders bevorzugt maximal 45°. Durch die Beschränkung der Maximaldistanz und/oder des Versetzungswinkels wird die Sicherheit des Serviceroboters erhöht. Der Serviceroboter lässt sich somit nicht vollständig aus der Ferne steuern.

In einer bevorzugten Ausführungsform ist das Steuermodul mit dem Befreiungsmodul verbunden oder verbindbar ist.

Gemäß einer bevorzugten Ausführungsform ist das Steuermodul dazu ausgebildet, einen Blockierhinweis auszugeben, wobei das Befreiungsmodul zum Empfangen des von dem Steuermodul ausgegebenen Blockierhinweises ausgebildet ist und vorzugsweise zum Empfangen des von dem Steuermodul ausgegebenen Blockierhinweises mit dem Steuermodul verbunden oder verbindbar ist, und wobei das Befreiungsmodul, wenn es den Blockierhinweis empfangen hat, feststellt, dass der Serviceroboter blockiert ist.

Vorzugsweise ist das Steuermodul dazu ausgebildet, den Blockierhinweis auszugeben, wenn ein Steuerbefehl vom Serviceroboter nicht ausgeführt werden kann.

In einer bevorzugten Ausführungsform ist das Befreiungsmodul zum Ausgeben eines Befreiungsbefehls zum Versetzen des Serviceroboters ausgebildet, wobei das Steuermodul zum Empfangen des von dem Befreiungsmodul ausgegeben Befreiungsbefehls ausgebildet ist und vorzugsweise zum Empfangen des von dem Befreiungsmodul ausgegebenen Befreiungsbefehls mit dem Befreiungsmodul verbunden oder verbindbar ist.

Gemäß einer bevorzugten Ausführungsform ist der Befreiungsbefehl ein Steuerbefehl, der zumindest Informationen zu einer Richtung, in welche sich der Serviceroboter bewegen soll, und Informationen zu der Maximaldistanz, die sich der Serviceroboter in die Richtung, in welche sich der Serviceroboter bewegen soll, maximal bewegen soll, enthält.

Vorzugsweise weist das Betriebsmodul ein Bewegungsblockiermodul zum Blockieren des Bewegens des Serviceroboters und zum Ausgeben eines Bewegungsblockierbefehls zum Blockieren des Bewegens des Serviceroboters auf. Dies hat den Vorteil, dass das Betriebsmodul ein Bewegen des Serviceroboters blockieren kann. Mit anderen Worten kann das Bewegen des Serviceroboters blockiert werden, indem der Bewegungsblockierbefehl ausgegeben wird.

In einer bevorzugten Ausführungsform ist das Bewegungsblockiermodul zum Empfangen der vom Öffnungszustandssensor ausgegebenen Öffnungszustandsdaten mit Informationen zu dem vom Öffnungszustandssensor erfassten Öffnungszustand mit dem Öffnungszustandssensor verbunden oder verbindbar, wobei das Bewegungsblockiermodul dazu ausgebildet ist, basierend auf den vom Öffnungszustandssensor empfangenen Öffnungszustandsdaten einen Öffnungszustand der Serviceeinheit zu ermitteln und den Bewegungsblockierbefehl auszugeben, wenn der vom Bewegungsblockiermodul ermittelte Öffnungszustand ein Geöffnetsein einer Schubladeneinheit angibt. Dies hat den Vorteil, dass verhindert werden kann, dass der Serviceroboter sich trotz geöffneter Schubladeneinheit bewegt bzw. losfährt. Anstelle des Geöffnetseins der Schubladeneinheit kann auch das Geöffnetsein einer anderen Einrichtung, beispielsweise einer Tür, etc., ermittelt werden. Mit anderen Worten werden die Öffnungszustandsdaten von dem Öffnungszustandssensor empfangen. Basierend auf diesen Öffnungszustandsdaten wird der Öffnungszustand der Serviceeinheit ermittelt und der Bewegungsblockierbefehl ausgegeben, wenn die Schubladeneinheit, die Tür, bzw. allgemeiner die Einrichtung geöffnet ist.

Gemäß einer bevorzugten Ausführungsform ist das Steuermodul des Serviceroboters zum Empfangen des vom Bewegungsblockiermodul ausgegebenen Bewegungsblockierbefehls mit dem Bewegungsblockiermodul verbunden oder verbindbar, wobei das Steuermodul als Reaktion auf das Empfangen des Bewegungsblockierbefehls dazu ausgebildet ist, Steuerbefehle zum Blockieren des Bewegens des Serviceroboters auszugeben. Dies hat den Vorteil, dass das Bewegen des Serviceroboters blockiert werde kann. Mit anderen Worten gibt das Steuermodul einen Steuerbefehl zum Blockieren des Bewegens des Serviceroboters aus, wenn das Steuermodul den Bewegungsblockierbefehl empfängt.

Vorzugsweise weist das Betriebsmodul ein Inventarermittlungsmodul zum Empfangen von vom wenigstens einen Inventarsensor ausgegebenen Inventarsensordaten und zum Ermitteln eines Inventars der Serviceeinheit basierend auf den vom wenigstens einen Inventarsensor empfangenen Inventarsensordaten und zum Ausgeben von Inventardaten mit Informationen zum vom Inventarermittlungsmodul ermittelten Inventar der Serviceeinheit auf, wobei das Inventarermittlungsmodul zum Empfangen der vom wenigstens einen Inventarsensor ausgegebenen Inventarsensordaten mit dem wenigstens einen Inventarsensor verbunden oder verbindbar ist. Dies hat den Vorteil, dass das Inventar der Serviceeinheit bzw. des Serviceroboters ermittelt werden kann. Mit anderen Worten empfängt das Betriebsmodul die von dem wenigstens einen Inventarsensor ausgegebenen Inventarsensordaten und ermittelt ein Inventar der Serviceeinheit basierend auf den vom wenigstens einen Inventarsensor empfangenen Inventarsensordaten. Ferner gibt das Betriebsmodul Inventardaten mit Informationen zu dem vom Inventarermittlungsmodul ermittelten Inventar der Serviceeinheit aus.

Vorteilhafterweise ist das Inventarermittlungsmodul dazu ausgebildet, basierend auf den vom mindestens einen Gewichtserfasssensor empfangenen Inventarsensordaten für jede der mindestens einen Gewichtserfassauflage das auf der jeweiligen Gewichtserfassauflage aufliegende Gewicht zu ermitteln, um im Betrieb des Serviceroboters das Gewicht des auf der jeweiligen Gewichtserfassauflage aufliegenden, mindestens einen Inventargegenstands zu erfassen. Dies hat den Vorteil, dass auf effiziente Art und Weise eine Ermittlung des Inventars ermöglicht wird.

Im Betrieb des erfindungsgemässen Serviceroboters sowie auch beim Erbringen von Dienstleistungen in örtlicher Nähe von Menschen mit dem erfindungsgemässen Serviceroboter werden somit vorzugsweise mit dem Inventarermittlungsmodul vom mindestens einen Gewichtserfasssensor die Inventarsensordaten empfangen und vorzugsweise wird dabei mit dem Inventarermittlungsmodul basierend auf den Inventarsensordaten für jede der mindestens einen Gewichtserfassauflage das auf der jeweiligen Gewichtserfassauflage aufliegende Gewicht ermittelt, um im Betrieb des Serviceroboters das Gewicht des auf der jeweiligen Gewichtserfassauflage aufliegenden, mindestens einen Inventargegenstands zu erfassen. Dies hat den Vorteil, dass auf effiziente Art und Weise eine Ermittlung des Inventars ermöglicht wird.

Bevorzugt ist das Inventarermittlungsmodul dazu ausgebildet, wiederholt vom mindestens einen Gewichtserfasssensor Inventarsensordaten zu empfangen und jeweils basierend auf den vom mindestens einen Gewichtserfasssensor empfangenen Inventarsensordaten für jede der mindestens einen Gewichtserfassauflage das auf der jeweiligen Gewichtserfassauflage aufliegende Gewicht zu ermitteln, sowie jeweils eine Änderung des auf der jeweiligen Gewichtserfassauflage aufliegenden, ermittelten Gewichts im Vergleich zu dem basierend auf den zuvor empfangenen Inventarsensordaten ermittelten, auf der jeweiligen Gewichtserfassauflage aufliegenden Gewichts zu ermitteln, um im Betrieb des Serviceroboters anhand der ermittelten Änderung des auf der jeweiligen Gewichtserfassauflage aufliegenden Gewichts eine Änderung des auf der jeweiligen Gewichtserfassauflage aufliegenden mindestens einen Inventargegenstands zu ermitteln. Dies hat den Vorteil, dass zuverlässig Änderungen am Inventar der Serviceeinheit erkannt werden können.

Im Betrieb des erfindungsgemässen Serviceroboters sowie auch beim Erbringen von Dienstleistungen in örtlicher Nähe von Menschen mit dem erfindungsgemässen Serviceroboter werden somit vorzugsweise mit dem Inventarermittlungsmodul wiederholt vom mindestens einen Gewichtserfasssensor Inventarsensordaten empfangen und jeweils basierend auf den vom mindestens einen Gewichtserfasssensor empfangenen Inventarsensordaten für jede der mindestens einen Gewichtserfassauflage das auf der jeweiligen Gewichtserfassauflage aufliegende Gewicht ermittelt, sowie jeweils eine Änderung des auf der jeweiligen Gewichtserfassauflage aufliegenden, ermittelten Gewichts im Vergleich zu dem basierend auf den zuvor empfangenen Inventarsensordaten ermittelten, auf der jeweiligen Gewichtserfassauflage aufliegenden Gewichts ermittelt. Dadurch kann im Betrieb des Serviceroboters anhand der ermittelten Änderung des auf der jeweiligen Gewichtserfassauflage aufliegenden Gewichts eine Änderung des auf der jeweiligen Gewichtserfassauflage aufliegenden mindestens einen Inventargegenstands ermittelt werden. Dies hat den Vorteil, dass zuverlässig Änderungen am Inventar der Serviceeinheit erkannt werden können.

Vorteilhafterweise ist das Inventarermittlungsmodul dazu ausgebildet, wenn durch das Inventarermittlungsmodul für eine der mindestens einen Gewichtserfassauflage eine Verminderung des auf der jeweiligen Gewichtserfassauflage aufliegenden Gewichts ermittelt wird, die ermittelte Verminderung des auf der jeweiligen Gewichtserfassauflage aufliegenden Gewichts mit gespeicherten Gewichtsdaten von möglichen Inventargegenständen zu vergleichen und, wenn die ermittelte Verminderung des auf der jeweiligen Gewichtserfassauflage aufliegenden Gewichts den gespeicherten Gewichtsdaten eines der möglichen Inventargegenstände entspricht, eine Entnahme des entsprechenden Inventargegenstands von der jeweiligen Gewichtserfassauflage festzustellen und den entsprechenden Inventargegenstand aus dem erfassten Inventar zu entfernen. Dies hat den Vorteil, dass eine Entnahme eines Inventargegenstands aus der Serviceeinheit zuverlässig ermittelt werden kann.

Bevorzugt ist dabei das Inventarermittlungsmodul dazu ausgebildet, beim Vergleichen der ermittelten Verminderung des auf der jeweiligen Gewichtserfassauflage aufliegenden Gewichts mit gespeicherten Gewichtsdaten von möglichen Inventargegenständen zu überprüfen, ob die ermittelte Verminderung des auf der jeweiligen Gewichtserfassauflage aufliegenden Gewichts auf wenigstens 5 g, besonders bevorzugt wenigstens 3 g, ganz besonders bevorzugt wenigstens 2 g genau den gespeicherten Gewichtsdaten eines der möglichen Inventargegenstände entspricht, und wenn die ermittelte Verminderung des auf der jeweiligen Gewichtserfassauflage aufliegenden Gewichts auf wenigstens 5 g, besonders bevorzugt wenigstens 3 g, ganz besonders bevorzugt wenigstens 2 g genau den gespeicherten Gewichtsdaten eines der möglichen Inventargegenstände entspricht, eine Entnahme des entsprechenden Inventargegenstands von der jeweiligen Gewichtserfassauflage festzustellen und den entsprechenden Inventargegenstand aus dem erfassten Inventar zu entfernen. Dies hat den Vorteil, dass basierend auf der erfassten Gewichtsänderung zuverlässig der entnommene Inventargegenstand ermittelt werden kann.

Im Betrieb des erfindungsgemässen Serviceroboters sowie auch beim Erbringen von Dienstleistungen in örtlicher Nähe von Menschen mit dem erfindungsgemässen Serviceroboter wird somit vorzugsweise, wenn mit dem Inventarermittlungsmodul für eine der mindestens einen Gewichtserfassauflage eine Verminderung des auf der jeweiligen Gewichtserfassauflage aufliegenden Gewichts ermittelt wird, die ermittelte Verminderung des auf der jeweiligen Gewichtserfassauflage aufliegenden Gewichts mit gespeicherten Gewichtsdaten von möglichen Inventargegenständen verglichen und, wenn die ermittelte Verminderung des auf der jeweiligen Gewichtserfassauflage aufliegenden Gewichts den gespeicherten Gewichtsdaten eines der möglichen Inventargegenstände entspricht, eine Entnahme des entsprechenden Inventargegenstands von der jeweiligen Gewichtserfassauflage festgestellt und der entsprechende Inventargegenstand aus dem erfassten Inventar entfernt. Dies hat den Vorteil, dass eine Entnahme eines Inventargegenstands aus der Serviceeinheit zuverlässig ermittelt werden kann.

Bevorzugt wird dabei beim Vergleichen der ermittelten Verminderung des auf der jeweiligen Gewichtserfassauflage aufliegenden Gewichts mit gespeicherten Gewichtsdaten von möglichen Inventargegenständen vorzugsweise überprüft, ob die ermittelte Verminderung des auf der jeweiligen Gewichtserfassauflage aufliegenden Gewichts auf wenigstens 5 g, besonders bevorzugt wenigstens 3 g, ganz besonders bevorzugt wenigstens 2 g genau den gespeicherten Gewichtsdaten eines der möglichen Inventargegenstände entspricht, und wenn die ermittelte Verminderung des auf der jeweiligen Gewichtserfassauflage aufliegenden Gewichts auf wenigstens 5 g, besonders bevorzugt wenigstens 3 g, ganz besonders bevorzugt wenigstens 2 g genau den gespeicherten Gewichtsdaten eines der möglichen Inventargegenstände entspricht, eine Entnahme des entsprechenden Inventargegenstands von der jeweiligen Gewichtserfassauflage festgestellt und der entsprechende Inventargegenstand aus dem erfassten Inventar zu entfernt. Dies hat den Vorteil, dass basierend auf der erfassten Gewichtsänderung zuverlässig der entnommene Inventargegenstand ermittelt werden kann.

Bevorzugt ist das Inventarermittlungsmodul dazu ausgebildet, wenn durch das Inventarermittlungsmodul für eine der mindestens einen Gewichtserfassauflage eine Zunahme des auf der jeweiligen Gewichtserfassauflage aufliegenden Gewichts ermittelt wird, die ermittelte Zunahme des auf der jeweiligen Gewichtserfassauflage aufliegenden Gewichts mit gespeicherten Gewichtsdaten von möglichen Inventargegenständen zu vergleichen und, wenn die ermittelte Zunahme des auf der jeweiligen Gewichtserfassauflage aufliegenden Gewichts den gespeicherten Gewichtsdaten eines der möglichen Inventargegenstände entspricht, eine Zugabe des entsprechenden Inventargegenstands auf der jeweiligen Gewichtserfassauflage festzustellen und den entsprechenden Inventargegenstand dem erfassten Inventar hinzuzufügen. Dies hat den Vorteil, dass eine Zugabe eines Inventargegenstands in die Serviceeinheit zuverlässig ermittelt werden kann.

Bevorzugt ist dabei das Inventarermittlungsmodul dazu ausgebildet, beim Vergleichen der ermittelten Zunahme des auf der jeweiligen Gewichtserfassauflage aufliegenden Gewichts mit gespeicherten Gewichtsdaten von möglichen Inventargegenständen zu überprüfen, ob die ermittelte Zunahme des auf der jeweiligen Gewichtserfassauflage aufliegenden Gewichts auf wenigstens 5 g, besonders bevorzugt wenigstens 3 g, ganz besonders bevorzugt wenigstens 2 g genau den gespeicherten Gewichtsdaten eines der möglichen Inventargegenstände entspricht, und wenn die ermittelte Zunahme des auf der jeweiligen Gewichtserfassauflage aufliegenden Gewichts auf wenigstens 5 g, besonders bevorzugt wenigstens 3 g, ganz besonders bevorzugt wenigstens 2 g genau den gespeicherten Gewichtsdaten eines der möglichen Inventargegenstände entspricht, eine Zugabe des entsprechenden Inventargegenstands auf der jeweiligen Gewichtserfassauflage festzustellen und den entsprechenden Inventargegenstand dem erfassten Inventar hinzuzufügen. Dies hat den Vorteil, dass basierend auf der erfassten Gewichtsänderung zuverlässig der hinzugefügte Inventargegenstand ermittelt werden kann.

Im Betrieb des erfindungsgemässen Serviceroboters sowie auch beim Erbringen von Dienstleistungen in örtlicher Nähe von Menschen mit dem erfindungsgemässen Serviceroboterwird somit vorzugsweise mit dem Inventarermittlungsmodul, wenn durch das Inventarermittlungsmodul für eine der mindestens einen Gewichtserfassauflage eine Zunahme des auf der jeweiligen Gewichtserfassauflage aufliegenden Gewichts ermittelt wird, die ermittelte Zunahme des auf der jeweiligen Gewichtserfassauflage aufliegenden Gewichts mit gespeicherten Gewichtsdaten von möglichen Inventargegenständen verglichen und, wenn die ermittelte Zunahme des auf der jeweiligen Gewichtserfassauflage aufliegenden Gewichts den gespeicherten Gewichtsdaten eines der möglichen Inventargegenstände entspricht, eine Zugabe des entsprechenden Inventargegenstands auf der jeweiligen Gewichtserfassauflage festgestellt und der entsprechende Inventargegenstand dem erfassten Inventar hinzugefügt. Dies hat den Vorteil, dass eine Zugabe eines Inventargegenstands in die Serviceeinheit zuverlässig ermittelt werden kann.

Dabei wird beim Vergleichen der ermittelten Zunahme des auf der jeweiligen Gewichtserfassauflage aufliegenden Gewichts mit gespeicherten Gewichtsdaten von möglichen Inventargegenständen vorzugsweise überprüft, ob die ermittelte Zunahme des auf der jeweiligen Gewichtserfassauflage aufliegenden Gewichts auf wenigstens 5 g, besonders bevorzugt wenigstens 3 g, ganz besonders bevorzugt wenigstens 2 g genau den gespeicherten Gewichtsdaten eines der möglichen Inventargegenstände entspricht, und wenn die ermittelte Zunahme des auf der jeweiligen Gewichtserfassauflage aufliegenden Gewichts auf wenigstens 5 g, besonders bevorzugt wenigstens 3 g, ganz besonders bevorzugt wenigstens 2 g genau den gespeicherten Gewichtsdaten eines der möglichen Inventargegenstände entspricht, eine Zugabe des entsprechenden Inventargegenstands auf der jeweiligen Gewichtserfassauflage festgestellt und den entsprechenden Inventargegenstand dem erfassten Inventar hinzugefügt. Dies hat den Vorteil, dass basierend auf der erfassten Gewichtsänderung zuverlässig der hinzugefügte Inventargegenstand ermittelt werden kann.

Bevorzugt ist das Inventarermittlungsmodul dazu ausgebildet, wenn durch das Inventarermittlungsmodul für eine der mindestens einen Gewichtserfassauflage zuerst eine Entnahme eines bestimmten Inventargegenstands von der jeweiligen Gewichtserfassauflage festgestellt wird und innerhalb einer vorgegebenen Begutachtungszeitspanne nach dem Zeitpunkt der Entnahme des bestimmten Inventargegenstands von der jeweiligen Gewichtserfassauflage die Zugabe des bestimmten Inventargegenstands auf der jeweiligen Gewichtserfassauflage festgestellt wird, ein Begutachtungssignal auszugeben, welches anzeigt, dass der bestimmte Inventargegenstand nur zeitweilig zur Begutachtung entnommen wurde. Dieses Begutachtungssignal kann beispielsweise an das Betriebsmodul oder das Auftragsmodul übermittelt werden.

Bevorzugt ist die vorgegebene Begutachtungszeitspanne höchstens 30 Sekunden. Besonders bevorzugt ist die vorgegebene Begutachtungszeitspanne höchstens 20 Sekunden. Alternativ dazu besteht aber auch die Möglichkeit, dass die vorgegebene Begutachtungszeitspanne länger als 30 Sekunden.

Im Betrieb des erfindungsgemässen Serviceroboters sowie auch beim Erbringen von Dienstleistungen in örtlicher Nähe von Menschen mit dem erfindungsgemässen Serviceroboterwird somit vorzugsweise mit dem Inventarermittlungsmodul, wenn durch das Inventarermittlungsmodul für eine der mindestens einen Gewichtserfassauflage zuerst eine Entnahme eines bestimmten Inventargegenstands von der jeweiligen Gewichtserfassauflage festgestellt wird und innerhalb der vorgegebenen Begutachtungszeitspanne nach dem Zeitpunkt der Entnahme des bestimmten Inventargegenstands von der jeweiligen Gewichtserfassauflage die Zugabe des bestimmten Inventargegenstands auf der jeweiligen Gewichtserfassauflage festgestellt wird, ein Begutachtungssignal ausgegeben, welches anzeigt, dass der bestimmte Inventargegenstand nur zeitweilig zur Begutachtung entnommen wurde. Dieses Begutachtungssignal kann beispielsweise an das Betriebsmodul oder das Auftragsmodul übermittelt werden.

Bevorzugt ist die vorgegebene Begutachtungszeitspanne dabei wie bereits erwähnt höchstens 30 Sekunden. Besonders bevorzugt ist die vorgegebene Begutachtungszeitspanne dabei wie bereits erwähnt höchstens 20 Sekunden. Alternativ dazu besteht aber auch die Möglichkeit, dass die vorgegebene Begutachtungszeitspanne länger als 30 Sekunden.

Bevorzugt ist das Inventarermittlungsmodul dazu ausgebildet, basierend auf den vom Anschlagspositionssensor empfangenen Inventarsensordaten einen Abstand des hinteren Anschlags der Produktvorschubeinheit vom vorderen Anschlag der Produktvorschubeinheit zu ermitteln. Dies hat den Vorteil, dass basierend auf dem ermittelten des hinteren Anschlags der Produktvorschubeinheit vom vorderen Anschlag der Produktvorschubeinheit eine Bestimmung der Anzahl der in der Produktvorschubeinheit aufgenommenen Inventargegenstände ermöglicht wird.

Im Betrieb des Serviceroboters sowie auch beim Erbringen von Dienstleistungen in örtlicher Nähe von Menschen mit dem erfindungsgemässen Serviceroboter wird somit vorzugsweise mit dem Inventarermittlungsmodul basierend auf den vom Anschlagspositionssensor empfangenen Inventarsensordaten der Abstand des hinteren Anschlags der Produktvorschubeinheit vom vorderen Anschlag der Produktvorschubeinheit ermittelt.

Vorteilhafterweise ist das Inventarermittlungsmodul dazu ausgebildet, eine Anzahl der in der Produktvorschubeinheit aufgenommenen Inventargegenstände zu ermitteln, indem das Inventarermittlungsmodul dazu ausgebildet ist, den basierend auf den vom Anschlagspositionssensor empfangenen Inventarsensordaten ermittelten Abstand des hinteren Anschlags der Produktvorschubeinheit vom vorderen Anschlag der Produktvorschubeinheit durch eine gespeicherte Inventargegenstanddicke, welche einer Dicke des der Produktvorschubeinheit zugedachten Inventargegenstands entspricht, zu dividieren. Bevorzugt ist das Inventarermittlungsmodul dabei dazu ausgebildet, das Ergebnis auf eine ganze Zahl zu runden. Dies hat den Vorteil, dass die Anzahl der in der Produktvorschubeinheit aufgenommenen Inventargegenstände auf einfache Art und Weise ermittelt werden kann.

Im Betrieb des Serviceroboters sowie auch beim Erbringen von Dienstleistungen in örtlicher Nähe von Menschen mit dem erfindungsgemässen Serviceroboter wird somit vorzugsweise mit dem Inventarermittlungsmodul die Anzahl der in der Produktvorschubeinheit aufgenommenen Inventargegenstände ermittelt, indem der basierend auf den vom Anschlagspositionssensor empfangenen Inventarsensordaten ermittelte Abstand des hinteren Anschlags der Produktvorschubeinheit vom vorderen Anschlag der Produktvorschubeinheit durch eine gespeicherte Inventargegenstanddicke, welche einer Dicke des der Produktvorschubeinheit zugedachten Inventargegenstands entspricht, dividiert wird. Bevorzugt dabei das Ergebnis auf eine ganze Zahl gerundet. Dies hat den Vorteil, dass die Anzahl der in der Produktvorschubeinheit aufgenommenen Inventargegenstände auf einfache Art und Weise ermittelt werden kann.

Vorteilhafterweise ist das Inventarermittlungsmodul dazu ausgebildet, wiederholt vom Anschlagspositionssensor Inventarsensordaten zu empfangen und jeweils basierend auf den vom Anschlagspositionssensor empfangenen Inventarsensordaten den Abstand des hinteren Anschlags der Produktvorschubeinheit vom vorderen Anschlag der Produktvorschubeinheit zu ermitteln, sowie jeweils eine Änderung des Abstands des hinteren Anschlags der Produktvorschubeinheit vom vorderen Anschlag der Produktvorschubeinheit im Vergleich zu dem basierend auf den zuvor empfangenen Inventarsensordaten ermittelten Abstand des hinteren Anschlags der Produktvorschubeinheit vom vorderen Anschlag der Produktvorschubeinheit zu ermitteln, um im Betrieb des Serviceroboters anhand der ermittelten Änderung des Abstands des hinteren Anschlags der Produktvorschubeinheit vom vorderen Anschlag der Produktvorschubeinheit eine Änderung des in der Produktvorschubeinheit aufgenommenen mindestens einen Inventargegenstands zu ermitteln. Dies hat den Vorteil, dass eine zuverlässige Ermittlung der Änderungen der Anzahl in der Produktvorschubeinheit aufgenommenen Inventargegenstände ermöglicht wird.

Im Betrieb des Serviceroboters sowie auch beim Erbringen von Dienstleistungen in örtlicher Nähe von Menschen mit dem erfindungsgemässen Serviceroboter werden somit vorzugsweise mit dem Inventarermittlungsmodul wiederholt vom Anschlagspositionssensor Inventarsensordaten empfangen und jeweils basierend auf den vom Anschlagspositionssensor empfangenen Inventarsensordaten der Abstand des hinteren Anschlags der Produktvorschubeinheit vom vorderen Anschlag der Produktvorschubeinheit ermittelt, sowie jeweils eine Änderung des Abstands des hinteren Anschlags der Produktvorschubeinheit vom vorderen Anschlag der Produktvorschubeinheit im Vergleich zu dem basierend auf den zuvor empfangenen Inventarsensordaten ermittelten Abstand des hinteren Anschlags der Produktvorschubeinheit vom vorderen Anschlag der Produktvorschubeinheit ermittelt, um im Betrieb des Serviceroboters anhand der ermittelten Änderung des Abstands des hinteren Anschlags der Produktvorschubeinheit vom vorderen Anschlag der Produktvorschubeinheit eine Änderung des in der Produktvorschubeinheit aufgenommenen mindestens einen Inventargegenstands zu ermitteln. Dies hat den Vorteil, dass eine zuverlässige Ermittlung der Änderungen der Anzahl in der Produktvorschubeinheit aufgenommenen Inventargegenstände ermöglicht wird.

Bevorzugt ist das Inventarermittlungsmodul dazu ausgebildet, wiederholt vom Anschlagspositionssensor Inventarsensordaten zu empfangen und jeweils basierend auf den vom Anschlagspositionssensor empfangenen Inventarsensordaten den Abstand des hinteren Anschlags der Produktvorschubeinheit vom vorderen Anschlag der Produktvorschubeinheit zu ermitteln, sowie jeweils eine Verminderung des Abstands des hinteren Anschlags der Produktvorschubeinheit vom vorderen Anschlag der Produktvorschubeinheit im Vergleich zu dem basierend auf den zuvor empfangenen Inventarsensordaten ermittelten Abstand des hinteren Anschlags der Produktvorschubeinheit vom vorderen Anschlag der Produktvorschubeinheit zu ermitteln, um im Betrieb des Serviceroboters anhand der ermittelten Verminderung des Abstands des hinteren Anschlags der Produktvorschubeinheit vom vorderen Anschlag der Produktvorschubeinheit eine Entnahme eines Inventargegenstands oder mehreren Inventargegenstände aus der Produktvorschubeinheit festzustellen und den entsprechenden Inventargegenstand oder die den entsprechenden Inventargegenstände aus dem erfassten Inventar zu entfernen. Dies hat den Vorteil, dass eine zuverlässige Ermittlung der Abnahme der Anzahl in der Produktvorschubeinheit aufgenommenen Inventargegenstände ermöglicht wird.

Im Betrieb des Serviceroboters sowie auch beim Erbringen von Dienstleistungen in örtlicher Nähe von Menschen mit dem erfindungsgemässen Serviceroboter werden somit vorzugsweise mit dem Inventarermittlungsmodul wiederholt vom Anschlagspositionssensor Inventarsensordaten empfangen und jeweils basierend auf den vom Anschlagspositionssensor empfangenen Inventarsensordaten der Abstand des hinteren Anschlags der Produktvorschubeinheit vom vorderen Anschlag der Produktvorschubeinheit ermittelt, sowie jeweils eine Verminderung des Abstands des hinteren Anschlags der Produktvorschubeinheit vom vorderen Anschlag der Produktvorschubeinheit im Vergleich zu dem basierend auf den zuvor empfangenen Inventarsensordaten ermittelten Abstand des hinteren Anschlags der Produktvorschubeinheit vom vorderen Anschlag der Produktvorschubeinheit ermittelt, um im Betrieb des Serviceroboters anhand der ermittelten Verminderung des Abstands des hinteren Anschlags der Produktvorschubeinheit vom vorderen Anschlag der Produktvorschubeinheit eine Entnahme eines Inventargegenstands oder mehreren Inventargegenstände aus der Produktvorschubeinheit festzustellen und den entsprechenden Inventargegenstand oder die den entsprechenden Inventargegenstände aus dem erfassten Inventar zu entfernen. Dies hat den Vorteil, dass eine zuverlässige Ermittlung der Abnahme der Anzahl in der Produktvorschubeinheit aufgenommenen Inventargegenstände ermöglicht wird.

Vorteilhafterweise ist das Inventarermittlungsmodul dazu ausgebildet, um eine Anzahl der in der Produktvorschubeinheit entnommenen Inventargegenstände zu ermitteln, die ermittelte Verminderung des Abstands des hinteren Anschlags der Produktvorschubeinheit vom vorderen Anschlag der Produktvorschubeinheit durch eine gespeicherte Inventargegenstanddicke, welche einer Dicke es der Produktvorschubeinheit zugedachten Inventargegenstands entspricht, zu dividieren. Dabei ist das Inventarermittlungsmodul dazu ausgebildet, das Ergebnis auf eine ganze Zahl zu runden. Dies hat den Vorteil, dass eine Abnahme der Anzahl in der Produktvorschubeinheit aufgenommenen Inventargegenstände zuverlässig ermittelt werden kann.

Im Betrieb des Serviceroboters sowie auch beim Erbringen von Dienstleistungen in örtlicher Nähe von Menschen mit dem erfindungsgemässen Serviceroboter wird somit vorzugsweise mit dem Inventarermittlungsmodul, um die Anzahl der in der Produktvorschubeinheit entnommenen Inventargegenstände zu ermitteln, die ermittelte Verminderung des Abstands des hinteren Anschlags der Produktvorschubeinheit vom vorderen Anschlag der Produktvorschubeinheit durch eine gespeicherte Inventargegenstanddicke, welche einer Dicke es der Produktvorschubeinheit zugedachten Inventargegenstands entspricht, dividiert. Dabei wird das Ergebnis vorteilhafterweise auf eine ganze Zahl zu runden, was die Anzahl der entnommenen Inventargegenstände ergibt. Dies hat den Vorteil, dass eine Abnahme der Anzahl in der Produktvorschubeinheit aufgenommenen Inventargegenstände zuverlässig ermittelt werden kann.

Vorzugsweise ist das Inventarermittlungsmodul dazu ausgebildet, basierend auf den vom Inventarbildsensor empfangenen Inventarsensordaten zu ermitteln, ob ein bisher in der Inventarüberwachungseinheit aufgenommener Inventargegenstand aus der Inventarüberwachungseinheit entnommen wurde, und, wenn das Inventarermittlungsmodul die Entnahme des bisher in der Inventarüberwachungseinheit aufgenommenen Inventargegenstands aus der Inventarüberwachungseinheit ermittelt hat, den bisher in der Inventarüberwachungseinheit aufgenommenen Inventargegenstand aus dem erfassten Inventar zu entfernen. Dies hat den Vorteil, dass auf einfache Art und Weise eine Entnahme eines Inventargegenstands aus der Inventarüberwachungseinheit überwacht werden kann. Im Betrieb des Serviceroboters sowie auch beim Erbringen von Dienstleistungen in örtlicher Nähe von Menschen mit dem erfindungsgemässen Serviceroboter wird somit vorzugsweise mit dem Inventarermittlungsmodul basierend auf den vom Inventarbildsensor empfangenen Inventarsensordaten ermittelt, ob ein bisher in der Inventarüberwachungseinheit aufgenommener Inventargegenstand aus der Inventarüberwachungseinheit entnommen wurde, und, wenn das mit dem Inventarermittlungsmodul die Entnahme des bisher in der Inventarüberwachungseinheit aufgenommenen Inventargegenstands aus der Inventarüberwachungseinheit ermittelt worden ist, der bisher in der Inventarüberwachungseinheit aufgenommene Inventargegenstand aus dem erfassten Inventar entfernt. Dies hat den Vorteil, dass auf einfache Art und Weise eine Entnahme eines Inventargegenstands aus der Inventarüberwachungseinheit überwacht werden kann.

Vorzugsweise enthalten die Inventardaten, die von dem Inventarermittlungsmodul ausgegeben werden, Informationen dazu, in welcher Inventarverstaueinheit und/oder in welcher Schubladeneinheit, welche Inventargegenstände vorhanden sind. Hierdurch ist bekannt, wo die Inventargegenstände zu finden sind.

In einer bevorzugten Ausführungsform weist das Betriebsmodul ein Inventarverwaltungsmodul zum Anlegen von Inventargegenständen und/oder von Inventargegenstands-Vorlagen mit Inventar-Eigenschaften auf, wobei das Inventarverwaltungsmodul zum Ausgeben von Inventar-Eigenschafts-Daten mit Informationen zu den Inventar-Eigenschaften der Inventargegenstände und/oder der Inventargegenstands-Vorlagen ausgebildet ist. Bei den Inventargegenstands-Vorlagen kann es sich um sogenannte digitale Zwillinge der Inventargegenstände handeln. Hierdurch lassen sich schnell und einfach änderbare Eigenschaften der realen Inventargegenstände durch Anpassung der digitalen Zwillinge ändern. Beispielsweise ist hierdurch eine besonders schnelle Preisänderung von Inventargegenständen möglich. Dies kann beispielsweise im Rahmen eine Happy Hour durchgeführt werden.

Vorzugsweise beinhalten die Inventar-Eigenschafts-Daten wenigstens eines von Verkaufspreisdaten, Gewichtsdaten und Daten zu einer Inventargegenstandsdicke des Inventargegenstands, besonders bevorzugt wenigstens Verkaufspreisdaten sowie eines von Gewichtsdaten und Daten zu der Inventargegenstandsdicke des Inventargegenstands. Vorzugsweise weist das Betriebsmodul ein Inventar-Konfigurationsmodul zum Konfigurieren eines Soll-Inventars des Serviceroboters und zum Ausgeben von Soll-Inventardaten mit Informationen zu dem Soll-Inventar auf, wobei beim Konfigurieren des Soll-Inventars festlegbar ist, welche Inventargegenstände in welchen Inventarverstaueinheiten und/oder in welchen Schubladeneinheiten, und dort insbesondere in welchen Aufnahmen zur Aufnahme von Inventargegenständen vorrätig sein sollen. Dies hat den Vorteil, dass das Inventar des Serviceroboters beispielsweise mittels einer Serviceperson bzw. eines Betreibers konfiguriert werden kann. So kann also ein Soll-Inventar festgelegt und/oder geändert werden. Mit anderen Worten kann mittels des Inventar-Konfigurationsmoduls das Soll-Inventar des Serviceroboters bzw. der Serviceeinheit konfiguriert werden. Ferner gibt das Inventar-Konfigurationsmodul die Soll-Inventardaten mit Informationen zu dem Soll-Inventar aus, wobei beim Konfigurieren des Soll-Inventars festlegt wird, welche Inventargegenstände in welchen Aufnahmen zur Aufnahme von Inventargegenständen vorrätig sein sollen. Bei den Aufnahmen handelt es sich um vorzugsweise abgetrennt Bereiche innerhalb einer Inventarverstaueinheit oder einer Schubladeneinheit.

In einer bevorzugten Ausführungsform enthalten die Auftragsdaten Inventardaten mit Informationen zu den gemäß einem Auftrag auszuliefernden Inventargegenständen. Dies hat den Vorteil, dass eine Leerfahrt des Serviceroboters, bei der ein in Auftrag gegebener Inventargegenstand nicht in dem Serviceroboter vorrätig ist, verhindert werden kann.

Allerdings müssen die Auftragsdaten keine Informationen zu den gemäß einem Auftrag auszuliefernden Inventargegenständen enthalten. Die Auswahl der Inventargegenstände kann auch erst vor Ort durch den Benutzer erfolgen.

Gemäß einer bevorzugten Ausführungsform weist das Betriebsmodul ein Inventarverfügbarkeitsmodul zum Prüfen der Verfügbarkeit von Inventargegenständen in der Serviceeinheit und zum Ausgeben von Verfügbarkeitsdaten basierend auf einem Ergebnis einer mittels des Inventarverfügbarkeitsmoduls durchgeführten Prüfung der Verfügbarkeit auf. Dies hat den Vorteil, dass überprüft werden kann, ob der in Auftrag gegebene Inventargegenstand in dem Serviceroboter vorrätig ist. Mit anderen Worten prüft das Inventarverfügbarkeitsmodul die Verfügbarkeit von Inventargegenständen in der Serviceeinheit und gibt die Verfügbarkeitsdaten basierend auf dem Ergebnis der durchgeführten Prüfung der Verfügbarkeit aus.

Vorzugsweise ist das Inventarverfügbarkeitsmodul zum Empfangen von vom Inventar-Konfigurationsmodul ausgegebenen Soll-Inventardaten mit dem Inventar-Konfigurationsmodul verbunden oder verbindbar, wobei das Inventarverfügbarkeitsmodul zum Empfangen von vom Inventarermittlungsmodul ausgegebenen Inventardaten mit dem Inventarermittlungsmodul verbunden oder verbindbar ist, wobei das Inventarverfügbarkeitsmodul dazu ausgebildet ist, die Verfügbarkeit von Inventargegenständen basierend auf einem Vergleich der vom Inventar-Konfigurationsmodul empfangenen Soll-Inventardaten und der vom Inventarermittlungsmodul empfangenen Inventardaten zu prüfen. Dies hat den Vorteil, dass mittels des Inventarverfügbarkeitsmoduls überprüft werden kann, ob das Soll-Inventar verfügbar ist. Bei Abweichungen kann entsprechend reagiert werden. Mit anderen Worten empfängt das Inventarverfügbarkeitsmodul die vom Inventar-Konfigurationsmodul ausgegebenen Soll-Inventardaten. Ferner empfängt das Inventarverfügbarkeitsmodul die vom Inventarermittlungsmodul ausgegebenen Inventardaten. Dann prüft das Inventarverfügbarkeitsmodul die Verfügbarkeit von Inventargegenständen basierend auf dem Vergleich der vom Inventar-Konfigurationsmodul empfangenen Soll-Inventardaten und der vom Inventarermittlungsmodul empfangenen Inventardaten.

In einer bevorzugten Ausführungsform ist das Inventarverfügbarkeitsmodul zum Empfangen von vom Auftragsmodul ausgegebenen Artikeldaten mit dem Auftragsmodul verbunden oder verbindbar, wobei das Inventarverfügbarkeitsmodul zum Empfangen von vom Inventarermittlungsmodul ausgegebenen Inventardaten mit dem Inventarermittlungsmodul verbunden oder verbindbar ist, wobei das Inventarverfügbarkeitsmodul dazu ausgebildet ist, die Verfügbarkeit von Inventargegenständen basierend auf einem Vergleich der vom Auftragsmodul empfangenen Artikeldaten und der vom Inventarermittlungsmodul empfangenen Inventardaten zu prüfen. Dies hat den Vorteil, dass überprüft werden kann, ob in Auftrag gegebene Artikel als Inventargegenstände vorliegen. Mit anderen Worten empfängt das Inventarverfügbarkeitsmodul die vom Auftragsmodul ausgegebenen Artikeldaten. Ferner empfängt das Inventarverfügbarkeitsmodul die vom Inventarermittlungsmodul ausgegebenen Inventardaten. Dann prüft das Inventarverfügbarkeitsmodul die Verfügbarkeit von Inventargegenständen basierend auf einem Vergleich der vom Auftragsmodul empfangenen Artikeldaten und der vom Inventarermittlungsmodul empfangenen Inventardaten.

Gemäß einer bevorzugten Ausführungsform weist das Betriebsmodul ein Inventaraufstockungsmodul zum Aufstocken des Inventars basierend auf von dem Inventarverfügbarkeitsmodul ausgegebenen Verfügbarkeitsdaten auf, wobei das Inventaraufstockungsmodul zum Empfangen von vom Inventarverfügbarkeitsmodul ausgegebenen Verfügbarkeitsdaten mit dem Inventarverfügbarkeitsmodul verbunden oder verbindbar ist. Dies hat den Vorteil, dass das Inventar aufgestockt werden kann. Mit anderen Worten stockt das Inventaraufstockungsmodul das Inventar basierend auf den von dem Inventarverfügbarkeitsmodul ausgegebenen Verfügbarkeitsdaten auf. Dabei empfängt das Inventaraufstockungsmodul die vom Inventarverfügbarkeitsmodul ausgegebenen Verfügbarkeitsdaten.

Vorzugsweise ist das Inventaraufstockungsmodul dazu ausgebildet, einen Inventaraufstockungsbefehl zum Aufstocken des Inventars auszugeben. Dies hat den Vorteil, dass mittels des Befehls ein Aufstocken des Inventars veranlasst werden kann. Mit anderen Worten gibt das Inventaraufstockungsmodul einen Inventaraufstockungsbefehl zum Aufstocken des Inventars aus.

In einer bevorzugten Ausführungsform ist das Navigationsmodul zum Empfangen des vom Inventaraufstockungsmoduls ausgegebenen Inventaraufstockungsbefehls mit dem Inventaraufstockungsmodul verbunden oder verbindbar, wobei das Navigationsmodul als Reaktion auf das Empfangen des Inventaraufstockungsbefehls dazu ausgebildet ist, einen Fahrweg von der aktuellen Position des Serviceroboters zu einem Aufstockungsort zu ermitteln, an dem das Inventar des Serviceroboter aufstockbar ist, und dazu ausgebildet ist, Navigationsdaten basierend auf dem ermittelten Fahrweg auszugeben. Dies hat den Vorteil, dass der Serviceroboter zu dem Aufstockungsort navigiert werden kann. Mit anderen Wort empfängt das Navigationsmodul den vom Inventaraufstockungsmodul ausgegebenen Inventaraufstockungsbefehl. Ferner ermittelt das Navigationsmodul als Reaktion auf das Empfangen des Inventaraufstockungsbefehls einen Fahrweg von der aktuellen Position des Serviceroboters zu dem Aufstockungsort. Weiterhin ferner gibt das Navigationsmodul Navigationsdaten basierend auf dem ermittelten Fahrweg aus.

Gemäß einer bevorzugten Ausführungsform weist die Serviceeinheit die Anzeigeeinheit zum Anzeigen von Anzeigeinformationen, die Bezahleinheit zum Bezahlen von mittels des Serviceroboters erbrachten Dienstleistungen und die Eingabeeinheit zum Eingeben von Eingabedaten auf, wobei die Anordnung ein Anzeigemodul aufweist, das zum Empfangen von den vom Inventarermittlungsmodul ausgegeben Inventardaten mit dem Inventarermittlungsmodul verbunden oder verbindbar ist, und das zum Übermitteln von Anzeigeinformationen durch die Anzeigeeinheit mit der Anzeigeeinheit verbunden oder verbindbar ist, wobei das Anzeigemodul dazu ausgebildet ist, Anzeigeinformationen zumindest zu dem Inventar der Serviceeinheit gemäß den von dem Inventarermittlungsmodul empfangenen Inventardaten auszugeben und zum Anzeigen durch die Anzeigeeinheit an die Anzeigeeinheit zu übermitteln. Dies hat den Vorteil, dass auf der Anzeigeeinheit das Inventar der Serviceeinheit bzw. des Serviceroboters angezeigt werden kann. Mit anderen Worten empfängt das Anzeigemodul die von dem Inventarermittlungsmodul ausgegeben Inventardaten. Ferner übermittelt das Anzeigemodul die Anzeigeinformationen an die Anzeigeeinheit. Weiterhin ferner gibt das Anzeigemodul Anzeigeinformationen zumindest zu dem Inventar der Serviceeinheit gemäß den von dem Inventarermittlungsmodul empfangenen Inventardaten aus und übermittelt diese Anzeigeinformationen zum Anzeigen durch die Anzeigeeinheit an die Anzeigeeinheit.

In einer bevorzugten Ausführungsform ist das Anzeigemodul zum Empfangen von den vom Inventarermittlungsmodul ausgegeben Inventardaten mit dem Inventarermittlungsmodul verbunden oder verbindbar, wobei das Anzeigemodul dazu ausgebildet ist, Informationen zumindest zu dem Inventar der Serviceeinheit gemäß den von dem Inventarermittlungsmodul empfangenen Inventardaten auszugeben und zum Anzeigen durch die Anzeigeeinheit als Anzeigeinformationen an die Anzeigeeinheit zu übermitteln.

Gemäß einer bevorzugten Ausführungsform ist das Anzeigemodul zum Empfangen von den vom Inventarverwaltungsmodul ausgegeben Inventar-Eigenschafts-Daten mit dem Inventarverwaltungsmodul verbunden oder verbindbar, wobei das Anzeigemodul dazu ausgebildet ist, Informationen zumindest zu den Inventar-Eigenschaften gemäß den von dem Inventarverwaltungsmodul empfangenen Inventar-Eigenschafts-Daten auszugeben und zum Anzeigen durch die Anzeigeeinheit als Anzeigeinformationen an die Anzeigeeinheit zu übermitteln.

Vorzugsweise weist das Betriebsmodul ein Benutzerentnahmeermittlungsmodul zum Ermitteln von beim Ausführen eines Benutzer-Auftrags von einem Benutzer entnommenen Inventargegenständen und zum Ausgeben von Inventarentnahmedaten mit Informationen zu den als entnommen ermittelten Inventargegenständen auf, wobei das Benutzerentnahmeermittlungsmodul zum Empfangen von den vom Inventarermittlungsmodul ermittelten Inventardaten verbunden oder verbindbar ist, wobei das Benutzerentnahmeermittlungsmodul dazu ausgebildet ist, die beim Ausführen eines Benutzer-Auftrags entnommenen Inventargegenständen zu ermitteln, und zwar basierend auf den von dem Inventarermittlungsmodul empfangenen Inventardaten vor einer Entnahme von Inventargegenständen aus dem Inventar und den von dem Inventarermittlungsmodul empfangenen Inventardaten nach einer Entnahme von Inventargegenständen aus dem Inventar.Dies hat den Vorteil, dass festgestellt werden kann, wenn Inventargegenstände aus dem Inventar genommen werden. Mit anderen Worten ermittelt das Benutzerentnahmeermittlungsmodul die beim Ausführen eines Benutzer-Auftrags von einem Benutzer entnommenen Inventargegenstände und gibt Inventarentnahmedaten mit Informationen zu den als entnommen ermittelten Inventargegenständen aus. Ferner empfängt das Benutzerentnahmeermittlungsmodul die vom Inventarermittlungsmodul ermittelten Inventardaten, wobei das Benutzerentnahmeermittlungsmodul die beim Ausführen eines Benutzer-Auftrags entnommenen Inventargegenstände ermittelt, und zwar basierend auf den von dem Inventarermittlungsmodul empfangenen Inventardaten vor einer Entnahme von Inventargegenständen aus dem Inventar und den von dem Inventarermittlungsmodul empfangenen Inventardaten nach einer Entnahme von Inventargegenständen aus dem Inventar.

In einer bevorzugten Ausführungsform weist die Serviceeinheit die Anzeigeeinheit zum Anzeigen von Anzeigeinformationen, die Bezahleinheit zum Bezahlen von mittels des Serviceroboters erbrachten Dienstleistungen und die Eingabeeinheit zum Eingeben von Eingabedaten auf, wobei das Anzeigemodul zum Empfangen von den vom Benutzerentnahmeermittlungsmodul ausgegebenen Inventarentnahmedaten mit dem Benutzerentnahmeermittlungsmodul verbunden oder verbindbar ist, wobei das Anzeigemodul dazu ausgebildet ist, Anzeigeinformationen zumindest zu den entnommenen Inventargegenstände gemäß den von dem Benutzerentnahmeermittlungsmodul empfangenen Inventarentnahmedaten auszugeben und zum Anzeigen durch die Anzeigeeinheit an die Anzeigeeinheit zu übermitteln. Dies hat den Vorteil, dass anzeigbar ist, welche Inventargegenstände von einem Benutzer entnommen worden sind. Dies kann beispielsweise dazu verwendet, um dem Benutzer seine Auswahl und vorzugsweise einen zugehörigen Preis für die entnommenen Daten anzuzeigen. Mit anderen Worten empfängt das Anzeigemodul die vom Benutzerentnahmeermittlungsmodul ausgegebenen Inventarentnahmedaten. Ferner gibt das Anzeigemodul Anzeigeinformationen zumindest zu den entnommenen Inventargegenstände gemäß den von dem Benutzerentnahmeermittlungsmodul empfangenen Inventarentnahmedaten aus und übermittelt diese zum Anzeigen durch die Anzeigeeinheit an die Anzeigeeinheit.

In einer bevorzugten Ausführungsform enthält die Anzeigeinformation die Anzahl der entnommen Inventargegenstände.

Gemäß einer bevorzugten Ausführungsform enthält die Anzeigeinformation den Verkaufspreis der entnommen Inventargegenstände. Dabei muss der Benutzer weder die Anzahl noch die Art der entnommenen Inventargegenstände eingeben. Vielmehr werden diese Informationen von dem Benutzerentnahmeermittlungsmodul bereitgestellt. Somit erfolgt die Entnahme der Inventargegenstände nach dem Prinzip einer offenen Theke. Weder muss vorab bestimmt werden, welche Inventargegenstände in welchen Mengen entnommen werden sollen, noch müssen die Inventargegenstände im Voraus bezahlt werden.

Vorzugsweise weist die Serviceeinheit die Anzeigeeinheit die Bezahleinheit und die Eingabeeinheit auf, wobei das Betriebsmodul ein Vorautorisierungsmodul zum Autorisieren eines Benutzers, insbesondere Hotelgastes, zur Benutzung der Serviceeinheit aufweist. Hierdurch wird das Betriebsmodul besser vor Unregelmäßigkeiten, insbesondere Diebstählen, geschützt.

In einer bevorzugten Ausführungsform ist die Bezahleinheit zum Erzeugen einer Vorautorisierungsanfrage ausgebildet, wobei die Bezahleinheit mit dem Vorautorisierungsmodul zum Empfangen einer durch das Vorautorisierungsmodul ausgebbaren Vorautorisierungsanfrage verbunden oder verbindbar ist.

Alternativ oder kumulativ hierzu kann die Vorautorisierung auch als Berechtigung zur Benutzung durch eine Eingabe an der Eingabeeinheit, durch Einlesen eines Berechtigungsnachweises, beispielsweises eines Ausweises, mittels optischer Autorisierung über die eingebaute Kamera, oder mittels eines biometrischen Scanners erfolgen.

Gemäß einer bevorzugten Ausführungsform enthält die Vorautorisierungsanfrage Zahlungsmittel-Informationen eines Zahlungsmittels, das durch den Benutzer im Rahmen einer Vorautorisierung an der Bezahleinheit anordenbar und/oder eingebbar ist.

Vorzugsweise ist das Vorautorisierungsmodul dazu ausgebildet, das Zahlungsmittel anhand der Zahlungsmittel-Informationen zu überprüfen und basierend auf der Überprüfung zu bestimmen, ob der Benutzer zur Benutzung der Serviceeinheit autorisiert ist oder nicht.

In einer bevorzugten Ausführungsform ist das Vorautorisierungsmodul dazu ausgebildet, den Benutzer zur Benutzung der Serviceeinheit innerhalb eines vorgebbaren Verfügbarkeitsrahmens der Benutzung der Serviceeinheit zu autorisieren, wenn bei der Überprüfung bestimmt wird, dass der Benutzer zur Benutzung der Serviceeinheit autorisiert ist.

Gemäß einer bevorzugten Ausführungsform entspricht der Verfügbarkeitsrahmen einem Geldbetrag, der auf dem Zahlungsmittel blockiert wird. Der Verfügbarkeitsrahmen kann auch einer allgemeinen Mengenbeschränkung entsprechen. Beispielsweise kann diese Mengenbeschränkung einer maximalen Anzahl von Inventargegenständen entsprechen, die entnommen werden darf.

Vorzugsweise ist das Betriebsmodul dazu ausgebildet, einen Überschreitungs-Hinweis auszugeben, wenn der Preis der entnommen Inventargegenstände den Verfügbarkeitsrahmen überschreitet. Hierzu findet ein Vergleich zwischen dem Gesamtpreis der gemäß Inventarentnahmeermittlungsmodul entnommenen Inventargegenständen und dem Verfügbarkeitsrahmen statt.

In einer bevorzugten Ausführungsform ist die Eingabeeinheit zum Eingeben einer Auswahl eines Inventargegenstands oder einer Auswahl einer Gruppe von Inventargegenständen ausgebildet, wobei die Auswahl vorzugsweise basierend auf den von der Anzeigeeinheit angezeigten Anzeigeinformationen erfolgt. Hierbei kann eine Gruppe von inventargegenstände solche Inventargegenstände umfassen, die sich ähnlich sind. Beispielsweise können die Inventargegenstände nach ihrer Art, beispielsweise Inventargegenstände der Art Getränk, gruppiert werden.

Gemäß einer bevorzugten Ausführungsform ist das Vorautorisierungsmodul dazu ausgebildet, Vorautorisierungsinformationen auszugeben, die angeben, ob der Benutzer zur Benutzung der Serviceeinheit autorisiert ist oder nicht, wobei die Eingabeeinheit zum Empfangen der Vorautorisierungsinformationen mit dem Vorautorisierungsmodul verbunden oder verbindbar ausgebildet ist, und wobei die Eingabeeinheit die Auswahl eines Inventargegenstands oder die Auswahl einer Gruppe von Inventargegenständen ermöglicht, wenn die von dem Vorautorisierungsmodul empfangenen Vorautorisierungsinformationen angeben, dass der Benutzer zur Benutzung der Serviceeinheit autorisiert ist.

Vorzugsweise ist die Eingabeeinheit dazu ausgebildet, basierend auf der von dem Benutzer eingegebenen Auswahl einen Konfigurationsänderungsbefehl auszugeben, und wobei der Konfigurationsänderungsantrieb mit der Eingabeeinheit zum Empfangen des Konfigurationsänderungsbefehls verbunden oder verbindbar ist, wobei der Konfigurationsänderungsantrieb beim Empfangen des Konfigurationsänderungsbefehls dazu ausgebildet ist, die Inventarverstaueinheit von der verschlossenen Konfiguration in die geöffnete Konfiguration zu überführen.

In einer bevorzugten Ausführungsform ist die Eingabeeinheit dazu ausgebildet, den Konfigurationsänderungsbefehl an den Konfigurationsänderungsantrieb zu übermitteln, der der jeweiligen Inventarverstaueinheit zugeordnet ist, in der der mittels der Auswahl des Benutzers ausgewählte Inventargegenstand respektive die Gruppe von Inventargegenständen gemäß den von dem Inventar-Konfigurationsmodul ausgegeben Soll-Inventardaten oder gemäß den von dem Inventarermittlungsmodul ausgegebenen Inventardaten verstaut ist. Hierdurch kann vorzugsweise genau die Inventarverstaueinheit in ihre geöffnete Konfiguration überführt werden, in der sich auch der ausgewählte Inventargegenstand befindet.

Vorteilhafterweist wird der erfindungsgemässe Serviceroboter mit der vorgehend erwähnten Ladestation zusammen kombiniert. Daher ist ein weiterer Aspekt zur Lösung der Aufgabe der Erfindung vorzugsweise eine Kombination aus einem erfindungsgemässen Serviceroboter und einer Ladestation zum Aufladen der wenigstens einen Batterie des Serviceroboters, wobei die Ladestation zwei Ladestationsladekontakte zum Kontaktiert werden durch die zwei Serviceroboterladekontakte aufweist.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1a, b: je eine Schrägansicht eines erfindungsgemässen Serviceroboters, einmal mit geschlossenen Schubladeneinheiten und einmal mit einer offenen Schubladeneinheit,
- Fig. 2a, b: Schrägansichten von weiteren erfindungsgemässen Servicerobotern, bei welchen die Serviceeinheit anders ausgebildet ist als beim in den Figuren 1a und 1b gezeigten Serviceroboter,
- Fig. 3a, 3b: eine Schrägansicht sowie eine Unteransicht der autonom fahrenden Basisplattform,
- Fig. 4a, 4b, 4c: eine schematische Ansicht eines Fahrwerks der autonom fahrenden Basisplattform, eine vergrößerte Ansicht einer Antriebsrad-Aufhängung und eine vergrößerte Ansicht einer Stützrad-Aufhängung,
- Fig. 5: eine schematische Seitenansicht der autonom fahrenden Basisplattform,
- Fig. 6: eine stark vereinfachte schematische Aufsicht auf den Serviceroboter und die autonom fahrende Basisplattform mit vor dem Serviceroboter bzw. vor der autonom fahrenden Basisplattform angeordneten Sicherheitszonen,
- Fig. 7a, 7b, 7c: eine Ansicht eines Kopplungsbereichs der Serviceeinheit mit einer Lastauflagefläche, eine Ansicht eines Gegenkopplungsbereichs der autonom fahrenden Basisstruktur mit einer Lastauflagefläche der Serviceeinheit, und eine vergrößerte Ansicht einer mechanischen Koppeleinrichtung,
- Fig. 8: eine Seitenansicht einer Kombination des in den Figuren 1 a und 1 b gezeigten Serviceroboters zusammen mit einer Ladestation zum Laden der Batterie des Serviceroboters,
- Fig. 9: eine stark vereinfachte, schematische Darstellung eines Querschnitts horizontal durch die autonom fahrenden Basisplattform des Serviceroboters und die Ladestation,
- Fig. 10a: eine perspektivische Darstellung eines Gehäuses mit Kühlungsvorrichtung,
- Fig. 10b: eine perspektivische Darstellung einer Tragstruktur,
- Fig. 10c: eine perspektivische Darstellung eines Gehäuses mit Tragstruktur,
- Fig. 10d: eine Schnittansicht einer Serviceeinheit,
- Fig. 10e: eine weitere Schnittansicht einer Serviceeinheit,
- Fig. 11a, b: eine perspektivische Darstellung einer Schubladenfront mit umlaufendem Dichtelement sowie eine Frontansicht zweier Schubladenfronten,
- Fig. 12a, b: je eine Einsteckeinheit zum Einstecken in eine Schubladeneinheit, wie sie auch in der Figur 1b in der geöffnet dargestellten Schubladeneinheit eingesteckt ersichtlich ist,
- Fig. 13: eine vereinfachte schematische Darstellung einer Produktvorschubeinheit zur Aufnahme von mindestens einem Inventargegenstand,
- Fig. 14: eine vereinfachte schematische Darstellung einer Inventarüberwachungseinheit zur Aufnahme von mindestens einem Inventargegenstand,
- Fig. 15: eine Prinzipdarstellung eines Betriebsmoduls einer erfindungsgemäßen Anordnung,
- Fig. 16: eine vereinfachte schematische Darstellung des Aktionsgebiets, in welchem sich der erfindungsgemässe Serviceroboter autonom fahrend bewegen kann, wobei das Aktionsgebiet in zwei Aktionsteilgebiete unterteilt ist, welche je einen Übergangsort aufweisen, wobei der Serviceroboter vom jeweiligen Übergangsort im jeweiligen Aktionsteilgebiets zum Übergangsort im anderen Aktionsteilgebiet und damit in das andere Aktionsteilgebiet gelangen kann, und
- Fig. 17: eine vereinfachte schematische Darstellung einer Servicerobotertransportiervorrichtung in der Form eines Aufzugs zum Transportieren des Serviceroboters vom einen Übergangsort zum anderen Übergangsort und damit vom einen Aktionsteilgebiets zum anderen Aktionsteilgebiets des in Figur 16 gezeigten Aktionsgebiets.

Grundsätzlich sind in den Figuren gleiche Teile mit gleichen Bezugszeichen versehen.

### Wege zur Ausführung der Erfindung

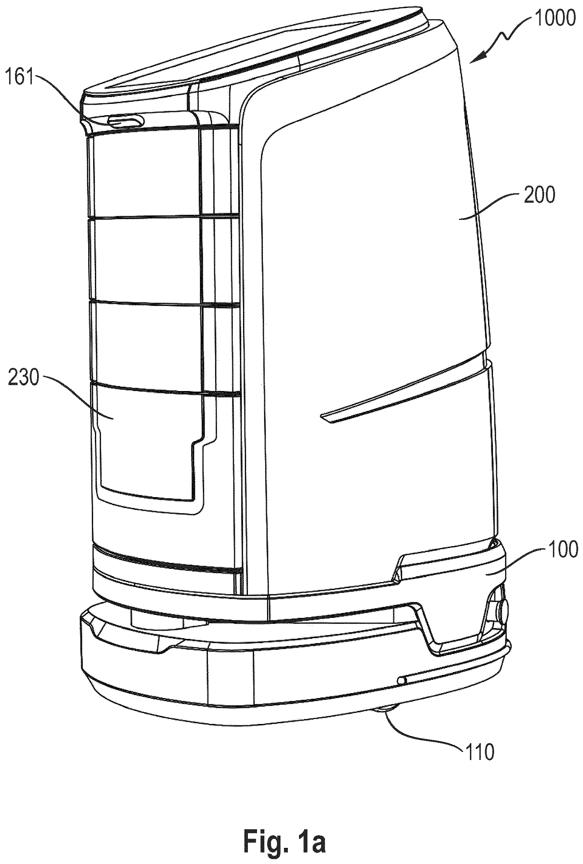

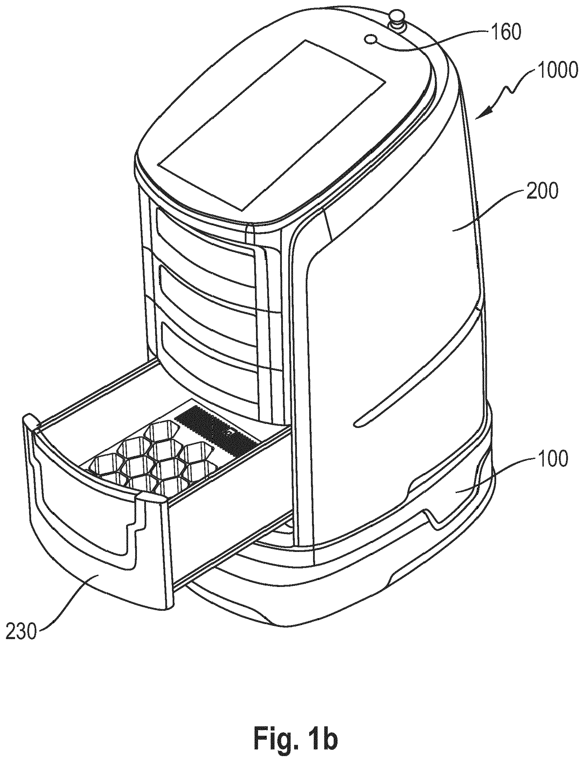

Die Figuren 1a und 1b zeigen je Schrägansicht eines erfindungsgemässen Serviceroboters 1000 zum Erbringen von Dienstleistungen in örtlicher Nähe von Menschen. Dieser Serviceroboter 1000 weist eine autonom fahrende Basisplattform 100 und eine auf der autonom fahrenden Basisplattform 100 angebrachte Serviceeinheit 200 auf.

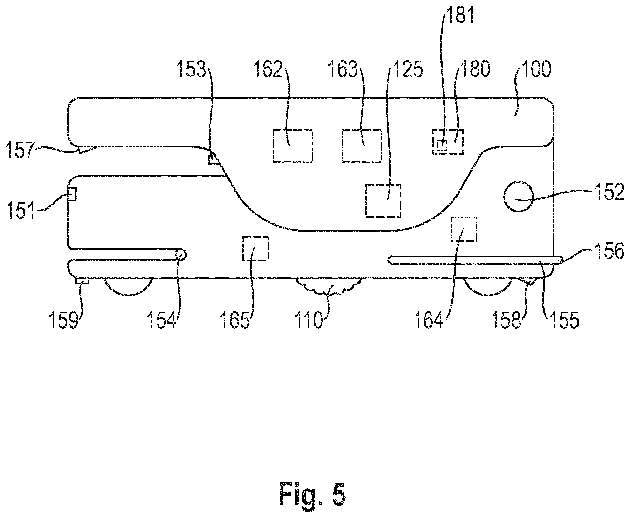

Die autonom fahrende Basisplattform 100 weist einen Antrieb 125 (siehe unter anderem Figur 5) zum Antreiben der autonom fahrenden Basisplattform 100 und damit des Serviceroboters 1000 auf. Weiter weist die autonom fahrende Basisplattform 100 ein Fahrwerk 110 mit einer Vielzahl von Rädern zum auf den Rädern fahrenden Bewegen der autonom fahrenden Basisplattform 100 und damit des Serviceroboters 1000 auf, wobei wenigstens eines der Vielzahl von Rädern ein vom Antrieb 125 antreibbares Antriebsrad ist.

Weiter weist der Serviceroboter 1000 ein Steuermodul 162 (siehe Figur 5) zum Steuern der autonom fahrenden Basisplattform 100 auf, wobei das Steuermodul 162 zum Übermitteln von Steuerbefehlen an den Antrieb 125 mit dem Antrieb 125 verbunden oder verbindbar ist und der Antrieb durch die vom Steuermodul 162 übermittelten Steuerbefehle steuerbar ist. Zudem weist der Serviceroboter 1000 wenigstens eine Energiequelle in der Form einer Batterie 130 zur Versorgung des Antriebs 125 und des Steuermoduls 162 mit Energie auf.

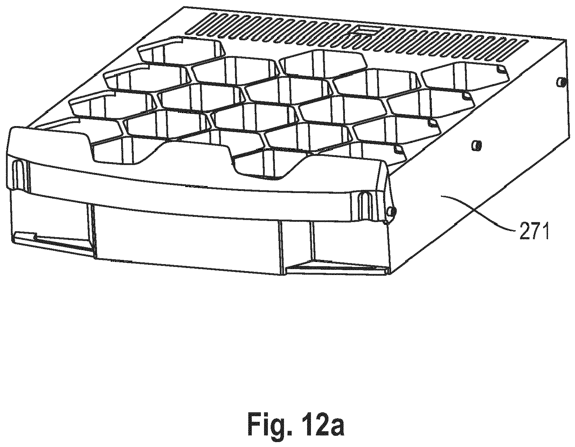

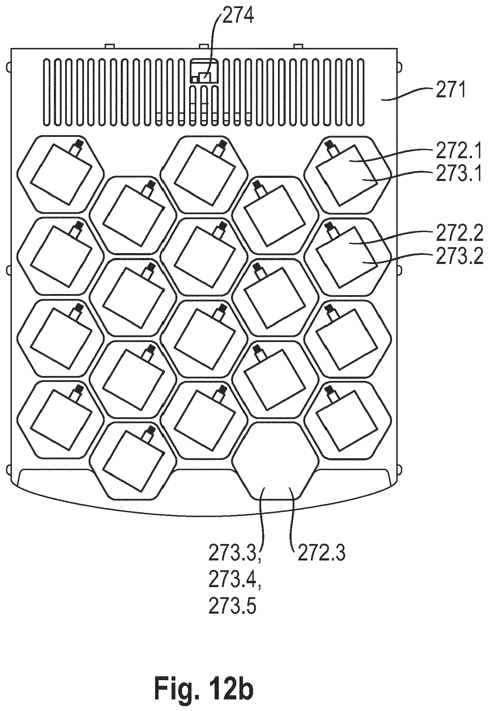

Die Serviceeinheit 200 weist vier übereinander angeordnete Schubladeneinheiten 230 auf. In der Figur 1a sind alle Schubladeneinheiten in die das Serviceeinheit 200 eingeschoben dargestellt. In der Figur 1b hingegen ist die unterste Schubladeneinheit offen dargestellt, sodass in der untersten Schubladeneinheit die Einsteckeinheit mit den Gewichtserfasssensoren, welche in den Figuren 12a und 12b separat gezeigt ist, erkennbar ist.

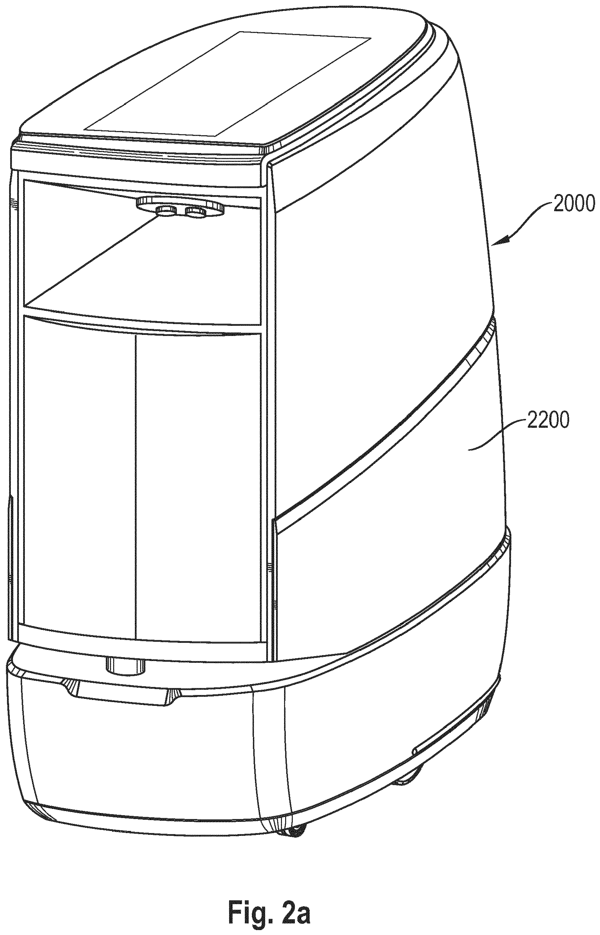

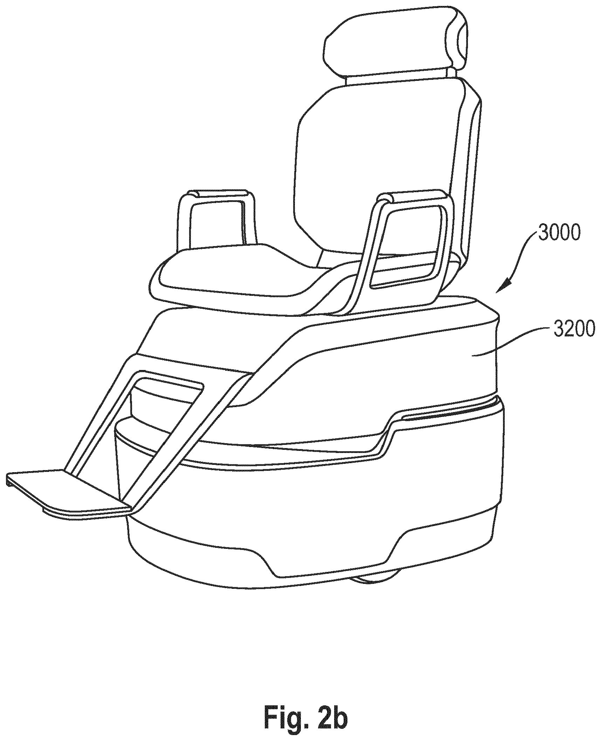

Die Figuren 2a und 2b zeigen je eine Schrägansicht von weiteren erfindungsgemässen Servicerobotern 2000, 3000, bei welchen die Serviceeinheit 2200, 3200 anders ausgebildet ist als beim in den Figuren 1a und 1b gezeigten Serviceroboter 1000. So weist die Serviceeinheit 2200 des in der Figur 2a gezeigten Serviceroboters 2000 keine Schubladeneinheiten, sondern eine Schrankeinheit auf, welche eine Türe aufweist. Die Serviceeinheit 3200 des in Figur 2b gezeigten Serviceroboters 3000 hingegen weist weder eine Schrankeinheit noch eine Schubladeneinheit auf, sondern weist einen Sessel zum Transportieren von Menschen auf.

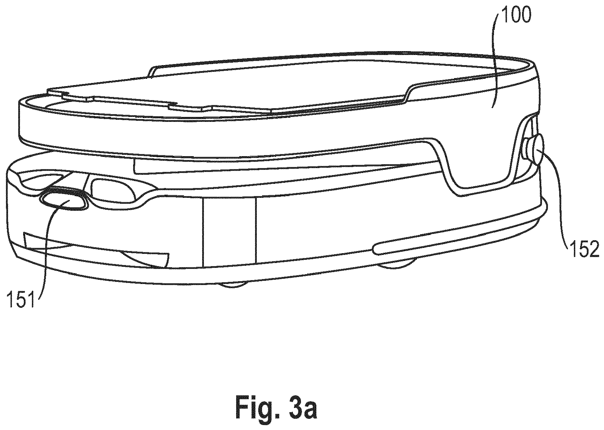

Die Figur 3a zeigt eine Schrägansicht der autonom fahrenden Basisplattform 100 des in den Figuren 1 a und 1 b gezeigten Serviceroboters 1000. Darin ist zu erkennen, dass die autonom fahrende Basisplattform 100 und damit der Serviceroboter 1000 zum Erfassen von Hindernissen innerhalb eines Arbeitsbereichs des Serviceroboters 1000 verschiedene Arbeitsbereichserfassungssensoren zum Erfassen des Arbeitsbereichs des Serviceroboters 1000 und zum Ausgeben von Arbeitsbereichserfassungssensordaten mit Informationen zum erfassten Arbeitsbereich aufweist. Einer dieser Arbeitsbereichserfassungssensoren ist beispielsweise eine an der Vorderseite der autonom fahrenden Basisplattform 100 angeordnete Stereokamera 151. Weiter ist in der Schrägansicht zu erkennen, dass die die autonom fahrende Basisplattform 100 seitlich einen Nothalteknopf 152 zum Stoppen des Serviceroboters 1000 aufweist.

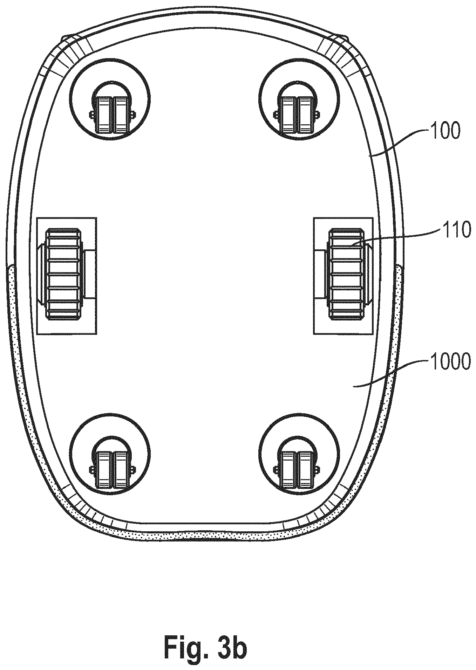

Figur 3b zeigt eine Unteransicht des Serviceroboters 1000 bzw. der autonom fahrenden Basisplattform 100. Darin ist zu erkennen, dass das Fahrwerk 110 der autonom fahrenden Basisplattform 100 insgesamt sechs Räder 111, 112 aufweist, wobei zwei dieser Räder Antriebsräder 112 sind.

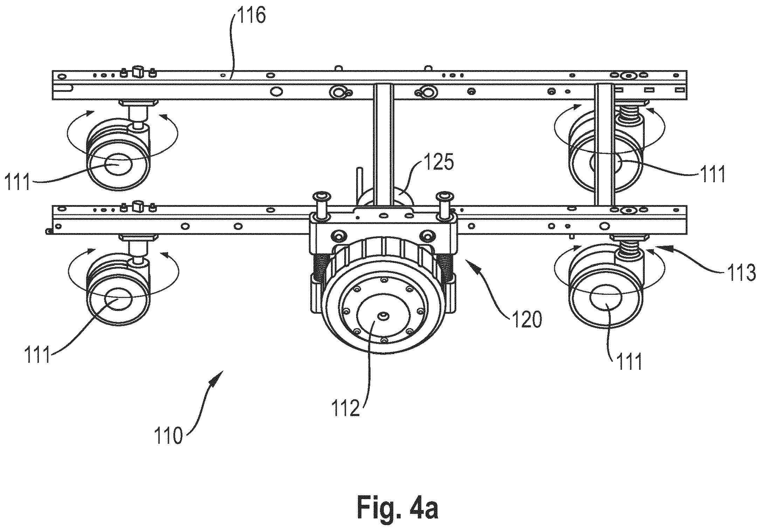

Fig. 4a zeigt eine schematische Ansicht eines Fahrwerks 110 der autonom fahrenden Basisplattform 100 des erfindungsgemäßen Serviceroboters 1000. Das Fahrwerk 110 weist ein Fahrgestell 116 auf. Ferner weist das Fahrwerk 110 zwei Antriebsräder 112 auf, wobei in Fig. 4a der Einfachheit halber nur ein Antriebsrad 112 dargestellt ist. Außerdem weist das Fahrwerk 110 vier Stützräder 111 zum Stabilisieren des Serviceroboters 1000 auf. Zwei der Stützräder 111 sind vorne und zwei der Stützräder 111 sind hinten an der autonom fahrenden Basisplattform 100 ausgebildet. Wie in Fig. 4a zu erkennen, sind die vorne angeordneten Stützräder 111 größer als die hinten angeordneten Stützräder 111 ausgebildet.

Das Fahrwerk 110 weist Stützrad-Aufhängungen 113 und Antriebsrad-Aufhängungen 112 auf. Dabei ist jedem Stützrad 111 genau eine der Stützrad-Aufhängungen 113 zugeordnet und jedem Antriebsrad 112 genau eine der Antriebsrad-Aufhängungen 120 zugeordnet. Die Aufhängungen 112, 113 sind also jeweils als Einzelradaufhängung ausgebildet und dienen dazu, das jeweilige Rad 111, 112 an dem Fahrgestell 116 anzuordnen. Das Fahrgestell 116 ist hierbei vorzugsweise mit mehreren Stabelementen ausgebildet. Die Antriebsrad-Aufhängung 112 kann neben dem Antriebsrad 111 auch den Antrieb 125 selbst oder zumindest Teile hiervon an dem Fahrgestell 116 anordnen.

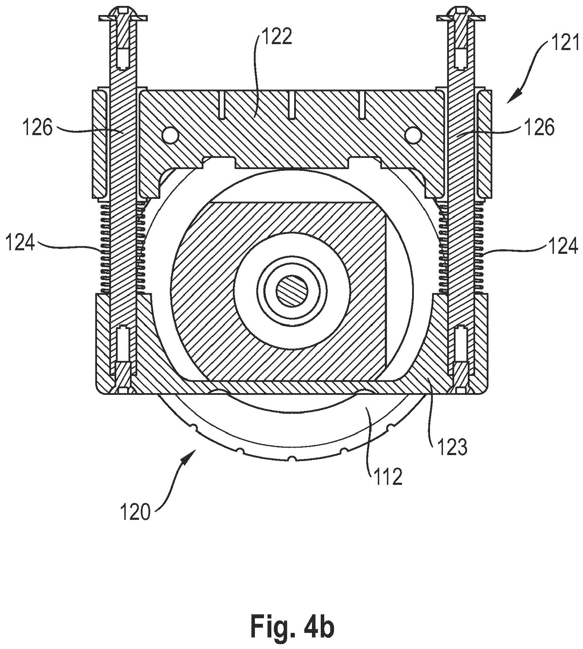

Die Fig. 4b zeigt eine vergrößerte Ansicht der Antriebsrad-Aufhängung 120. Die Antriebsrad-Aufhängung 120 weist einen Halterahmen 121 zum Halten des Antriebsrads 112 an dem Fahrgestell 116 auf. Der Halterahmen 121 weist ein oberes Rahmenelement 122 und ein unteres Rahmenelement 123 auf. Dabei ist das Antriebsrad 112 zwischen dem oberen Rahmenelement 122 und dem unteren Rahmenelement 123 angeordnet.

Die Antriebsrad-Aufhängung 120 weist zwei weitere elastische Elemente 124 auf, die zwischen dem oberen Rahmenelement 122 und dem unteren Rahmenelement 123 angeordnet sind. Dabei ist das Antriebsrad 112 insbesondere zwischen den zwei weiteren elastischen Elementen 124 angeordnet.

Das Antriebsrad 112 ist in einer Federwegrichtung der zwei weiteren elastischen Elemente 124 fest an dem unteren Rahmenelement 123 angeordnet, wobei das untere Rahmenelement 123 und damit das Antriebsrad 112 zwischen zwei maximalen Federungspositionen entlang eines Antriebs-Federwegs bewegbar an dem oberen Rahmenelement 122 angeordnet ist. Eine Ruheposition des Antriebsrads 112 bei einem sich in Ruhe befindenden Serviceroboter 1000 befindet sich hierbei zwischen den beiden maximalen Federungspositionen. Der Antriebsrad-Federweg ist senkrecht zu der Haupterstreckungsebene der autonom fahrenden Basisplattform 100, also senkrecht nach unten Richtung Boden zw. Untergrund, ausgerichtet.

Das untere Rahmenelement 123 und das obere Rahmenelement 122 sind mittels zwei Stiften 126 verbunden. Um die Stifte 126 herum sind hierbei die weiteren elastischen Elemente 124 angeordnet. Hier sind die weiteren elastischen Elemente 124 als Spiralfedern ausgebildet. Die Stifte 126 dienen auch zum Positionieren und Halten der weiteren elastischen Elemente 124.

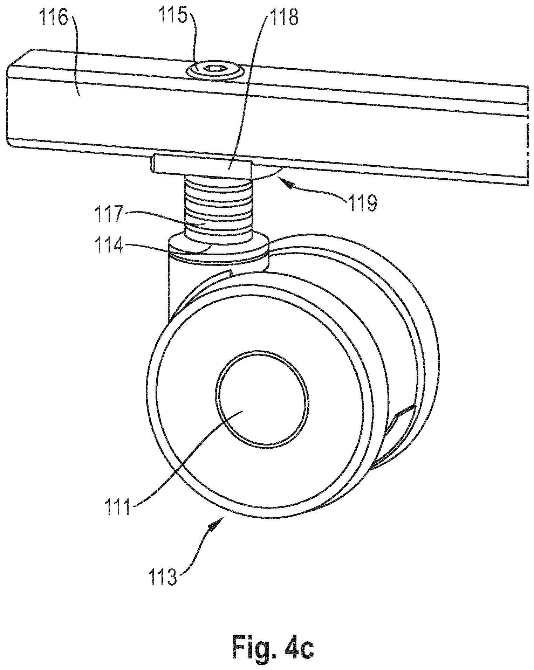

Die Fig. 4c zeigt eine vergrößerte Ansicht einer der Stützrad-Aufhängungen 113. Die Stützrad-Aufhängung 113 weist einen Schaft 114 zum Verbinden des Stützrads 111 mit dem Fahrgestell 116 auf. Ferner weist die Stützrad-Aufhängung 113 und ein elastische Element 117 auf, das zwischen dem Fahrgestell 116 und dem Stützrad 111 angeordnet ist. Das elastische Element 117 ist vorzugsweise um den Schaft 114 herum angeordnet.

Weiterhin ferner weist die Stützrad-Aufhängung 113 eine reibungsarme Führung 118 auf, die zum reibungsarmen Führen des Schafts 114 an dem Fahrgestell 116 angeordnet ist. Hier ist die reibungsarme Führung 118 als hülsenförmige Führung, insbesondere Kugelkäfigführung, ausgebildet. Die reibungsarme Führung 118 erstreckt sich vorzugsweise in das Fahrgestell 116 hinein. In der Fig. 4c ist nur ein unterer Bereich der reibungsarmen Führung 118 zu sehen. Ein nicht dargestellter hülsenförmiger Bereich der reibungsarmen Führung 118 erstreckt sich in das Fahrgestell 116 hinein. Vorzugsweise erstreckt sich dieser hülsenförmige Bereich bzw. die reibungsarme Führung 118 mindestens bis zur Hälfte der Höhe des Fahrgestells 116, besonders bevorzugt zumindest im Wesentlichen entlang der gesamten Höhe des Fahrgestells 116, in das Fahrgestell 116 hinein.

Wie in Fig. 4c dargestellt, ist das elastische Element 117 als Spiralfeder ausgebildet. Der Schaft 114 ist in einer Federwegrichtung des elastischen Elements 117 fest an dem Stützrad 111 angeordnet. Dabei ist der Schaft 114 und damit das Stützrad 111 zwischen einer Ruheposition bei einem sich in Ruhe befindenden Serviceroboter 1000 und einer maximalen Federungsposition in der Federwegrichtung entlang eines Stützrad-Federwegs bewegbar an dem Fahrgestell 116 angeordnet. Der Stützrad-Federweg ist zumindest im Wesentlichen senkrecht zu der Haupterstreckungsebene der autonom fahrende Basisplattform 1000, also senkrecht nach unten Richtung Boden zw. Untergrund, ausgerichtet.

Der Schaft 114 weist einen Kopf 115 auf, der dazu ausgebildet ist, den Stützrad-Federweg zu begrenzen bzw. die Ruheposition zu definieren. Hierzu kommt der Kopf 115 mit dem Fahrgestell 116 oder einem anderen Element zum Festlegen der Ruheposition in Kontakt. Besonders bevorzugt weist die Stützrad-Aufhängung 113 eine hier nur angedeutete Einstelleinrichtung 119 auf, mittels derer ein Federweg des elastischen Elements 117 einstellbar ist.

Figur 5 zeigt eine schematische Seitenansicht der autonom fahrenden Basisplattform 100, welche bereits in der Figur 3a in einer Schrägansicht gezeigt ist. Die Vorderseite der autonom fahrenden Basisplattform 100 befindet sich dabei in Figur 5 links, während sich die Rückseite der autonom fahrenden Basisplattform 100 in der Figur 5 rechts befindet. Unten in der Figur 5 ist zudem das Fahrwerk 110 der autonom fahrenden Basisplattform 100 zu erkennen.

In Figur 5 ist schematisch das Steuermodul 162 der autonom fahrenden Basisplattform 100 mittels eines in gestrichelten Linien gezeigten Quadrats dargestellt. Das Steuermodul 162 ist eine Software, welche auf einer Rechnereinheit der autonom fahrenden Basisplattform 100 läuft. Weiter ist in Figur 5 schematisch ein Sicherheitsmodul 163 der autonom fahrenden Basisplattform 100 mittels eines in gestrichelten Linien gezeigten Quadrats dargestellt. Dieses Sicherheitsmodul 163 ist ebenfalls eine Software, welche auf einer Rechnereinheit der autonom fahrenden Basisplattform 100 läuft. Dabei ist die Software des Steuermoduls 162 separat von der Software des Sicherheitsmoduls 163 ausgebildet, wobei das Steuermodul 162 und das Sicherheitsmodul 163 je auf einer anderen Recheneinheit der autonom fahrenden Basisplattform 100 laufen.

Das Steuermodul 162 ist mit mehreren der verschiedenen Arbeitsbereichserfassungssensoren zum Erfassen des Arbeitsbereichs des Serviceroboters 1000 und zum Ausgeben von Arbeitsbereichserfassungssensordaten mit Informationen zum erfassten Arbeitsbereich, welche die autonom fahrende Basisplattform 100 aufweist, verbunden, womit der jeweilige Arbeitsbereichserfassungssensor ein Steuerungssensor ist und der Serviceroboter 1000 entsprechend mehrere Steuerungssensoren aufweist. Dabei ist das Steuermodul 162 dazu ausgebildet, basierend auf den vom den Steuerungssensoren empfangenen Arbeitsbereichserfassungssensordaten die autonom fahrende Basisplattform 100 zu steuern und zum Steuern der autonom fahrenden Basisplattform 100 Steuerbefehle an den Antrieb 125 zu übermitteln.

Das Sicherheitsmodul 163 dient zur Verhütung von Unfällen mit dem Serviceroboter 1000 durch Zusammentreffen des Serviceroboters 1000 mit Hindernissen. Dabei ist wobei das Sicherheitsmodul 162 mit mehreren der Arbeitsbereichserfassungssensoren zum Empfangen von vom jeweiligen Arbeitsbereichserfassungssensor ausgegebenen Arbeitsbereichserfassungssensordaten verbunden, womit der jeweilige Arbeitsbereichserfassungssensor ein Sicherheitssensor ist und der Serviceroboter 1000 entsprechend mehrere Sicherheitssensoren aufweist. Dabei ist das Sicherheitsmodul dazu ausgebildet, zur Verhütung von Unfällen mit dem Serviceroboter 1000 durch Zusammentreffen des Serviceroboters 1000 mit den Hindernissen basierend auf den vom wenigstens einen Sicherheitssensor empfangenen Arbeitsbereichserfassungssensordaten Positionen der Hindernisse im Arbeitsbereich des Serviceroboters 1000 relativ zum Serviceroboter 1000 zu ermitteln. Solche Hindernisse können dabei beispielsweise Wände, im Weg stehende Objekte, Menschen, Tiere, sowie nach oben oder nach unten führende Stufen oder Rampen sein.

Das Sicherheitsmodul 163 ist zum Übermitteln von Sicherheitssteuerbefehlen an den Antrieb 125 mit dem Antrieb 125 verbunden und der Antrieb 125 ist durch vom Sicherheitsmodul 163 übermittelte Sicherheitssteuerbefehle steuerbar. Dabei ist das Steuermodul 162 durch das Sicherheitsmodul 163 übersteuerbar, indem der Antrieb 125 durch die vom Sicherheitsmodul 163 übermittelten Sicherheitssteuerbefehlen steuerbar ist, auch wenn vom Steuermodul 162 anderslautende Steuerbefehle an den Antrieb 125 ausgegeben werden. D.h. beim Übersteuern vom Antrieb 125 werden die Sicherheitssteuerbefehle ausgeführt, nicht aber die Steuerbefehle.

Wie in Figur 5 durch ein mit gestrichelten Linien gezeigtes Quadrat schematisch dargestellt, weist die autonom fahrende Basisplattform 100 eine Bremsvorrichtung 164 zum Bremsen und Stoppen des fahrenden Bewegens der autonom fahrenden Basisplattform 100 auf, wobei das Sicherheitsmodul 163 zum Übermitteln von Bremsbefehlen zum Bremsen und Stoppen des fahrenden Bewegens der autonom fahrenden Basisplattform 100 an die Bremsvorrichtung 164 mit der Bremsvorrichtung 164 verbunden ist und die Bremsvorrichtung 164 durch die vom Sicherheitsmodul 163 übermittelte Bremsbefehle steuerbar ist, um das fahrende Bewegen der autonom fahrenden Basisplattform 100 und damit des Serviceroboters 1000 aufgrund von übermittelten Bremsbefehlen zu bremsen und zu stoppen und/oder um die Fahrgeschwindigkeit der autonom fahrenden Basisplattform 100 aufgrund von übermittelten Bremsbefehlen zu verringern. Diese Bremsvorrichtung 164 umfasst eine elektromagnetische Bremse. Dass die Bremsvorrichtung 164 durch die vom Sicherheitsmodul 163 übermittelten Bremsbefehle steuerbar ist, dass die Bremsvorrichtung 164 dazu ausgebildet ist, das fahrende Bewegen der autonomen fahrenden Basisplattform 100 aufgrund von den vom Sicherheitsmodul 163 übermittelten Bremsbefehlen abzubremsen und/oder zu stoppen, wobei das Abbremsen der fahrenden Bewegung der autonom fahrenden Basisplattform 100 ein reduzieren der Fahrgeschwindigkeit in Fahrtrichtung der autonom fahrenden Basisplattform 100 und somit des Serviceroboters 1000 bedeutet.

Das Sicherheitsmodul 163 ist dazu ausgebildet, einen Stoppbefehl zum Stoppen der autonom fahrenden Basisplattform 100 auszugeben. Dabei ist das Sicherheitsmodul 163 dazu ausgebildet, den Stoppbefehl als Bremsbefehl an die Bremsvorrichtung 164 zu übermitteln, um das fahrende Bewegen der autonom fahrenden Basisplattform 100 zu stoppen. Zugleich ist das Sicherheitsmodul 163 auch dazu ausgebildet, den Stoppbefehl als Sicherheitssteuerbefehl an den Antrieb 125 zu übermitteln, um das fahrende Bewegen der autonom fahrenden Basisplattform 100 zu stoppen.

Wie in Figur 5 durch ein mit gestrichelten Linien gezeigtes Quadrat schematisch dargestellt, weist die autonom fahrende Basisplattform 100 eine Geschwindigkeitsbestimmvorrichtung 165 zum Erfassen einer aktuellen Fahrgeschwindigkeit der autonom fahrenden Basisplattform 100 und zum Ausgeben von Geschwindigkeitsdaten mit Informationen zur erfassten Fahrgeschwindigkeit auf, wobei das Sicherheitsmodul 163 zum Empfangen von von der Geschwindigkeitsbestimmvorrichtung 165 ausgegebenen Geschwindigkeitsdaten mit der Geschwindigkeitsbestimmvorrichtung 165 verbunden ist. Diese Geschwindigkeitsbestimmvorrichtung 165 ist ein am Antrieb 125 angeordneter Encoder, welcher aufgrund der Drehgeschwindigkeit des Antriebs 125 Geschwindigkeitsdaten zur erfassten Fahrgeschwindigkeit ausgibt.

In der Figur 5 sind ausserdem die verschiedenen Arbeitsbereichserfassungssensoren zum Erfassen des Arbeitsbereichs des Serviceroboters 1000 und zum Ausgeben von Arbeitsbereichserfassungssensordaten mit Informationen zum erfassten Arbeitsbereich, welche die autonom fahrende Basisplattform 100 sowie die Serviceeinheit 200 aufweisen, zu erkennen. So ist auf der Vorderseite der autonom fahrenden Basisplattform 100 die bereits im Zusammenhang mit Figur 3b erwähnte Stereokamera 151 zu erkennen, welche zum bildlichen Erfassen von Bilddaten dient, wobei die von der Stereokamera 151 ausgebbaren Arbeitsbereichserfassungssensordaten Bildinformationen enthalten. Oberhalb dieser Stereokamera 151 weist die autonom fahrende Basisplattform 100 einen horizontal etwas nach hinten in die autonom fahrenden Basisplattform 100 weisenden Einschnitt auf. Hinten in diesem Einschnitt ist ein erster Lidar 153 (d.h. ein "light detection and ranging"-Sensor) und damit ein erster Laserscanner zum Erfassen von Hindernissen innerhalb eines ersten Abtastbereichs im Arbeitsbereich des Serviceroboters 1000 angeordnet. Dieser erste Lidar 153 ist ein Arbeitsbereichserfassungssensor und zugleich ein Steuerungssensor sowie ein Sicherheitssensor. Der erste Lidar 153 basiert auf einem Infrarotlaser und ist derart an der autonom fahrenden Basisplattform 100 angeordnet, dass der erste Abtastbereich vor der Vorderseite der autonom fahrenden Basisplattform 100 liegt, wobei die vom ersten Lidar 153 ausgebbaren Arbeitsbereichserfassungssensordaten Informationen zu den vom ersten Lidar 153 erfassten Hindernissen enthalten. Dabei ist der erste Lidar 153 derart an der autonom fahrenden Basisplattform 100 angeordnet und ausgerichtet, dass der erste Abtastbereich im Betrieb des Serviceroboters 1000 in einer horizontal ausgerichteten, ersten Abtastbereichsebene liegt. Dabei sind der erste Lidar 153 und der erste Abtastbereich im Betrieb der autonom fahrenden Basisplattform 100 bzw. im Betrieb des Serviceroboters 1000 158 mm über dem Boden angeordnet. Der erste Abtastbereich deckt dabei ausgehend vom ersten Lidar 153 einen Winkelbereich von 270° in der ersten Abtastbereichsebene ab. Damit ist der erste Abtastbereich ein Teilbereich des Arbeitsbereichs.

Unterhalb der Stereokamera 151 weist die autonom fahrende Basisplattform 100 ebenfalls einen horizontal etwas nach hinten in die autonom fahrenden Basisplattform 100 weisenden Einschnitt auf. Hinten in diesem Einschnitt ist ein zweiter Lidar 154 (d.h. ein "light detection and ranging"-Sensor) und damit ein zweiter Laserscanner, zum Erfassen von Hindernissen innerhalb eines zweiten Abtastbereichs im Arbeitsbereich des Serviceroboters 1000 angeordnet. Dieser zweite Lidar 154 ist ebenfalls ein Arbeitsbereichserfassungssensor und zugleich ein Steuerungssensor sowie ein Sicherheitssensor. Dabei ist der zweite Lidar 154 derart a an der autonom fahrenden Basisplattform 100 angeordnet, dass der zweite Abtastbereich vor der Vorderseite der autonom fahrenden Basisplattform 100 liegt, wobei die vom zweiten Lidar 154 ausgebbaren Arbeitsbereichserfassungssensordaten Informationen zu den vom zweiten Lidar 154 erfassten Hindernissen enthalten. Der zweite Lidar 154 ist derart an der autonom fahrenden Basisplattform 100 angeordnet und ausgerichtet, dass der zweite Abtastbereich im Betrieb des Serviceroboters 1000 in einer horizontal ausgerichteten, zweiten Abtastbereichsebene liegt. Dabei sind der zweite Lidar 154 und der zweite Abtastbereich im Betrieb der autonom fahrenden Basisplattform 100 bzw. im Betrieb des Serviceroboters 1000 52 mm über dem Boden und damit in einer geringeren Höhe über dem Boden als der erste Lidar 153 und der erste Abtastbereich angeordnet. Der zweite Abtastbereich deckt dabei ausgehend vom zweiten Lidar 154 einen Winkelbereich von 150° in der zweiten Abtastbereichsebene ab. Damit ist der erste Abtastbereich ein Teilbereich des Arbeitsbereichs.

Wie in Figur 5 zu erkennen ist, weist die autonom fahrende Basisplattform 100 zudem einen Kontaktsensor 155 zum Erfassen von Kontakten eines Kontaktelements 156 des Serviceroboters 1000 mit einem Hindernis auf. Dabei ist das Kontaktelement 156 eine Kontaktleiste und erstreckt sich über eine gesamte Breite der Rückseite der autonom fahrenden Basisplattform 100 sowie von einer Rückseite der autonom fahrenden Basisplattform 100 auf zwischen der Vorderseite und der Rückseite der autonom fahrenden Basisplattform 100 angeordneten Seiten der autonom fahrenden Basisplattform 100 nach vorne bis zu einem Mittelbereich der Seiten. Dieser Kontaktsensor 155 ist ebenfalls ein Arbeitsbereichserfassungssensor und zugleich ein Sicherheitssensor. Die vom Kontaktsensor 155 ausgebbaren Arbeitsbereichserfassungssensordaten sind Informationen zu den vom Kontaktsensor 155 erfassten Kontakte des Kontaktelements 156 mit einem Hindernis enthalten.

Weiter ist in Figur 5 zu erkennen, dass die autonom fahrende Basisplattform 100 vorne und hinten je zwei Bodenstufendetektionssensoren 157, 158 zum Erfassen einer in eine Distanzmessrichtung gemessenen Distanz von Gegenständen oder Boden vom jeweiligen Bodenstufendetektionssensor 157, 158 aufweist, welche Arbeitsbereichserfassungssensoren und zugleich Sicherheitssensoren sind. Die Bodenstufendetektionssensoren 157, 158 sind im Betrieb des Serviceroboters 1000 in einem Neigungswinkel zur Horizontalen nach unten geneigt, sodass die jeweilige Distanzmessrichtung mit dem jeweiligen Neigungswinkel nach unten geneigt ist, wobei die von den Bodenstufendetektionssensoren 157, 158 ausgebbaren Arbeitsbereichserfassungssensordaten Informationen zu der von den Bodenstufendetektionssensoren 157 158 erfassten Distanz sind.

Die beiden vorderen Bodenstufendetektionssensoren 157 sind neben einander im vorderen Bereich des Einschnitts oberhalb der Stereokamera 151 angeordnet. Dabei sind sie in Bezug auf den Serviceroboter 1000 zumindest im Wesentlichen vorwärts gerichtet. Die beiden vorderen Bodenstufendetektionssensoren 157 sind Laser-Distanzsensoren je mit einem Infrarotlaser einer Wellenlänge von 827 nm zum Erfassen der Distanz entlang einer einzigen Distanzmessrichtung, wobei ihre Distanzmessrichtungen nach vorne auseinander zeigen.

Die beiden hinteren Bodenstufendetektionssensoren 158 sind neben einander unter der autonom fahrenden Basisplattform 100 hinter dem Fahrwerk 110 angeordnet. Dabei sind sie in Bezug auf den Serviceroboter 1000 zumindest im Wesentlichen rückwärts gerichtet. Die beiden hinteren Bodenstufendetektionssensoren 158 sind Laser-Distanzsensoren je mit einem Laser im sichtbaren Bereich mit einer Wellenlänge von 650 nm zum Erfassen der Distanz entlang einer einzigen Distanzmessrichtung, wobei ihre Distanzmessrichtungen nach hinten auseinander zeigen.

Die Bodenstufendetektionssensoren 157, 158 sind derart ausgerichtet, dass im Betrieb des Serviceroboters 1000, wenn der Serviceroboter 1000 auf einem flachen, ebenen Untergrund steht, die Distanzmessrichtung ausgehend vom jeweiligen Bodenstufendetektionssensor 157, 158 in einer Distanz vom Serviceroboter 1000 auf den flachen, ebenen Untergrund trifft, welche grösser ist als eine Distanz, innerhalb von welcher das fahrende Bewegen der autonom fahrenden Basisplattform 100 und damit des Serviceroboters 100 bei einer maximalen Fahrgeschwindigkeit des Serviceroboters 1000 in eine zumindest im Wesentlichen der Distanzmessrichtung entsprechende Fahrrichtung durch einen vom Sicherheitsmodul 163 zum Stoppen der autonom fahrenden Basisplattform 100 ausgegebenen und als Sicherheitssteuerbefehl an den Antrieb 125 und als Bremsbefehl an die Bremsvorrichtung 164 übermittelten Stoppbefehl, um das fahrende Bewegen der autonom fahrenden Basisplattform 100 zu stoppen, gestoppt werden kann.

Zudem das Sicherheitsmodul 163 dazu ausgebildet, zu überprüfen, ob die von den Bodenstufendetektionssensoren 157, 158 erfassten Distanzen um eine Distanzgrenzwert grösser ist als eine Distanz, welche im Betrieb des Serviceroboters 1000, wenn der Serviceroboter 1000 auf einem flachen, ebenen Untergrund steht, vom jeweiligen auf den flachen, ebenen Untergrund gerichteten Bodenstufendetektionssensor 157, 157 erfasst wird, und, wenn die vom jeweiligen Bodenstufendetektionssensor 157, 158 erfasste Distanz um den Distanzgrenzwert grösser ist als die Distanz, welche im Betrieb des Serviceroboters 1000, wenn der Serviceroboter 1000 auf einem flachen, ebenen Untergrund steht, vom jeweiligen auf den flachen, ebenen Untergrund gerichteten Bodenstufendetektionssensor 157, 158 erfasst wird, den Stoppbefehl zum Stoppen der autonom fahrenden Basisplattform 100auszugeben. Dabei ist der Distanzgrenzwert abhängig vom jeweiligen Bodenstufendetektionssensor 157, 157 und jeweils höchstens gleich gross wie ein Stufenhöhengrenzwert geteilt durch den Sinus des Neigungswinkels des jeweiligen Bodenstufendetektionssensors 157, 158, wobei der Stufenhöhengrenzwert eine maximale vom Serviceroboter 1000 sicher und gefahrlos passierbare Stufenhöhe ist. Im vorliegenden Fall ist diese vom Serviceroboter 1000 sicher und gefahrlos passierbare Stufenhöhe 40 mm.

Bei den beiden vorderen Bodenstufendetektionssensoren 157, welche mit ihrer Distanzmessrichtung in Bezug auf den Serviceroboter 1000 zumindest im Wesentlichen vorwärts gerichtet sind, ist die maximale Fahrgeschwindigkeit die maximal mögliche Vorwärtsfahrgeschwindigkeit des Serviceroboters 1000. Bei den beiden hinteren Bodenstufendetektionssensoren 158, welche mit ihrer Distanzmessrichtung in Bezug auf den Serviceroboter 1000 zumindest im Wesentlichen rückwärts gerichtet sind, ist die maximale Fahrgeschwindigkeit hingegen die maximal mögliche Rückwärtsfahrgeschwindigkeit des Serviceroboters 1000.

Wie in Figur 5 zu erkennen ist, weist die autonom fahrende Basisplattform 100 ausserdem auf ihrer Unterseite in einem Bereich der Vorderseite der autonom fahrenden Basisplattform 100 einen Magnetsensor 159 zum Erfassen von Magnetmarkierungen am oder im Boden auf, welcher ebenfalls ein Arbeitsbereichserfassungssensor und zugleich ein Steuerungssensor sowie ein Sicherheitssensor ist. Die vom Magnetsensor 159 ausgebbaren Arbeitsbereichserfassungssensordaten Informationen zu einem vom Magnetsensor erfassten Magnetfeld und damit von den Magnetmarkierungen erzeugten Magnetfeldern enthalten.

Abgesehen von den vorgehend im Zusammenhang mit Figur 5 erläuterten Arbeitsbereichserfassungssensoren weist die Serviceeinheit 200 und damit der Serviceroboter 1000 noch zwei weitere Arbeitsbereichserfassungssensoren auf. So ist, wie in der Figur 1a erkennbar, unterhalb der Oberseite der Serviceeinheit 200 auf der Vorderseite der Serviceeinheit 200 eine zweite Stereokamera 161 zum bildlichen Erfassen von Bilddaten angeordnet, wobei die von der zweiten Stereokamera 161 ausgebbaren Arbeitsbereichserfassungssensordaten Bildinformationen enthalten. Weiter ist, wie in der Figur 1 a erkennbar, auf der Oberseite der Serviceeinheit 200 ein Deckenbildsensor 160 zum bildlichen Erfassen von Bilddaten angeordnet, wobei die vom Deckenbildsensor 160 ausgebbaren Arbeitsbereichserfassungssensordaten Bildinformationen enthalten, wobei der Deckenbildsensor 160 derart nach oben gerichtet an der Serviceeinheit 200 angeordnet ist, dass im Betrieb des Serviceroboters 1000 mit dem Deckenbildsensor 160 Bilddaten eines Bereichs über dem Serviceroboter aufnehmbar sind. Sowohl die zweite Stereokamera 161 als auch der Deckenbildsensor 160 sind zugleich Steuerungssensoren.

In Figur 5 ist nebst den vorgehend beschriebenen Arbeitsbereichserfassungssensoren zu erkennen, dass die autonom fahrende Basisplattform 100 und damit der der Serviceroboter 1000 eine Beschleunigungssensoranordnung 180 mit wenigstens einem Beschleunigungssensor 181 zum Erfassen einer Beschleunigung entlang drei Beschleunigungsmessachsen und damit wenigstens einer Beschleunigungsmessachse mit fixer Ausrichtung relativ zum Serviceroboter 1000 in beide Richtungen der jeweiligen Beschleunigungsmessachse aufweist, um zu erfassen, welcher Beschleunigung der Serviceroboter 1000 ausgesetzt ist, sowie um Beschleunigungssensor¬daten mit Informationen zur erfassten Beschleunigung auszugeben. Dabei kann die Beschleunigungssensoranordnung 180 ein oder mehrere Gyroskope zum Erfassen einer Drehbewegung des Serviceroboters 1000 aufweisen und zum Ausgeben von Gyroskop-idaten mit Informationen zur erfassten Drehbewegung ausgebildet sein.

Unabhängig vom Vorhandensein eines Gyroskops ist die Beschleunigungssensor¬anordnung 180 dazu ausgebildet, im Betrieb des Serviceroboters 1000 eine Beschleunigung des Serviceroboters 1000 in Vorwärtsrichtung und Rückwärtsrichtung des Serviceroboters 1000 zu erfassen und Beschleunigungssensordaten mit Informationen zu dieser erfassten Beschleunigung auszugeben. D.h., eine erste der drei Beschleunigungsmess¬achsen relativ zum Serviceroboter 1000 verläuft entlang der Vorwärtsrichtung und der Rückwärtsrichtung des Serviceroboters 1000. Weiter ist die Beschleunigungssensoranordnung 180 dazu ausgebildet, im Betrieb des Serviceroboters 1000 eine Beschleunigung des Serviceroboters 1000 in Seitwärtsrichtung des Serviceroboters 1000 zu erfassen und Beschleunigungssensordaten mit Informationen zu dieser erfassten Beschleunigung auszugeben. D.h., eine zweite der drei Beschleunigungsmessachsen relativ zum Serviceroboter 1000 verläuft in Seitwärtsrichtung des Serviceroboters 1000 und ist damit horizontal und übers Kreuz zur Vorwärtsrichtung und Rückwärtsrichtung des Serviceroboters 1000 ausgerichtet. Somit ist die Beschleunigungssensoranordnung 180 dazu ausgebildet, im Betrieb des Serviceroboters 1000 eine Beschleunigung des Serviceroboters 1000 zumindest zweidimensional in einer horizontal ausgerichteten Ebene zu erfassen und Beschleunigungssensordaten mit Informationen zu dieser erfassten Beschleunigung auszugeben. Weiter ist die Beschleunigungssensor-ianordnung 180 dazu ausgebildet, im Betrieb des Serviceroboters 1000 eine Beschleunigung des Serviceroboters 1000 nach oben und unten zu erfassen und Beschleunigungssensordaten mit Informationen zu dieser erfassten Beschleunigung auszugeben. D.h., eine dritte der drei Beschleunigungsmessachsen relativ zum Serviceroboter 1000 vertikal zum Serviceroboter 1000 ausgerichtet. Damit ist die Beschleunigungssensoranordnung 180 dazu eingerichtet, im Betrieb des Serviceroboters 1000 eine Beschleunigung des Serviceroboters 1000 in allen drei Raumdimensionen zu erfassen und Beschleunigungssensordaten mit Informationen zu dieser erfassten Beschleunigung auszugeben. D.h., die Beschleunigungssensoranordnung 180 ist dazu ausgebildet, im Betrieb des Serviceroboters 1000 eine Beschleunigung des Serviceroboters 1000 entlang den drei Beschleunigungsmessachsen, welche drei Beschleunigungsmessachsen je unterschiedlich relativ zum Serviceroboter 1000 ausgerichtet sind, zu erfassen und Beschleunigungssensordaten mit Informationen zu dieser erfassten Beschleunigung auszugeben.

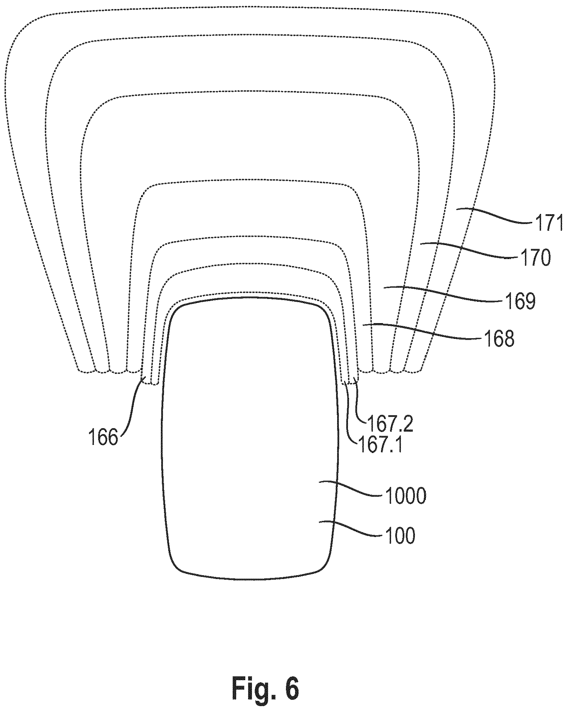

Die Figur 6 zeigt eine stark vereinfachte schematische Aufsicht auf den Serviceroboter 1000 und die autonom fahrende Basisplattform 100. Unten in der Figur 6 entspricht dabei der Rückseite des Serviceroboters 1000 bzw. der autonom fahrenden Basisplattform 100, währende oben in der Figur 6 der Vorderseite des Serviceroboters 1000 bzw. der autonom fahrenden Basisplattform 100 entspricht. Dabei ist zu erkennen, dass vor der Vorderseite des Serviceroboters 1000 bzw. der autonom fahrenden Basisplattform 100 mehrere Sicherheitszonen 166, 168, 169, 170, 171 angeordnet sind, von welchen die erste Sicherheitszone 166 in zwei Sicherheitsunterzonen 167.1, 167.2 unterteilt ist.

Das Sicherheitsmodul 163 ist dazu ausgebildet, zu überprüfen, ob eine der mittels der Sicherheitssensoren erfassten und durch das Sicherheitsmodul 163 ermittelten Positionen relativ zum Serviceroboter 1000 der Hindernisse im Arbeitsbereich des Serviceroboters 1000 innerhalb der um den Serviceroboter 1000 definierten ersten Sicherheitszone 166 liegt und, wenn eine der Positionen relativ zum Serviceroboter 1000 der Hindernisse im Arbeitsbereich des Serviceroboters 1000 innerhalb der um den Serviceroboter 1000 definierten ersten Sicherheitszone 166 liegt, den vorgehen beschriebenen Stoppbefehl zum Stoppen der autonom fahrenden Basisplattform 1000 auszugeben. Dabei ist die erste Sicherheitszone 166 in zwei oder mehr erste Sicherheitsunterzonen 167.1, 167.2 unterteilt und das Sicherheitsmodul 163 ist dazu ausgebildet, zu überprüfen, ob eine der Positionen relativ zum Serviceroboter 1000 der Hindernisse im Arbeitsbereich des Serviceroboters 1000 innerhalb einer der ersten Sicherheitsunterzonen 167.1, 167.2 liegt sowie gegebenenfalls innerhalb welcher der ersten Sicherheitsunterzonen 167.1, 167.2 diese Position liegt, wobei das Sicherheitsmodul 163 zudem dazu ausgebildet ist, gegebenenfalls einen derjenigen der ersten Sicherheitsunterzonen 167.1, 167.2, innerhalb welcher gemäss der Überprüfung durch das Sicherheitsmodul 163 die eine der Positionen der Hindernisse im Arbeitsbereich des Serviceroboters 1000 relativ zum Serviceroboter 1000 liegt, entsprechenden Stoppbefehl zum Stoppen der autonom fahrenden Basisplattform 100 mit einer der jeweiligen ersten Sicherheitsunterzone 167.1, 167.2 zugeordnete Stärke des Abbremsens beim Stoppen auszugeben. Falls dabei gemäss der Überprüfung durch das Sicherheitsmodul 163 Positionen von Hindernissen in verschiedenen der ersten Sicherheitsunterzonen 167.1, 167.2 liegen, so ist das Sicherheitsmodul 163 dazu ausgebildet, denjenigen der diesen verschiedenen der ersten Sicherheitsunterzonen 167.1, 167.2 entsprechenden Stoppbefehle auszugeben, welcher die grösste Stärke des Abbremsens beim Stoppen bedeutet.

In Variante dazu ist die erste Sicherheitszone 166 in ebenfalls zwei erste Sicherheitsunterzonen 167.1, 167.2 unterteilt und das Sicherheitsmodul 163 ist dazu ausgebildet, zu überprüfen, ob eine der Positionen relativ zum Serviceroboter 1000 der Hindernisse im Arbeitsbereich des Serviceroboters 1000 innerhalb einer der ersten Sicherheitsunterzonen 167.1, 167.2 liegt. Allerdings ist in dieser Variante das Sicherheitsmodul 163 dazu ausgebildet, bei einer Geschwindigkeit des Serviceroboters 1000 beim fahrenden Bewegen der autonom fahrenden Basisplattform 100 unterhalb eines vorgegebenen ersten Geschwindigkeitsgrenzwerts zu überwachen, ob sich eine der Positionen der Hindernisse im Arbeitsbereich des Serviceroboters 1000 innerhalb einer ersten der ersten Sicherheitsunterzonen 167.1 befindet, und gegebenenfalls einen Stoppbefehl zum Stoppen der autonom fahrenden Basisplattform 100 auszugeben und bei einer Geschwindigkeit beim fahrenden Bewegen der autonom fahrenden Basisplattform 100 oberhalb des vorgegebenen ersten Geschwindigkeitsgrenzwerts zu überwachen, ob sich eine der Positionen der Hindernisse im Arbeitsbereich des Serviceroboters 1000 innerhalb einer vom Serviceroboter 1000 her gesehen ausserhalb der ersten der ersten Sicherheitsunterzonen 167.1 liegenden zweiten der ersten Sicherheitsunterzonen 167.2 befindet, und gegebenenfalls einen Stoppbefehl zum Stoppen der autonom fahrenden Basisplattform auszugeben. Dabei enthalten die Stoppbefehle für die jeweiligen Sicherheitsunterzonen 167.1, 167.2 keine Information über Stärke des Abbremsens beim Stoppen beinhalten und die autonom fahrende Basisplattform 100 wird bei Stoppbefehlen für beide Sicherheitsunterzonen 167.1, 167.2 mit einer gleichen Stärke abgebremst.

Weiter ist das Sicherheitsmodul 163 dazu ausgebildet, zu überprüfen, ob eine der Positionen der Hindernisse im Arbeitsbereich des Serviceroboters 1000 relativ zum Serviceroboter 1000 innerhalb der zweiten Sicherheitszone 168 um den Serviceroboter 1000 liegt und basierend auf den empfangenen Geschwindigkeitsdaten zu überprüfen, ob die erfasste Fahrgeschwindigkeit eine der zweiten Sicherheitszone 168 zugeordnete Maximalgeschwindigkeit ist oder überschreitet, und, wenn sowohl eine der Positionen der Hindernisse im Arbeitsbereich des Serviceroboters 1000 relativ zum Serviceroboter 1000 innerhalb der zweiten Sicherheitszone 168 um den Serviceroboter 1000 liegt als auch die erfasste Fahrgeschwindigkeit die der zweiten Sicherheitszone 168 zugeordnete Maximalgeschwindigkeit ist bzw. überschreitet, einen Geschwindigkeitsreduktionsbefehl zum Verringern der Fahrgeschwindigkeit der autonom fahrenden Basisplattform 100 auszugeben. Dabei liegt die zweite Sicherheitszone 168 vom Serviceroboter 1000 her gesehen ausserhalb der ersten Sicherheitszone 166.

Weiter ist das Sicherheitsmodul 163 dazu ausgebildet, zu überprüfen, ob eine der Positionen der Hindernisse im Arbeitsbereich des Serviceroboters 1000 relativ zum Serviceroboter 1000 innerhalb der dritten Sicherheitszone 169 um den Serviceroboter 1000 liegt und basierend auf den empfangenen Geschwindigkeitsdaten zu überprüfen, ob die erfasste Fahrgeschwindigkeit eine der dritten Sicherheitszone 169 zugeordnete Maximalgeschwindigkeit überschreitet und, wenn sowohl eine der Positionen der Hindernisse im Arbeitsbereich des Serviceroboters 100 relativ zum Serviceroboter innerhalb der dritten Sicherheitszone 169 um den Serviceroboter 1000 liegt als auch die erfasste Fahrgeschwindigkeit die der dritten Sicherheitszone 169 zugeordnete Maximalgeschwindigkeit überschreitet, einen Geschwindigkeitsreduktionsbefehl zum Verringern der Fahrgeschwindigkeit der autonom fahrenden Basisplattform 100 auszugeben. Dabei liegt die dritte Sicherheitszone 169 vom Serviceroboter 1000 her gesehen ausserhalb der zweiten Sicherheitszone 168.

Weiter ist das Sicherheitsmodul 163 dazu ausgebildet, zu überprüfen, ob eine der Positionen der Hindernisse im Arbeitsbereich des Serviceroboters 1000 relativ zum Serviceroboter 1000 innerhalb der vierten Sicherheitszone 170 um den Serviceroboter 1000 liegt und basierend auf den empfangenen Geschwindigkeitsdaten zu überprüfen, ob die erfasste Fahrgeschwindigkeit eine der vierten Sicherheitszone 170 zugeordnete Maximalgeschwindigkeit überschreitet und, wenn sowohl eine der Positionen der Hindernisse im Arbeitsbereich des Serviceroboters 1000 relativ zum Serviceroboter 1000 innerhalb der vierten Sicherheitszone 170 um den Serviceroboter 1000 liegt als auch die erfasste Fahrgeschwindigkeit die der vierten Sicherheitszone 170 zugeordnete Maximalgeschwindigkeit überschreitet, einen Geschwindigkeitsreduktionsbefehl zum Verringern der Fahrgeschwindigkeit der autonom fahrenden Basisplattform 1000 auszugeben. Dabei liegt die vierte Sicherheitszone 170 vom Serviceroboter 1000 her gesehen ausserhalb der dritten Sicherheitszone 169.

Weiter ist das Sicherheitsmodul 163 dazu ausgebildet, zu überprüfen, ob eine der Positionen der Hindernisse im Arbeitsbereich des Serviceroboters 1000 relativ zum Serviceroboter 1000 innerhalb einer fünften Sicherheitszone 171 um den Serviceroboter 1000 liegt und basierend auf den empfangenen Geschwindigkeitsdaten zu überprüfen, ob die erfasste Fahrgeschwindigkeit eine der fünften Sicherheitszone 171 zugeordnete Maximalgeschwindigkeit überschreitet und, wenn sowohl eine der Positionen der Hindernisse im Arbeitsbereich des Serviceroboters 1000 relativ zum Serviceroboter 1000 innerhalb der fünften Sicherheitszone 171 um den Serviceroboter 1000 liegt als auch die erfasste Fahrgeschwindigkeit die der fünften Sicherheitszone 171 zugeordnete Maximalgeschwindigkeit überschreitet, einen Geschwindigkeitsreduktionsbefehl zum Verringern der Fahrgeschwindigkeit der autonom fahrenden Basisplattform 100 auszugeben. Dabei liegt die fünfte Sicherheitszone 171 vom Serviceroboter 1000 her gesehen ausserhalb der vierten Sicherheitszone 170.

Die der jeweiligen der zweiten Sicherheitszone 168, dritten Sicherheitszone 169, vierten Sicherheitszone 170 bzw. fünften Sicherheitszone 171 zugeordnete Maximalgeschwindigkeit ist dabei derart gewählt, dass das fahrende Bewegen der autonom fahrenden Basisplattform 100 und damit des Serviceroboters 1000 durch einen vom Sicherheitsmodul 163 zum Stoppen der autonom fahrenden Basisplattform 100 ausgegebenen und als Sicherheitssteuerbefehl an den Antrieb und als Bremsbefehl an die Bremsvorrichtung 164 übermittelten Stoppbefehl, um das fahrende Bewegen der autonom fahrenden Basisplattform 100 zu stoppen, gestoppt werden kann, bevor der Serviceroboter 1000 ein zum Zeitpunkt des Ausgebens des Stoppbefehls in der jeweiligen Sicherheitszone positioniertes, stationäres Hindernis unabhängig von seinem während des Stoppens durch das fahrende Bewegen zurückgelegten Wegs erreichen kann. Somit ist die der zweiten Sicherheitszone 168, dritten Sicherheitszone 169, vierten Sicherheitszone 170 bzw. fünften Sicherheitszone 171 zugeordnete Maximalgeschwindigkeit in Abhängigkeit von der Geometrie und Anordnung der jeweiligen Sicherheitszone um den Serviceroboter 1000, vom Fahrwerk 110 der autonom fahrenden Basisplattform 100, sowie vom Antrieb 125 und von der Bremsvorrichtung 164 gewählt.

Dabei ist das Sicherheitsmodul 163 dazu ausgebildet, den Geschwindigkeitsreduktionsbefehl als Sicherheitssteuerbefehl an den Antrieb 125 und auch als Bremsbefehl an die Bremsvorrichtung 164 zu übermitteln, um die Fahrgeschwindigkeit der autonom fahrenden Basisplattform 100 zu verringern.

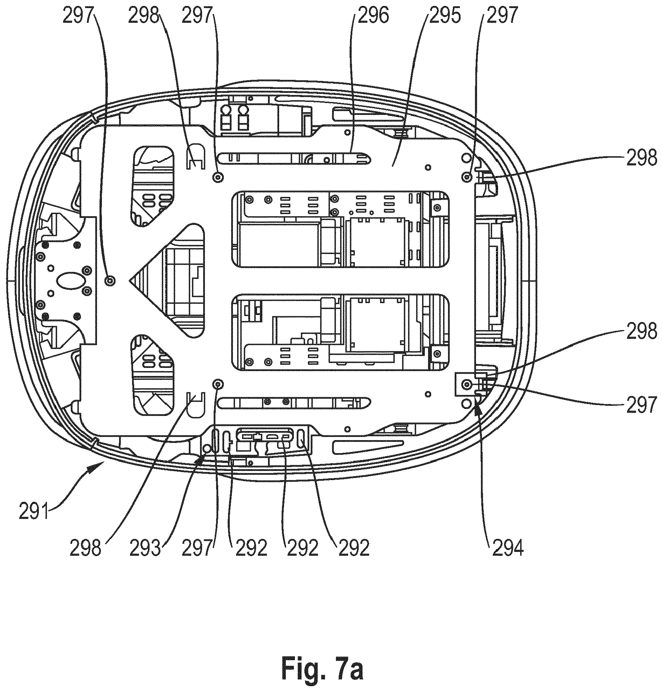

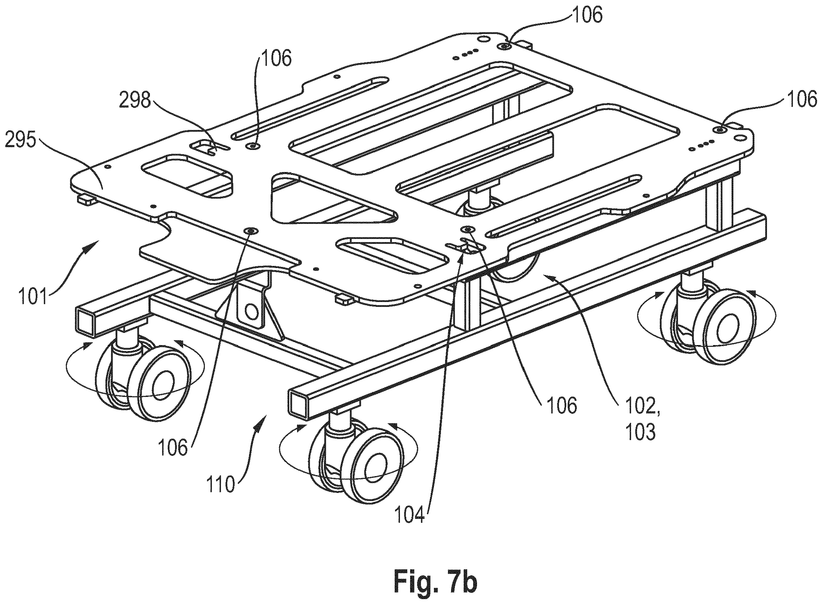

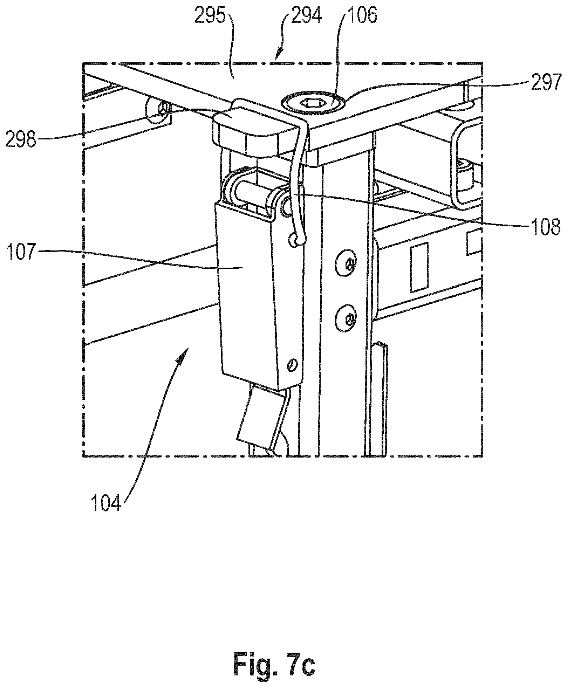

Die Fig. 7a zeigt eine Ansicht eines Kopplungsbereichs 291 einer Serviceeinheit 200 des erfindungsgemäßen Serviceroboters 1000. Der Kopplungsbereich 291 weist elektrische Koppeleinrichtungen 292 zum elektrischen Koppeln der Serviceeinheit 200 mit nicht in Fig. 7a dargestellten elektrischen Gegenkoppeleinrichtungen der autonom fahrenden Basisplattform 100 auf. Die elektrischen Gegenkoppeleinrichtungen sind in der Fig. 7b angedeutet. Der Kopplungsbereich 291 weist ferner mechanische Koppeleinrichtungen 294 zum mechanischen Koppeln der Serviceeinheit 200 mit nicht dargestellten mechanischen Gegenkoppeleinrichtungen der autonom fahrenden Basisplattform 100 auf. Die mechanischen Gegenkoppeleinrichtungen sind in der Fig. 7b und insbesondere der Fig. 7c gezeigt.

Wie in der Fig. 7a zu erkennen, sind alle elektrischen Koppeleinrichtungen 292 gruppiert in einem gemeinsamen elektrischen Kopplungsbereich 293 angeordnet. Alternativ hierzu wäre es denkbar, wenn die elektrischen Koppeleinrichtungen 292 in zwei gemeinsamen elektrischen Kopplungsbereichen 293 angeordnet wären. Der gemeinsame elektrische Kopplungsbereich 293 ist an einem dezentralen Bereich des Kopplungsbereichs 291 angeordnet. In der Fig. 7a sind lediglich drei der elektrischen Koppeleinrichtungen 292 mit Bezugsziffern versehen. Allerdings liegen vorzugsweise mehr als drei elektrische Koppeleinrichtungen 292 vor. Insbesondere weist der gemeinsame elektrische Kopplungsbereich 293 eine Datenschnittstelle, eine Sicherheitsschnittstelle und eine Energieschnittstelle auf.

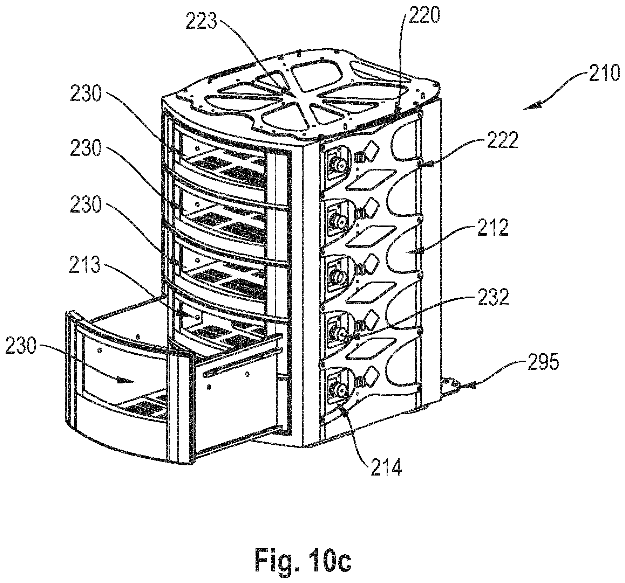

Der Kopplungsbereich 291 weist eine Lastauflagefläche 295 auf. Die Lastauflagefläche 295 ist insbesondere als Kopplungsfläche ausgebildet. Die Lastauflagefläche 295 dient somit dazu, die Serviceeinheit 200 mit der autonom fahrenden Basisplattform 100 zu koppeln. Wie hier gezeigt, kann die Lastauflagefläche 295 als Teil der Serviceeinheit 200 ausgebildet sein. Insbesondere kann die Lastauflagefläche 295 als Bodenstruktur der in Fig. 10c gezeigten Tragstruktur 220 ausgebildet sein. Die Lastauflagefläche 295 weist Aussparungen 296 auf.

Die mechanische Koppeleinrichtungen 294 weisen Zentriereinrichtungen 297 zum Zentrieren der Position der Serviceeinheit 200 und der autonom fahrenden Basisplattform 100 und Befestigungseinrichtungen 298 zum Befestigen der Serviceeinheit 200 und der Basisplattform 100 miteinander auf. Hier sind die Zentriereinrichtungen 297 als Zentrierbohrungen in der Lastauflagefläche 295 ausgebildet. Die Befestigungseinrichtungen 298 sind als Klemmverbinder ausgebildet. Insbesondere sind Befestigungseinrichtungen 298 als erste Teile des Klemmverbinders ausgebildet, die mit zweiten Teilen des Klemmverbinders in Eingriff bringbar sind, die an der autonom fahrenden Basisplattform 100 angeordnet sind. Bei den zweiten Teilen handelt es sich insbesondere um einen Schnellspanner. Die mechanischen Koppeleinrichtungen 294 sind in Fig. 7c deutlicher dargestellt.

Die Fig. 7b zeigt eine Ansicht eines Gegenkopplungsbereichs 101 der autonom fahrenden Basisstruktur 100 des erfindungsgemäßen Serviceroboters 1000. Der Gegenkopplungsbereich 101 weist elektrische Gegenkoppeleinrichtungen 102 zum elektrischen Koppeln der autonom fahrenden Basisplattform 100 mit den elektrischen Koppeleinrichtungen 292 der Serviceeinheit 200 auf. Ferner weist der Gegenkopplungsbereich 101 mechanische Gegenkoppeleinrichtungen 104 zum mechanischen Koppeln der autonom fahrenden Basisplattform 100 mit den mechanischen Koppeleinrichtungen 294 der Serviceeinheit 200 auf.

In der Fig. 7b sind die elektrischen Gegenkoppeleinrichtungen 102 nur mittels Bezugszeichen angedeutet. Ebenso ist ein gemeinsamer elektrischer Gegenkopplungsbereich 103 nur angedeutet, in dem alle elektrischen Gegenkoppeleinrichtungen 103 gruppiert angeordnet sind.

Die mechanische Gegenkoppeleinrichtungen 104 weisen wiederum Zentriereinrichtungen 106 zum Zentrieren der Position der autonom fahrenden Basisplattform 100 und der Serviceeinheit 200 und Befestigungseinrichtungen 107 zum Befestigen der autonom fahrenden Basisplattform 100 und der Serviceeinheit 200 miteinander auf. Hierbei sind die Zentriereinrichtungen 106 als Zentrierstifte ausgebildet und die Befestigungseinrichtungen 107 als Schnellspanner von Klemmverbindern ausgebildet. Wie dargestellt, sind vorzugsweise vier Befestigungseinrichtungen 107 angeordnet.

Die Befestigungseinrichtungen 107 sind deutlicher in der Fig. 7c zu erkennen, die eine vergrößerte Ansicht einer mechanischen Koppeleinrichtung 294 bzw. einer mechanischen Gegenkoppeleinrichtung 104 zeigt. So ist in der Lastauflagefläche 295 eine Zentrierbohrung als eine der Zentriereinrichtungen 297 der Serviceeinheit 200 ausgebildet. Die autonom fahrende Basis 100 weist entsprechend einen Zentrierstift auf, der als Zentriereinrichtung 106 der autonom fahrenden Basis 100 ausgebildet ist. Der Zentrierstift kann vorzugsweise auch ein Schraubenkopf sein.

Diese beiden Zentriereinrichtungen 106 und 207 wirken zusammen, um die Position der autonom fahrenden Basis 100 und der Serviceeinheit 200 festzulegen. Insbesondere wird die Lastauflagefläche 295 durch die Zentrierstifte beim Aufsetzen auf einen Rahmen der autonom fahrenden Basis 100 zentriert. Bei dem Rahmen kann es sich um einen oberen Bereich des Fahrgestells 116 handeln. Alternativ hierzu kann es sich beispielsweise auch um Elemente, beispielsweise Stäbe, handeln, die mit dem Fahrgestell 116 verbunden sind.

Zwischen dem Rahmen der autonom fahrenden Basis 100 und der Lastauflagefläche 295 können hierbei Auflageeinrichtungen, beispielsweise Kunststoff-Kappen, angeordnet sein, auf denen die Lastauflagefläche 295 aufliegt. Querkräfte beispielsweise durch Masseträgheit der Serviceeinheit 200 beim Bremsen werden durch die Zentrierstifte aufgenommen.

An der autonom fahrenden Basis 100, beispielsweise am Rahmen hiervon, sind Schnellverbinder als Befestigungseinrichtungen 107 angeordnet. Die Schnellverbinder weisen jeweils einen Bügel 108 auf, der mit einem entsprechenden Vorsprung an der Lastauflagefläche 295 in Eingriff bringbar ist. Mittels der Schnellverbinder und der Vorsprünge kann die Lastauflagefläche 295 fest auf die autonom fahrende Basis 100 bzw. den Rahmen gespannt werden.

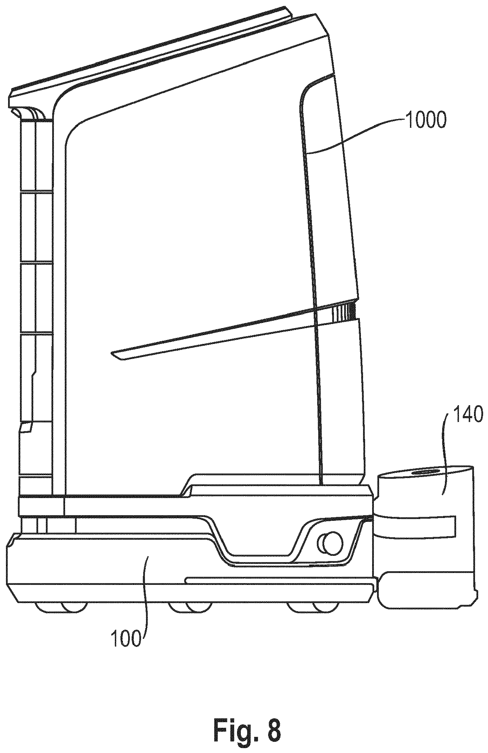

Die Figur 8 zeigt eine Seitenansicht einer Kombination des in den Figuren 1a und 1b gezeigten Serviceroboters 1000 zusammen mit einer Ladestation 140 zum Laden der Batterie 130 des Serviceroboters 1000.

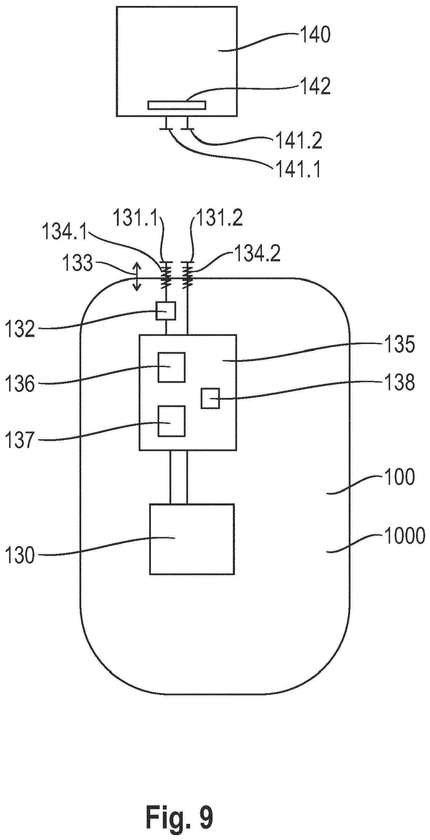

Die Figur 9 zeigt eine stark vereinfachte, schematische Darstellung eines Querschnitts horizontal durch die autonom fahrenden Basisplattform 100 des Serviceroboters 1000 und die Ladestation 140. Darin ist erkennbar, dass die autonom fahrende Basisplattform 100 zwei Serviceroboterladekontakte 131.1, 131.2 zum Kontaktieren von zwei Ladestationsladekontakten 141.1, 141.2 der Ladestation 140 zum Aufladen der Batterie 130 aufweist. Diese zwei Serviceroboterladekontakte 131.1, 131.2 sind je entlang eines Verstellwegs bewegbar an der autonom fahrenden Basisplattform 100 gelagert, wobei der Verstellweg zumindest im Wesentlichen horizontal ausgerichtet ist und sich zumindest im Wesentlichen in Richtung einer Mitte der autonom fahrenden Basisplattform 100 und in Richtung von der Mitte der autonom fahrenden Basisplattform 100 weg erstreckt. Dabei sind die zwei Serviceroboterladekontakte 131.1, 131.2 durch eine Feder 134.1, 134.2 und somit durch ein elastisches Mittel gefedert gelagert und durch dieses wenigstens eine elastische Mittel entlang des Verstellwegs 133 von der Mitte der autonom fahrenden Basisplattform 100 weg in eine Ruhestellung vorgespannt und von ihrer Ruhestellung weg entlang des Verstellwegs 133 zum Serviceroboter 1000 hin gegen eine Vorspannung des wenigstens einen elastischen Mittels bewegbar gelagert.

Zum Aufladen der Batterie 130 ist jeder der zwei Serviceroboterladekontakte 131.1, 131.2 mit einem verschiedenen der zwei Pole der Batterie 130 verbunden, wobei einer der zwei Serviceroboterladekontakte 131.1 bei zu grossem Stromfluss von oder zu dem mit ihm verbundenen Pol mittels einer zur autonom fahrenden Basisplattform 100 gehörenden Überstromsicherung 132 trennbar ist.

Die autonom fahrende Basisplattform 100 weist eine Ladesteuerungseinrichtung 135 zum Steuern des Aufladens der Batterie 130 auf. Diese Ladesteuerungseinrichtung 135 weist eine Kurzschlussprüfeinheit 136 auf, mit welcher eine DC-Spannung über die beiden Serviceroboterladekontakte 131.2, 131.2 anlegbar ist, wobei mit der Kurzschlussprüfeinrichtung 136 ein Abfall der DC-Spannung feststellbar ist. Dabei ist die Ladesteuerungseinrichtung 135 dazu ausgebildet, bei einem durch die Kurzschlussprüfeinrichtung 136 festgestellten Abfall der DC-Spannung eine Verbindung zwischen einem der Serviceroboterladekontakten 131.1 und dem entsprechenden Pol der Batterie 130 zu trennen. Weiter weist die Ladesteuerungseinrichtung 135 eine Kapazitätsmesseinheit 137 auf, mit welcher eine AC-Spannung über die beiden Serviceroboterladekontakte 131.1, 131.2 anlegbar ist, wobei mit der Kapazitätsmesseinheit 137 eine Kapazität über die beiden Serviceroboterladekontakte 131.1, 131.2 ermittelbar ist. Die Frequenz dieser AC-Spannung liegt 35 kHz. Die AC-Spannung weist zudem eine Amplitude von Peak-zu-Peak von 1.5 Volt auf. Dabei ist die Ladesteuerungseinrichtung 135 dazu ausgebildet, zu überprüfen, ob die mit der Kapazitätsmesseinheit 137 ermittelte Kapazität innerhalb eines bestimmten, für die Ladestation 140 charakteristischen Kapazitätsbereichs liegt und falls die mit der Kapazitätsmesseinheit 137 ermittelte Kapazität ausserhalb des bestimmten Kapazitätsbereichs liegt, eine Verbindung zwischen einem der Serviceroboterladekontakten 131.1 und dem entsprechenden Pol der Batterie 130 zu trennen.

Weiter weist die Ladesteuerungseinrichtung 135 eine Spannungspulsmesseinheit 138 auf, mit welcher einzelne Spannungspulse an einem der beiden Serviceroboterladekontakte 131.1, 131.2 feststellbar sind. Dabei ist die Ladesteuerungseinrichtung 135 dazu ausgebildet, wenn innerhalb eines bestimmten Zeitfensters von der Spannungspulsmesseinheit 138 kein einzelner Spannungspuls festgestellt wird, eine Verbindung zwischen einem der Serviceroboterladekontakten 131.1 und dem entsprechenden Pol der Batterie 130 zu trennen.

Wenn das Betriebsmodul 300 des Serviceroboters 1000 feststellt, dass die Ladung der Batterie 130 unter einen bestimmten Grenzwert fällt, steuert sie den Serviceroboter 1000 zur Ladestation 140. Dabei wird eine Position der Ladestation 140 vom Serviceroboter 1000 anhand eines an der Ladestation 140 angebrachten Infrarotreflektors 142 bestimmt. Anschliessend steuern das Betriebsmodul 300, Navigationsmodul bzw. das Steuermodul 162 den Serviceroboter 1000 rückwärts mit den Serviceroboterladekontakten 131.1, 131.2 vorab zur Ladestation 140, damit die Serviceroboterladekontakte 131.1, 131.2 die Ladestationsladekontakte 141.1, 141.2 zum Laden der Batterie 130 kontaktieren. Dabei wird mit der Kurzschlussprüfeinrichtung 136 über die beiden Serviceroboterladekontakte 131.1, 131.2 eine DC-Spannung angelegt und fortlaufend überwacht, ob mit der Kurzschlussprüfeinrichtung 136 ein Abfall der DC-Spannung eine Verbindung zwischen einem der Serviceroboterladekontakten 131.1, 131.2 festgestellt wird. Wenn ein Abfall der DC-Spannung festgestellt wird, wird die Verbindung zwischen einem der Serviceroboterladekontakten 131.1, 131.2 und dem entsprechenden Pol der Batterie 130 getrennt, um das Laden der Batterie 130 zu stoppen und um einen Kurzschluss einen Batterie 130 zu verhindern. Weiter wird mit der Kapazitätsmesseinheit 138 eine AC-Spannung über die beiden Serviceroboterladekontakte 131.1, 13.2 angelegt, und fortlaufend überwacht, ob die mit der Kapazitätsmesseinheit 138 ermittelte Kapazität ausserhalb des bestimmten Kapazitätsbereichs liegt, welcher der für die Ladestation 140 charakteristischen Kapazität entspricht. Wenn die ermittelte Kapazität des bestimmten Kapazitätsbereichs liegt, wird die Verbindung zwischen einem der Serviceroboterladekontakten 131.1 und dem entsprechenden Pol der Batterie 130 getrennt, um das Laden der Batterie 130 zu stoppen und um einen Kurzschluss der Batterie 130 zu verhindern.

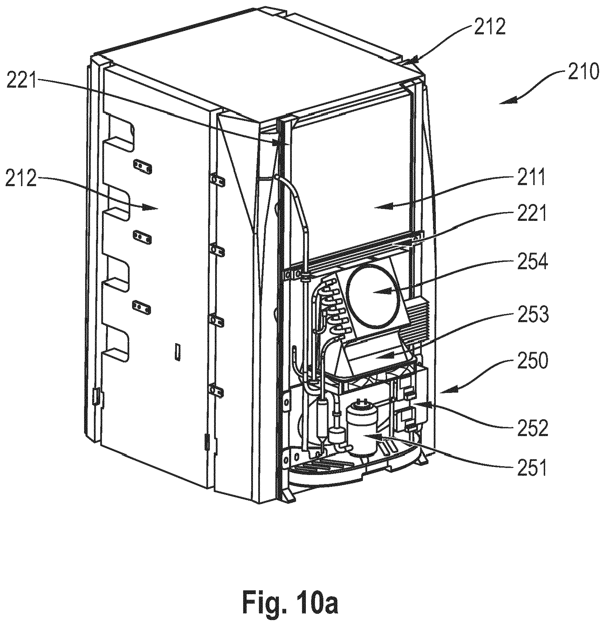

Die Fig. 10A zeigt eine perspektivische Darstellung eines Gehäuses 210 mit einer Kühlungsvorrichtung 250. Das Gehäuse 210 hat eine Rückwand 211 und zwei Seitenwände 212. Die zwei Seitenwände 212 sind jeweils linksseitig und rechtsseitig des Gehäuses 210 einander gegenüberliegend angeordnet. Die Seitenwände 212 und die Rückwand 211 bestehen aus einem schaumartigen Isoliermaterial wie beispielsweise expandiertes Polystyrol, auch bekannt unter dem Namen Styropor, oder einem Schaumdämmstoffe wie Polyurethanschaum. Das Gehäuse 210 definiert einen Innenraum 213 (nicht gezeigt), welcher im Betrieb als Kühlraum der Serviceeinheit 200 genutzt wird.

An der Rückwand 211 des Gehäuses 210 ist eine Kühlungsvorrichtung 250 angeordnet. Die Kühlungsvorrichtung 250 umfasst einen Kompressor 251 mit Steuerung, welcher Kältemittel durch den Kühlkreislauf befördert. Zusätzlich umfasst die Kühlvorrichtung 250 einen Temperaturregler 252 und einen Wärmetauscher 254. Im Innenraum 213 (nicht gezeigt) befinden sich zusätzlich eine Verdampferplatte, ein Temperatursensor, sowie ein zweiter Lüfter. Der Kompressor 251 befördert Kältemittel durch den Kühlkreislauf, welches in Flussrichtung nach dem Verlassen des Kompressors 251 verdichtet wird. Im Wärmetauscher 254 wird das Kältemittel weiter heruntergekühlt und verflüssigt. Ein erster Lüfter 253 sorgt für eine aktive Durchströmung des Wärmetauschers 254 von unten nach oben. Das verflüssigte Kältemittel wird im Innenraum 213 in die Verdampferplatte eingespritzt und verdampft. Hierbei wird dem Innenraum 213 Wärme entzogen. Die Verdampferplatte kühlt den Innenraum 213 herunter bis der Temperatursensor die eingestellte Zieltemperatur ausgibt. Für eine gleichmäßige Temperaturentwicklung im gekühlten Innenraum 213 wird die Luft mit einem zweiten Lüfter umgewälzt. Im Betrieb des Serviceroboters 1000 verfügt der Innenraum 213 über eine Temperatur von 6-8 °C im Normalbetrieb.

An der Rückwand 211 des Gehäuses 210 befindet sich eine Rückstruktur 221, welche Teil einer gesamthaften Tragstruktur 220 (nicht gezeigt) ist. Die Kühlungsvorrichtung 250 ist im Wesentlichen an der Rückstruktur 221 der Tragstruktur 220 befestigt, um ein ausreichendes Maß an Stabilität zu erreichen. Die gesamte Kühlungsvorrichtung 250 befindet sich im Wesentlichen in der unteren Hälfte der Rückwand 211, um den Schwerpunkt der Serviceeinheit 200 (nicht gezeigt) und damit des gesamten Serviceroboters 1000 (nicht gezeigt) insgesamt möglichst tief zu halten.

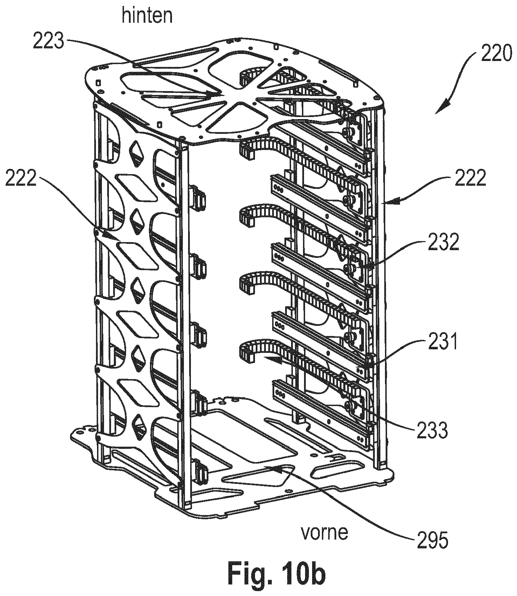

Die Fig. 10B eine perspektivische Darstellung einer Tragstruktur 220 der Serviceeinheit 200. Die Tragstruktur 220 dient dem Stabilisieren der Serviceeinheit (200) und der Versteifung des Gehäuses 210 insgesamt. Die Tragstruktur 220 ist außerhalb des Gehäuses 210 angeordnet und weist zwei einander gegenüberliegende Seitenstrukturen 222 auf. Die beiden Seitenstrukturen 222 werden jeweils den Seitenwänden 212 (nicht gezeigt) des Gehäuses 210 (nicht gezeigt) zugeordnet um eine hohes Maß an Stabilität der Serviceeinheit 200 zu erreichen. Auf einer Oberseite weist die Tragstruktur 220 eine Deckelstruktur 223 auf, welche die zwei Seitenstrukturen 222 miteinander verbindet. Zusätzlich sind die beiden Seitenstrukturen 222 an einer Unterseite über eine Lastauflagefläche 295 miteinander verbunden. Die bereits beschriebene Rückstruktur 221 (nicht gezeigt) verbindet die Lastauflagefläche 295 rückseitig zusätzlich mit der Deckelstruktur 223.

An einer Innenseite der Tragstruktur 220 befinden sich insgesamt fünf Schubladenschienen-Einheiten 231. Die Schubladenschienen-Einheiten 231 sind zum Führen jeweils einer Schubladeneinheit 230 (nicht gezeigt) ausgebildet. Jede Schubladenschienen-Einheit 231 umfasst zwei einander gegenüberliegende Schienenpaare, welche relativ zueinander verschiebbar sind. Somit wird die Last jeder Schubladeneinheit 230 samt Inhalt direkt über die Seitenstrukturen 222 auf die Tragstruktur 220 übertragen.

Zusätzlich ist jeder der Schubladenschienen-Einheiten 231 ein Schubladenantrieb 232 zugeordnet. Jeder der Schubladenantriebe 232 ist unmittelbar an der Seitenstruktur 222 und damit an der Tragstruktur 220 befestigt und dient dem Überführen einer Schubladeneinheit 230 zwischen einer ersten Position und einer zweiten Position.

Im Weiteren ist jede Schubladeneinheit 230 mit einer Kabelkette 233 verbindbar. Jede Kabelkette 233 verbindet eine Schubladeneinheit mit einer Steuereinheit des Serviceroboters 1000, wobei die Kabelkette 233 zusätzlich an der Seitenstruktur 222 der Tragstruktur 220 befestigt sein kann. Die Kabelketten 233 bewegen sich beim Öffnen und Schließen des Schubladenmoduls 230 mit und können beispielsweise Datenübertragungskabel oder Stromversorgungskabel aufnehmen.

Die Fig. 10C zeigt eine perspektivische Darstellung eines Gehäuses 210 mit insgesamt vier Schubladeneinheiten 230. Das Gehäuse 210 hat die Rückwand 211 (nicht gezeigt) und die zwei Seitenwände 212, die jeweils linksseitig und rechtsseitig des Gehäuses 210 einander gegenüberliegend angeordnet sind. Das Gehäuse 210 definiert den Innenraum 213, welcher im Betrieb als Kühlraum der Serviceeinheit 200 genutzt wird und in welchem die vier Schubladeneinheiten 230 angeordnet sind. Die Tragstruktur 220 ist außerhalb des Gehäuses 210 angeordnet und weist die zwei einander gegenüberliegenden Seitenstrukturen 222 auf, welche jeweils den Seitenwänden 212 des Gehäuses 210 zugeordnet sind. Auf der Oberseite befindet sind die Deckelstruktur 223, welche die zwei Seitenstrukturen 222 miteinander verbindet. Auf der Unterseite befindet sich die Lastauflagefläche 295, welche ebenfalls mit den Seitenstrukturen 222 verbunden ist. Durch mehrere Öffnungen 214 in den Seitenwänden 212 sind die Schubladenantriebe 232 mit der außenliegenden Tragstruktur 220 verbunden.

Jede der Schubladeneinheiten 230 ist dazu ausgebildet, eine Einsteckeinheit 271 (nicht gezeigt) aufzunehmen. Hierbei verfügt jede Schubladeneinheit 230 über einen Anschluss zum Anschließen eines Datenübertragungsanschlusses 274 der jeweiligen Einsteckeinheit 271. Der Datenübertragungsanschluss 273 kann von einem Inventarsensor der Einsteckeinheit 271 ausgegebene Inventarsensordaten empfangen und an ein Inventarermittlungsmodul 302 übermitteln.

Hierbei ist jede Schubladeneinheit 230 mit einer Kabelkette 233 (nicht gezeigt) verbunden, welche ein Datenübertragungskabel und ein Stromversorgungskabel führt. Dadurch entsteht eine einfache Verbindung mit dem Betriebsmodul 300 des Serviceroboters 1000 (nicht gezeigt).

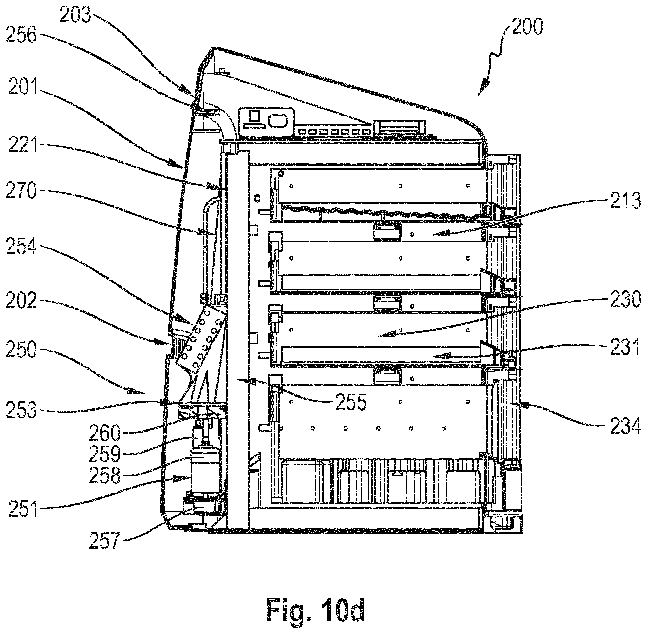

Die Fig. 10D zeigt eine Schnittansicht einer Serviceeinheit 200. Die Serviceeinheit 200 umgibt eine Außenschale 201. Die Außenschale 201 kann aus mehreren Bestandteilen bestehen, die beispielsweise mittels eines Zentrierstifts leicht einhängbar und entfernbar an der Tragstruktur 220 angeordnet werden. In etwa auf Höhe des Wärmetauschers 254 umfasst die Außenschale 201 Lüftungsschlitze 202, damit kalte Luft von Außen einströmen kann.

Die Kühlungsvorrichtung 250 umfasst den Kompressor 251 mit Steuerung, welcher Kältemittel durch den Kühlkreislauf befördert. Zusätzlich umfasst die Kühlvorrichtung 250 einen Temperaturregler 252 (nicht gezeigt) und den Wärmetauscher 254 auf Höhe der Lüftungsschlitze 202 der Außenschale 201. Im Innenraum 213 (nicht gezeigt) befinden sich zusätzlich die Verdampferplatte 255 sowie der Temperatursensor und der zweite Lüfter (nicht gezeigt). Der erste Lüfter 253 sorgt für eine aktive Durchströmung des Wärmetauschers 254 von unten nach oben.

Die Kühlungsvorrichtung 250 ist an der Rückstruktur 221 der Tragstruktur 220 befestigt. Durch eine Inspektionsklappe, welche in die Außenschale 201 integriert ist, kann ein schneller und einfacher Zugriff auf die Kühlungsvorrichtung 250 erfolgen. An der Rückwand 211 des Gehäuses 210 befindet sich ein Wärmekanal 270. Der Wärmekanal 270 ist im Wesentlichen vertikal ausgebildet und ermöglicht unter Nutzung des Kamineffekts das Abströmen erwärmter Luft vom Wärmetauscher 254.

Um den Effekt zu verstärken befindet sich der erste Lüfter 253 unterhalb des Wärmetauschers 254. Ein zweiter Lüfter 256 befindet sich oberhalb des Wärmetauschers 254, um einen durch den Wärmetauscher 254 erwärmten Luftstrom in den oberhalb des Wärmetauschers 254 verlaufenden Wärmekanal 270 zu saugen. Die Abtransportierte erwärmte Luft wird durch eine Ausströmöffnung 203 aus dem Wärmekanal 270 und damit aus der Außenschale 201 zur Rückseite hin ausgetragen. Im Innenraum 213 der Serviceeinheit 200 sind insgesamt vier Schubladeneinheiten 230 angeordnet. Jede Schubladeneinheit 230 ist über eine Schubladenschienen-Einheit 231 mit der Tragstruktur 220 verbunden.

Unterhalb des Kompressors 251 befindet sich ein Wasserspeicher 257 zur Aufnahme von Wasser aus dem Innenraum 213. Der Wasserspeicher 257 ist dazu ausgebildet Tauwasser aus dem Innenraum 213, der auch als Kühlraum bezeichnet werden kann, zu sammeln. Oberhalb des Wasserspeichers 257 und des Kompressors 251 befindet sich ein Lüfter 258, welcher derart auf den Kompressor 251 gerichtet ist, dass Luft von dem Lüfter 258 ausgehend, über den Kompressor 251 strömend erwärmt und auf den Wasserspeicher 257 geströmt wird. Hierbei wird das gesammelte Tauwasser schnell verdunstet. Zusätzlich ist dem Lüfter 258 eine Lüftersteuereinheit 259 zugeordnet. Die Lüftersteuereinheit 259 dient dem Steuern des Lüfters 258 zur Erzeugung des Luftstroms auf den Wasserspeicher 257. Ferner ist der Kühlungsvorrichtung 250 eine Kühlungsvorrichtungssteuereinheit 260 zugeordnet. Die Kühlungsvorrichtungssteuereinheit 260 dient dem Steuern der Temperatur des Innenraums 213, um beispielsweise ein Abtauen oder eine Temperaturabsenkung des Innenraums 213 zu bewirken.

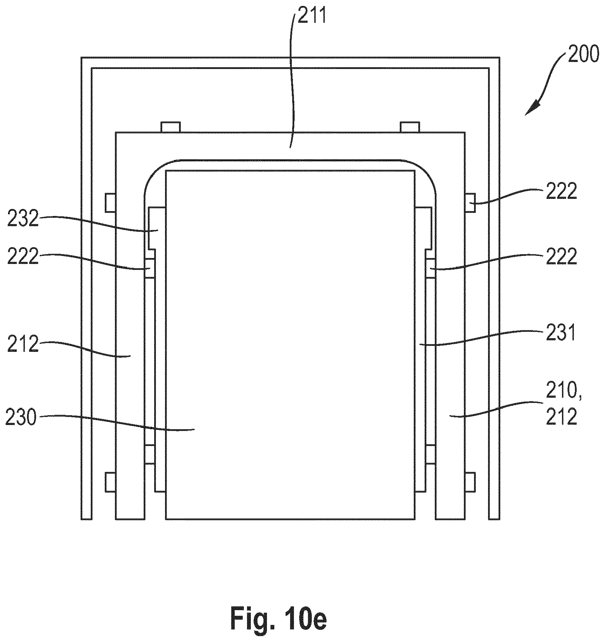

Die Fig. 10E zeigt eine weitere Schnittansicht einer Serviceeinheit 200. Diese Schnittansicht zeigt die Serviceeinheit 200 in einer Draufsicht. Das Gehäuse 210 umfasst eine Rückwand 211 und zwei einander gegenüberliegende Seitenwänden 212. Das Gehäuse 210 ist aus einem isolierenden Material als einstückige integrale Struktur hergestellt. Zur Stabilisierung des Gehäuses 210 befindet sich sowohl ausserhalb als auch innerhalb des Gehäuses 210 eine Tragstruktur 220. Die Tragstruktur 220 umfasst zwei Seitenstrukturen 222 die jeweils den beiden Seitenwänden 212 zugeordnet und ausserhalb sowie innerhalb des Gehäuses 210 angeordnet sind. Durch die Seitenstrukturen 222 die innerhalb des Gehäuses 210 angeordnet sind, kann das Gehäuse 210 für sich ausreichend stabilisiert werden und einschliesslich der Seitenstrukturen 222 vollständig aus der Serviceeinheit 200 entfernt werden. Zusätzlich umfasst das Gehäuse 210 eine Schubladenschienen-Einheit 231 zum Führen einer Schubladeneinheit 230. Die Schubladenschienen-Einheit 231 ist ebenfalls innerhalb des Gehäuses 210 angeordnet und mit den Seitenstrukturen 222 verbunden. Entsprechend umfasst die Serviceeinheit 200 einen Schubladenantrieb 232 zum Überführen einer Schubladeneinheit 230 zwischen einer ersten Position und einer zweiten Position. Somit kann die Schubladeneinheit 230 mit Hilfe des Schubladenantriebs 232 geöffnet oder geschlossen werden. Der Schubladeneinheit 230 ist ebenfalls vollständig in dem Gehäuse 210 angeordnet und mit den Seitenstrukturen 222 innerhalb des Gehäuses 210 verbunden.

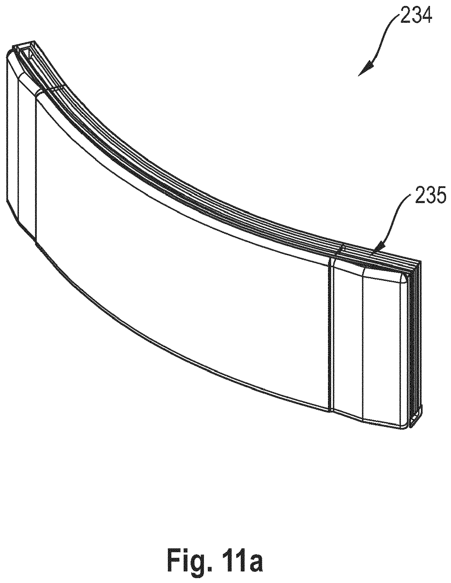

Die Fig. 11A zeigt eine perspektivische Darstellung einer Schubladenfront 234 mit umlaufendem Dichtelement 235. Durch das Dichtelement 235 wird die Schubladeneinheit 230 temperaturmäßig bestmöglich isoliert ist. Gleichzeitig dient das Dichtelement 235 als umlaufender Kantenschutz der Schubladenfront 234.

Das Dichtelement 235 ist insgesamt als bewegliche Gummidichtung ausgebildet, welche einerseits in Radialrichtung als auch Längsrichtung abdichtend wirken kann.

Im Fall mehrerer Schubladeneinheiten 230 die jeweils ein umlaufendes Dichtelemente 235 haben, kann die Abdichtung zwischen zwei unmittelbar nebeneinander angeordneten Schubladenfronten 234 durch zwei aneinander anliegende Dichtelemente 235 realisiert werden. Innerhalb des Dichtelements 235 sind abschnittsweise Magnetelemente eingebracht. Die Magnetelemente können einerseits mit anderen Magnetelementen benachbarter Schubladenfronten 234 oder Magnetelementen in der Rahmenstruktur beispielsweise des Gehäuses 210 wechselwirken, um eine optimale Abdichtung der Schubladeneinheiten 230 zu erreichen.

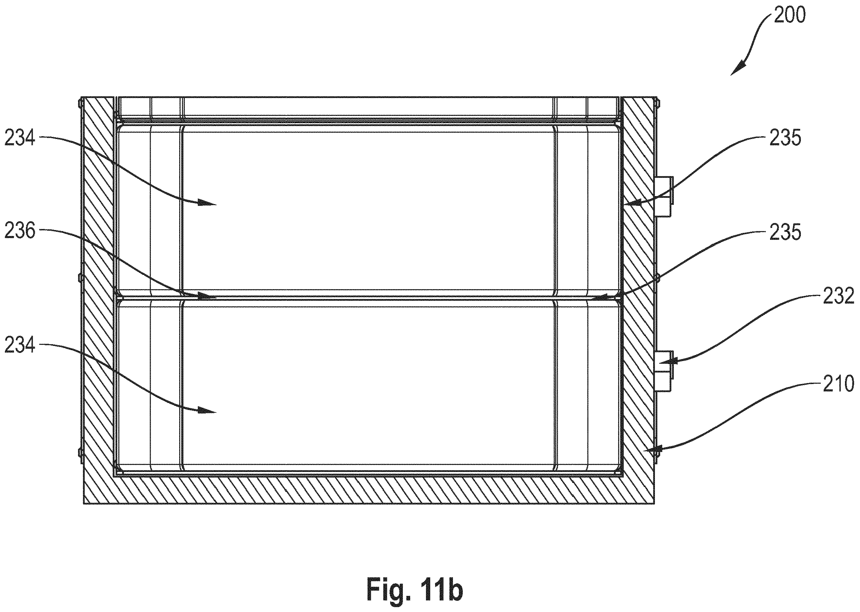

Die Fig. 11B zeigt eine Frontansicht zweier Schubladenfronten 234. Jede der beiden Schubladenfronten 234 weist ein umlaufendes Dichtelement 235 auf. Die beiden den Schubladenfronten 234 zugeordneten Schubladeneinheiten 230 befinden sich in einer geschlossenen Position und sind unmittelbar aneinander angrenzend angeordnet. Der Luftspalt 236 zwischen der oberen Schubladenfront 234 und der unteren Schubladenfront 234 ist mittels des desjenigen Abschnitts des umlaufenden Dichtelements 235 verschlossen, wobei die innerhalb der der Dichtelemente 235 angeordneten Magnetelemente miteinander in Wechselwirkung stehen. Mit anderen Worten ziehen sich Magnetelemente der oberen Schubladenfront 234 Magnetelemente der unteren Schubladenfront 234 an, wodurch die beweglichen Dichtelemente 235 den Luftspalt 236 zwischen den Schubladenfronten 234 verschließen. Somit ist ein Verschließen und temperaturmäßiges Isolieren ohne Rahmenelement zwischen den Schubladenfronten 234 möglich. Die Magnete schließen die Schubladeneinheiten automatisch ab und benötigen keine zusätzliche Haltekraft, wie sie beispielsweise durch die zugeordneten Schubladenantriebe 232 realisierbar wären. Die Dichtelemente 235 wirken hier in Radialrichtung zur benachbarten Schubladenfront 234.

In Längsrichtung wirken die Dichtelement 235 rechts- und linksseitig der Schubladenfront 234. Hier dichten die Dichtelemente 235 gegenüber der Rahmenstruktur hier dem Gehäuse 210 ab. Dies ist entweder mittels Magnetelementen die in das Gehäuse 210 eingelassen werden oder mittels einer kontinuierlichen Zugkraft möglich, die durch die Schubladenantriebe 232 erzeugt wird. Denkbar ist auch eine Kombination.

Die Serviceeinheit 200 weist mehrere Inventarsensoren zum Erfassen einer Inventarmessgrösse und zum Ausgeben von Inventarsensordaten mit Informationen zur erfassten Inventarmessgrösse auf. Diese Inventarsensoren sind nachfolgend genauer beschrieben.

Die Figuren 12a und 12b zeigen je eine Einsteckeinheit 271 zum Einstecken in eine Schubladeneinheit 230, wie sie auch in der Figur 1b in der geöffnet dargestellten Schubladeneinheit 230 eingesteckt ersichtlich ist.

Diese Einsteckeinheit 271, welche zur Serviceeinheit 200 gehört, weist mehr als drei Gewichtserfassauflagen 272.1, 272.2, 272.3 als Inventargegenstandauflageflächen auf und mehr als fünf Gewichtserfasssensoren 273.1, 273.2, 273.3, 273.4, 273.5 zum Erfassen eines Gewichts von mindestens einem auf den Gewichtserfassauflagen aufliegenden Inventargegenstand und zum Ausgeben von Gewichtserfasssensordaten mit Informationen zum vom jeweiligen Gewichtserfasssensor 273.1, 273.2, 273.3, 273.4, 273.5 erfassten Gewicht auf, wobei jeder Gewichtserfasssensors 273.1, 273.2, 273.3, 273.4, 273.5 einer des wenigstens einen Inventarsensors ist, womit das von den Gewichtserfasssensoren 273.1, 273.2, 273.3, 273.4, 273.5 erfassbare Gewicht die von den Gewichtserfasssensoren 273.1, 273.2, 273.3, 273.4, 273.5 erfassbare Inventarmessgrösse und die Gewichtserfasssensorsdaten die von den Gewichtserfasssensoren 273.1, 273.2, 273.3, 273.4, 273.5 ausgebbaren Inventarsensordaten sind. Diese Gewichtssensoren 273.1, 273.2, 273.3, 273.4, 273.5 sind je dazu ausgebildet, ein Gewicht in einem Bereich von 0 kg bis 2 kg genauer als auf 1 g genau, zu erfassen.

Dabei ist jede der Gewichtserfassauflagen 272.1, 272.2, 272.3 mit mindestens einem der Gewichtserfasssensoren 273.1, 273.2, 273.3, 273.4, 273.5 gekoppelt, um im Betrieb des Serviceroboters 1000 das Gewicht des mindestens einen Inventargegenstands zu erfassen, wenn der mindestens eine Inventargegenstand auf der jeweiligen Gewichtserfassauflage 272.1, 272.2, 272.3 aufliegt. Jeder Gewichtserfasssensor 273.1, 273.2, 273.3, 273.4, 273.5 ist dabei ein Sensor zum Erfassen einer Kraft, welche auf die Gewichtsmessposition des wenigstens einen Gewichtserfasssensors 273.1, 273.2, 273.3, 273.4, 273.5 einwirkt. Genauer genommen sind mehr als zwei der Gewichtserfassauflagen 272.1, 272.2 je mit genau einem verschiedenen der Gewichtserfasssensoren 273.1, 273.2 gekoppelt, um im Betrieb des Serviceroboters 1000 das Gewicht des mindestens einen Inventargegenstands zu erfassen, wenn der mindestens eine Inventargegenstand auf einer der mit genau einem verschiedenen der Gewichtserfasssensoren 273.1, 273.2 gekoppelten Gewichtserfassauflage 272.1, 272.2 positioniert ist. Eine weitere Gewichtserfassauflage 272.3 hingegen ist mit drei der Gewichtserfasssensoren 273.3, 273.4, 273.5 gekoppelt, um im Betrieb des Serviceroboters 1000 das Gewicht des mindestens einen Inventargegenstands zu erfassen, wenn der mindestens eine Inventargegenstand auf der mit den drei Gewichtserfasssensoren 273.3, 273.4, 273.5 gekoppelten Gewichtserfassauflage 272.3 positioniert ist.

Die Einsteckeinheit 271 zum Einstecken in die Schubladeneinheit 230 weist eine Verbindung der Gewichtserfasssensoren 273.1, 273.2, 273.3, 273.4, 273.5 der Einsteckeinheit 271 mit einem Datenübertragungsanschluss 274 der Einsteckeinheit 271 zum Anschliessen an den Anschluss der Schubladeneinheit 230 auf, um die von den Gewichtserfasssensoren 273.1, 273.2, 273.3, 273.4, 273.5 der Einsteckeinheit 271 ausgegebenen Inventarsensordaten zu empfangen und an das Inventarermittlungsmodul 302 zu übermitteln. Dabei weist die Einsteckeinheit 271 eine grosse Leiterplatine auf, auf welcher die Gewichtserfasssensoren 273.1, 273.2, 273.3, 273.4, 273.5 angeordnet sind und über welche die Gewichtserfasssensoren 273.1, 273.2, 273.3, 273.4, 273.5 mit dem Datenübertragungsanschluss 274 verbunden sind.

Dabei ist das Inventarermittlungsmodul 302 dazu ausgebildet, basierend auf den von den Gewichtserfasssensoren 273.1, 273.2, 273.3, 273.4, 273.5 empfangenen Inventarsensordaten für jede der Gewichtserfassauflagen 272.1, 272.2, 272.3 das auf der jeweiligen Gewichtserfassauflage 272.1, 272.2, 272.3 aufliegende Gewicht zu ermitteln, um im Betrieb des Serviceroboters 1000 das Gewicht des auf der jeweiligen Gewichtserfassauflage 272.1, 272.2, 272.2 aufliegenden, mindestens einen Inventargegenstands zu erfassen. Im Betrieb des Serviceroboters 1000 sowie auch beim Erbringen von Dienstleistungen in örtlicher Nähe von Menschen mit dem Serviceroboter 1000 werden somit vorzugsweise mit dem Inventarermittlungsmodul 302 den Gewichtserfasssensoren 273.1, 273.2, 273.3, 273.4, 273.5 die Inventarsensordaten empfangen und mit dem Inventarermittlungsmodul 302 basierend auf den Inventarsensordaten für jede der Gewichtserfassauflagen 272.1, 272.2, 272.3 das auf der jeweiligen Gewichtserfassauflage 272.1, 272.2, 272.3 aufliegende Gewicht ermittelt, um im Betrieb des Serviceroboters 1000 das Gewicht des auf der jeweiligen Gewichtserfassauflage 272.1, 272.2, 272.3 aufliegenden, mindestens einen Inventargegenstands zu erfassen.

Das Inventarermittlungsmodul 302 ist dabei dazu ausgebildet, wiederholt von den Gewichtserfasssensoren 273.1, 273.2, 273.3, 273.4, 273.5 Inventarsensordaten zu empfangen und jeweils basierend auf den von den Gewichtserfasssensoren 273.1, 273.2, 273.3, 273.4, 273.5 empfangenen Inventarsensordaten für jede der Gewichtserfassauflagen 272.1, 272.2, 272.3 das auf der jeweiligen Gewichtserfassauflage 272.1, 272.2, 272.3 aufliegende Gewicht zu ermitteln, sowie jeweils eine Änderung des auf der jeweiligen Gewichtserfassauflage 272.1, 272.2, 272.2 aufliegenden, ermittelten Gewichts im Vergleich zu dem basierend auf den zuvor empfangenen Inventarsensordaten ermittelten, auf der jeweiligen Gewichtserfassauflage 272.1, 272.2, 272.3 aufliegenden Gewichts zu ermitteln, um im Betrieb des Serviceroboters 1000 anhand der ermittelten Änderung des auf der jeweiligen Gewichtserfassauflage 272.1, 272.2, 272.3 aufliegenden Gewichts eine Änderung des auf der jeweiligen Gewichtserfassauflage 272.1, 272.2, 272.3 aufliegenden mindestens einen Inventargegenstands zu ermitteln. Somit werden im Betrieb des Serviceroboters 1000 sowie auch beim Erbringen von Dienstleistungen in örtlicher Nähe von Menschen mit dem Serviceroboter 1000 mit dem Inventarermittlungsmodul 302 wiederholt von den Gewichtserfasssensoren 273.1, 273.2, 273.3, 273.4, 273.5 Inventarsensordaten empfangen und jeweils basierend auf den von den Gewichtserfasssensoren 273.1, 273.2, 273.3, 273.4, 273.5 empfangenen Inventarsensordaten für jede der Gewichtserfassauflagen 272.1, 272.2, 272.3 das auf der jeweiligen Gewichtserfassauflage 272.1, 272.2, 272.3 aufliegende Gewicht ermittelt, sowie jeweils eine Änderung des auf der jeweiligen Gewichtserfassauflage 272.1, 272.2, 272.3 aufliegenden, ermittelten Gewichts im Vergleich zu dem basierend auf den zuvor empfangenen Inventarsensordaten ermittelten, auf der jeweiligen Gewichtserfassauflage 272.1, 272.2, 272.3 aufliegenden Gewichts ermittelt. Dadurch kann im Betrieb des Serviceroboters 1000 anhand der ermittelten Änderung des auf der jeweiligen Gewichtserfassauflage 272.1, 272.2, 272.3 aufliegenden Gewichts eine Änderung des auf der jeweiligen Gewichtserfassauflage 272.1, 272.2, 272.3 aufliegenden mindestens einen Inventargegenstands ermittelt werden.

Weiter ist das Inventarermittlungsmodul 302 dazu ausgebildet, wenn durch das Inventarermittlungsmodul 302 für eine der Gewichtserfassauflagen 272.1, 272.2, 272.3 eine Verminderung des auf der jeweiligen Gewichtserfassauflage 272.1, 272.2, 272.3 aufliegenden Gewichts ermittelt wird, die ermittelte Verminderung des auf der jeweiligen Gewichtserfassauflage 272.1, 272.2, 272.3 aufliegenden Gewichts mit gespeicherten Gewichtsdaten von möglichen Inventargegenständen zu vergleichen und, wenn die ermittelte Verminderung des auf der jeweiligen Gewichtserfassauflage 272.1, 272.2, 272.3 aufliegenden Gewichts den gespeicherten Gewichtsdaten eines der möglichen Inventargegenstände entspricht, eine Entnahme des entsprechenden Inventargegenstands von der jeweiligen Gewichtserfassauflage 272.1, 272.2, 272.3 festzustellen und den entsprechenden Inventargegenstand aus dem erfassten Inventar zu entfernen. Dabei ist dabei das Inventarermittlungsmodul 302 dazu ausgebildet, beim Vergleichen der ermittelten Verminderung des auf der jeweiligen Gewichtserfassauflage 272.1, 272.2, 272.3 aufliegenden Gewichts mit gespeicherten Gewichtsdaten von möglichen Inventargegenständen zu überprüfen, ob die ermittelte Verminderung des auf der jeweiligen Gewichtserfassauflage 272.1, 272.2, 272.3 aufliegenden Gewichts wenigstens 2 g genau den gespeicherten Gewichtsdaten eines der möglichen Inventargegenstände entspricht, und wenn die ermittelte Verminderung des auf der jeweiligen Gewichtserfassauflage aufliegenden Gewichts auf wenigstens 2 g genau den gespeicherten Gewichtsdaten eines der möglichen Inventargegenstände entspricht, eine Entnahme des entsprechenden Inventargegenstands von der jeweiligen Gewichtserfassauflage 272.1, 272.2, 272.3 festzustellen und den entsprechenden Inventargegenstand aus dem erfassten Inventar zu entfernen.

Entsprechend wird somit im Betrieb des Serviceroboters 1000 sowie auch beim Erbringen von Dienstleistungen in örtlicher Nähe von Menschen mit dem Serviceroboter 1000 mit dem Inventarermittlungsmodul 302, wenn für eine der Gewichtserfassauflagen 272.1, 272.2, 272.3 eine Verminderung des auf der jeweiligen Gewichtserfassauflage 272.1, 272.2, 272.3 aufliegenden Gewichts ermittelt wird, die ermittelte Verminderung des auf der jeweiligen Gewichtserfassauflage 272.1, 272.2, 272.3 aufliegenden Gewichts mit gespeicherten Gewichtsdaten von möglichen Inventargegenständen verglichen und, wenn die ermittelte Verminderung des auf der jeweiligen Gewichtserfassauflage 272.1, 272.2, 272.3 aufliegenden Gewichts den gespeicherten Gewichtsdaten eines der möglichen Inventargegenstände entspricht, eine Entnahme des entsprechenden Inventargegenstands von der jeweiligen Gewichtserfassauflage 272.1, 272.2, 272.3 festgestellt und der entsprechende Inventargegenstand aus dem erfassten Inventar entfernt. Dabei wird beim Vergleichen der ermittelten Verminderung des auf der jeweiligen Gewichtserfassauflage 272.1, 272.2, 272.3 aufliegenden Gewichts mit gespeicherten Gewichtsdaten von möglichen Inventargegenständen vorzugsweise überprüft, ob die ermittelte Verminderung des auf der jeweiligen Gewichtserfassauflage 272.1, 272.2, 272.3 aufliegenden Gewichts wenigstens 2 g genau den gespeicherten Gewichtsdaten eines der möglichen Inventargegenstände entspricht, und wenn die ermittelte Verminderung des auf der jeweiligen Gewichtserfassauflage 272.1, 272.2, 272.3 aufliegenden Gewichts auf wenigstens 2 g genau den gespeicherten Gewichtsdaten eines der möglichen Inventargegenstände entspricht, eine Entnahme des entsprechenden Inventargegenstands von der jeweiligen Gewichtserfassauflage 272.1, 272.2, 272.3 festgestellt und der entsprechende Inventargegenstand aus dem erfassten Inventar zu entfernt.

Ausserdem ist das Inventarermittlungsmodul 302 dazu ausgebildet, wenn durch das Inventarermittlungsmodul 302 für eine der Gewichtserfassauflagen 272.1, 272.2, 272.3 eine Zunahme des auf der jeweiligen Gewichtserfassauflage 272.1, 272.2, 272.3 aufliegenden Gewichts ermittelt wird, die ermittelte Zunahme des auf der jeweiligen Gewichtserfassauflage 272.1, 272.2, 272.3 aufliegenden Gewichts mit gespeicherten Gewichtsdaten von möglichen Inventargegenständen zu vergleichen und, wenn die ermittelte Zunahme des auf der jeweiligen Gewichtserfassauflage 272.1, 272.2, 272.3 aufliegenden Gewichts den gespeicherten Gewichtsdaten eines der möglichen Inventargegenstände entspricht, eine Zugabe des entsprechenden Inventargegenstands auf der jeweiligen Gewichtserfassauflage 272.1, 272.2, 272.3 festzustellen und den entsprechenden Inventargegenstand dem erfassten Inventar hinzuzufügen. Dabei ist das Inventarermittlungsmodul 302 dazu ausgebildet, beim Vergleichen der ermittelten Zunahme des auf der jeweiligen Gewichtserfassauflage 272.1, 272.2, 272.3 aufliegenden Gewichts mit gespeicherten Gewichtsdaten von möglichen Inventargegenständen zu überprüfen, ob die ermittelte Zunahme des auf der jeweiligen Gewichtserfassauflage 272.1, 272.2, 272.3 aufliegenden Gewichts auf wenigstens 2 g genau den gespeicherten Gewichtsdaten eines der möglichen Inventargegenstände entspricht, und wenn die ermittelte Zunahme des auf der jeweiligen Gewichtserfassauflage 272.1, 272.2, 272.3 aufliegenden Gewichts auf wenigstens 2 g genau den gespeicherten Gewichtsdaten eines der möglichen Inventargegenstände entspricht, eine Zugabe des entsprechenden Inventargegenstands auf der jeweiligen Gewichtserfassauflage 272.1, 272.2, 272.3 festzustellen und den entsprechenden Inventargegenstand dem erfassten Inventar hinzuzufügen.

Somit wird Betrieb des Serviceroboters 1000 sowie auch beim Erbringen von Dienstleistungen in örtlicher Nähe von Menschen mit dem Serviceroboter 1000 wird mit dem Inventarermittlungsmodul 302, wenn durch das Inventarermittlungsmodul 302 für eine der mindestens einen Gewichtserfassauflage 272.1, 272.2, 272.3 eine Zunahme des auf der jeweiligen Gewichtserfassauflage 272.1, 272.2, 272.3 aufliegenden Gewichts ermittelt wird, die ermittelte Zunahme des auf der jeweiligen Gewichtserfassauflage 272.1, 272.2, 272.3 aufliegenden Gewichts mit gespeicherten Gewichtsdaten von möglichen Inventargegenständen verglichen und, wenn die ermittelte Zunahme des auf der jeweiligen Gewichtserfassauflage 272.1, 272.2, 272.3 aufliegenden Gewichts den gespeicherten Gewichtsdaten eines der möglichen Inventargegenstände entspricht, eine Zugabe des entsprechenden Inventargegenstands auf der jeweiligen Gewichtserfassauflage 272.1, 272.2, 272.3 festgestellt und der entsprechende Inventargegenstand dem erfassten Inventar hinzugefügt. Dabei wird beim Vergleichen der ermittelten Zunahme des auf der jeweiligen Gewichtserfassauflage 272.1, 272.2, 272.3 aufliegenden Gewichts mit gespeicherten Gewichtsdaten von möglichen Inventargegenständen vorzugsweise überprüft, ob die ermittelte Zunahme des auf der jeweiligen Gewichtserfassauflage 272.1, 272.2, 272.3 aufliegenden Gewichts auf wenigstens 2 g genau den gespeicherten Gewichtsdaten eines der möglichen Inventargegenstände entspricht, und wenn die ermittelte Zunahme des auf der jeweiligen Gewichtserfassauflage 272.1, 272.2, 272.3 aufliegenden Gewichts auf wenigstens 2 g genau den gespeicherten Gewichtsdaten eines der möglichen Inventargegenstände entspricht, eine Zugabe des entsprechenden Inventargegenstands auf der jeweiligen Gewichtserfassauflage 272.1, 272.2, 272.3 festgestellt und den entsprechenden Inventargegenstand dem erfassten Inventar hinzugefügt.

Ausserdem ist das Inventarermittlungsmodul 302 dazu ausgebildet, wenn durch das Inventarermittlungsmodul 302 für eine der mindestens einen Gewichtserfassauflage 272.1, 272.2, 272.3 zuerst eine Entnahme eines bestimmten Inventargegenstands von der jeweiligen Gewichtserfassauflage 272.1, 272.2, 272.3 festgestellt wird und innerhalb einer vorgegebenen Begutachtungszeitspanne von 30 Sekunden nach dem Zeitpunkt der Entnahme des bestimmten Inventargegenstands von der jeweiligen Gewichtserfassauflage 272.1, 272.2, 272.3 die Zugabe des bestimmten Inventargegenstands auf der jeweiligen Gewichtserfassauflage 272.1, 272.2, 272.3 festgestellt wird, ein Begutachtungssignal auszugeben, welches anzeigt, dass der bestimmte Inventargegenstand nur zeitweilig zur Begutachtung entnommen wurde. Dieses Begutachtungssignal wird an das Auftragsmodul übermittelt.

Im Betrieb des Serviceroboters 1000 sowie auch beim Erbringen von Dienstleistungen in örtlicher Nähe von Menschen mit dem Serviceroboter 1000 wird somit mit dem Inventarermittlungsmodul 302, wenn durch das Inventarermittlungsmodul 302 für eine der mindestens einen Gewichtserfassauflage 272.1, 272.2, 272.3 zuerst eine Entnahme eines bestimmten Inventargegenstands von der jeweiligen Gewichtserfassauflage 272.1, 272.2, 272.3 festgestellt wird und innerhalb der vorgegebenen Begutachtungszeitspanne nach dem Zeitpunkt der Entnahme des bestimmten Inventargegenstands von der jeweiligen Gewichtserfassauflage 272.1, 272.2, 272.3 die Zugabe des bestimmten Inventargegenstands auf der jeweiligen Gewichtserfassauflage 272.1, 272.2, 272.3 festgestellt wird, ein Begutachtungssignal ausgegeben, welches anzeigt, dass der bestimmte Inventargegenstand nur zeitweilig zur Begutachtung entnommen wurde. Dieses Begutachtungssignal wird an das Auftragsmodul übermittelt.

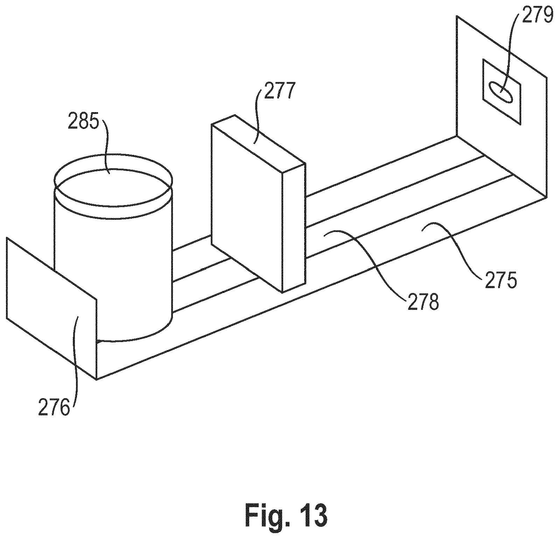

Figur 13 zeigt eine vereinfachte schematische Darstellung einer Produktvorschubeinheit 275 zur Aufnahme von mindestens einem Inventargegenstand 285. Diese Produktvorschubeinheit 275 gehört zur Serviceeinheit 200 und ist wie die bereits vorgehend beschriebene Einsteckeinheit 271 eine Einsteckeinheit zum Einstecken in die Schubladeneinheit 230. Die Produktvorschubeinheit 275 weist einen vorderen Anschlag 276 und einen hinteren Anschlag 277 auf, wobei der hintere Anschlag 277 verschiebbar an der Produktvorschubeinheit 275 gelagert ist und vom vorderen Anschlag 276 weg verschiebbar ist, damit ein oder mehrere Inventargegenstände 285 zwischen dem vorderen Anschlag 276 und dem hinteren Anschlag 277 in der Produktvorschubeinheit 275 angeordnet werden können, und wobei der hintere Anschlag 277 zum vorderen Anschlag 276 hin verschiebbar ist, um einen oder mehrere zwischen dem vorderen Anschlag 276 und dem hinteren Anschlag 277 angeordnete Inventargegenstände 285 zum vorderen Anschlag 276 hin zu bewegen.

Weiter weist die Produktvorschubeinheit 275 einen Anschlagsantrieb 278 zum Verschieben des hinteren Anschlags 277 zum vorderen Anschlag 276 hin und vom vorderen Anschlag 276 weg auf. Ausserdem weist die die Produktvorschubeinheit 275 einen Anschlagspositionssensor 279 zum Erfassen einer Position des hinteren Anschlags 277 und zum Ausgeben von Anschlagspositionssensordaten auf, wobei der Anschlagspositionssensor 279 einer der Inventarsensoren ist, womit die vom Anschlagspositionssensor 279 bestimmte Position des hinteren Anschlags 277 die vom Anschlagspositionssensor 279 erfassbare Inventarmessgrösse und die Anschlagspositionssensordaten die vom Anschlagspositionssensor 279 ausgebbaren Inventarsensordaten sind. Der Anschlagspositionssensor 279 ein optischer Distanzmesser, d.h. ein optischer Distanzmesssensor, zum Erfassen einer Distanz zwischen dem hinteren Anschlag 277 und einem Referenzpunkt, wobei der Referenzpunkt relativ zum vorderen Anschlag 276 fest angeordnet ist, um eine Distanz zwischen dem relativ zum vorderen Anschlag 276 fest angeordneten Referenzpunkt und dem hinteren Anschlag 277 zu erfassen. Der Anschlagspositionssensor 279 bildet dabei den Referenzpunkt und ist auf der dem vorderen Anschlag 276 gegenüberliegenden Seite des hinteren Anschlags 277 an der Produktvorschubeinheit 275 angeordnet. Alternativ zu diesem Anschlagspositionssensor 279 ein optischer Distanzmesser kann der Anschlagspositionssensor aber auch ein Encoder zum Erfassen der Position des hinteren Anschlags in der Produktvorschubeinheit 275 sein.

Wie die vorgehend im Zusammenhang mit den Figuren 12a und 12b beschriebene Einsteckeinheit 271 weist auch die Produktvorschubeinheit 275 eine Verbindung des Anschlagspositionssensors 279 der Produktvorschubeinheit 275 mit dem hier nicht gezeigten Datenübertragungsanschluss der Produktvorschubeinheit 275 zum Anschliessen an den Anschluss der Schubladeneinheit 230 auf, um die vom Anschlagspositionssensors 279 der Produktvorschubeinheit 275 ausgegebenen Inventarsensordaten zu empfangen und an das Inventarermittlungsmodul 302 zu übermitteln.

Das Inventarermittlungsmodul 302 ist dazu ausgebildet, basierend auf den vom Anschlagspositionssensor 279 empfangenen Inventarsensordaten einen Abstand des hinteren Anschlags 277 der Produktvorschubeinheit 275 vom vorderen Anschlag 276 der Produktvorschubeinheit 275 zu ermitteln. Daher wird im Betrieb des Serviceroboters 1000 sowie auch beim Erbringen von Dienstleistungen in örtlicher Nähe von Menschen mit dem Serviceroboter 1000 mit dem Inventarermittlungsmodul 302 basierend auf den vom Anschlagspositionssensor 279 empfangenen Inventarsensordaten der Abstand des hinteren Anschlags 277 der Produktvorschubeinheit 275 vom vorderen Anschlag 276 der Produktvorschubeinheit 275 ermittelt.

Das Inventarermittlungsmodul 302 ist ausserdem dazu ausgebildet, eine Anzahl der in der Produktvorschubeinheit 275 aufgenommenen Inventargegenstände zu ermitteln, indem das Inventarermittlungsmodul 302 dazu ausgebildet ist, den basierend auf den vom Anschlagspositionssensor 279 empfangenen Inventarsensordaten ermittelten Abstand des hinteren Anschlags 277 der Produktvorschubeinheit 275 vom vorderen Anschlag 276 der Produktvorschubeinheit 275 durch eine gespeicherte Inventargegenstanddicke, welche einer Dicke des der Produktvorschubeinheit 275 zugedachten Inventargegenstands entspricht, zu dividieren und das Ergebnis auf eine ganze Zahl zu runden. Entsprechend wird im Betrieb des Serviceroboters 1000 sowie auch beim Erbringen von Dienstleistungen in örtlicher Nähe von Menschen mit dem Serviceroboter 1000 mit dem Inventarermittlungsmodul 302 die Anzahl der in der Produktvorschubeinheit 275 aufgenommenen Inventargegenstände ermittelt, indem der basierend auf den vom Anschlagspositionssensor 279 empfangenen Inventarsensordaten ermittelte Abstand des hinteren Anschlags 277 der Produktvorschubeinheit 275 vom vorderen Anschlag 276 der Produktvorschubeinheit 275 durch eine gespeicherte Inventargegenstanddicke, welche einer Dicke des der Produktvorschubeinheit 275 zugedachten Inventargegenstands entspricht, dividiert und das Ergebnis auf eine ganze Zahl gerundet wird, was die Anzahl der Inventargegenstände in der Produktvorschubeinheit 275 aufgenommenen ergibt.

Weiter ist das Inventarermittlungsmodul 302 dazu ausgebildet, wiederholt vom Anschlagspositionssensor 279 Inventarsensordaten zu empfangen und jeweils basierend auf den vom Anschlagspositionssensor 279 empfangenen Inventarsensordaten den Abstand des hinteren Anschlags 277 der Produktvorschubeinheit 275 vom vorderen Anschlag 276 der Produktvorschubeinheit 275 zu ermitteln, sowie jeweils eine Änderung des Abstands des hinteren Anschlags 277 der Produktvorschubeinheit 275 vom vorderen Anschlag 276 der Produktvorschubeinheit 275 im Vergleich zu dem basierend auf den zuvor empfangenen Inventarsensordaten ermittelten Abstand des hinteren Anschlags 277 der Produktvorschubeinheit 275 vom vorderen Anschlag 276 der Produktvorschubeinheit 275 zu ermitteln, um im Betrieb des Serviceroboters 1000 anhand der ermittelten Änderung des Abstands des hinteren Anschlags 277 der Produktvorschubeinheit 275 vom vorderen Anschlag 276 der Produktvorschubeinheit 276 eine Änderung des in der Produktvorschubeinheit 275 aufgenommenen mindestens einen Inventargegenstands zu ermitteln.

Entsprechend werden im Betrieb des Serviceroboters 1000 sowie auch beim Erbringen von Dienstleistungen in örtlicher Nähe von Menschen mit dem Serviceroboter 1000 mit dem Inventarermittlungsmodul 302 wiederholt vom Anschlagspositionssensor 279 Inventarsensordaten empfangen und jeweils basierend auf den vom Anschlagspositionssensor 279 empfangenen Inventarsensordaten der Abstand des hinteren Anschlags 277 der Produktvorschubeinheit 275 vom vorderen Anschlag 276 der Produktvorschubeinheit 275 ermittelt, sowie jeweils eine Änderung des Abstands des hinteren Anschlags 277 der Produktvorschubeinheit 275 vom vorderen Anschlag 276 der Produktvorschubeinheit 275 im Vergleich zu dem basierend auf den zuvor empfangenen Inventarsensordaten ermittelten Abstand des hinteren Anschlags 277 der Produktvorschubeinheit 275 vom vorderen Anschlag 276 der Produktvorschubeinheit 275 ermittelt, um im Betrieb des Serviceroboters 1000 anhand der ermittelten Änderung des Abstands des hinteren Anschlags 277 der Produktvorschubeinheit 275 vom vorderen Anschlag 276 der Produktvorschubeinheit 275 eine Änderung des in der Produktvorschubeinheit 275 aufgenommenen mindestens einen Inventargegenstands zu ermitteln.

Ausserdem ist das Inventarermittlungsmodul 302 dazu ausgebildet, wiederholt vom Anschlagspositionssensor 279 Inventarsensordaten zu empfangen und jeweils basierend auf den vom Anschlagspositionssensor 270 empfangenen Inventarsensordaten den Abstand des hinteren Anschlags 277 der Produktvorschubeinheit 275 vom vorderen Anschlag 276 der Produktvorschubeinheit 276 zu ermitteln, sowie jeweils eine Verminderung des Abstands des hinteren Anschlags 277 der Produktvorschubeinheit 275 vom vorderen Anschlag 276 der Produktvorschubeinheit 275 im Vergleich zu dem basierend auf den zuvor empfangenen Inventarsensordaten ermittelten Abstand des hinteren Anschlags 277 der Produktvorschubeinheit 275 vom vorderen Anschlag 276 der Produktvorschubeinheit 275 zu ermitteln, um im Betrieb des Serviceroboters 1000 anhand der ermittelten Verminderung des Abstands des hinteren Anschlags 277 der Produktvorschubeinheit 275 vom vorderen Anschlag 276 der Produktvorschubeinheit 275 eine Entnahme eines Inventargegenstands oder mehreren Inventargegenstände aus der Produktvorschubeinheit 275 festzustellen und den entsprechenden Inventargegenstand oder die den entsprechenden Inventargegenstände aus dem erfassten Inventar zu entfernen. Entsprechend werden im Betrieb des Serviceroboters 1000 sowie auch beim Erbringen von Dienstleistungen in örtlicher Nähe von Menschen mit dem Serviceroboter 1000 mit dem Inventarermittlungsmodul 302 wiederholt vom Anschlagspositionssensor 279 Inventarsensordaten empfangen und jeweils basierend auf den vom Anschlagspositionssensor 279 empfangenen Inventarsensordaten der Abstand des hinteren Anschlags 277 der Produktvorschubeinheit 275 vom vorderen Anschlag 276 der Produktvorschubeinheit 275 ermittelt, sowie jeweils eine Verminderung des Abstands des hinteren Anschlags 277 der Produktvorschubeinheit 275 vom vorderen Anschlag 276 der Produktvorschubeinheit 275 im Vergleich zu dem basierend auf den zuvor empfangenen Inventarsensordaten ermittelten Abstand des hinteren Anschlags 277 der Produktvorschubeinheit 275 vom vorderen Anschlag 276 der Produktvorschubeinheit 275 ermittelt, um im Betrieb des Serviceroboters 1000 anhand der ermittelten Verminderung des Abstands des hinteren Anschlags 277 der Produktvorschubeinheit 275 vom vorderen Anschlag 276 der Produktvorschubeinheit 275 eine Entnahme eines Inventargegenstands oder mehreren Inventargegenstände aus der Produktvorschubeinheit 275 festzustellen und den entsprechenden Inventargegenstand oder die den entsprechenden Inventargegenstände aus dem erfassten Inventar zu entfernen.

Weiter ist das Inventarermittlungsmodul 302 dazu ausgebildet, um eine Anzahl der in der Produktvorschubeinheit 275 entnommenen Inventargegenstände zu ermitteln, die ermittelte Verminderung des Abstands des hinteren Anschlags 277 der Produktvorschubeinheit 275 vom vorderen Anschlag 276 der Produktvorschubeinheit 275 durch eine gespeicherte Inventargegenstanddicke, welche einer Dicke es der Produktvorschubeinheit 275 zugedachten Inventargegenstands entspricht, zu dividieren und das Ergebnis auf eine ganze Zahl zu runden. Entsprechend wird Betrieb des Serviceroboters 1000 sowie auch beim Erbringen von Dienstleistungen in örtlicher Nähe von Menschen mit dem Serviceroboter 1000 mit dem Inventarermittlungsmodul 302, um die Anzahl der in der Produktvorschubeinheit 275 entnommenen Inventargegenstände zu ermitteln, die ermittelte Verminderung des Abstands des hinteren Anschlags 277 der Produktvorschubeinheit 275 vom vorderen Anschlag 276 der Produktvorschubeinheit 275 durch eine gespeicherte Inventargegenstanddicke, welche einer Dicke es der Produktvorschubeinheit 275 zugedachten Inventargegenstands entspricht, dividiert auf eine ganze Zahl zu runden, was die Anzahl der entnommenen Inventargegenstände ergibt.

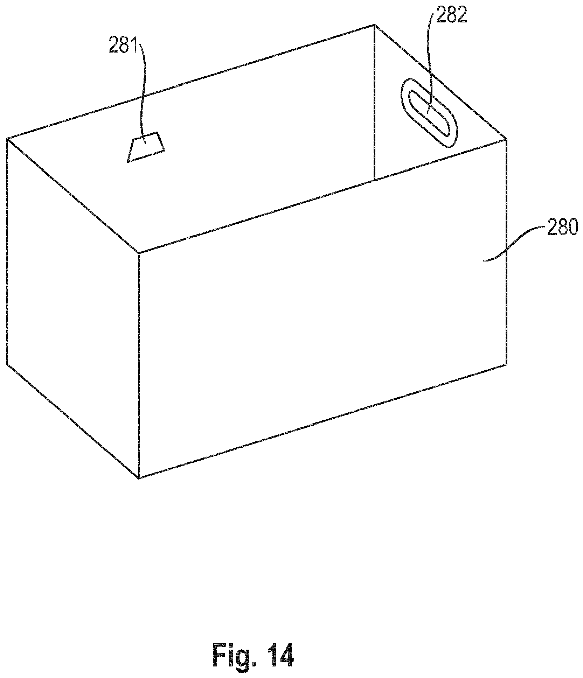

Figur 14 zeigt eine vereinfachte schematische Darstellung einer Inventarüberwachungseinheit 280 zur Aufnahme von mindestens einem Inventargegenstand. Diese Inventarüberwachungseinheit 280 gehört zur Serviceeinheit 200 und ist wie die bereits vorgehend beschriebene Einsteckeinheit 271 und die vorgehend beschriebene Produktvorschubeinheit 275 eine Einsteckeinheit zum Einstecken in die Schubladeneinheit 230. Diese Inventarüberwachungseinheit 280 weist einen Inventarbildsensor 281 zum Erfassen eines Bildes von dem in der Inventarüberwachungseinheit 280 aufgenommenen Inventargegenstand und zum Ausgeben von Inventarbildsensordaten mit Informationen zum vom Inventarbildsensor 280 erfassten Bild auf, wobei der Inventarbildsensor 281 einer der Inventarsensoren ist, womit das vom wenigstens einen Inventarbildsensor 281 erfassbare Bild die vom Inventarbildsensor 281 erfassbare Inventarmessgrösse und die Inventarbildsensordaten die vom Inventarbildsensor 281 ausgebbaren Inventarsensordaten sind. Genauer genommen ist der Inventarbildsensor 281 zum Erfassen eines Bildes eine Videokamera zum Erfassen eines Filmes und damit zum Erfassen einer Vielzahl von aufeinander folgenden Bildern. Weiter weist die Inventarüberwachungseinheit 280 eine Lichtquelle 282 zum Beleuchten des in der Inventarüberwachungseinheit 280 aufgenommenen Inventargegenstands auf.

Wie die vorgehend im Zusammenhang mit den Figuren 12a und 12b beschriebene Einsteckeinheit 271 weist auch die Inventarüberwachungseinheit 280 eine Verbindung des Inventarbildsensors 281 der Inventarüberwachungseinheit 280 mit dem hier nicht gezeigten Datenübertragungsanschluss der Inventarüberwachungseinheit 280 zum Anschliessen an den Anschluss der Schubladeneinheit 230 auf, um die vom Inventarbildsensor 281 der Inventarüberwachungseinheit 280 ausgegebenen Inventarsensordaten zu empfangen und an das Inventarermittlungsmodul 302 zu übermitteln.

Das Inventarermittlungsmodul 302 ist dazu ausgebildet, basierend auf den vom Inventarbildsensor 281 empfangenen Inventarsensordaten zu ermitteln, ob ein bisher in der Inventarüberwachungseinheit 280 aufgenommener Inventargegenstand aus der Inventarüberwachungseinheit 280 entnommen wurde, und, wenn das Inventarermittlungsmodul 302 die Entnahme des bisher in der Inventarüberwachungseinheit 280 aufgenommenen Inventargegenstands aus der Inventarüberwachungseinheit 280 ermittelt hat, den bisher in der Inventarüberwachungseinheit 280 aufgenommenen Inventargegenstand aus dem erfassten Inventar zu entfernen. Entsprechend wird im Betrieb des Serviceroboters 1000 sowie auch beim Erbringen von Dienstleistungen in örtlicher Nähe von Menschen mit dem Serviceroboter 1000 mit dem Inventarermittlungsmodul 302 basierend auf den vom Inventarbildsensor 281 empfangenen Inventarsensordaten ermittelt, ob ein bisher in der Inventarüberwachungseinheit 280 aufgenommener Inventargegenstand aus der Inventarüberwachungseinheit 280 entnommen wurde, und, wenn das mit dem Inventarermittlungsmodul 302 die Entnahme des bisher in der Inventarüberwachungseinheit 280 aufgenommenen Inventargegenstands aus der Inventarüberwachungseinheit 280 ermittelt worden ist, der bisher in der Inventarüberwachungseinheit 280 aufgenommene Inventargegenstand aus dem erfassten Inventar entfernt.

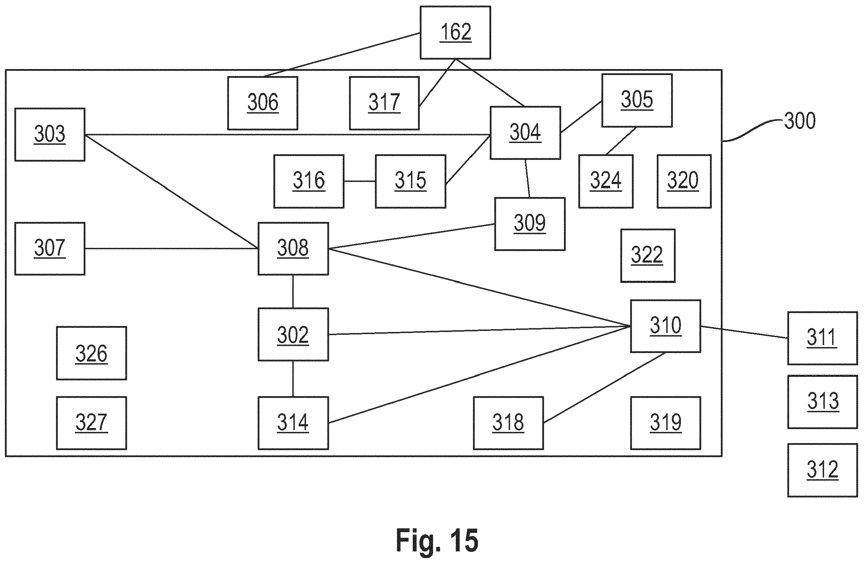

Die Fig. 15 zeigt eine Prinzipdarstellung eines Betriebsmoduls 300 einer erfindungsgemäßen Anordnung mit einem erfindungsgemäßen Serviceroboter 1000.

Das Betriebsmodul 300 weist eine Vielzahl von Modulen auf. Jedes der Module kann innerhalb des Serviceroboters 1000, beispielsweise auf einer oder mehreren internen Recheneinheit, angeordnet sein. Allerdings kann auch jedes der Module unabhängig von dem Anordnungsort der anderen Module auf einer oder mehreren externen Recheneinheiten, beispielsweise auf einem Server und/oder einer externen Bedieneinheit angeordnet sein. Besonders bevorzugt sind einige der Module auf einer oder mehreren der internen Recheneinheiten und einige der Module auf einer oder mehreren der externen Recheneinheiten angeordnet. Bei den vorgenannten Modulen kann es sich beispielsweise, allerdings nicht abschließend, um folgende Module handeln: ein Inventarermittlungsmodul 302, ein Auftragsmodul 303, ein Navigationsmodul 304, ein Positionsermittlungsmodul 305, ein Bewegungsblockiermodul 306, ein Inventar-Konfigurationsmodul 307, ein Inventarverfügbarkeitsmodul 308, ein Inventaraufstockungsmodul 309, ein Anzeigemodul 310 und ein Benutzerentnahmeermittlungsmodul 314.

Das Betriebsmodul 300 dient allgemein zum Betreiben des Serviceroboters 1000. Das Betriebsmodul 300 weist das Auftragsmodul 303 zum Empfangen von Benutzer-Aufträgen und zum Ausgeben von Auftragsdaten mit Informationen zu den empfangenen Benutzer-Aufträgen auf. Dabei enthalten die Auftragsdaten zumindest Zielortdaten mit Informationen zu wenigstens einem Zielort, an dem die entsprechenden Benutzer-Aufträge durch den Serviceroboter 1000 erfüllt werden sollen. Vorzugsweise enthalten die Auftragsdaten ferner Inventardaten mit Informationen zu den gemäß einem Auftrag auszuliefernden Inventargegenständen.

Das Betriebsmodul 300 weist das Positionsermittlungsmodul 305 zum Ermitteln einer aktuellen Position des Serviceroboters 1000 und zum Ausgeben von Positionsdaten mit Informationen zu der aktuellen Position des Serviceroboters 1000 auf. Ferner weist das Betriebsmodul 300 ein Navigationsmodul 304 zum Ermitteln eines Fahrweges von der aktuellen Position des Serviceroboters 1000 zum mindestens einen Zielort und zum Ausgeben von Navigationsdaten basierend auf dem ermittelten Fahrweg auf. Dabei ist das Navigationsmodul zum Empfangen von von dem Auftragsmodul 300 ausgegebenen Zielortdaten mit dem Auftragsmodul 300 verbunden oder verbindbar. Ferner ist das Navigationsmodul 304 zum Empfangen von von dem Positionsermittlungsmodul 305 ausgegebenen Positionsdaten mit dem Positionsermittlungsmodul 305 verbunden oder verbindbar.

Die Navigationsdaten enthalten Informationen zu dem ermittelten Fahrweg und/oder auf dem ermittelten Fahrweg basierende Steuerbefehle, wobei das Navigationsmodul 304 zum Ausgeben der Navigationsdaten an das Steuermodul 162 mit dem Steuermodul 162 verbunden oder verbindbar ist.

Ferner weist das Betriebsmodul 300 ein Bewegungsblockiermodul 306 zum Blockieren des Bewegens des Serviceroboters 1000 und zum Ausgeben eines Bewegungsblockierbefehls zum Blockieren des Bewegens des Serviceroboters 1000 auf. Dabei ist das Bewegungsblockiermodul 306 zum Empfangen der vom Öffnungszustandssensor ausgegebenen Öffnungszustandsdaten mit Informationen zu dem vom Öffnungszustandssensor erfassten Öffnungszustand mit dem Öffnungszustandssensor verbunden oder verbindbar. Ferner ist das Bewegungsblockiermodul 306 dazu ausgebildet, basierend auf den vom Öffnungszustandssensor empfangenen Öffnungszustandsdaten einen Öffnungszustand der Serviceeinheit 200 zu ermitteln und den Bewegungsblockierbefehl auszugeben, wenn der vom Bewegungsblockiermodul 306 ermittelte Öffnungszustand ein Geöffnetsein einer Schubladeneinheit 230 angibt.

Das Steuermodul 162 des Serviceroboters ist zum Empfangen des vom Bewegungsblockiermodul 306 ausgegebenen Bewegungsblockierbefehls mit dem Bewegungsblockiermodul 306 verbunden oder verbindbar- Dabei ist das Steuermodul 162 als Reaktion auf das Empfangen des Bewegungsblockierbefehls dazu ausgebildet, Steuerbefehle zum Blockieren des Bewegens des Serviceroboters 1000 auszugeben.

Das Betriebsmodul 300 weist das Inventarermittlungsmodul 302 zum Empfangen von vom wenigstens einen Inventarsensor ausgegebenen Inventarsensordaten und zum Ermitteln eines Inventars der Serviceeinheit 200 basierend auf den vom wenigstens einen Inventarsensor empfangenen Inventarsensordaten und zum Ausgeben von Inventardaten mit Informationen zum vom Inventarermittlungsmodul 302 ermittelten Inventar der Serviceeinheit 200 auf. Dabei ist das Inventarermittlungsmodul 302 zum Empfangen der vom wenigstens einen Inventarsensor ausgegebenen Inventarsensordaten mit dem wenigstens einen Inventarsensor verbunden oder verbindbar.

Das Betriebsmodul 300 weist ferner das Inventar-Konfigurationsmodul 307 zum Konfigurieren eines Soll-Inventars des Serviceroboters 1000 und zum Ausgeben von Soll-Inventardaten mit Informationen zu dem Soll-Inventar auf. Dabei ist beim Konfigurieren des Soll-Inventars festlegbar, welche Inventargegenstände in welchen Aufnahmen zur Aufnahme von Inventargegenständen vorrätig sein sollen.

Weiterhin ferner weist das Betriebsmodul 300 ein Inventarverfügbarkeitsmodul 308 zum Prüfen der Verfügbarkeit von Inventargegenständen in der Serviceeinheit 200 und zum Ausgeben von Verfügbarkeitsdaten basierend auf einem Ergebnis einer mittels des Inventarverfügbarkeitsmoduls 308 durchgeführten Prüfung der Verfügbarkeit auf. Das Inventarverfügbarkeitsmodul 308 ist zum Empfangen von vom Inventar-Konfigurationsmodul 307 ausgegebenen Soll-Inventardaten mit dem Inventar-Konfigurationsmodul 307 verbunden oder verbindbar. Ferner ist das Inventarverfügbarkeitsmodul 308 zum Empfangen von vom Inventarermittlungsmodul 302 ausgegebenen Inventardaten mit dem Inventarermittlungsmodul 302 verbunden oder verbindbar. Dabei ist das Inventarverfügbarkeitsmodul 308 dazu ausgebildet, die Verfügbarkeit von Inventargegenständen basierend auf einem Vergleich der vom Inventar-Konfigurationsmodul 307 empfangenen Soll-Inventardaten und der vom Inventarermittlungsmodul 302 empfangenen Inventardaten zu prüfen.

Ferner ist das Inventarverfügbarkeitsmodul 308 zum Empfangen von vom Auftragsmodul 303 ausgegebenen Artikeldaten mit dem Auftragsmodul 303 verbunden oder verbindbar. Weiterhin ferner ist das Inventarverfügbarkeitsmodul 308 zum Empfangen von vom Inventarermittlungsmodul 302 ausgegebenen Inventardaten mit dem Inventarermittlungsmodul 302 verbunden oder verbindbar. Dabei ist das Inventarverfügbarkeitsmodul 308 dazu ausgebildet, die Verfügbarkeit von Inventargegenständen basierend auf einem Vergleich der vom Auftragsmodul 303 empfangenen Artikeldaten und der vom Inventarermittlungsmodul 302 empfangenen Inventardaten zu prüfen.

Das Betriebsmodul 300 weist das Inventaraufstockungsmodul 309 zum Aufstocken des Inventars basierend auf von dem Inventarverfügbarkeitsmodul 308 ausgegebenen Verfügbarkeitsdaten auf. Dabei ist das Inventaraufstockungsmodul 309 zum Empfangen von vom Inventarverfügbarkeitsmodul 308 ausgegebenen Verfügbarkeitsdaten mit dem Inventarverfügbarkeitsmodul 308 verbunden oder verbindbar ist. Ferner ist das Inventaraufstockungsmodul 308 dazu ausgebildet, einen Inventaraufstockungsbefehl zum Aufstocken des Inventars auszugeben.

Das Navigationsmodul 304 ist zum Empfangen des vom Inventaraufstockungsmodul 309 ausgegebenen Inventaraufstockungsbefehls mit dem Inventaraufstockungsmodul 309 verbunden oder verbindbar. Dabei ist das Navigationsmodul 304 als Reaktion auf das Empfangen des Inventaraufstockungsbefehls dazu ausgebildet ist, einen Fahrweg von der aktuellen Position des Serviceroboters 1000 zu einem Aufstockungsort zu ermitteln, an dem das Inventar des Serviceroboter 1000 aufstockbar ist. Ferner ist das das Navigationsmodul 304 dazu ausgebildet, Navigationsdaten basierend auf dem ermittelten Fahrweg auszugeben.

Das Betriebsmodul 300 weist ferner ein Anzeigemodul 310 auf, das zum Empfangen von den vom Inventarermittlungsmodul 302 ausgegeben Inventardaten mit dem Inventarermittlungsmodul 302 verbunden oder verbindbar und zum Übermitteln von Anzeigeinformationen durch die Anzeigeeinheit 311 mit der Anzeigeeinheit 311 verbunden oder verbindbar ist. Dabei ist das Anzeigemodul 310 ferner dazu ausgebildet, Anzeigeinformationen zumindest zu dem Inventar der Serviceeinheit 200 gemäß den von dem Inventarermittlungsmodul 302 empfangenen Inventardaten auszugeben und zum Anzeigen durch die Anzeigeeinheit 311 an die Anzeigeeinheit 311 zu übermitteln.

Ferner weist das Betriebsmodul 300 ein Benutzerentnahmeermittlungsmodul 314 zum Ermitteln von beim Ausführen eines Benutzer-Auftrags von einem Benutzer entnommenen Inventargegenständen und zum Ausgeben von Inventarentnahmedaten mit Informationen zu den als entnommen ermittelten Inventargegenständen auf. Dabei ist das Benutzerentnahmeermittlungsmodul 314 zum Empfangen von den vom Inventarermittlungsmodul 302 ermittelten Inventardaten verbunden oder verbindbar. Ferner ist das Benutzerentnahmeermittlungsmodul 314 dazu ausgebildet, die beim Ausführen eines Benutzer-Auftrags entnommenen Inventargegenständen zu ermitteln, und zwar basierend auf den von dem Inventarermittlungsmodul 302 empfangenen Inventardaten vor einer Entnahme von Inventargegenständen aus dem Inventar und den von dem Inventarermittlungsmodul 302 empfangenen Inventardaten nach einer Entnahme von Inventargegenständen aus dem Inventar.

Weiterhin ferner ist das Anzeigemodul 310 zum Empfangen von den vom Benutzerentnahmeermittlungsmodul 314 ausgegebenen Inventarentnahmedaten mit dem Benutzerentnahmeermittlungsmodul 314 verbunden oder verbindbar. Dabei ist das Anzeigemodul 310 dazu ausgebildet, Anzeigeinformationen zumindest zu den entnommenen Inventargegenstände gemäß den von dem Benutzerentnahmeermittlungsmodul 314 empfangenen Inventarentnahmedaten auszugeben und zum Anzeigen durch die Anzeigeeinheit 311 an die Anzeigeeinheit 311 zu übermitteln.

Ferner weist das Betriebsmodul 300 ein Kühlungsvorrichtungssteuermodul 326 und ein Lüftersteuermodul 327 auf. Das Kühlungsvorrichtungssteuermodul 326 dient zum Steuern der Kühlungsvorrichtungssteuereinheit 260 und damit der Kühlungsvorrichtung 250. Das Lüftersteuermodul 327 dient zum Steuern der Lüftersteuereinheit 259 und damit des Lüfters 258.

Außerdem weist das Betriebsmodul 300 ein Inventarverwaltungsmodul 318 und ein Vorautorisierungsmodul 319 auf. Das Inventarverwaltungsmodul 318 dient zum Anlegen von Inventargegenständen und/oder von Inventargegenstands-Vorlagen mit Inventar-Eigenschaften. Das Inventarverwaltungsmodul 318 ist mit dem Anzeigemodul 310 verbunden und/oder verbindbar ausgebildet. So können ausgegebene Informationen zu den Inventar-Eigenschaften auf der Anzeigeeinheit 311 angezeigt werden. Das Vorautorisierungsmodul 319 dient zum Autorisieren eines Benutzers, insbesondere Hotelgastes, zur Benutzung der Serviceeinheit 200, 2200, 3200. Hierzu ist das Vorautorisierungsmodul 319 beispielsweise mit der Bezahleinheit 312 verbunden ausgebildet.

Weiterhin ferner weist das Betriebsmodul 300 ein Benutzerbenachrichtigungsmodul 315 und ein Alarmmodul 316 auf. Das Benutzerbenachrichtigungsmodul 315 dient zum Benachrichtigen eines Benutzers, dass der Serviceroboter 1000, 2000, 3000 angekommen ist. Das Benutzerbenachrichtigungsmodul 315 ist hierzu mit dem Navigationsmodul 304 verbunden, um eine Zielerreichungs-Benachrichtigung von dem Navigationsmodul 304 empfangen zu können. Das Alarmmodul 316 dient zum Alarmieren eines Administrators. Dabei ist das Alarmmodul 316 mit dem Benutzerbenachrichtigungsmodul 315 verbunden und kann einen Abwesenheitshinweis vom Benutzerbenachrichtigungsmodul 315 empfangen.

Weiterhin ferner weist das Betriebsmodul 300 ein Befreiungsmodul 317 auf, das mit dem Steuermodul 162 verbunden ist. Das Befreiungsmodul 300 dient zum Befreien eines blockierten Serviceroboters 1000, 2000, 3000 und ermöglicht ein manuelles und/oder ferngesteuertes Versetzen des Serviceroboters 1000, 2000, 3000 um eine begrenzte Maximaldistanz.

Der Serviceroboter 1000 ist, wie bereits erläutert, aufgrund der autonom fahrenden Basisplattform 100 für ein autonomes Fahren ausgebildet. Dabei ist ein autonomes Fahren des Serviceroboters 1000 innerhalb des Aktionsgebiets 182 vorgesehen, wobei das Navigationsmodul 304 Informationen zum Aktionsgebiet 182, insbesondere in der Form einer Karte des Aktionsgebiets 182, enthält oder zum Empfangen der Informationen zum Aktionsgebiet 182, insbesondere in der Form einer Karte des Aktionsgebiets 182, von einem separat vom Navigationsmodul 304 angeordneten Speicher zum Speichern der Informationen zum Aktionsgebiet 182 ausgebildet ist. Dabei ist das Navigationsmodul 304 zum Ermitteln des Fahrweges von der aktuellen Position des Serviceroboters 1000 zum mindestens einen Zielort aufgrund der Informationen zum Aktionsgebiet 182 ausgebildet. Zudem ist das Navigationsmodul 304 dazu ausgebildet, unter Berücksichtigung von Randbedingungen wie einzuhaltenden Sicherheitsabständen von vordefinierten Stellen im Aktionsgebiet 182, bevorzugt zu wählenden Teilwegstrecken, zu vorgegebenen Tageszeiten bevorzugt zu wählenden Teilwegstrecken, möglichst zu meidenden Teilwegstrecken und zu vorgegebenen Tageszeiten möglichst zu meidenden Teilwegstrecken den kürzesten Fahrweg von der aktuellen Position des Serviceroboters 1000 zum mindestens einen Zielort zu ermitteln.

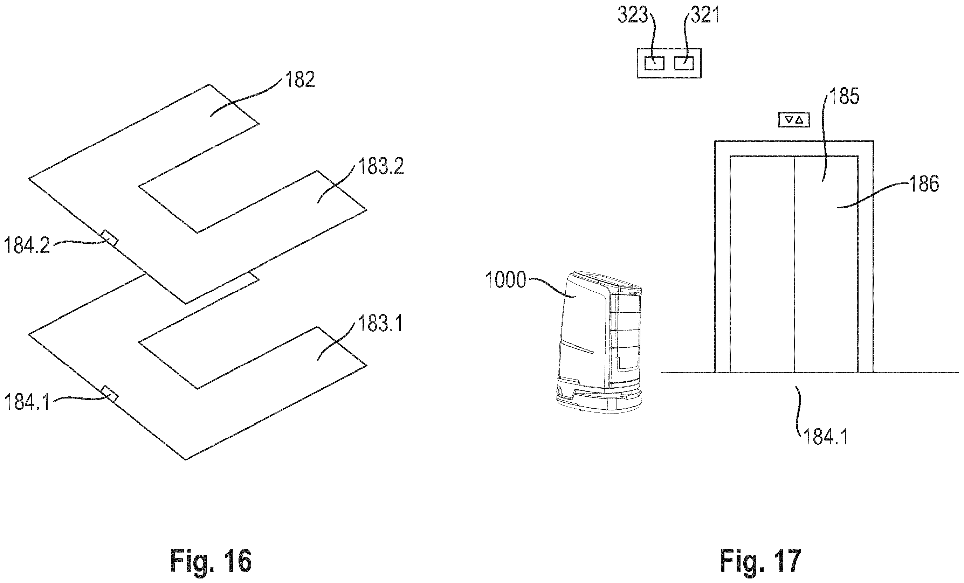

Wie in der Figur 16 illustriert, weist das Aktionsgebiet 182 zwei räumlich voneinander separierte Aktionsteilgebiete 183.1, 183.2 auf, wobei sich in jedem der Aktionsteilgebiete 183.1, 183.2 mindestens ein Übergangsort 184.1, 184.2 befindet, an welchem der Serviceroboter 1000 vom jeweiligen Übergangsort 184.1, 184.2 im jeweiligen Aktionsteilgebiets 183.1, 183.2 zu einem Übergangsort 184.2, 184.1 in einem anderen Aktionsteilgebiet 183.2, 183.1 und damit in ein anderes der Aktionsteilgebiete 183.2, 1831 gelangen kann, wobei die Informationen zum Aktionsgebiet 182 Informationen zu den Übergangsorten 184.1, 184.2 der Aktionsteilgebiete 183.1, 183.2 und zu einer Position jedes des mindestens einen Übergangsorts 184.1, 184.2 im jeweiligen Aktionsteilgebiet 183.1, 183.2 und zu einer Art des jeweiligen Übergangsorts 184.1, 184.2 beinhalten. Die räumlich voneinander separierten Aktionsteilgebiete 183.1, 183.2 können beispielsweise wie in Figur 16 illustriert auf unterschiedlichen Stockwerken im gleichen Gebäude liegen. In diesem Fall sind die räumlich voneinander separierten Aktionsteilgebiete 183.1, 183.2 zumindest in vertikaler Richtung voneinander separiert. Sie können aber beispielsweise auch horizontal voneinander separiert sein. Die räumliche Separierung zwischen den Aktionsteilgebieten 183.1, 183.2 kann beispielsweise durch eine Türe oder Schleuse bewerkstelligt sein. Die Aktionsteilgebiete 183.1, 183.2 können aber beispielsweise auch räumlich voneinander beabstandet sein. Für den Serviceroboter 1000 sind jedoch aufgrund der Übergangsorte 184.1, 184.2 alle der wenigstens zwei räumlich voneinander separierten Aktionsteilgebiete 183.1, 183.2 zugänglich. Dabei ist unerheblich, ob der Serviceroboter 1000 von einem ersten Aktionsteilgebiet 183.1 direkt in ein zweites Aktionsteilgebiet 183.2 oder via an drittes Aktionsteilgebiet oder sogar mehrere weitere Aktionsteilgebiete in das zweite Aktionsteilgebiet 183.2 gelangen kann.

Das Positionsermittlungsmodul 306 ist zum Ermitteln einer aktuellen Position des Serviceroboters 1000 im Aktionsgebiet 182 und zum Ausgeben von Positionsdaten mit Informationen zu der aktuellen Position des Serviceroboters 1000 im Aktionsgebiet 182 ausgebildet. Falls das Aktionsgebiet 182 zwei räumlich voneinander separierte Aktionsteilgebiete 183.1, 183.2 aufweist, so ist das Positionsermittlungsmodul 306 entsprechend zum Ermitteln, in welchem Aktionsteilgebiet 183.1, 183.2 sich der Serviceroboter 1000 aktuell befindet, und zum Ermitteln der aktuellen Position des Serviceroboters 1000 im jeweiligen Aktionsteilgebiet 183.1, 183.2 sowie zum Ausgeben von Positionsdaten mit Informationen zum Aktionsteilgebiet 183.1, 183.2, in welchem sich der Serviceroboter 1000 aktuell befindet und zur aktuellen Position des Serviceroboters 1000 in dem jeweiligen Aktionsteilgebiet 183.1, 183.2, ausgebildet.

Ferner ist das Navigationsmodul 304 zum Ermitteln des Fahrweges von der aktuellen Position des Serviceroboters 1000 zum mindestens einen Zielort aufgrund der Informationen zum Aktionsgebiet 182 sowie, wenn sich die aktuelle Position des Serviceroboters 1000 in einem anderen der zwei Aktionsteilgebiete 183.1, 183.2 befindet als der Zielort, unter Berücksichtigung der in den Informationen zum Aktionsgebiet 182 beinhalteten Informationen zu den Übergangsorten 184.1, 184.2 der Aktionsteilgebiete 183.1, 183.2, ausgebildet.

Im vorliegenden Beispiel sind der Übergangsort 184.1 im ersten der zwei Aktionsteilgebiete 183.1 und der Übergangsort 184.2 im zweiten der zwei Aktionsteilgebiete 183.2 sind durch eine Servicerobotertransportiervorrichtung zum Transportieren des Serviceroboters 1000 vom jeweiligen Übergangsort 184.1, 184.2 im einen der zwei Aktionsteilgebiete 183.1, 183.2 zum Übergangsort 184.2, 184.2 im anderen der zwei Aktionsteilgebiete 183.2, 183.2 miteinander verbunden. Wie in der Figur 17 illustriert, ist diese Servicerobotertransportiervorrichtung zum Transportieren des Serviceroboters 1000 vom jeweiligen Übergangsort 184.1, 184.2 im einen der zwei Aktionsteilgebiete 183.1, 183.2 zum Übergangsort 184.2, 184.1 im anderen der zwei Aktionsteilgebiete 183.2, 183.1 im vorliegenden Beispiel ein Aufzug 185. In Varianten dazu ist die Servicerobotertransportiervorrichtung hingegen beispielsweise ein Rollband, eine Rolltreppe oder ein Treppenlift, insbesondere ein Treppenlift zum Transportieren von einem Rollstuhl über einen oder mehrere Treppenstufen.

Wie aus den Figuren 15 und 17 ersichtlich, weist das Betriebsmodul 300 weist ein Servicerobotertransportiervorrichtungskommunikationsmodul 320 zum Kommunizieren mit einer Steuereinrichtung 321 der Servicerobotertransportiervorrichtung auf, wobei das Servicerobotertransportier-vorrichtungs¬kommunikationsmodul 320 dazu ausgebildet ist, Servicerobotertransportier-vorrichtungssteuerungsbefehle an die Steuereinrichtung 321 der Servicerobotertransportiervorrichtung zu übermitteln, um die Servicerobotertransportiervorrichtung zum Transportieren des Serviceroboters 1000 vom jeweiligen Übergangsort 184.1, 184.2 im einen der zwei Aktionsteilgebiete 183.1, 183.2 zum Übergangsort 184.2, 184.1 im anderen der zwei Aktionsteilgebiete 183.2, 183.1 zu steuern. Dieses Servicerobotertransportiervorrichtungskommunikationsmodul 320 kann dabei im Serviceroboter 1000 angeordnet sein, womit der Serviceroboter 1000 das Servicerobotertransportiervorrichtungskommunikationsmodul 320 umfasst. Das Servicerobotertransportiervorrichtungskommunikationsmodul 320 kann aber auch ausserhalb des Serviceroboters 1000 und damit separat vom Serviceroboter 1000 angeordnet sein. Die Servicerobotertransportier¬vorrichtungssteuerungsbefehle können beispielsweise einen Befehl beinhalten, die Serviceroboter-itransportiervorrichtung zum Übergangsort 184.1, 184.2 im einen der zwei Aktionsteilgebiete 183.1, 183.2 zu bewegen, wo der Serviceroboter 1000 von der Serviceroboter-itransportiervorrichtung zum Transportieren des Serviceroboters 1000 zum Übergangsort 184.2, 184.1 im anderen der zwei Aktionsteilgebiete 183.3, 183.1 aufgenommen werden soll. Dabei können die Servicerobotertransportier-vorrichtungssteuerungsbefehle auch einen Befehl beinhalten, welcher besagt, zu welchem Übergangsort 184.1, 184.2 der Serviceroboter 1000 von der Serviceroboter¬transportiervorrichtung transportiert werden soll. Weiter können die Servicerobotertransportier-vorrichtungssteuerungsbefehle einen Befehl beinhalten, welcher besagt, dass mit der Serviceroboter-itransportiervorrichtung keine Personen zusammen mit dem Serviceroboter 1000 transportiert werden dürfen. Zudem können die Servicerobotertransportier¬vorrichtungssteuerungsbefehle einen Befehl beinhalten, welcher besagt, mit welcher Priorität der Serviceroboter 1000 mit der Serviceroboter-itransportiervorrichtung transportiert werden soll. Dabei kann die Priorität beinhalten, dass der Serviceroboter 1000 im Vergleich zu Personen mit Vorrang zu transportieren ist oder dass Personen mit Vorrang vor dem Serviceroboter 1000 zu transportieren sind.

Das Servicerobotertransportiervorrichtungs¬kommunikationsmodul 320 kann beispielsweise über ein API (application programming interface), bzw. eine Programmierschnittstelle, über das Internet oder eine Cloud mit der Steuereinrichtung 321 der Serviceroboter-transportier¬vorrichtung verbunden oder verbindbar sein, um die Servicerobotertransportier¬vorrichtungssteuerungsbefehle an Steuereinrichtung der Serviceroboter¬transportier¬vorrichtung zu übermitteln. Das Servicerobotertransportier-vorrichtungs¬kommunikationsmodul kann aber anstelle eines API auch über eine andere drahtlose Kommunikation wie beispielsweise Bluetooth, ein anderes Funksignal als Bluetooth, ein optisches Signal oder ein akustisches Signal mit der Steuereinrichtung der Servicerobotertransportiervorrichtung verbunden oder verbindbar sein, um die Servicerobotertransportier¬vorrichtungssteuerungsbefehle an die Steuereinrichtung der Servicerobotertransportiervorrichtung zu übermitteln.

Unabhängig davon, ob der Übergangsort 184.1 im ersten der zwei Aktionsteilgebiete 183.1 und der Übergangsort 184.2 im zweiten der zwei Aktionsteilgebiete 183.1, 183.2 durch eine Servicerobotertransportiervorrichtung zum Transportieren des Serviceroboters 1000 vom jeweiligen Übergangsort 184.1, 184.2 im einen der zwei Aktionsteilgebiete 183.1, 183.2 zum Übergangsort 184.2, 184.2 im anderen der zwei Aktionsteilgebiete 183.2, 183.2 miteinander verbunden sind oder nicht, ist ein Weg vom Übergangsort 184.1, 184.2 im einen der zwei Aktionsteilgebiete 183.1, 183.2 zum Übergangsort 184.2, 184.1 im anderen der zwei Aktionsteilgebiete 183.2, 183.1 durch eine Schranke 186 unterbrochen oder unterbrechbar, wobei die Schranke 186 öffenbar ist, um dem Serviceroboter 1000 zu ermöglichen, vom jeweiligen Übergangsort 184.1, 184.2 im einen der zwei Aktionsteilgebiete 183.1, 183.2 zum Übergangsort 184.3, 184.1 im anderen der zwei Aktionsteilgebiete 183.2, 183.1 zu gelangen. Die Schranke 186 kann beispielsweise eine Türe, eine Schleuse oder eine Barriere sein. Im vorliegenden Beispiel ist diese Schranke 186 die Aufzugstüre des Aufzugs 185.

Vorzugsweise weist das Betriebsmodul 300 ein Schrankenkommunikationsmodul 322 zum Kommunizieren mit einer Steuereinrichtung 323 der Schranke 186 auf, um die Schranke 186 zu öffnen und dem Serviceroboter 1000 zu ermöglichen, vom jeweiligen Übergangsort 184.1, 184.2 im einen der zwei Aktionsteilgebiete 183.1, 183.2 zum Übergangsort 184.2, 184.1 im anderen der zwei Aktionsteilgebiete 183.2, 183.1 zu gelangen. Dieses Schrankenkommunikationsmodul 322 kann dabei im Serviceroboter 1000 angeordnet sein, womit der Serviceroboter 1000 das Schrankenkommunikationsmodul 322 umfasst. Das Schrankenkommunikationsmodul 322 kann aber auch ausserhalb des Serviceroboters 1000 und damit separat vom Serviceroboter 1000 angeordnet sein.

Das Schrankenkommunikationsmodul 322 ist dazu ausgebildet, der Steuereinrichtung 323 der Schranke 186 ein Schrankenöffnungssignal zu übermitteln, um die Schranke 186 zu öffnen und dem Serviceroboter 1000 zu ermöglichen, vom jeweiligen Übergangsort 184.1, 184.2 im einen der zwei Aktionsteilgebiete 183.1, 183.2 zum Übergangsort 184.2, 184.1 im anderen der zwei Aktionsteilgebiete 183.2, 183.1 zu gelangen.

Das Schrankenkommunikationsmodul 322 kann beispielsweise über ein API (application programming interface), bzw. eine Programmierschnittstelle, über das Internet oder eine Cloud mit der Steuereinrichtung 323 der Schranke 186 verbunden oder verbindbar sein, um das Schrankenöffnungssignal an die Steuereinrichtung 323 der Schranke 186 zu übermitteln.

Das Schrankenkommunikationsmodul 322 ist ferner dazu ausgebildet, von der Schranke 186 oder der Steuereinrichtung 323 der Schranke 186 ein Schrankegeöffnetsignal zu empfangen, welches angibt, dass die Schranke 186 geöffnet ist, um dem Serviceroboter 1000 zu ermöglichen, vom jeweiligen Übergangsort 184.1, 184.2 im einen der zwei Aktionsteilgebiete 183.1, 183.2 zum Übergangsort 184.2, 184.1 im anderen der zwei Aktionsteilgebiete 183.2, 183.1 zu gelangen.

Das Schrankenkommunikationsmodul 322 kann beispielsweise über ein API (application programming interface), bzw. eine Programmierschnittstelle, über das Internet oder eine Cloud mit der Steuereinrichtung 323 der Schranke 186 verbunden oder verbindbar sein, um das Schrankegeöffnetsignal zu empfangen.

Das Navigationsmodul 304 ist dazu ausgebildet, zu ermitteln, ob die Schranke 186 geöffnet ist und der Serviceroboter 1000 somit durch die Schranke 186 fahren und die Schranke 186 passieren kann, und, wenn vom Navigationsmodul 304 ermittelt worden ist, dass die Schranke 186 geöffnet ist, Navigationsdaten an das Steuermodul 162 auszugeben, um den Serviceroboter 1000 durch die Schranke 186 fahren zu lassen. Dabei kann das Navigationsmodul 162 basierend auf von einem der vorgehend beschriebenen Arbeitsbereichserfassungssensoren ausgegebenen Arbeitsbereichserfassungssensordaten mit Informationen zum erfassten Arbeitsbereich ermitteln, ob die Schranke 186 geöffnet ist und der Serviceroboter 1000 somit durch die Schranke 186 fahren kann oder nicht. Entsprechend ist das Navigationsmodul 304 dazu ausgebildet, bei einem Transportieren des Serviceroboters 1000 durch die Servicerobotertransportier¬vorrichtung aufgrund der Informationen zum erfassten Arbeitsbereich zu ermitteln, ob die Schranke 186 geöffnet ist und der Serviceroboter 1000 somit durch die Schranke 186 fahren und die Schranke 186 passieren kann, und, wenn vom Navigationsmodul 304 ermittelt worden ist, dass die Schranke 186 geöffnet ist, Navigationsdaten an das Steuermodul 162 auszugeben, um den Serviceroboter 1000 durch die Schranke 186 fahren zu lassen. Ferner ist das Navigationsmodul 304 dazu ausgebildet, diese Navigationsdaten nur dann an das Steuermodul 162 auszugeben, um den Serviceroboter 1000 durch die Schranke 186 fahren zu lassen, wenn zugleich das Schrankenkommunikationsmodul 322 ein Schrankegeöffnetsignal empfangen hat, um die Sicherheit im Betrieb des Serviceroboters 10000 zu erhöhen.

Wenn das Betriebsmodul 300 zudem das vorgehend beschriebene Servicerobotertransportiervorrichtungs¬kommunikationsmodul 320 aufweist, so kann das Servicerobotertransportiervorrichtungs¬kommunikationsmodul 320 mit dem Schrankenkommunikationsmodul 322 wie in Figur 17 schematisch dargestellt im gleichen Modul und damit als Übergangskommunikationsmodul ausgebildet sein, welches die Funktionalität des Servicerobotertransportiervorrichtungs¬kommunikationsmoduls 320 und des Schranken-kommunikationsmoduls 322 beinhaltet. Genauso kann das Servicerobotertransportier-vorrichtungs¬kommunikationsmodul 320 aber auch separat vom Schrankenkommunikations-modul 322 ausgebildet sein.

Das Betriebsmodul 300 weist ausserdem ein Transportstreckenermittlungsmodul 324 zum Ermitteln einer Transportstrecke, über welche der Serviceroboter 1000 durch die Servicerobotertransportiervorrichtung transportiert worden ist, auf, wobei das Transportstreckenermittiungs¬modul 324 zum Empfangen der Beschleunigungssensordaten mit der Beschleunigungs¬sensoranordnung 180 verbunden oder verbindbar ist und zum Ermitteln der Transportstrecke basierend auf den Beschleunigungssensordaten ausgebildet ist. Wenn die Beschleunigungssensoranordnung 180 zudem ein oder mehrere Gyroskope zum Erfassen einer Drehbewegung des Serviceroboters aufweist und zum Ausgeben von Gyroskop¬daten mit Informationen zur erfassten Drehbewegung ausgebildet ist, so ist das Transportstreckenermittlungs¬modul 324 bevorzugt zum Empfangen der Gyroskopdaten mit der Beschleunigungs¬sensoranordnung 180 verbunden oder verbindbar und zum Ermitteln der Transportstrecke basierend auf den Gyroskopdaten ausgebildet.

Dieses Transportstreckenermittlungs 324 kann dabei im Serviceroboter 1000 angeordnet sein, womit der Serviceroboter 1000 das Transportstreckenermittlungs 324 umfasst. Das Schrankenkommunikationsmodul 324 kann aber auch ausserhalb des Serviceroboters 1000 und damit separat vom Serviceroboter 1000 angeordnet sein.

Die Transportstrecke kann einem Transportweg im eindimensionalen, zweidimensionalen oder dreidimensionalen Raum entsprechen, entlang welchem Transportweg der Serviceroboter 1000 transportiert worden ist, insbesondere durch die Servicerobotertransportiervorrichtung transportiert worden ist. Genauso kann die Transportstrecke aber auch eine Distanz sein, über welche der Serviceroboter 1000 entlang einer der drei Beschleunigungsmessachsen transportiert worden ist. Falls die Beschleunigungssensoranordnung 180 zum Erfassen einer Beschleunigung entlang zwei oder drei verschiedenen Beschleunigungsmessachsen mit jeweils einer anderen fixen Ausrichtung relativ zum Serviceroboter 1000 in beide Richtungen der jeweiligen Beschleunigungsmessachse, welcher Beschleunigung der Serviceroboter 1000 ausgesetzt ist, ausgebildet ist, so kann die Transportstrecke die Distanzen sein, über welche der Serviceroboter 1000 entlang der zwei bzw. drei Beschleunigungsmessachsen transportiert worden ist.

Das Transportstreckenermittlungsmodul 324 mit dem Positionsermittlungsmoduls 305, wobei das Positionsermittlungs¬modul 305 dazu ausgebildet ist, aufgrund der ermittelten Transportstrecke oder aufgrund der vom Transportstreckenermittlungsmodul 324 empfangenen Informationen zur Transportstrecke zu ermitteln, ob der Serviceroboter 1000 durch die Servicerobotertransportiervorrichtung vom Übergangsort 184.1, 184.2 im einen der zwei Aktionsteilgebiete 183.1, 183.2 zum Übergangsort 184.2, 184.1 im anderen der zwei Aktionsteilgebiete 183.2, 183.2 transportiert worden ist. Dadurch kann ohne von der Servicetransportiervorrichtung erhaltene Informationen bestimmt werden, ob der Serviceroboter 1000 durch die Servicerobotertransportiervorrichtung vom Übergangsort 184.1, 184.2 im einen der zwei Aktionsteilgebiete 183.1, 183.2 zum Übergangsort 184.2, 184.1 im anderen der zwei Aktionsteilgebiete 183.2, 183.1 transportiert worden ist.

Wie bereits erwähnt, ist Navigationsmodul 304 dazu ausgebildet, die Navigationsdaten dann an das Steuermodul 162 auszugeben, um den Serviceroboter 1000 durch die Schranke 186 fahren zu lassen, wenn zugleich das Schrankenkommunikationsmodul 322 ein Schrankegeöffnetsignal empfangen hat. Im vorliegenden Ausführungsbeispiel, wo der Serviceroboter einerseits die Schranke 186 passieren muss aber auch von der Servicerobotertransportiervorrichtung transportiert werden muss, um vom Übergangsort 184.1, 184.2 im einen der zwei Aktionsteilgebiete 183.1, 183.2 zum Übergangsort 184.2, 184.1 im anderen der zwei Aktionsteilgebiete 183.1, 183.2 zu gelangen, ist das Navigationsmodul 304 ausserdem dazu ausgebildet, die Navigationsdaten dann an das Steuermodul 162 auszugeben, um den Serviceroboter 1000 durch die Schranke 186 fahren zu lassen, wenn zugleich das Positionsermittlungs¬modul 305 aufgrund der ermittelten Transportstrecke oder aufgrund der vom Transportstreckenermittlungsmodul 324 empfangenen Informationen zur Transportstrecke ermittelt hat, das der Serviceroboter 1000 durch die Servicerobotertransportiervorrichtung vom Übergangsort 184.1, 184.2 im einen der zwei Aktionsteilgebiete 183.1, 183.2 zum Übergangsort 184.2, 184.1 im anderen der zwei Aktionsteilgebiete 183.1, 183.2 transportiert worden ist.

Auch ist das Navigationsmodul 304 dazu ausgebildet, wenn sich der Serviceroboter 1000 an einem der Übergangsorte 184.1, 184.2 oder zum Transportiert werden mit einer der Servicerobotertransportiervorrichtung auf oder in der entsprechenden Servicerobotertransportiervorrichtung befindet, durch Ausgeben von Navigationsdaten an das Steuermodul 162 den Serviceroboter 1000 derart zu steuern, dass er sich so nahe es das Sicherheitsmodul 163 zulässt an Personen in der Umgebung des Serviceroboters 1000 heranbewegt, wenn sich Personen auf dem oder in der Nähe des Fahrwegs befinden. Dadurch kann der Serviceroboter 1000 komplikationsfreier zusammen mit Personen Servicerobotertransportiervorrichtung transportiert werden. Weiter ist das Navigationsmodul 304 dazu ausgebildet, insbesondere durch Informationsübergabe an das Betriebsmodul 300, vom Serviceroboter 1000 akustische und/oder Warnsignale ausgeben zu lassen, wenn sich Personen auf dem oder in der Nähe des Fahrwegs befinden.

Zusammenfassend ist festzustellen, dass ein dem eingangs genannten technischen Gebiet zugehörenden Serviceroboter um Erbringen von Dienstleistungen in örtlicher Nähe von Menschen geschaffen wird, welcher sicherer im Betrieb ist und eine breite Palette an Dienstleistungen in der Nähe von Menschen erbringen kann. Weiter wird ein Verfahren zum Betreiben eines erfindungsgemässen Serviceroboters sowie ein Verfahren zum Erbringen von Dienstleistungen in örtlicher Nähe von Menschen mit einem erfindungsgemässen Serviceroboter bereit zu stellen geschaffen wird.

## Patentansprüche

1. Ein Serviceroboter (1000, 2000, 3000) zum Erbringen von Dienstleistungen in örtlicher Nähe von Menschen, wobei der Serviceroboter (1000, 2000, 3000) eine autonom fahrende Basisplattform (100) und eine auf der autonom fahrenden Basisplattform (100) anbringbare oder angebrachte Serviceeinheit (200, 2200, 3200) aufweist, wobei die autonom fahrende Basisplattform (100) Folgendes aufweist:
a) einen Antrieb (125) zum Antreiben der autonom fahrenden Basisplattform (100) und damit des Serviceroboters (1000, 2000, 3000); und
b) ein Fahrwerk (110) mit einer Vielzahl von Rädern zum auf den Rädern fahrenden Bewegen der autonom fahrenden Basisplattform (100) und damit des Serviceroboters (1000, 2000, 3000), wobei wenigstens eines der Vielzahl von Rädern ein vom Antrieb antreibbares Antriebsrad ist,
wobei der Serviceroboter (1000, 2000, 3000) ein Steuermodul (162) zum Steuern der autonom fahrenden Basisplattform (100) aufweist, wobei das Steuermodul (162) zum Übermitteln von Steuerbefehlen an den Antrieb (125) mit dem Antrieb (125) verbunden oder verbindbar ist und der Antrieb durch die vom Steuermodul (162) übermittelten Steuerbefehle steuerbar ist, und wobei der Serviceroboter (1000, 2000, 3000) wenigstens eine Energiequelle zur Versorgung des Antriebs (125) und des Steuermoduls (162) mit Energie aufweist.

2. Der Serviceroboter (1000, 2000, 3000) nach Anspruch 1, **dadurch gekennzeichnet, dass** der Serviceroboter (1000, 2000, 3000), besonders bevorzugt die autonom fahrende Basisplattform (100), zum Erfassen von Hindernissen innerhalb eines Arbeitsbereichs des Serviceroboters (1000, 2000, 3000) wenigstens einen Arbeitsbereichserfassungssensor zum Erfassen des Arbeitsbereichs des Serviceroboters (1000, 2000, 3000) und zum Ausgeben von Arbeitsbereichserfassungssensordaten mit Informationen zum erfassten Arbeitsbereich aufweist.

3. Der Serviceroboter (1000, 2000, 3000) nach Anspruch 2, **dadurch gekennzeichnet, dass** das Steuermodul (162) mit wenigstens einem des wenigstens einen Arbeitsbereichserfassungssensors zum Empfangen von vom jeweiligen Arbeitsbereichserfassungssensor ausgegebenen Arbeitsbereichserfassungssensordaten verbunden ist, womit der jeweilige Arbeitsbereichserfassungssensor ein Steuerungssensor ist und der Serviceroboter (1000, 2000, 3000) entsprechend wenigstens einen Steuerungssensor aufweist, wobei das Steuermodul (162) dazu ausgebildet ist, basierend auf den vom wenigstens einen Steuerungssensor (162) empfangenen Arbeitsbereichserfassungssensordaten die autonom fahrende Basisplattform (100) zu steuern und zum Steuern der autonom fahrenden Basisplattform (100) Steuerbefehle an den Antrieb (125) zu übermitteln.

4. Der Serviceroboter (1000, 2000, 3000) nach Anspruch 2 oder 3, **dadurch gekennzeichnet, dass** der Serviceroboter (1000, 2000, 3000) ein Sicherheitsmodul (163) zur Verhütung von Unfällen mit dem Serviceroboter (1000, 2000, 3000) durch Zusammentreffen des Serviceroboters (1000, 2000, 3000) mit Hindernissen aufweist, wobei das Sicherheitsmodul (163) mit wenigstens einem des wenigstens einen Arbeitsbereichserfassungssensors zum Empfangen von vom jeweiligen Arbeitsbereichserfassungssensor ausgegebenen Arbeitsbereichserfassungssensordaten verbunden ist, womit der jeweilige Arbeitsbereichserfassungssensor ein Sicherheitssensor ist und der Serviceroboter (1000, 2000, 3000) entsprechend wenigstens einen Sicherheitssensor aufweist, wobei das Sicherheitsmodul (163) dazu ausgebildet ist, zur Verhütung von Unfällen mit dem Serviceroboter (1000, 2000, 3000) durch Zusammentreffen des Serviceroboters (1000, 2000, 3000) mit den Hindernissen basierend auf den vom wenigstens einen Sicherheitssensor empfangenen Arbeitsbereichserfassungssensordaten Positionen der Hindernisse im Arbeitsbereich des Serviceroboters (1000, 2000, 3000) relativ zum Serviceroboter (1000, 2000, 3000) zu ermitteln.

5. Der Serviceroboter (1000, 2000, 3000) nach Anspruch 4, **dadurch gekennzeichnet, dass** das Steuermodul (162) durch das Sicherheitsmodul (163) übersteuerbar ist.

6. Der Serviceroboter (1000, 2000, 3000) nach Anspruch 4 oder 5, **dadurch gekennzeichnet, dass** das Sicherheitsmodul (163) dazu ausgebildet ist, einen Stoppbefehl zum Stoppen der autonom fahrenden Basisplattform (100) auszugeben.

7. Der Serviceroboter (1000, 2000, 3000) nach Anspruch 5 und 6, **dadurch gekennzeichnet, dass** das Sicherheitsmodul (163) dazu ausgebildet, zu überprüfen, ob eine der Positionen relativ zum Serviceroboter (1000, 2000, 3000) der Hindernisse im Arbeitsbereich des Serviceroboters (1000, 2000, 3000) innerhalb einer um den Serviceroboter (1000, 2000, 3000) definierten ersten Sicherheitszone (166) liegt und, wenn eine der Positionen relativ zum Serviceroboter (1000, 2000, 3000) der Hindernisse im Arbeitsbereich des Serviceroboters (1000, 2000, 3000) innerhalb der um den Serviceroboter (1000, 2000, 3000) definierten ersten Sicherheitszone (166) liegt, den Stoppbefehl zum Stoppen der autonom fahrenden Basisplattform (100) auszugeben.

8. Der Serviceroboter (1000, 2000, 3000) nach einem der Ansprüche 4 bis 7, **dadurch gekennzeichnet, dass** der Serviceroboter (1000, 2000, 3000), besonders bevorzugt die autonom fahrende Basisplattform (100), eine Geschwindigkeitsbestimmvorrichtung (165) zum Erfassen einer aktuellen Fahrgeschwindigkeit der autonom fahrenden Basisplattform (100) und zum Ausgeben von Geschwindigkeitsdaten mit Informationen zur erfassten Fahrgeschwindigkeit aufweist, wobei das Sicherheitsmodul (163) zum Empfangen von von der Geschwindigkeitsbestimmvorrichtung ausgegebenen Geschwindigkeitsdaten mit der Geschwindigkeitsbestimmvorrichtung (165) verbunden oder verbindbar ist.

9. Der Serviceroboter (1000, 2000, 3000) nach Anspruch 8, **dadurch gekennzeichnet, dass** das Sicherheitsmodul (163) dazu ausgebildet ist, zu überprüfen, ob eine der Positionen der Hindernisse im Arbeitsbereich des Serviceroboters (1000, 2000, 3000) relativ zum Serviceroboter (1000, 2000, 3000) innerhalb einer zweiten Sicherheitszone (168) um den Serviceroboter (1000, 2000, 3000) liegt und basierend auf den empfangenen Geschwindigkeitsdaten zu überprüfen, ob die erfasste Fahrgeschwindigkeit eine der zweiten Sicherheitszone (168) zugeordnete Maximalgeschwindigkeit ist oder überschreitet, und, wenn sowohl eine der Positionen der Hindernisse im Arbeitsbereich des Serviceroboters (1000, 2000, 3000) relativ zum Serviceroboter (1000, 2000, 3000) innerhalb der zweiten Sicherheitszone (168) um den Serviceroboter (1000, 2000, 3000) liegt als auch die erfasste Fahrgeschwindigkeit die der zweiten Sicherheitszone (167) zugeordnete Maximalgeschwindigkeit ist bzw. überschreitet, einen Geschwindigkeitsreduktionsbefehl zum Verringern der Fahrgeschwindigkeit der autonom fahrenden Basisplattform (100) auszugeben.

10. Der Serviceroboter (1000, 2000, 3000) nach einem der Ansprüche 2 bis 9, **dadurch gekennzeichnet, dass** einer des wenigstens einen Arbeitsbereichserfassungssensors ein Bodenstufendetektionssensor (157, 158) zum Erfassen einer in eine Distanzmessrichtung gemessenen Distanz von Gegenständen oder Boden vom Bodenstufendetektionssensor (157, 158) ist, wobei der Bodenstufendetektionssensor (157, 158) im Betrieb des Serviceroboters (1000, 2000, 3000) in einem Neigungswinkel zur Horizontalen nach unten geneigt ist, sodass die Distanzmessrichtung mit dem Neigungswinkel nach unten geneigt ist, wobei die vom Bodenstufendetektionssensor (157, 157) ausgebbaren Arbeitsbereichserfassungssensordaten Informationen zu der vom Bodenstufendetektionssensor (157, 158) erfassten Distanz sind.

11. Eine autonom fahrende Basisplattform (100) für einen Serviceroboter (1000, 2000, 3000) nach einem der Ansprüche 1 bis 10 zum Erbringen von der Dienstleistungen in örtlicher Nähe von Menschen.

12. Der Serviceroboter (1000, 2000, 3000) nach einem der Ansprüche 1 bis 10, **dadurch gekennzeichnet, dass** die autonom fahrende Basisplattform (100) die Basisplattform (100) nach Anspruch 34 ist.

13. Eine Serviceeinheit (200, 2200, 3200) für einen Serviceroboter (1000, 2000, 3000) nach einem der Ansprüche 1 bis 10 und 12 zum Erbringen von der Dienstleistungen in örtlicher Nähe von Menschen.

14. Der Serviceroboter (1000, 2000, 3000) nach einem Anspruch 1 bis 10 und 12, **dadurch gekennzeichnet, dass** die Serviceeinheit (200, 2200, 3200) die Serviceeinheit (200, 2200, 3200) nach Anspruch 13 ist.

15. Eine Anordnung zum Erbringen von Dienstleistungen in örtlicher Nähe von Menschen mittels eines Serviceroboters (1000, 2000, 3000) nach einem der Ansprüche 1 bis 10, 12 und 14, **dadurch gekennzeichnet, dass** die Anordnung den Serviceroboter (1000, 2000, 3000) nach einem der Ansprüche 1bis 10, 13 und 14 und ein Betriebsmodul (300) zum Betreiben des Serviceroboters (1000, 2000, 3000) aufweist.

16. Kombination aus einem Serviceroboter (1000, 2000, 3000) nach einem der Ansprüche 1 bis 10, 12 und 14 und einer Ladestation (140) zum Aufladen der wenigstens einen Batterie (130) des Serviceroboters (1000, 2000, 3000), wobei die Ladestation (140) zwei Ladestationsladekontakte (141.1, 142.2) zum Kontaktiert werden durch zwei Serviceroboterladekontakte (131.1, 131.2) des Serviceroboters (1000, 2000, 3000) aufweist.

17. Ein Verfahren zum Betreiben eines Serviceroboters (1000, 2000, 3000) nach einem der Ansprüche 1 bis 10, 12 und 14, insbesondere zum Betreiben einer Anordnung nach Anspruch 35, insbesondere zum Betreiben einer Kombination nach Anspruch 16.

18. Verfahren zum Erbringen von Dienstleistungen in örtlicher Nähe von Menschen mit einem Serviceroboter (1000, 2000, 3000) nach einem der Ansprüche 1 bis 10, 12 und 14.
